(19) Europäisches Patentamt

European Patent Office

Office européen des brevets

(11) **EP 1 087 218 A1**

(12) **EUROPEAN PATENT APPLICATION**
published in accordance with Art. 158(3) EPC

(43) Date of publication:
28.03.2001 Bulletin 2001/13

(51) Int. Cl.$^7$: **G01L 3/10**, G01D 5/20,
G01B 7/30

(21) Application number: 00913090.7

(22) Date of filing: 03.04.2000

(86) International application number:
PCT/JP00/02163

(87) International publication number:
WO 00/62031 (19.10.2000 Gazette 2000/42)

(84) Designated Contracting States:
**DE FR GB IT**

(30) Priority: 07.04.1999 JP 10066599
08.10.1999 JP 28888299
15.10.1999 JP 29455199
29.10.1999 JP 31039999
10.11.1999 JP 32031299
25.02.2000 JP 2000049913
25.02.2000 JP 2000049912
07.03.2000 JP 2000062604
07.03.2000 JP 2000062603
07.03.2000 JP 2000062601

(71) Applicant: **KOYO SEIKO CO., LTD.**
Osaka 542-0081 (JP)

(72) Inventors:
• TOKUMOTO, Yoshitomo,
Koyo Seiko Co., Ltd.
Osaka-shi, Osaka 542-00 81 (JP)

• NAKANO, Yoshiaki,
Koyo Seiko Co., Ltd.
Osaka-shi, Osaka 542-0081 (JP)
• KANDA, Koji,
Koyo Seiko Co., Ltd.
Osaka-shi, Osaka 542-0081 (JP)
• KOTAKA, Kenichi,
Koyo Seiko Co., Ltd.
Osaka-shi, Osaka 542-0081 (JP)
• MAEDA, Naoki,
Koyo Seiko Co., Ltd.
Osaka-shi, Osaka 542-0081 (JP)
• SHIBA, Mahito,
Koyo Seiko Co., Ltd.
Osaka-shi, Osaka 542-0081 (JP)

(74) Representative:
von Kirschbaum, Alexander, Dipl.-Ing. et al
Bahnhofsvorplatz 1 (Deichmannhaus am Dom)
50667 Köln (DE)

(54) **ROTATION ANGLE DETECTOR, TORQUE DETECTOR AND STEERING DEVICE**

(57) A rotational angle detecting device included in a steering apparatus or a torque detecting device includes a rotor having a portion which is magnetically discontinuous in an axial and a circumferential directions of the rotor; and a magnetic sensor for detecting the position where magnetic change occurs in an axial direction of the rotating shaft when the rotor rotates, wherein a rotational angle of the rotor from the magnetic sensor as the base point is detected in accordance with the position detected by the magnetic sensor. Therefore, the device does not comprise any contact and sliding member so that excellent durability is realized.

FIG. 1

EP 1 087 218 A1

**Description**

TECHNICAL FIELD

The present invention relates to a rotational angle detecting device for detecting a rotational angle, a torque detecting device for detecting torque applied on an input shaft in accordance with a torsional angle of a connecting shaft which connects the input shaft and an output shaft, and a steering apparatus for driving an electric motor based on the detected result by the torque detecting device so that the motor generates a steering assisting force.

BACKGROUND ART

Some of steering apparatus for automobiles are constructed to reduce a driver's load by driving an electric motor so as to assist steering. The foregoing steering apparatus comprises an input shaft connected to a steering wheel; an output shaft connected to steering control wheels through a pinion gear and a rack; and a connecting shaft (a torsion bar) connecting the input shaft and the output shaft. A torque detecting device detects the steering torque applied on the input shaft in accordance with the torsional angle generated in the connecting shaft. The electric motor for assisting steering interlocked to the output shaft is controlled and driven based on the steering torque detected by the torque detecting device. Moreover, the rotational angle detecting device detects the neutral point of the steering wheel to control and drive the rotation of the electric motor which corresponds to the steering angle of the steering wheel.

The above-mentioned rotational angle detecting device includes a component which contacts and slides on the other component, such as a potentiometer. Therefore, it suffers from unsatisfactory durability caused from abrasion and aging.

Also, the above-mentioned torque detecting device is arranged to detect the impedance change of a magnetic circuit caused from torsion by the connecting shaft. Therefore, it has a too complicated construction. Thus, there arises a problem in that the manufacturing cost is high.

To overcome the above-mentioned problems, an object of the present invention is to provide a rotational angle detecting device which does not comprise any contact and sliding portion and which realizes satisfactory durability.

Another object of the present invention is to provide a torque detecting device realizing a simple construction and capable of reducing the manufacturing cost.

Another object of the invention is to provide a steering apparatus comprising a rotational angle detecting device according to any one of first invention to eighth invention and a torque detecting device according to the ninth invention or the tenth invention.

Another object of the invention is to provide a torque detecting device capable of detecting torque when a sag portion is present in the characteristic of the output voltage of a magnetic sensor and easily managing the accuracy of the output voltage of the magnetic sensor when a manufacturing process is performed.

Another object of the invention is to provide a steering apparatus which is capable of detecting torque when a sag portion is present in the characteristic of the output voltage of the magnetic sensor of the torque detecting device and easily managing the accuracy of the output voltage of the magnetic sensor when the torque detecting device is manufactured.

Another object of the present invention is to provide a rotational angle detecting device which does not include a contact and sliding portion, which realizes satisfactory durability, and a breakdown of which can easily be detected.

Another object of the invention is to provide a torque detecting device having a simple construction, capable of reducing the manufacturing cost and arranged to detect breakdown.

Another object of the present invention is to provide a steering apparatus comprising a rotational angle detecting device according to any one of the twentieth invention to the twenty-second invention and a torque detecting device according to the twenty-first invention.

Another object of the invention to provide a torque detecting device comprising four magnetic sensors and capable of preventing interruption of torque detection in a case where breakdown of one of the magnetic sensors has occurred so that assisting steering is not rapidly changed.

Another object of the present invention is to provide a steering apparatus which comprises a torque detecting device having four magnetic sensors, which is capable of preventing interruption of torque detection in a case where breakdown of one of the four magnetic sensors has occurred so that assisting steering is not rapidly changed.

Another object of the present invention is to provide a rotational angle detecting device, a torque detecting device and a steering apparatus for an automobile using them each of which is constructed such that the rotational angle and/or rotational torque of the rotating shaft is detected in accordance with an output of a magnetic sensor which is induced by a target provided for a rotating shaft and made of magnetic material and which is capable of preventing occurrence of a detection error caused from the difference in the output characteristics of the magnetic sensors including compensation of change in the characteristics caused from the temperature and change in the characteristic occurring with time and preventing occurrence of a detection error caused from change in the air gap between the target and the magnetic sensor so as to permit accurate detection to be performed for a long time.

Another object of the present invention is to provide a torque detecting device which is capable of reliably selecting a magnetic sensor of two magnetic sensors disposed in the circumferential direction of a target which is generating an effective output and accurately calculating the rotational torque by using the output of the selected magnetic sensor and to provide a steering apparatus for an automobile arranged to detect the steering torque by using the torque detecting device to accurately perform various controls in accordance with the detected torque.

Another object of the present invention is to provide a torque detecting device which is constructed to detect rotational torque applied on a rotating shaft in accordance with an output of a magnetic sensor which is induced by a target provided for the rotating shaft and made of magnetic material and which is capable of preventing occurrence of a detection error caused from the difference in the output characteristics of each magnetic sensor and the difference in the air gap between each magnetic sensor and the target and accurately detecting the torque for a long time and to provide a steering apparatus for an automobile comprising the torque detecting device.

Another object of the present invention is to provide an rotational angle detecting device and a torque detecting device which realizes high detection accuracy and which is capable of reducing the manufacturing cost by using a target on the outer surface of a rotating shaft which is simply manufactured with an excellent accuracy of the shape. Moreover, another object is to provide a steering apparatus in which the foregoing device is used to detect the steering angle and the steering torque to accurately perform various controls in accordance with the detected steering angle and the torque.

Another object of the invention is to provide a torque detecting device which is capable of preventing fluctuation in the air gap between the target and the magnetic sensor caused from bending deformation of the torsion bar and detecting the rotational torque with high accuracy and to provide a steering apparatus which uses the torque detecting device to detect the steering torque to perform various controls with high accuracy in accordance with detected torque.

DISCLOSURE OF THE INVENTION

A rotational angle detecting device according to a first invention comprising: a rotor having a portion which is magnetically discontinuous in an axial and a circumferential directions thereof; and a magnetic sensor for detecting the position in an axial direction of said rotor where magnetically change occurs on the circumferential surface of said rotor when said rotor rotates; wherein a rotational angle of said rotor from said magnetic sensor as the base point is detected in accordance with the position detected by said magnetic sensor.

In the present invention, the portion of the rotor which is magnetically discontinuous in the axial and circumferential directions of the rotor is provided on the surface of the rotor. The magnetic sensor detects the position of the discontinuous portion in the axial direction. In accordance with the position detected by the magnetic sensor, the rotational angle of the rotor from the magnetic sensor as the base point is detected. As a result, the rotational angle detecting device which does not comprise any contact and sliding portion and which realizes satisfactory durability can be realized.

A rotational angle detecting device according to a second invention is constructed such that said portion which is magnetically discontinuous is provided spirally on the circumferential surface of said rotor.

In this invention, the portion of the rotor which is magnetically discontinuous in the axial and circumferential directions of the rotor is spirally provided on the surface of the rotor. Therefore, the position of the portion which is magnetically discontinuous in the axial direction of the rotor and the rotational angle of the rotor made from the magnetic sensor as the base point can be made correspond to each other. When the position of the portion which is magnetically discontinuous in the axial direction of the rotor is detected, the rotational angle of the rotor from the magnetic sensor as the base point can be detected. As a result, the rotational angle detecting device which does not comprise any contact and sliding portion and which realizes satisfactory durability can be realized.

A rotational angle detecting device according to a third invention is constructed such that a plurality of said portions which are magnetically discontinuous are provided on the circumferential surface of said rotor at the same intervals.

In the present invention, the plural portions which are magnetically discontinuous are provided on the surface of the rotor at the same intervals. Therefore, change in the position of the portion which is magnetically discontinuous in the axial direction of the rotor can be enlarged with respect to the rotational angle from the magnetic sensor as the base point. Therefore, the amplifying gain can be reduced. Thus, satisfactory stability against disturbance can be realized.

A rotational angle detecting device according to a fourth invention is constructed such that said portion which is magnetically discontinuous is formed nonlinearly with respect to said rotational angle to make an output of the magnetic sensor to be linear with respect to said rotational angle.

In the present invention, the portion which is magnetically discontinuous is provided nonlinearly with respect to the rotational angle to make an output of the magnetic sensor to be linear with respect to the rotational angle. In particular, the output of the magnetic sensor disposed at an end of the portion which is magnetically discontinuous can be made to be linear with respect to the rotational angle. Therefore, a rotational angle detecting device which does not comprise a multiplicity of sensors, the cost of which can be reduced and which has a linear output characteristic can be realized.

A rotational angle detecting device according to a fifth invention is constructed such that said portion which is magnetically discontinuous is divided into an axial direction of said rotor at the same position of the circumferential direction of said rotor, and the divided portions are connected with each other in an axial direction of said rotor.

Since the present invention is constructed such that the portion which is magnetically discontinuous is divided into an axial direction of said rotor at the same position of the circumferential direction of said rotor, and the divided portions are connected with each other in an axial direction of said rotor. Therefore, the rotational angle detecting device in which the output is free from any fluctuation at an end of the portion which is magnetically discontinuous can be realized.

A rotational angle detecting device according to a sixth invention is constructed such that said portion which is magnetically discontinuous is formed by winding a coil around the circumferential surface of said rotor and by welding or bonding the coil.

Since the present invention has the construction such that the portion which is magnetically discontinuous is formed by winding a coil around the circumferential surface of the rotor and by welding or bonding the coil, time required a processing can be shortened. Therefore, the manufacturing cost can be reduced.

A rotational angle detecting device according to a seventh invention is constructed such that said portion which is magnetically discontinuous is formed by irradiating the circumferential surface of said rotor with an energy beam.

Since the present invention has the construction such that the portion which is magnetically discontinuous is formed by irradiating the circumferential surface of the rotor with the energy beam, an adjustment process can easily be completed. Therefore, the pattern of the portion which is magnetically discontinuous can accurately and freely be processed.

A rotational angle detecting device according to an eighth invention comprises: a rotor having protrusions formed spirally on the circumferential surface thereof and made of magnetic material; and plural magnetoresistance effect elements for detecting the position in an axial direction of said rotor when said rotor rotates; wherein a rotational angle of said rotor from said plural magnetoresistance effect elements as the base points is detected in accordance with the positions detected by said plural magnetoresistance effect elements.

In the present invention, the protrusion made of the magnetic material is spirally provided on the circumferential surface of the rotor. Moreover, the magnetoresistance effect element detects the position of the protrusion in the axial direction of the rotor. In accordance with the detected position, the rotational angle of the rotor from the plural magnetoresistance effect elements as the base points of the rotor is detected. As a result, the rotational angle detecting device which does not comprise any contact and sliding portion and which realizes satisfactory durability can be realized.

A torque detecting device according to a ninth invention detects torque applied on an input shaft in accordance with a torsional angle generated in a connecting shaft for connecting said input shaft and an output shaft, comprising: rotational angle detecting devices according to any one of claims 1 to 8 attached to each of said input shaft and said output shaft, respectively; and a rotational angle difference detector for detecting the difference between the rotational angles detected by said rotational angle detecting devices; wherein the difference in the rotational angle detected by said rotational angle difference detector is made to be the torsional angle.

In the present invention, the torque applied on the input shaft is detected in accordance with the torsional angle generated in the connecting shaft for connecting the input shaft and the output shaft. The rotational angle detecting device according to any one of the first invention to eighth invention is attached to each of the input shaft and the output shaft. The rotational angle difference detector detects the difference in the rotational angle detected by each of the rotational angle detecting devices. The detected difference of the rotational angle is made to be the torsional angle. Thus, a torque detecting device realizing a simple construction and capable of reducing manufacturing cost can be realized.

A torque detecting device according to a tenth invention detects torque applied on an input shaft in accordance with a torsional angle generated in a connecting shaft for connecting said input shaft and an output shaft, comprising: rotational angle detecting devices according to any one of claims 1 to 8 attached to each of said input shaft and said output shaft, respectively; two first calculators for calculating the opposite-phase difference between detection signals detected by said rotational angle detecting devices; and a second calculator for calculating the difference between the differences calculated by said two first calculator; wherein the difference detected by said second calculator is made to be the torsional angle.

In the present invention, the torque applied on the input shaft is detected in accordance with the torsional angle generated in the connecting shaft for connecting the input shaft and the output shaft. The rotational angle detecting device according to any one of the first invention to eighth invention is attached to each of the input shaft and the output shaft. Thus, the difference in the reversed polarity between the detection signals outputted from the rotational angle detecting devices is calculated by the two first calculators. The second calculator calculates the difference in the differences calculated by the two first calculators. The difference calculated by the second calculator is made to be the torsional angle. Thus, the difference between the detection signals outputted from the rotational angle detecting devices is enlarged. As a result, the amplifying gain can be reduced. Thus, the torque detecting device which is stable against disturbance, which realizes a simple construction and which is able to reduce the manufacturing cost can be realized.

A steering apparatus according to an eleventh invention comprises: an input shaft connected to a steering wheel; an electric motor for assisting steering which is driven and controlled in accordance with steering torque applied on said steering wheel; an output shaft interlocked to said electric motor; and a torque detecting device for detecting the steering torque applied on said input shaft in accordance with the torsional angle generated in a connecting shaft for connecting said input shaft and said output shaft; wherein a rotational angle detecting device included in said torque detecting device detects the rotational angle of said steering wheel.

In the present invention, the input shaft is connected to the steering wheel, the electric motor for assisting steering is driven and controlled in accordance with the steering torque applied on the steering wheel and the output shaft is interlocked to the electric motor for assisting steering. The torque detecting device according to the ninth invention or the tenth invention detects the steering torque applied on the input shaft in accordance with the torsional angle generated in the connecting shaft for connecting the input shaft and the output shaft. The rotational angle detecting device included in the torque detecting device detects the steering angle of the steering wheel. As a result, the steering apparatus comprising the torque detecting device according to the ninth invention or the tenth invention can be realized. Moreover, the steering apparatus is able to use two rotational angle detecting devices according to any one of the first invention to eighth invention as the rotational angle detecting devices.

A torque detecting device according to a twelfth invention comprises: an input shaft and an output shaft each having a portion which is magnetically discontinuous in an axial and a circumferential directions thereof; a connecting shaft for connecting said input shaft and said output shaft; first and second magnetic sensors for detecting the positions where magnetic change occurs on the circumferential surfaces in the axial direction of said input shaft and said output shaft when said input shaft and said output shaft rotate; third and fourth sensors for detecting the positions in said axial direction which are distant from said positions detected by said first and second magnetic sensors for a predetermined distance in said circumferential direction and/or said axial direction; a judging unit for judging whether or not said positions detected by said first to fourth magnetic sensors are included in a predetermined range; a selector for selecting the position for detecting a torsional angle of said connecting shaft for each of said input shaft and said output shaft in accordance with a judgement result made by said judging unit; and a torsional angle detector for detecting the torsional angle in accordance with each position selected by said selector; wherein the torque applied on said input shaft is detected in accordance with the torsional angle detected by said torsional angle detector.

In the present invention, the portion which is magnetically discontinuous is provided for the circumferential surface of each of the input shaft and the output shaft connected to each other by a connecting shaft such that the portion which is magnetically discontinuous is displaced in the axial direction and a circumferential direction. The first and second magnetic sensors detect the position of the portion which is magnetically discontinuous in the axial direction of each of the input shaft and the output shaft. The third and fourth magnetic sensors detect the position of the portion which is magnetically discontinuous in the axial direction which is disposed apart from the positions detected by the first and second magnetic sensors. The judging unit judges whether or not the positions detected by the first to fourth magnetic sensors are included in a predetermined range. The selector selects the positions for detecting the torsional angle of the connecting shaft for each of the input shaft and the output shaft. The torsional angle detector detects the torsional angle in accordance with the positions selected by the selector so that torque which is applied on the input shaft is detected in accordance with the torsional angle detected by the torsional angle detector. Therefore, when a sag portion is present in the characteristic of the output voltage of the magnetic sensors, torque can be detected. Thus, the torque detecting device can be realized which is capable of easily managing the accuracy of the output voltage of the magnetic sensor when a manufacturing process is performed.

A torque detecting device according to a thirteenth invention further comprises a corrector for correcting the torsional angle detected by said torsional angle detector in accordance with each position selected by said sensor and each predetermined distance.

In the present invention, the corrector corrects the torsional angle detected by the torsional angle detector in accordance with the position and the predetermined intervals selected by the selector. Therefore, the output voltage of each of the third and fourth magnetic sensors for detecting the positions different from the positions detected by the first and second magnetic sensors by a predetermined angle is used to correct the sag portion of the output voltage of each of the first and second magnetic sensors. Therefore, when a sag portion is present in the characteristic of the output voltage of the first and second magnetic sensors, torque can be detected. Thus, the torque detecting device can be realized which is capable of easily managing the accuracy of the output voltage of the magnetic sensor when a manufacturing process is performed.

A torque detecting device according to a fourteenth invention further comprises: a calculator for calculating a corrective value for correcting the torsional angle detected by said torsional angle detector in accordance with each position selected by said sensor and the position detected by each of said first to fourth magnetic sensors; and a corrector for correcting the torsional angle in accordance with the corrective value calculated by said calculator and each position selected by said selector.

In the present invention, the calculator calculates the corrective value for correcting the torsional angle detected by the torsional angle detector in accordance with the positions selected by the selector and the positions detected by the first to fourth magnetic sensors. The corrector corrects the torsional angle in accordance with the corrective value calculated by the calculator and the positions selected by the selector. Thus, the output voltage of each of the third and fourth magnetic sensors for detecting the position different from the positions detected by the first and second magnetic sensors by a predetermined angle is used to correct the sag portion of the output voltage of each of the first and second magnetic sensors. Therefore, when a sag portion is present in the characteristics of the output voltage of the magnetic sensors, torque can be detected. Thus, the torque detecting device can be realized which is capable of easily managing the accuracy of the output voltage of the magnetic sensor when a manufacturing process is performed.

A torque detecting device according to a fifteenth invention is constructed such that said portion which is magnetically discontinuous is provided spirally on each circumferential surface of said input shaft and said output shaft.

In the present invention, the portion which is magnetically discontinuous is spirally formed on the circumferential surface of each of the input shaft and the output shaft. Therefore, the position in the axial direction detected by each magnetic sensor and the angle in the circumferential direction can be made correspond to each other. Therefore, when a sag portion is present in the characteristic of the output voltage of the magnetic sensor, torque can be detected. Thus, the torque detecting device can be realized which is capable of easily managing the accuracy of the output voltage of the magnetic sensor when a manufacturing process is performed.

A torque detecting device according to a sixteenth invention is constructed such that a plurality of said portions which are magnetically discontinuous are provided on the circumferential surface of each of said input shaft and said output shaft at the same intervals.

In the present invention, the plural portions which are magnetically discontinuous are provided on the circumferential surfaces of the input shaft and the output shaft at the same intervals. Therefore, the output voltage of the magnetic sensor per angle in the circumferential direction can be enlarged. Therefore, when a sag portion is present in the characteristic of the output voltage of the magnetic sensor, torque can be detected. Thus, the torque detecting device can be realized which is capable of easily managing the accuracy of the output voltage of the magnetic sensor when a manufacturing process is performed.

A torque detecting device according to a seventeenth invention is constructed such that said portion which is magnetically discontinuous is formed by protrusions made of magnetic material.

In the present invention, the portion which is magnetically discontinuous is a protrusion made of the magnetic material. Therefore, when a sag portion is present in the characteristics of the output voltage of the magnetic sensor, torque can be detected. Thus, the torque detecting device can be realized which is capable of easily managing the accuracy of the output voltage of the magnetic sensor when a manufacturing process is performed.

A torque detecting device according to an eighteenth invention comprises: storage units in which electric signals which are outputted to correspond to the positions detected by said first to fourth magnetic sensors and predetermined electric signals which must be outputted to correspond to the positions detected by said first to fourth magnetic sensors are made to correspond to one another and stored therein; and an output unit for outputting each electric signal which must be outputted in accordance with the electric signals outputted from said first to fourth magnetic sensors and the contents stored in each storage unit; wherein each electric signal outputted from said output unit is made to be the signals indicting the positions detected by said first to fourth magnetic sensors.

In the present invention, the storage units store the electric signals which are outputted to correspond to the positions detected by the first to fourth magnetic sensors and electric signals which are previously set and must be outputted to correspond to the positions detected by the first to fourth magnetic sensors corresponding to one another. The output unit outputs the electric signal which must be outputted in accordance with the electric signal outputted from the first to fourth magnetic sensors and the contents stored in each of the storage units. Thus, each electric signal outputted from the output unit is made to be each signal indicating the position detected by each of the first to fourth magnetic sensors. Therefore, when a sag portion is present in the characteristic of the output voltage of the magnetic sensors, torque can be detected. Thus, the torque detecting device can be realized which is capable of easily managing the accuracy of the output voltage of the magnetic sensor when a manufacturing process is performed.

A steering apparatus according to a nineteenth invention comprises: an input shaft connected to a steering wheel; an electric motor for assisting steering which is driven and controlled in accordance with the steering torque applied on said steering wheel; an output shaft interlocked to said electric motor; and a torque detecting device according to any one of claims 12 to 18 for detecting the steering torque applied on said input shaft in accordance with the torsional angle generated in a connecting shaft for connecting said input shaft and said output shaft.

In the present invention, the input shaft is connected to the steering wheel. The electric motor for assisting steering is driven and controlled in accordance with the steering torque applied on the steering wheel. The output shaft is interlocked to the electric motor. Any one of the torque detecting device according to the twelfth invention to eighteenth invention detects the steering torque applied on the input shaft in accordance with the torsional angle generated in the connecting shaft for connecting the input shaft and the output shaft. Thus, the steering apparatus can be realized which is capable of detecting torque when a sag portion is present in the characteristic of the output voltage of the magnetic sensors of the torque detecting device and easily managing the accuracy of the output voltage of the magnetic sensor when the torque detecting device is manufactured.

A rotational angle detecting device according to a twentieth invention comprises: a rotating shaft having a portion which is magnetically discontinuous on the circumferential surface thereof in an axial and a circumferential directions thereon and first magnetic sensors for detecting the positions where magnetic change occurs on the circumferential surfaces of said rotating shaft in said axial direction when said rotating shaft rotates; wherein a rotational angle of said rotating shaft from said magnetic sensor as the base point is detected in accordance with the position detected by said magnetic sensor, further comprising; one or more second magnetic sensors for detecting a position distant from the position which must be detected by said first magnetic sensor for a predetermined distance; and a judging unit for judging a failure in accordance with the distance between the position detected by said second magnetic sensor and said first magnetic sensor.

In the present invention, the portion which is magnetically discontinuous is provided on the circumferential surface of the rotating shaft such that the portion which is magnetically discontinuous is displaced in the axial and circumferential directions of the rotating shaft. The first magnetic sensor detects the position of the portion in the axial direction. Thus, the rotational angle from the first magnetic sensor as the base point of the rotating shaft is detected in accordance with the position detected by the first magnetic sensor. The one or more second magnetic sensors are provided for detecting a position distant from the position which must be detected by the first magnetic sensor for a predetermined distance. The judging unit judges a breakdown in accordance with the distance of the positions detected by the second and first magnetic sensors. Thus, the rotational angle detecting device can be realized which does not include a contact and sliding portion, which realizes satisfactory durability, and a breakdown of which can easily be detected.

A rotational angle detecting device according to a twenty-first invention is constructed such that said portion which is magnetically discontinuous is provided spirally on the circumferential surface of said rotating shaft.

In the present invention, the portion which is magnetically discontinuous is spirally provided on the circumferential surface of the rotating shaft in the axial and circumferential directions thereof. By detecting the position of the portion which is magnetically discontinuous in the axial direction, the rotational angle of the rotating shaft from the first magnetic sensor as the base point can be detected. The one or more second magnetic sensors are provided for detecting positions distant from the position which must be detected by the first magnetic sensor for a predetermined distance. The judging unit judges breakdown in accordance with the distance between positions detected by the second magnetic sensor and the first magnetic sensor. Thus, the rotational angle detecting device can be realized which does not include a contact and sliding portion, which realizes satisfactory durability, and a breakdown of which can easily be detected.

A rotational angle detecting device according to a twenty-second invention comprises: a rotating shaft having protrusions provided spirally on the circumferential surface thereof and made of magnetic material; a first magnetic sensor for detecting the position where magnetic change occurs on the circumferential surface of said rotating shaft in said axial direction when said rotating shaft rotates; wherein a rotational angle of said rotating shaft from said first magnetic sensor in the circumferential direction of said rotating shaft is detected in accordance with the position detected by said first magnetic sensor, further comprising; one or more second magnetic sensors for detecting a position distant from the position which must be detected by said first magnetic sensor for a predetermined distance; and a judging unit for judging a failure in accordance with the intervals between the position detected by said second magnetic sensor and said first magnetic sensor.

In the present invention, the protrusion made of magnetic material is spirally formed on the circumferential surface in the axial direction of a rotating shaft. The first magnetic sensor detects the position of the protrusion in the axial direction of the rotating shaft.

Thus, the rotational angle of the rotating shaft from the first magnetic sensor as the base point in the circumferential direction is detected. The one or more second magnetic sensor are provided for detecting a position distant from the position which must be detected by the first magnetic sensor for a predetermined distance. The judging unit judges breakdown in accordance with the distance of the positions detected by the second magnetic sensor and the first magnetic sensor. Thus, the rotational angle detecting device can be realized which does not include a contact and sliding portion, which realizes satisfactory durability, and a breakdown of which can easily be detected.

A torque detecting device according to a twenty-third invention detects torque applied on an input shaft in accordance with the torsional angle generated in a connecting shaft for connecting said input shaft and an output shaft, comprising: a rotational angle detecting device according to any one of claims 20 to 22 attached to each of said input shaft and said output shaft; and a detector for detecting the difference in the angles detected by said rotational angle detecting devices; wherein the difference in the angle detected by said detector is made to be a torsional angle.

In the present invention, the torque applied on the input shaft is detected in accordance with the torsional angle generated in the connecting shaft for connecting the input shaft and the output shaft. The rotational angle detecting device according to any one of the twentieth invention to the twenty-second invention is attached to each of the input shaft and the output shaft. The detector detects the difference in the rotational angle detected by each of the rotational angle detecting devices. The detected difference in the rotational angle is made to be the torsional angle generated in the connecting shaft. Thus, the torque detecting device can be realized which has a simple construction, which is capable of reducing the manufacturing cost and which is arranged to detect breakdown.

A steering apparatus according to a twenty-fourth invention comprises: an input shaft connected to a steering wheel; an electric motor for assisting steering which is driven and controlled in accordance with the steering torque applied on said steering wheel; an output shaft interlocked to said electric motor; and a torque detecting device according to claim 23 for detecting the steering torque applied on said input shaft in accordance with the torsional angle generated in a connecting shaft for connecting said input shaft and said output shaft; wherein a rotational angle detecting device included in said torque detecting device detects the rotational angle of said steering wheel.

In the, present invention, the input shaft is connected to the steering wheel. The electric motor for assisting steering is driven and controlled in accordance with steering torque applied on the steering wheel. The output shaft is interlocked to the electric motor. The torque detecting device according to the twenty-third invention detects the steering torque applied on the input shaft in accordance with the torsional angle generated in the connecting shaft for connecting the input shaft and the output shaft. Thus, the rotational angle detecting device included in the torque detecting device detects the rotational angle of the steering wheel. Thus, the steering apparatus comprising the torque detecting device according to the twenty-third invention can be realized. Moreover, the steering apparatus is able to use either or both of the rotational angle detecting device according to any one of the twentieth invention to twenty-second invention as the rotational angle detecting device.

A torque detecting device according to a twenty-fifth invention comprises: an input shaft and an output shaft each having a portion which is magnetically discontinuous in an axial and a circumferential directions thereof; a connecting shaft for connecting said input shaft and said output shaft; first and second magnetic sensors for detecting the positions where magnetic change occurs on the circumferential surfaces of said input shaft and said output shaft in said axial direction when said input shaft and said output shaft rotate; third and fourth magnetic sensors for detecting the positions in said axial direction which are distant from said positions detected by said first and second magnetic sensors for a predetermined distance in said circumferential direction and/or said axial direction; wherein whether or not said positions detected by said first to fourth magnetic sensors are included in a first range is judged; the position for detecting a torsional angle of said connecting shaft for each of said input shaft and said output shaft is detected in accordance with the judgement result is made; a torsional angle is detected in accordance with each position selected by said selector; and the torque applied on said input shaft is detected in accordance with the torsional angle; further comprising; a first selector for selecting a pair which does not include a broken magnetic sensor from a pair consisting of said first magnetic sensor and said second magnetic sensor and a pair consisting of said third magnetic sensor and said fourth magnetic sensor when any one of said first to fourth magnetic sensor has been broken; a judging unit for judging whether or not the positions detected by said magnetic sensor of the pair selected by said first selector is included in a second range which is larger than said first range; and a detector for detecting the torsional angle in accordance with said position when said judging unit has judged that the position is included in said second range; wherein torque applied on said input shaft is detected in accordance with the torsional angle detected by said detector.

In the present invention, the first and second magnetic sensors detect the positions of portions which are magnetically discontinuous formed on the circumferential surface of each of the input shaft and the output shaft connected to each other by a connecting shaft with displacement in the axial and circumferential directions. The position of the portion distant from the position of the portion detected by the first magnetic sensor and the second magnetic sensor for a predetermined distance in the circumferential direction and/or the axial direction is detected by the third and fourth magnetic sensors. Then, whether or not the position detected by each of the first to fourth magnetic sensors is present in a first range is judged. The position for detecting the torsional angle of the connecting shaft is selected for each of the input shaft and the output shaft in accordance with a judgement result. The torsional angle is detected in accordance with each of the selected positions. The torque applied on the input shaft is detected in accordance with the detected torsional angle. The first selector selects a pair from a pair consisting of the first magnetic sensor and the second magnetic sensor and a pair consisting of the third magnetic sensor and the fourth magnetic sensor which does not include a magnetic sensor encountered breakdown when any one of the first to fourth magnetic sensor has encountered breakdown. The judging unit judges whether or not the position of the portion detected by the magnetic sensors in the pair selected by the first selector is present in a second range which is larger than the first range; and a detector for detecting the torsional angle in accordance with the position of the portion when the judging unit has judged that the position of the portion is present in the second range. Thus, the torque applied on the input shaft is detected in accordance with the torsional angle detected by the detector. Thus, the torque detecting device can be realized which comprises four magnetic sensors and which is capable of preventing interruption of torque detection in a case where breakdown of one of the magnetic sensors has occurred so that assisting steering is not rapidly changed.

A torque detecting device according to a twenty-sixth invention has a construction that said judging unit includes: a second selector for selecting a pair which does not include a broken magnetic sensor from a pair consisting of said first magnetic sensor and said third magnetic sensor and a pair consisting of said second magnetic sensor and said fourth magnetic sensor; a judging unit for judging whether or not two positions detected by said magnetic sensors in a pair selected by said second selector are included in said first range; a third selector for selecting one position from said two positions in accordance with a judgement result made by said judging unit; and a corrector for correcting the position selected by said third selector in accordance with said two positions and said predetermined distance; wherein whether or not said position is included in said second range is judged in accordance with the position corrected by said corrector.

In the present invention, the second selector selects the pair from the pair consisting of the first magnetic sensor and the third magnetic sensor and the pair consisting of the second magnetic sensor and the fourth magnetic sensor which does not include the magnetic sensor encountered breakdown. The judging unit judges whether or not the two positions detected by the pairwise magnetic sensors selected by the second selector are present in the first range. The third selector selects one position from the two positions in accordance with a judgement result made by the judging unit. The corrector corrects the position selected by the third selector in accordance with the two positions and each of a predetermined distance. Thus, whether or not the position of the portion is present in the second range in accordance with the position corrected by the corrector. As a result, the torque detecting device can be realized which comprises the four magnetic sensors and which is capable of preventing interruption of torque detection in a case where breakdown of one of the magnetic sensors has occurred so that assisting steering is not rapidly changed.

A torque detecting device according to a twenty-seventh invention has a construction that said portion which is magnetically discontinuous is provided spirally on each circumferential surface of said input shaft and said output shaft.

In the present invention, the portion which is magnetically discontinuous is spirally provided on the circumferential surface of each of the input shaft and the output shaft. Therefore, the position detected by each of the magnetic sensors in the axial direction and an angle in the circumferential direction can be made correspond to each other. Therefore, the torque detecting device can be realized which is capable of preventing interruption of torque detection in a case where breakdown of one of the four magnetic sensors has occurred so that assisting steering is not rapidly changed.

A torque detecting device according to a twenty-eighth invention has a construction that a plurality of said portions which are magnetically discontinuous are provided on the circumferential surface of each of said input shaft and said output shaft at the same intervals.

In the present invention, a plurality of the portions which are magnetically discontinuous are provided on the circumferential surface of each of the input shaft and the output shaft at the same intervals. Therefore, the output voltage of the magnetic sensor per angle in the circumferential direction can be raised. Therefore, the torque detecting device can be realized which is capable of preventing interruption of torque detection in a case where breakdown of one of the four magnetic sensors has occurred so that assisting steering is not rapidly changed.

A torque detecting device according to a twenty-ninth invention is constructed such that said portion which is magnetically discontinuous is formed by protrusions made of magnetic material.

In the present invention, the portion which is magnetically discontinuous is a protrusion made of magnetic material. Therefore, the torque detecting device can be realized which is able to detect the torque when a sag portion is present in the characteristic of the output voltage of the magnetic sensor and which is capable of preventing interruption of torque detection in a case where breakdown of one of the four magnetic sensors has occurred so that assisting steering is not rapidly changed.

A steering apparatus according to a thirtieth invention comprises: an input shaft connected to a steering wheel; an electric motor for assisting steering which is driven and controlled in accordance with the steering torque applied on said steering wheel; an output shaft interlocked, to said electric motor; and a torque detecting device according to any one of claims 25 to 29 for detecting the steering torque applied on said input shaft in accordance with the torsional angle generated in a connecting shaft for connecting said input shaft and said output shaft.

In the present invention, the input shaft is connected to the steering wheel. The electric motor for assisting steering is driven and controlled in accordance with steering torque applied on the steering wheel. The output shaft is interlocked to the electric motor. The torque detecting device according to any one of the twenty-fifth invention to twenty-ninth invention detects the steering torque applied on the input shaft in accordance with the torsional angle generated in the connecting shaft for connecting the input shaft and the output shaft. Thus, the steering apparatus can be realized which comprises a torque detecting device having four magnetic sensors, which is capable of preventing interruption of torque detection in a case where breakdown of one of the four magnetic sensors has occurred so that assisting steering is not rapidly changed.

A rotational angle detecting device according to a thirty-first invention comprises: a plurality of targets disposed in the circumferential direction of a rotating shaft such that said targets are inclined with respect to an axial direction of said rotating shaft by substantially the same angles; magnetic sensor disposed opposite to the position where said targets are disposed to generate outputs which are changed when each target passes; and an angle calculator for calculating the rotational angle of said rotating shaft in accordance with a result obtained by multiplying outputs of said magnetic sensor with a gain, wherein said angle calculator includes a gain corrector for correcting said gain in accordance with a maximum value and a minimum value of outputs of said magnetic sensor when said plural targets pass.

In the present invention, the hysteresis of the output of the magnetic sensor disposed opposite to the targets is monitored. In accordance with the maximum value and the minimum value of the output generated during passing of the previous target, the gain with which the output of the magnetic sensor during passing of a next target is multiplied is sequentially corrected. When the next target passes, the rotational angle is calculated in accordance with a result of multiplication of the actual output of the magnetic sensor with the corrective gain. Thus, change in the output characteristics of the magnetic sensor caused from an influence of the temperature and an influence caused from time is compensated.

A rotational angle detecting device according to a thirty-second invention is constructed such that said gain corrector according to the thirty-first invention obtains a ratio of the difference between the maximum value and the minimum value and a predetermined reference difference to obtain a corrective gain by multiplying a result with the reference gain set for said reference difference.

In the present invention, the difference between the maximum value and a minimum value of the output of the magnetic sensor during passing of the target is obtained as a value on which any influence of change of the air gap is not exerted. The reference gain set with respect to the reference difference is multiplied with the ratio of the difference and the predetermined reference difference to obtain an accurate corrective gain. In a period in which the next target passes, the corrective gain is multiplied with the actual output of the magnetic sensor so as to be made coincide with the reference output characteristic. In accordance with a result, an accurate rotational angle is calculated.

A rotational angle detecting device according to a thirty-third invention comprises: a plurality of targets disposed in the circumferential direction of a rotating shaft such that said targets are inclined with respect to an axial direction of said rotating shaft by substantially the same angles; magnetic sensor disposed opposite to the position where said targets are disposed to generate outputs which are changed when each target passes; and an angle calculator for calculating the rotational angle of said rotating shaft in accordance with a result obtained by multiplying outputs of said magnetic sensor with a gain, wherein said angle calculator includes an offsetting unit for offsetting said output in accordance with a maximum value and a minimum value of outputs of said magnetic sensor when said plural targets pass.

In the present invention, the hysteresis of the output of the magnetic sensor disposed opposite to the targets is monitored. In accordance with the maximum value and the minimum value of the output during passing of the previous target, the offset amount superimposed on the output owing to change of the air gap between the target and the magnetic sensor is sequentially obtained. In a period in which a next target passes, the obtained amount of offset for the previous target is added to the actual output of the magnetic sensor to omit an error in the output caused from change of the air gap. In accordance with a result, an accurate rotational angle is calculated.

A rotational angle detecting device according to a thirty-fourth invention has a construction that said offsetting unit according to the thirty-third invention makes the difference between an average value of said maximum value and said minimum value and a predetermined reference average value to be an offset amount.

In the present invention, the average value of the maximum value and the minimum value of the output of the magnetic sensor during passing of the previous target is obtained as a value on which any influence is exerted from the output characteristics of the magnetic sensor. The difference between the foregoing value and the predetermined reference average value is made to be the offset amount which is added to the output of the magnetic sensor generated in a period in which a next target passes. In accordance with a result of addition, an accurate rotational angle from which an influence of change of the air gap has been omitted is calculated.

A rotational angle detecting device according to a thirty-fifth invention is constructed such that a plurality of said magnetic sensors according to the thirty-first invention to thirty-fourth invention are provided in the circumferential direction on the outside of said target such that the phases are shifted.

In the present invention, a plurality of the magnetic sensors are provided in the circumferential direction of the target such that the phases of the magnetic sensors are shifted in the circumferential direction. Therefore, influences of the difference in the output characteristics of each magnetic sensor and that in the air gap between each magnetic sensor and the target can be eliminated. Thus, an accurate rotational angle is calculated.

A torque detecting device according to a thirty-sixth invention comprises: two rotational angle detecting devices according to any one of the thirty-first invention to thirty-fifth invention disposed apart from each other in the axial direction of said rotating shaft; and a torque calculator for calculating the torque applied on said rotating shaft in accordance with the difference in the rotational angle detected by each rotational angle detecting device.

In the present invention, two rotational angle detecting devices which can obtain an accurate rotational angle without any influence of the output characteristics of each magnetic sensor and that of the air gap between the magnetic sensor and the target are disposed in the axial direction of the rotating shaft which must be detected. In accordance with the difference in the rotational angle detected by each of the rotational angle detecting devices, the rotational torque applied on the rotating shaft can accurately be detected.

A torque detecting device according to a thirty-seventh invention is constructed such that said rotating shaft according to the thirty-sixth invention is a member constructed by coaxially connecting a first shaft and a second shaft to each other through a torsion bar; and said targets are disposed adjacent to connecting portion between said first shaft and said second shaft.

In the present invention, the member formed by coaxially connecting the first shaft and the second shaft through the torsion bar must be detected. The target is parallelly provided for each of the first and second shafts. Moreover, a magnetic sensor is disposed opposite to the targets to accurately detect the rotational torque applied on the first and second shafts in accordance with the difference in the rotational angle generated between the two shafts with a twist of the torsion bar.

A steering apparatus according to a thirty-eighth invention comprises: a rotational angle detecting device according to any one of the thirty-first invention to thirty-fifth invention constructed such that a steering shaft for connecting a steering wheel and a steering mechanism is said rotating shaft; and a torque detecting device according to the thirty-sixth invention and/or the thirty-seventh invention.

In the present invention, above-mentioned rotational angle detecting device and torque detecting device are applied to the steering apparatus for an automobile. Accurately detected values of the steering angle and the steering torque are obtained. The obtained results are used to, for example, drive and control the rotation of the electric motor for assisting steering. Thus, a reliable electric power steering apparatus is provided.

A torque detecting device according to a thirty-ninth invention comprising: two pairs of plural targets and two magnetic sensors, wherein said plural targets are disposed in the circumferential direction of a rotating shaft and inclined with respect to an axial direction of said rotating shaft by substantially the same angles; and said two magnetic sensors are disposed opposite to each other at positions on the outside of said targets such that the phases of said magnetic sensors are shifted in the circumferential direction to generate outputs which are changed when each target passes; are provide apart from each other in the axial direction of said rotating shaft, and the difference between outputs of either of selected magnetic sensor in each pair is used to calculate the rotational torque applied on said rotating shaft; further comprising: a comparator for comparing the absolute value of the difference in the output of the selected magnetic sensors and the difference in the output of the non-selected magnetic sensors; a judging unit for judging the sign of the difference in the output between selected magnetic sensors and the sign of the difference in the output between non-selected magnetic sensors; and a selector for selecting a magnetic sensor for use in calculating the rotational torque in accordance with a judgement result by said judging unit and a comparison result by said comparator.

In the present invention, the torque detecting device has the construction that the two pairs of the targets and the magnetic sensors are provided in the axial direction of the rotating shaft which must be detected. In accordance with the difference in the output between the magnetic sensors in the two pairs, the rotational torque is calculated. When change in the outputs of the selected magnetic sensors in the two pairs which are being used to calculate the rotational torque is observed, attention is given to a fact that the sign of the difference in the output is inverted between a linearly-changed region and a nonlinearly-changed region. In accordance with inversion of the sign and reduction in the absolute value of the difference in the output occurring before the inversion, shift from the linearly-changed region to the nonlinearly-changed region is judged. In accordance with a result of the judgement, a magnetic sensor for use to calculate the rotational torque is selected.

A torque detecting device according to a fortieth invention has a construction that said selector according to the thirty-ninth invention changes selection of said magnetic sensor when the comparison by said comparator has resulted in a fact that the absolute value of the difference in the output of the selected magnetic sensors is larger than the absolute value of the difference in the output of the non-selected magnetic sensors by a predetermined quantity under condition that the judgement result by said judging unit are such that the selected magnetic sensors and the non-selected magnetic sensors are the same.

In the present invention, a judgement is performed such that the output of the selected magnetic sensor is being shifted from the linearly-changed region to the nonlinearly-changed region when the absolute value of the difference in the output of the magnetic sensors for use to calculate the present rotational torque is smaller than the absolute value of the difference in the output of the non-selected magnetic sensor, that is, the magnetic sensor which is not used to calculate the present rotational torque. Thus, switching of the magnetic sensor which is being selected at present to the non-selected magnetic sensor is performed. When the difference in the output of the non-selected magnetic sensor presents in the nonlinearly-changed region, there is apprehension that the foregoing relationship about the magnitude of the absolute value is held. Therefore, also the sign of the difference in the output of the magnetic sensors which are being selected and those which are not being selected is detected. The foregoing switching is performed only when the signs of the differences are the same.

A torque detecting device according to a forty-first invention is constructed such that said rotating shaft according to the thirty-ninth invention or fortieth invention is a member constructed by coaxially connecting a first shaft and a second shaft to each other through a torsion bar; and said targets are disposed adjacent to connecting portions between said first shaft and said second shaft.

In the present invention, the targets are parallelly provided on the first shaft and the second shaft coaxially connected to each other through the torsion bar. Two magnetic sensors are disposed opposite to each other on the outside of each target. The great difference in the rotational angle generated between the two shafts with twisting of the torsion bar is accurately detected by selecting the magnetic sensor. A result of the detection is used to accurately detect the rotational angle which is applied on the first and second shafts.

A steering apparatus according to a forty-second invention comprises a torque detecting device according to any one of the thirty-ninth invention to forty-first invention constructed such that a steering shaft for connecting a steering wheel and a steering mechanism is said rotating shaft.

In the present invention, the torque detecting device according to the thirty-ninth invention to forty-first invention capable of accurately calculating the torque is applied to a steering apparatus for an automobile. An accurately detected value of the steering torque which is applied on the steering shaft for performing steering is detected. A result of the detection is used to perform various controls, such as control of the electric motor for assisting steering.

A torque detecting device according to a forty-third invention comprises: two sets of plural targets and a magnetic sensor, wherein said plural targets are disposed in the circumferential direction of a rotating shaft and inclined with respect to an axial direction of said rotating shaft by substantially the same angles; and said magnetic sensors are disposed opposite to the position corresponding to said targets to generate output changed when each target passes; are disposed apart from each other in the axial direction of said rotating shaft; and a torque calculating unit for calculating the rotational torque applied on said rotating shaft in accordance with the difference in the output of the magnetic sensors of two sets; wherein said torque calculating unit obtains an average value of said two pairs of said magnetic sensors during passing of each of said plural targets to set a corrective gain with which each output is multiplied so as to make coincide the outputs of the two sets of said magnetic sensors with said average value.

In the present invention, the hysteresis of the outputs of the magnetic sensors opposite to the targets disposed apart from one another in the axial direction of the rotating shaft is monitored. The average value of the outputs of the magnetic sensors in a period in which the previous target passes is obtained. The corrective gain for making the outputs of the two magnetic sensors to coincide with the foregoing average value is previously set. In a period in which a next target passes, the outputs of the magnetic sensors are not directly used. As an alternative to this, a result obtained by multiplying the set corrective gain with the foregoing outputs is used to calculate the rotational torque. Thus, change in the output characteristics of the magnetic sensor caused from an influence of the temperature and an influence owing to time is compensated.

A torque detecting device according to a forty-fourth invention is constructed such that a plurality of said two sets of said magnetic sensors are disposed in the circumferential direction on the outside of said target such that the phase of said magnetic sensors are shifted.

In the present invention, the plural magnetic sensors are disposed on the outside of each of the two targets provided for the rotating shaft. An influence of the difference in the output characteristics of each magnetic sensor can be eliminated, causing accurate calculation of the rotational torque to be performed.

A torque detecting device according to a forty-fifth invention is constructed such that said rotating shaft is a member constructed by coaxially connecting a first shaft and a second shaft to each other through a torsion bar; and said targets are disposed adjacent to connecting portions between said first shaft and said second shaft.

In the present invention, the targets are parallelly provided for each of the first and second shafts coaxially connected to each other through the torsion bar. The magnetic sensors are disposed opposite to the targets. Thus, a great difference in the rotational angle generated between the two shafts with the twisting of the torsion bar is accurately calculated by setting the foregoing corrective gain. A result of the calculation is used to accurately detect the rotational angle applied on the first and second shafts.

A steering apparatus according to a forty-sixth invention comprises a torque detecting device according to any one of the forty-third invention to forty-fifth invention constructed such that a steering shaft for connecting a steering wheel and a steering mechanism is said rotating shaft.

In the present invention, above-mentioned torque detecting device is applied to a steering apparatus for an automobile. An accurately detected value of the steering torque applied on the steering shaft for performing steering is detected. A result of the detection is used to perform various controls, such as control of the electric motor for assisting steering.

A rotational angle detecting device according to a forty-seventh invention comprises: a plurality of targets made of magnetic material and disposed in the circumferential direction of a rotating shaft such that said targets are inclined by substantially the same angles with respect to the axial direction of said rotating shaft; and magnetic sensor disposed opposite to said targets and to generate output changed when each target passes; wherein the rotational angle of said rotating shaft is detected in accordance with the output generated by said magnetic sensors when said magnetic sensor passes; further comprising: a target plate formed into an annular disc-like shape having a fitting hole for fitting to said rotating shaft at an axis thereof from outside and integrally comprising said targets by a bending process.

In the present invention, the plural targets inclined with respect to the axial direction and provided in the circumferential direction are integrally formed with the outer periphery of the annular disc-shape plate having a fitting hole for fitting the rotating shaft formed in the axis thereof and made of magnetic material by press-working performed from the two positions in the direction of the thickness of the annular disc-shape plate. The thus-manufactured target plate is, from outside, secured to the rotating shaft through the fitting hole. Thus, a target realizing excellent accuracy of the shape thereof can easily be manufactured. The magnetic sensor is disposed on the outside of the targets to opposite the targets. In accordance with an output of the magnetic sensor, an accurate rotational angle is obtained.

A torque detecting device according to a forty-eighth invention comprises: two rotational angle detecting devices according to the forty-fourth invention disposed apart from each other on the rotating shaft in the axial direction of said rotating shaft; wherein the rotational torque applied on said rotating shaft is calculated in accordance with the difference in the rotational angle detected by said rotational angle detecting devices.

In the present invention, two target plates integrally comprising targets realizing excellent accuracy of the shape is fitted to the rotating shaft in the axial direction of the rotating shaft. Moreover, the magnetic sensor is disposed opposite to each target at a position on the outside of the target plate. In accordance with the difference in the rotational angles each of which is obtained in accordance with the output of the magnetic sensor accurate rotational torque is obtained.

A torque detecting device according to a forty-ninth invention is constructed such that said rotating shaft according to the forty-eighth invention is a member constructed by coaxially connecting a first shaft and a second shaft to each other through a torsion bar; and said targets are fitted from outside adjacent to connecting portions between said first shaft and said second shaft.

In the present invention, the target plate integrally comprising the targets realizing excellent accuracy of the shape is fitted to the first shaft and second shaft which are coaxially connected to each other through the torsion bar. Moreover, the magnetic sensors are disposed on the outside of the target plates to be opposite to the target plates. Thus, the great difference in the rotational angle generated between the first and second shafts with twisting of the torsion bar is accurately detected. The result of the detection is used to detect the rotational torque with high accuracy applied on the first and second shafts.

A steering apparatus according to a fiftieth invention comprises: a rotational angle detecting device according to the forty-seventh invention constructed such that a steering shaft for connecting a steering wheel and a steering mechanism is said rotating shaft; and a torque detecting according to the forty-eighth invention and/or the forty-ninth invention.

In the present invention, the rotational angle detecting device according to the forty-seventh invention capable of detecting the rotational angle with high accuracy and the torque detecting device according to the forty-eighth invention and/or the forty-ninth invention capable of detecting the rotational torque with high accuracy is applied to a steering apparatus of an automobile. An accurately detected value of the rotational angle (the steering angle) of the steering shaft and that of the rotational torque (the steering torque) applied on the steering shaft are detected. Results of the detection are used to perform various controls, such as the control of the electric motor for assisting steering.

A torque detecting device according to a fifty-first invention comprises; a plurality of targets made of magnetic material and provided on the circumferential direction of each of first and second shafts coaxially connected to each other through a torsion bar; and magnetic sensors disposed opposite to said targets on the outside of said targets; wherein the rotational torque applied on each of said first and second shafts is detected in accordance with the difference in the outputs generated by said magnetic sensors when each of said targets passes; further comprising: target plates fit to said first and second shafts from outside, respectively and having said targets formed thereon; and a limiting member disposed between said target plates to limit inclination of said target plates in a plane including the axis.

In the present invention, the limiting member is disposed between the target plates fitted to the first and second shafts and having the targets on the circumferential surface thereof. Thus, inclination of the target plates occurring in a plane including the axis caused from deflection and deformation of the torsion bar is limited. Thus, change in the position of the targets provided for the outer surface is prevented. Thus, occurrence of a detection error of the rotational torque can be prevented.

A torque detecting device according to a fifty-second invention has a construction such that said limiting member according to the fifty-first invention is constructed by an annular member engaged and supported by said first or second shafts and having two sides brought into contact with said target plates.

In the present invention, the two sides of the annular member fitted to the first and second shafts are brought into contact with the target plates fitted to the two shafts. The limiting member limits the inclination of the target plates. The annular member maintains its attitude such that the first and second shafts are used as support members. Thus, limitation of the inclination of the target plate can reliably be performed. Change in the position of the target can be prevented to detect the rotational torque with high accuracy.

A steering apparatus according to a fifty-third invention comprises a torque detecting device according to the fifty-first invention or the fifty-second invention having said first shaft which is an input shaft connected to a steering wheel and a second shaft which is an output shaft connected to a steering mechanism.

In the present invention, the torque detecting device according to the fifty-first invention or the fifty-second invention capable of detecting the rotational torque with high accuracy is applied to a steering apparatus for an automobile. The rotational torque (the steering torque) applied on the steering shaft for connecting the steering wheel and the steering mechanism is accurately detected. A result of the detection is used to perform various controls, such as control of the electric motor for assisting steering.

BRIEF DESCRIPTION OF THE DRAWINGS

FIG. 1 is a principle view showing an essential construction of an embodiment of a rotational angle detecting device according to the present invention;
FIG. 2 is a diagram showing the operation of the rotational angle detecting device shown in FIG. 1;
FIG. 3 is a principle view showing an essential construction of the embodiment of a torque detecting device according to the present invention;
FIG. 4A, FIG. 4B and FIG. 4C are diagrams showing the operation of the torque detecting device shown in FIG. 3;
FIG. 5 is a principle view showing the essential construction of the rotational angle detecting device according to the present invention;
FIG. 6A and FIG. 6B are diagrams showing the operation of the rotational angle detecting device shown in FIG. 5;
FIG. 7 is a principle view showing an essential construction of the embodiment of the torque detecting device according to the present invention;
FIG. 8A, FIG. 8B and FIG. 8C are diagrams showing the operation of the torque detecting device shown in FIG. 7;
FIG. 9 is a principle view showing an essential construction of the rotational angle detecting device according to the present invention;
FIG. 10A and FIG. 10B are diagrams showing the operation of the rotational angle detecting device shown in FIG. 9;
FIG. 11A and FIG. 11B are diagrams showing the operation of the rotational angle detecting device shown in FIG. 9;
FIG. 12 is a principle view showing an essential construction of an embodiment of the torque detecting device according to the present invention;
FIG. 13 is a principle view showing an essential construction of an embodiment of the rotational angle detecting device according to the present invention;

FIG. 14A and FIG. 14B are diagrams showing the operation of the rotational angle detecting device shown in FIG. 13;

FIG. 15A and FIG. 15B are diagrams showing the operation of the rotational angle detecting device shown in FIG. 13;

FIG. 16 is a principle view showing an essential construction of an embodiment of the torque detecting device according to the present invention;

FIG. 17 is a principle view showing an essential construction of an embodiment of the rotational angle detecting device according to the present invention;

FIG. 18A, FIG. 18B and FIG. 18C are diagrams showing a manufacturing method of the rotational angle detecting device shown in FIG. 17;

FIG. 19 is a principle view showing an essential construction of an embodiment of the torque detecting device according to the present invention;

FIG. 20 is a principle view showing an essential construction of an embodiment of the rotational angle detecting device according to the present invention;

FIG. 21 is a diagram showing a manufacturing method of the rotational angle detecting device shown in FIG. 20;

FIG. 22 is a principle view showing an essential construction of an embodiment of the torque detecting device according to the present invention;

FIG. 23 is a principle view showing an essential construction of an embodiment of the torque detecting device according to the present invention;

FIG. 24 is a vertical cross sectional view showing an essential construction of an embodiment of a steering apparatus according to the present invention;

FIG. 25 is a principle view showing an essential construction of an embodiment of the rotational angle detecting device according to the present invention;

FIG. 26A, FIG. 26B and FIG. 26C are diagrams showing the construction and operation of the rotational angle detecting device shown in FIG. 25;

FIG. 27A through FIG. 27F are diagrams showing the construction and operation of the rotational angle detecting device according to the present invention;

FIG. 28A, FIG. 28B and FIG. 28C are diagrams showing the operation of the torque detecting device according to the present invention;

FIG. 29 is a diagram showing the operation of the torque detecting device according to the present invention;

FIG. 30 is a principle view showing an essential construction of an embodiment of the torque detecting device according to the present invention;

FIG. 31 is a flow chart showing the operation of the torque detecting device shown in FIG. 30;

FIG. 32 is a flow chart showing the operation of the torque detecting device shown in FIG. 30;

FIG. 33 is a flow chart showing the operation of the torque detecting device shown in FIG. 30;

FIG. 34A and FIG. 34B are diagrams shown the operation of the torque detecting device shown in FIG. 30;

FIG. 35 is a flow chart showing the operation of the torque detecting device according to the present invention;

FIG. 36 is a flow chart showing the operation of the torque detecting device according to the present invention;

FIG. 37 is a flow chart showing the operation of the torque detecting device according to the present invention;

FIG. 38 is a flow chart showing the operation of the torque detecting device according to the present invention;

FIG. 39 is a flow chart showing the operation of the torque detecting device according to the present invention;

FIG. 40 is a flow chart showing the operation of the torque detecting device according to the present invention;

FIG. 41A and FIG. 41B are diagrams showing the operation of the torque detecting device according to the present invention;

FIG. 42 is a principle view showing an essential construction of an embodiment of the torque detecting device according to the present invention;

FIG. 43 is a vertical cross sectional view showing the construction of the steering apparatus according to the present invention;

FIG. 44 is a principle view showing an essential construction of an embodiment of the rotational angle detecting device according to the present invention;

FIG. 45 is a diagram showing the operation of the rotational angle detecting device shown in FIG. 44;

FIG. 46 is a diagram showing the operation of the rotational angle detecting device shown in FIG. 44;

FIG. 47 is a flow chart showing the operation of the rotational angle detecting device shown in FIG. 44;

FIG. 48 is a principle view showing an essential construction of an embodiment of the torque detecting device according to the present invention;

FIG. 49A, FIG. 49B and FIG. 49C are diagrams showing the operation of the torque detecting device shown in FIG. 48;

FIG. 50 is a vertical cross sectional view showing an essential construction of an embodiment of the steering apparatus according to the present invention;

FIG. 51 is a principle view showing an essential construction of an embodiment of the torque detecting device according to the present invention;

FIG. 52 is a flow chart showing the operation of the torque detecting device shown in FIG. 51;

FIG. 53 is a flow chart showing the operation of the torque detecting device shown in FIG. 51;

FIG. 54 is a flow chart showing the operation of the torque detecting device shown in FIG. 51;

FIG. 55 is a flow chart showing the operation of the torque detecting device shown in FIG. 51;

FIG. 56 is a flow chart showing the operation of the torque detecting device shown in FIG. 51;

FIG. 57 is a flow chart showing the operation of the torque detecting device shown in FIG. 51;

FIG. 58 is a flow chart showing the operation of the torque detecting device shown in FIG. 51;

FIG. 59 is a flow chart showing the operation of the torque detecting device shown in FIG. 51;

FIG. 60A and FIG. 60B are diagrams showing the operation of the torque detecting device shown in FIG. 51;

FIG. 61 is a diagram showing the torque detecting device shown in FIG. 51;

FIG. 62 is a vertical cross sectional view showing the construction of the steering apparatus according to the present invention;

FIG. 63 is a schematic view showing the constructions of the rotational angle detecting device and the torque detecting device applied to a steering apparatus for an automobile;

FIG. 64 is a graph showing an example of change in the output voltage of an MR sensor;

FIG. 65 is a graph showing another example of change in the output voltage of the MR sensor;

FIG. 66 is a flow chart showing the contents of a calculation for correcting gain and offset;

FIG. 67 is a diagram showing corrective gain;

FIG. 68 is a diagram showing an offset amount;

FIG. 69 is a schematic view showing the construction of a torque detecting device according to the present invention applied to a steering apparatus for an automobile;

FIG. 70 is a graph showing an example of change in the output voltage of an MR sensor;

FIG. 71 is a flow chart showing the contents of the selecting operation of an MR sensor;

FIG. 72 is a diagram showing another example of change in the output voltage of an MR sensor;

FIG. 73 is a schematic view showing the construction of the torque detecting device according to the present invention applied to the steering apparatus for an automobile;

FIG. 74 is a graph showing an example of change in the output voltage of the magnetic sensor of the input shaft and the output shaft;

FIG. 75 is a flow chart showing the contents of the operation for setting the corrective gain;

FIG. 76 is a diagram showing the operation for setting the corrective gain;

FIG. 77 is a schematic view showing the construction of the device according to the present invention and applied to the steering apparatus for an automobile;

FIG. 78 is a diagram showing an example of change in the output voltage of the magnetic sensor;

FIG. 79 is a perspective view showing the shape of a target plate;

FIG. 80A and FIG. 80B are diagrams showing a manufacturing method of the target plate;

FIG. 81 is a schematic view showing the construction of the torque detecting device according to the present invention applied to the steering apparatus for an automobile;

FIG. 82 is a diagram showing an example of change in the output voltage of an MR sensor;

FIG. 83A, FIG. 83B and FIG. 83C are diagrams showing an influence of deflection of the torsion bar on the output of the magnetic sensor; and

FIG. 84 is a vertical cross sectional view showing the construction of an essential portion of a steering apparatus for an automobile comprising the torque detecting device according to the present invention.

BEST MODE FOR CARRYING OUT THE INVENTION

Embodiments of the present invention will now be described with reference to the drawings.

(First Embodiment)

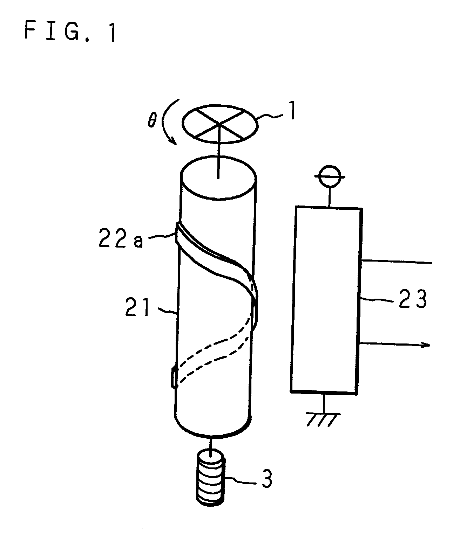

FIG. 1 is a principle view showing an essential construction of a first embodiment of a rotational angle detecting device according to the present invention. The rotational angle detecting device according to the first embodiment is applied to a steering apparatus. A protrusion 22a made of magnetic material is spirally formed on the surface of an intermediate portion of a steering shaft 21 having an upper end to which a steering wheel 1 is connected and lower end to which a pinion gear 3 is connected.

The rotational angle detecting device according to this embodiment comprises an MR sensor 23 for detecting the position of the protrusion 22a which is moved in the axial direction of the steering shaft 21 when the steering shaft 21 is rotated and which is viewed from a position of rotation. The MR sensor 23 is disposed in parallel with the steering shalt 21 such that the MR sensor 23 is disposed apart from the steering shaft 21 for a proper distance. The MR sensor 23 is secured to a stationary portion of a body of an automobile.

The MR sensor 23 comprises a potential dividing circuit comprising, for example, two magnetic resistors. Thus, the divided potential is outputted. To greatly change a magnetic field caused by the protrusion 22a to improve the sensitivity, a biasing magnet is provided for a surface which does not faces the steering shaft 21. Thus, the magnetic field of the steering shaft 21 is intensified.

The rotational angle detecting device having the above-mentioned construction is arranged such that the protrusion 22a which is closest to the detecting surface of the MR sensor 23 is moved in the axial direction of the steering shaft 21 when the steering shaft 21 has been rotated in a range that $0° \leq \theta < 360°$.

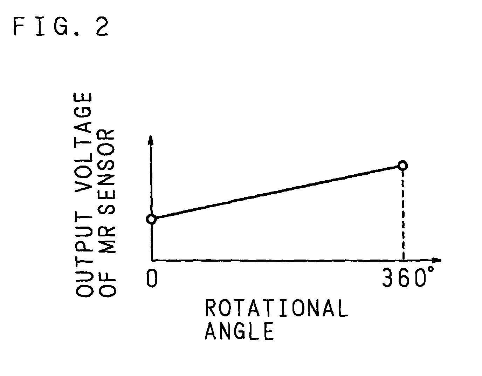

FIG. 2 is a diagram showing the operation of the rotational angle detecting device shown in FIG. 1. The protrusion 22a is spirally provided on the circumferential surface of the steering shaft 21. Therefore, the position of the protrusion 22a, which is closest to the detecting surface of the MR sensor 23, and the rotational angle of the steering shaft 21 can be made to correspond to each other. When the output voltage of the MR sensor 23 and the rotational angle of the steering shaft 21 are set to have a linear relationship as shown in FIG. 2, the rotational angle of the steering shaft 21 can be detected in accordance with the output voltage of the MR sensor 23.

(Second Embodiment)

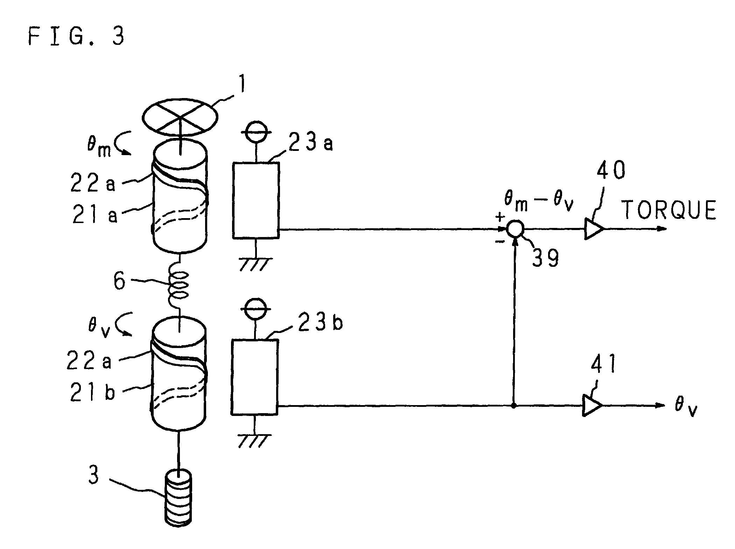

FIG. 3 is a principle view showing an essential construction of a second embodiment of a torque detecting device according to the present invention. The torque detecting device is applied to a steering apparatus. A magnetic protrusion 22a is spirally formed on the circumferential surface of an intermediate portion of an input shaft 21a of a steering shaft having an upper end to which a steering wheel 1 is connected and a lower end to which a torsion bar 6 is connected.

When the input shaft 21a has been rotated, an MR sensor 23a is disposed in parallel with the input shaft 21a such that a proper distance is maintained to detect the position of the magnetic protrusion 22a which is moved in the axial direction of the input shaft 21a when observation is performed from one rotational position. The MR sensor 23a is secured to a stationary portion of a body of an automobile.

An output shaft 21b of the steering shaft has an upper end connected to the torsion bar 6 and a lower end connected to a pinion gear 3. Similarly to the input shaft 21a, a magnetic protrusion 22a is spirally disposed on the circumferential surface of an intermediate portion of the output shaft 21b.

An MR sensor 23b for detecting the position of the protrusion 22a which is moved in the axial direction of the output shaft 21b when observation is performed from one rotational position is disposed in parallel with the output shaft 21b such that a proper distance is maintained. The MR sensor 23b is secured to a stationary portion of a body of an automobile.

Output voltage of the MR sensor 23a is inputted to a subtraction circuit 39, while the output voltage of the MR sensor 23b is inputted to the subtraction circuit 39 and an amplifier 41. Output voltage of the amplifier 41 is outputted as a signal indicating the rotational angle of the steering shaft detected by the rotational angle detecting device comprising the output shaft 21b, the protrusion 22a and the MR sensor 23b.

The torsional angle of the torsion bar 6 is at most several degrees. A signal indicating the rotational angle of the steering shaft may be outputted by the rotational angle detecting device comprising the input shaft 21a, the protrusion 22a and the MR sensor 23a.

Output voltage of the subtraction circuit 39 is inputted to an amplifier 40. Output voltage of the amplifier 40 is outputted as a signal indicating the steering torque applied on the steering wheel 1 detected by the torque detecting device.

When the input shaft 21a and the output shaft 21b of the torque detecting device constructed as described above rotate such that $0° \leq m < 360°$ and $0° \leq v < 360°$, the protrusion 22a which is closest to the detecting surfaces of the MR sensor 23a and the MR sensor 23b is moved to the axial direction of each of the input shaft 21a and the output shaft 21b. Since the protrusion 22a is spirally formed on the circumferential surface of each of the input shaft 21a and the output shaft 21b, the position of the protrusion 22a, which is closest to the detecting surfaces of the MR sensor 23a and MR sensor 23b, in the axial direction of each of the input shaft 21a and the output shaft 21b, and the rotational angle of each of the input shaft 21a and the output shaft 21b can be made to correspond to each other.

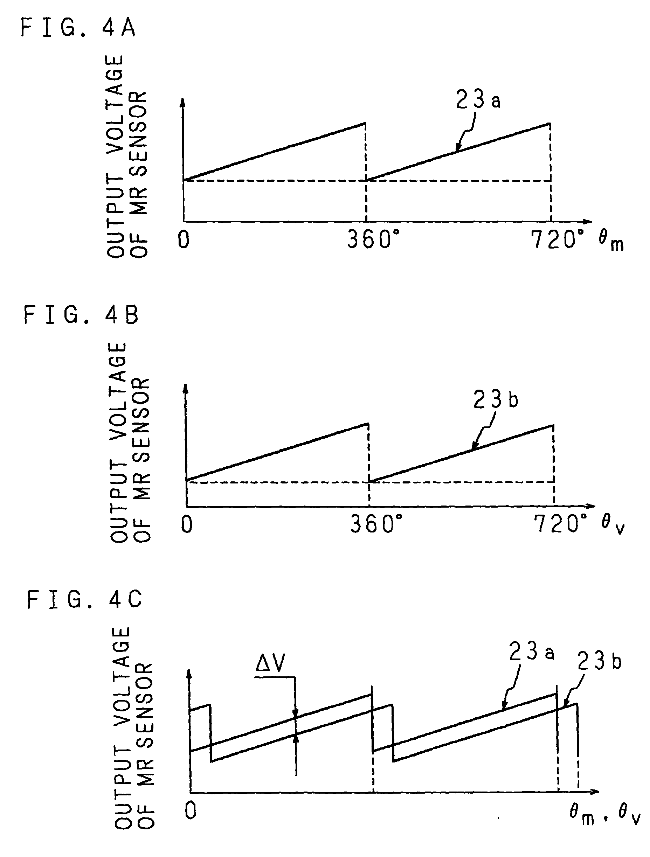

FIG. 4A, FIG. 4B and FIG. 4C are diagrams showing the operation of the torque detecting device shown in FIG. 3. For example, the output voltage of each of the MR sensors 23a and 23b and the rotational angle of each of the input shaft 21a and the output shaft 21b are set to have a similar linear relationship. When the input shaft 21a and output shaft 21b are rotated plural times, the output of each of the MR sensors 23a and 23b, as shown in FIG. 4A and FIG. 4B, shows a voltage waveform having a period of 360°. In accordance with the output voltage of each of the MR sensors 23a and 23b, the rotational angle of each of the input shaft 21a and the output shaft 21b can be detected.

When steering torque has been applied on the steering wheel 1 and, therefore, the torsion bar 6 has a torsional angle, the output voltage of each of the MR sensors 23a and 23b encounters voltage difference $\Delta V$ corresponding to the torsional angle, for example, as shown in FIG. 4C. When the voltage difference $\Delta V$ is calculated by the subtraction circuit 39, the torsional angle can be obtained. A signal indicating the steering torque can be outputted from the amplifier 40.

A signal indicating the rotational angle of the steering shaft which has been detected by the rotational angle detecting device comprising the output shaft 21b, the magnetic protrusion 22a and the MR sensor 23b can be outputted from the amplifier 41.

(Third Embodiment)

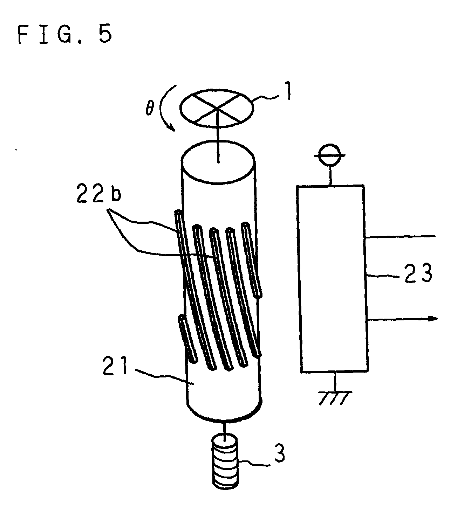

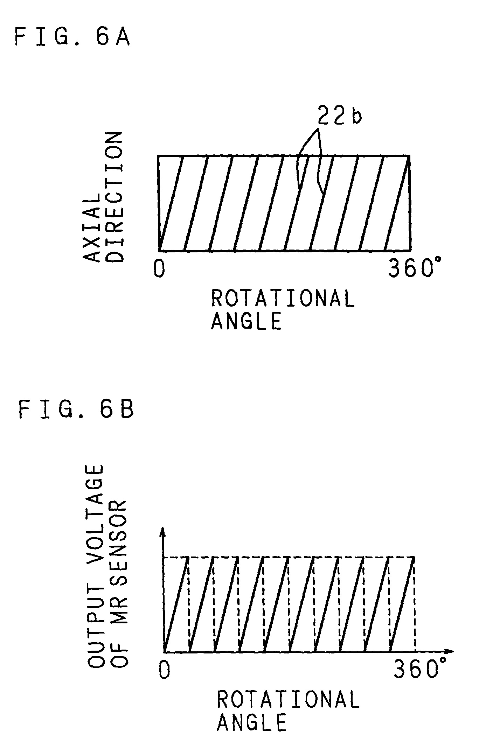

FIG. 5 is a principle view showing an essential construction of a third embodiment of the rotational angle detecting device according to the present invention. FIG. 6A and FIG. 6B are diagrams showing the operation of the rotational angle detecting device shown in FIG. 5. In this embodiment, the rotational angle detecting device is applied to a steering apparatus. For example, 10 magnetic protrusions 22b are, at the same intervals, spirally formed on the circumferential surface of an intermediate portion of a steering shaft 21 having an upper end to which a steering wheel 1 is connected and a lower end to which a pinion gear 3 is connected. When the circumferential surface of the intermediate portion of the steering shaft 21 has been developed, the protrusions 22b form a pattern formed into 10 parallel diagonal lines, as shown in FIG. 6A. The end point and the start point of the adjacent diagonal lines make the same rotational angle.

The rotational angle detecting device is constructed such that the position of the protrusions 22b which is moved in the axial direction of the steering shaft 21 when the steering shaft 21 has been rotated in a case where observation is performed from one rotational position is detected. Therefore, an MR sensor 23 is disposed in parallel with the steering shaft 21 such that a proper distance is maintained. The MR sensor 23 is secured to a stationary portion of a body of an automobile.

The MR sensor 23 comprises a potential dividing circuit comprising, for example, two magnetic resistors. Thus, the divided potential is outputted from the MR sensor 23. To improve the sensitivity by enlarging change in the magnetic field caused by the protrusions 22b, a biasing magnet is provided for the surface which does not face the steering shaft 21. Thus, the magnetic field of the surface of the steering shaft 21 is intensified.

The rotational angle detecting device having the above-mentioned construction is arranged such that whenever the steering shaft 21 rotates by 36° in a range that $0° \leq \theta < 360°$, the protrusions 22b which is closest to the detecting surface of the MR sensor 23 reciprocates in the axial direction of the steering shaft 21.

The position of the magnetic protrusions 22b which is closest to the detecting surface of the MR sensor 23 in the axial direction of the steering shaft 21 and the rotational angle of the steering shaft 21 for each 36° can be made to correspond to each other.

Therefore, the output voltage of the MR sensor 23 is set to have a linear relationship with, the rotational angle of the steering shaft 21 for each 36°, as shown in FIG. 6A. When counting of the number of change in the output voltage of the MR sensor 23 is also used, the rotational angle of the steering shaft 21 can be detected in accordance with the output voltage of the MR sensor 23.

In the rotational angle detecting device according to this embodiment, the MR sensor 23 is able to obtain the output voltage which is ten times the output voltage which can be realized when the number of the protrusion is one as described in the first embodiment.

(Fourth Embodiment)

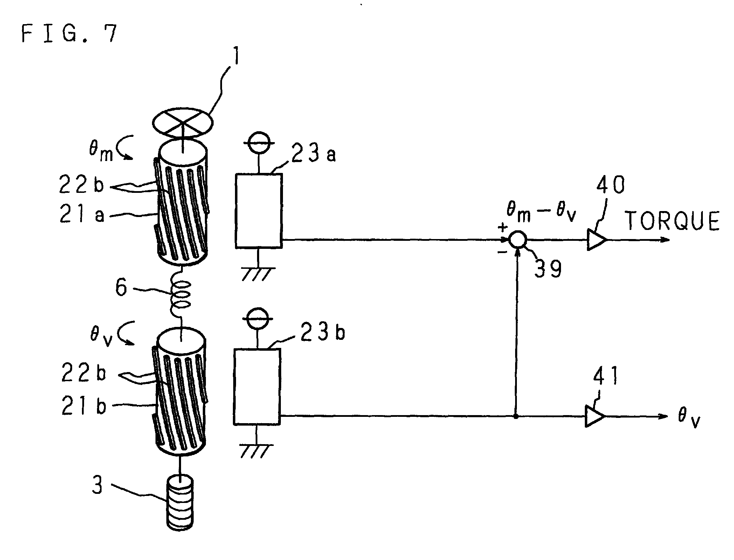

FIG. 7 is a principle view showing an essential construction of a fourth embodiment of the torque detecting device according to the present invention. In this embodiment, the torque detecting device is applied to a steering apparatus. Ten protrusions 22b are, at the same intervals, spirally provided on the circumferential surface of an intermediate portion of the input shaft 21a having an upper end to which a torsion bar 6 is connected and a lower end to which a torsion bar 6 is connected. To detect the position of the protrusions 22b which is moved in the axial direction of the input shaft 21a when observation is performed from one rotational position owing to rotation of the input shaft 21a, an MR sensor 23a is disposed in parallel with the input shaft 21a such that a proper distance is maintained. The MR sensor 23a is secured to a stationary portion of a body of an automobile.

An output shaft 21b of the steering shaft is disposed such that its upper end is connected to the torsion bar 6. The lower end of the output shaft 21b is connected to the pinion gear 3. Similarly to the input shaft 21a, 10 magnetic protrusions 22b are, at the same intervals, provided on the circumferential surface of an intermediate portion of the output shaft 21b. To detect the position of the protrusions 22b which is moved in the axial direction of the output shaft 21b when observation is performed from one rotational position, an MR sensor 23b is disposed in parallel with the output shaft 21b such that a proper distance is maintained. The MR sensor 23b is secured to a stationary portion of a body of an automobile.

Output voltage of the MR sensor 23a is inputted to a subtraction circuit 39, while output voltage of the MR sensor 23b is inputted to the subtraction circuit 39 and an amplifier 41. Output voltage of the amplifier 41 is outputted as a signal indicating the rotational angle of the steering shaft which has been detected by the rotational angle detecting device comprising the output shaft 21b, the magnetic protrusions 22b and the MR sensor 23b.

The torsional angle of the torsion bar 6 is at most several degrees. A signal indicating the rotational angle of the steering shaft may be outputted by the rotational angle detecting device comprising the input shaft 21a, the magnetic protrusions 22b and the MR sensor 23a.

The output voltage of the subtraction circuit 39 is inputted to the amplifier 40. The output voltage of the amplifier 40 is outputted as a signal indicating the steering torque applied on the steering wheel 1 detected by the torque detecting device.

The torque detecting device having the above-mentioned construction is arranged such that the protrusions 22b which is closest to the detecting surfaces of the MR sensors 23a and 23b reciprocates in the axial direction of the input shaft 21a and the output shaft 21b whenever the input shaft 21a and the output shaft 21b rotate by 36° in a range that $0° \leq \theta_m < 360°$ and $0° \leq \theta_v < 360°$, respectively. The position of the protrusions 22b which is closest to the detecting surfaces of the MR sensors 23a and 23b in the axial direction of the input shaft 21a and the output shaft 21b and the rotational angle of the input shaft 21a and the output shaft 21b can be made to correspond to each other.

Therefore, the output voltage of each of the MR sensors 23a and 23b is set to have a linear relationship with the rotational angle of each of the input shaft 21a and the output shaft 21b for each 36°. Also counting of change in the output voltage of each of the MR sensors 23a and 23b is used. Thus, the rotational angle of each of the input shaft 21a and the output shaft 21b can be detected.

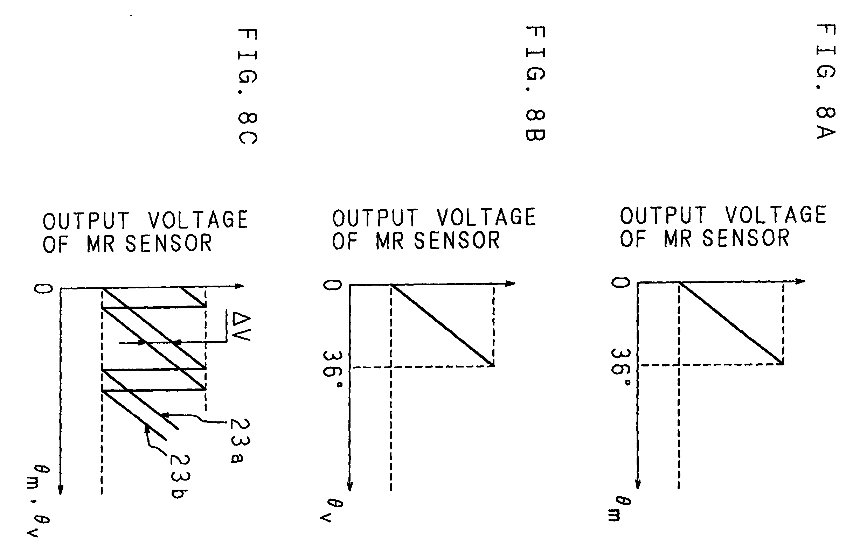

For example, the output voltage of each of the MR sensors 23a and 23b and the rotational angle of each of the input shaft 21a and the output shaft 21b are set to have a linear relationship. When the input shaft 21a and the output shaft 21b are rotated, the output of each of the MR sensors 23a and 23b shows a voltage waveform having a period of 36°, as shown in FIG. 8A and FIG. 8B. In accordance with the output voltage of each of the MR sensors 23a and 23b, the rotational angles of the input shaft 21a and the output shaft 21b can be detected.

When steering torque has been applied on the steering wheel 1 and the torsion bar 6 has made a torsional angle, the output voltages of the MR sensors 23a and 23b generates the voltage difference ΔV corresponding to the torsional angle, for example, as shown in FIG. 8C. Therefore, the voltage difference ΔV is calculated by the subtraction circuit 39. Thus, the torsional angle can be obtained. Hence it follows that a signal indicating the steering torque can be outputted from the amplifier 40. In the foregoing case, the subtraction circuit 39 comprising the MR sensor 23a, the MR sensor 23b and the subtraction circuit 39 is able to obtain the output voltage which is ten times the output voltage which can be obtained from the second embodiment in which one protrusion is provided.

A signal indicating the rotational angle of the steering shaft which has been detected by the rotational angle detecting device comprising the output shaft 21b, the protrusions 22b and the MR sensor 23b can be outputted from the amplifier 41.

(Fifth Embodiment)

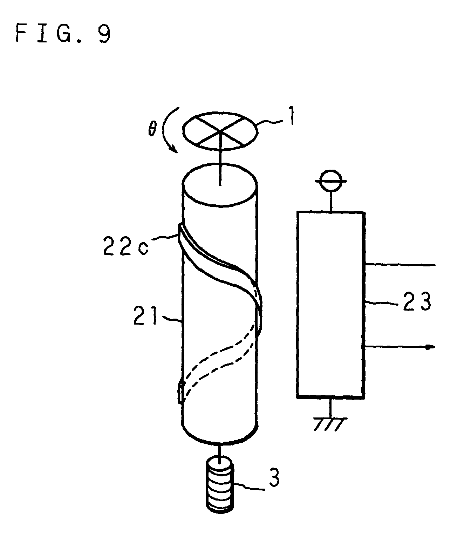

FIG. 9 is a principle view showing an essential construction of a fifth embodiment of the rotational angle detecting device according to the present invention. In this embodiment, the rotational angle detecting device is applied to a steering apparatus. A magnetic protrusion 22c is spirally formed on the circumferential surface of an intermediate portion of a steering shaft 21 having an upper end to which a steering wheel 1 is connected and a lower end to which a pinion gear 3 is connected.

The rotational angle detecting device according to this embodiment has a construction that the position of the protrusion 22c which is moved in the axial direction of the steering shaft 21 when the steering shaft 21 has been rotated in a state where observation is performed from one rotational position is detected. Therefore, an MR sensor 23 is disposed in parallel with the steering shaft 21 such that a proper distance is maintained. The MR sensor 23 is secured to a stationary portion of a body of an automobile.

The MR sensor 23 comprises a potential dividing circuit comprising, for example, two magnetic resistors to output the divided potential. To enlarge change in the magnetic field caused by the protrusion 22c to improve the sensitivity, a biasing magnet is provided for the surface which does not face the steering shaft 21. Thus, the magnetic field of the surface of the steering shaft 21 is intensified.

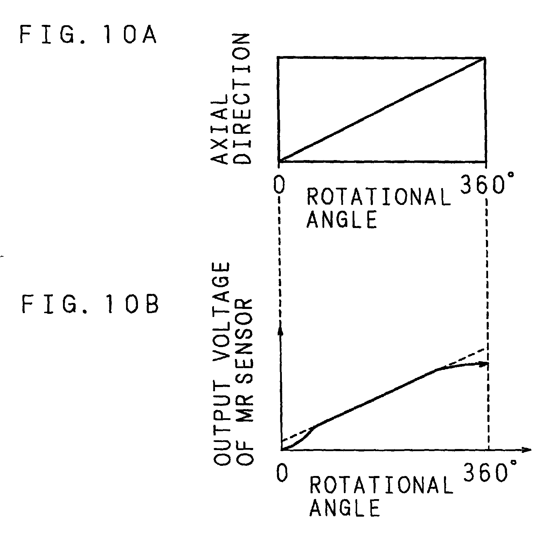

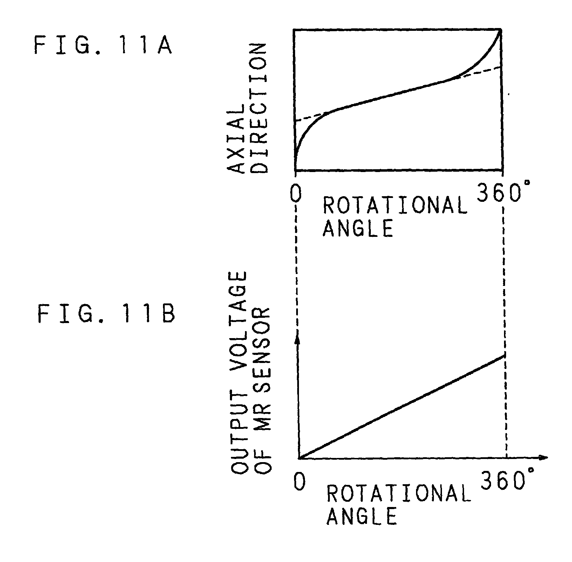

FIG. 10A and FIG. 10B are diagrams showing the operation of the rotational angle detecting device shown in FIG. 9. FIG. 11A and FIG. 11b are diagrams showing the operation of the rotational angle detecting device shown in FIG. 9. When the pattern of the protrusion 22c in a case where the circumferential surface of an intermediate portion of the steering shaft 21 has been developed is, as shown in FIG. 10A, formed into a straight linear line shape, the output voltage is, as shown in FIG. 10B, dropped at the start and end points of the protrusion 22c. Thus, there are tendencies that a nonlinearly output characteristic is realized.

Therefore, the pattern of the protrusion 22c in a case where the circumferential surface of an intermediate portion of the steering shaft 21 has been developed is, as shown in FIG. 11A, formed into a nonlinearly shape such that the inclination at the start and end points is made to be steep and moderate in the intermediate portion. Thus, the output voltage characteristic of the MR sensor 23 shows a straight and linear characteristic, as shown in FIG. 11B.

The rotational angle detecting device constructed as described above is arranged such that when the steering shaft 21 is rotated in a range that $0° \leq \theta < 360°$, the protrusion 22c which is closest to the detecting surface of the MR sensor 23 is moved in the axial direction of the steering shaft 21.

The protrusion 22c is spirally provided on the circumferential surface of the steering shaft 21 such that the inclination of the start and end points are made to be steep and moderate in the intermediate portion as shown in FIG. 11A. The position of the protrusion 22c, which is closest to the detecting surface of the MR sensor 23, in the axial direction of the steering shaft 21 and the rotational angle of the steering shaft 21 can be made to correspond to each other. As shown in FIG. 11B, the output voltage of the MR sensor 23 and the rotational angle of the steering shaft 21 are made to have the straight and linear relationship. Thus, in accordance with the output voltage of the MR sensor 23, the rotational angle of the steering shaft 21 can be detected.

(Sixth Embodiment)

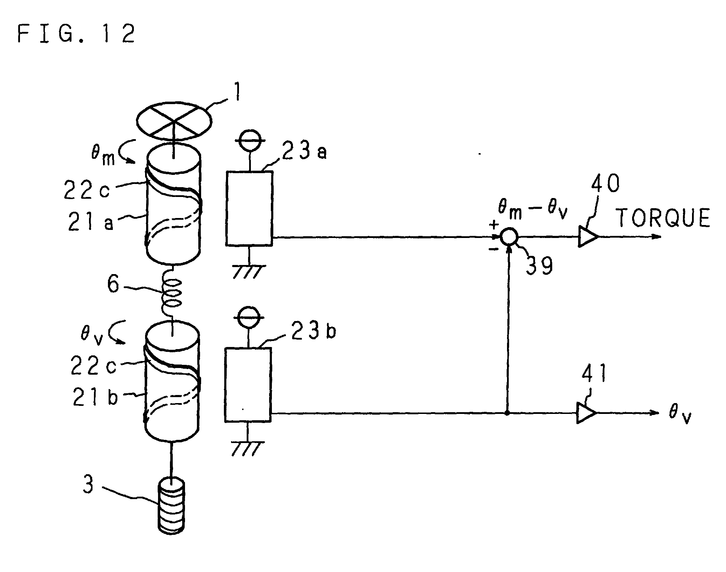

FIG. 12 is a principle view showing an essential construction of a sixth embodiment of the torque detecting device according to the present invention. In this embodiment, the torque detecting device is applied to a steering apparatus. A magnetic protrusion 22c is spirally provided on the circumferential surface of an intermediate portion of an input shaft 21a of a steering shaft having an upper end to which a steering wheel 1 is connected and a lower end to which a torsion bar 6 is connected. To detect the position of the protrusion 22c which is moved in the axial direction of the input shaft 21a when observation is performed from one rotational position, an MR sensor 23a is provided in parallel with the input shaft 21a such that a proper distance is maintained. The MR sensor 23a is secured to a stationary portion of a body of an automobile.

The upper end of the output shaft 21b of the steering shaft is connected to the torsion bar 6, while the lower end of the same is connected to a pinion gear 3. Similarly to the input shaft 21a, a magnetic protrusion 22c is spirally provided on the circumferential surface of an intermediate portion of the output shaft 21b. To detect the position of the protrusion 22c which is moved in the axial direction of the output shaft 21b when observation is performed from one rotational position, an MR sensor 23b is provided in parallel with the output shaft 21b such that a proper distance is maintained. The MR sensor 23b is secured to a stationary portion of a body of an automobile.

The protrusion 22c is spirally provided on the circumferential surfaces of the input shaft 21a and the output shaft 21b such that the inclination of the protrusion 22c is made to be steep at the start and end points and moderate the intermediate portion, as shown in FIG. 11A.

The output voltage of the MR sensor 23a is inputted to a subtraction circuit 39, while output voltage of the MR sensor 23b is inputted to the subtraction circuit 39 and an amplifier 41. The output voltage of the amplifier 41 is outputted as a signal indicating the rotational angle of the steering shaft which has been detected by the rotational angle detecting device comprising the output shaft 21b, the protrusion 22c and the MR sensor 23b.

The torsional angle of the torsion bar 6 is at most several degrees. Thus, the rotational angle detecting device comprising the input shaft 21a, the protrusion 22c and the MR sensor 23a may output a signal indicating the rotational angle of the steering shaft.

Output voltage of the subtraction circuit 39 is inputted to the amplifier 40. The output voltage of the amplifier 40 is outputted as a signal indicating the steering torque applied on the steering wheel 1 detected by the torque detecting device.

When the input shaft 21a and the output shaft 21b of the torque detecting device constructed as described above rotate such that $0° \leq \theta_m < 360°$ and $0° \leq \theta_v < 360°$, the protrusions 22c which are closest to the detecting surfaces of the MR sensor 23a and the MR sensor 23b is moved to the axial direction of each of the input shaft 21a and the output shaft 21b. The protrusions 22c are spirally formed on the circumferential surface of each of the input shaft 21a and the output shaft 21b such that the inclination of the protrusions 22c are made to be steep at the start and end points and moderate in the intermediate portion, as shown in FIG. 11A. Therefore, the position of the protrusions 22c which are closest to the detecting surfaces of the MR sensors 23a and 23b in the axial direction of each of the input shaft 21a and the output shaft 21b and the rotational angle of each of the input shaft 21a and the output shaft 21b can be made to correspond to each other.

As shown in FIG. 11B, the straight and linear line relationship is held between the output voltages of the MR sensors 23a and 23b and the rotational angles of the input shaft 21a and the output shaft 21b. In accordance with the output voltages of the MR sensors 23a and 23b, the rotational angles of the input shaft 21a and the output shaft 21b can be detected. Since the other operations are similar to those of the torque detecting device according to the second embodiment, the similar operations are omitted from description.

(Seventh Embodiment)

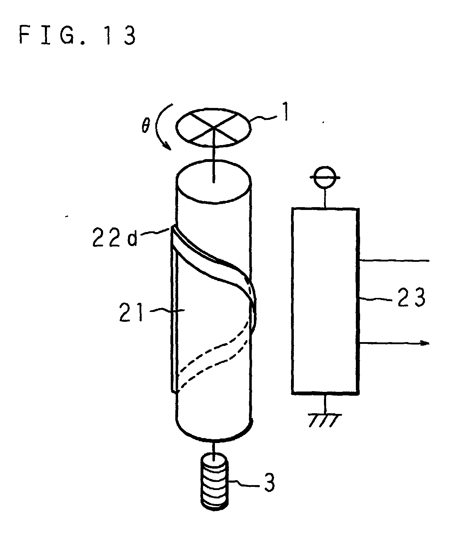

FIG. 13 is a principle view showing an essential construction of a seventh embodiment of the rotational angle detecting device according to the present invention. In this embodiment, the rotational angle detecting device is applied to a steering apparatus. A magnetic protrusion 22d is spirally provided on the circumferential surface of an intermediate portion of a steering shaft 21 having an upper end to which a steering wheel 1 is connected and a lower end to which a pinion gear 3 is connected.

To detect the position of the protrusions 22d which is moved in the axial direction of the steering shaft 21 when observation is performed from one rotational position owing to rotation of the steering shaft 21,

an MR sensor 23 is disposed in parallel with the steering shaft 21 such that a proper distance is maintained. The MR sensor 23 is secured to a stationary portion of a body of an automobile.

The MR sensor 23 comprises a potential dividing circuit comprising, for example, two magnetic resistors to output the divided potential. To enlarge change in the magnetic field caused by the protrusion 22d to improve the sensitivity, a biasing magnet is disposed on the side which does not face the steering shaft 21. Thus, the magnetic field of the surface of the steering shaft 21 is intensified.

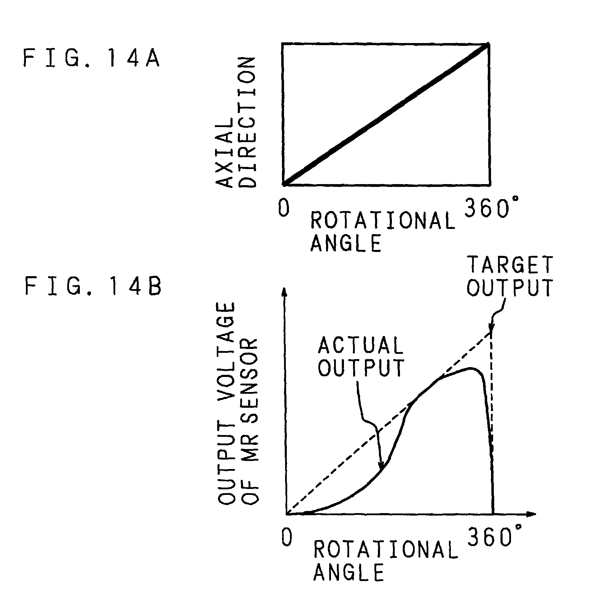

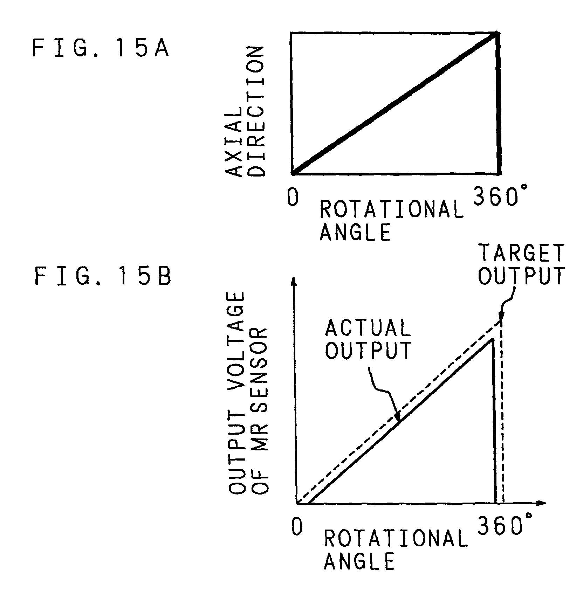

FIG. 14A and FIG. 14B are diagrams showing the operation of the rotational angle detecting device shown in FIG. 13. FIG. 15A and FIG. 15B are diagrams showing the operation of the rotational angle detecting device shown in FIG. 13. When the pattern of the protrusion 22d in a case where the circumferential surface of an intermediate portion of the steering shaft 21 has been developed is, as shown in FIG. 14A, formed into a straight linear line shape, the output voltage of the MR sensor 23 is, as shown in FIG. 14B, dropped at the start and end points of the protrusion 22d. Thus, there are tendencies that a nonlinearly output characteristic is realized.

Therefore, in a case where the circumferential surface of the intermediate portion of the steering shaft 21 is developed, the pattern of the protrusion 22d is formed such that the start portion (0°) and the end portion (360°) are connected to each other, as shown in FIG. 15A. Thus, the output voltage characteristic of the MR sensor 23 is made to be a straight and linear line characteristic, as shown in FIG. 15B

The rotational angle detecting device having the above-mentioned construction is arranged such that when the steering shaft 21 is rotated in a range that 0° ≤ θ < 360°, the protrusion 22d which is closest to the detecting surface of the MR sensor 23 is moved in the Axial direction of the steering shaft 21.

The protrusion 22d is spirally formed on the circumferential surface of the steering shaft 21 such that the start and end portions are connected to each other as shown in FIG. 15. Therefore, the position of the protrusion 22d which is closest to the detecting surface the detecting surface of the MR sensor 23 in the axial direction of the steering shaft 21 and the rotational angle of the steering shaft 21 can be made to correspond to each other. Therefore, the output voltage of the MR sensor 23 and the rotational angle of the steering shaft 21 are made to have the linear relationship as shown in FIG. 15B. Therefore, the rotational angle of the steering shaft 21 can be detected in accordance with the output voltage of the MR sensor 23.

(Eighth Embodiment)

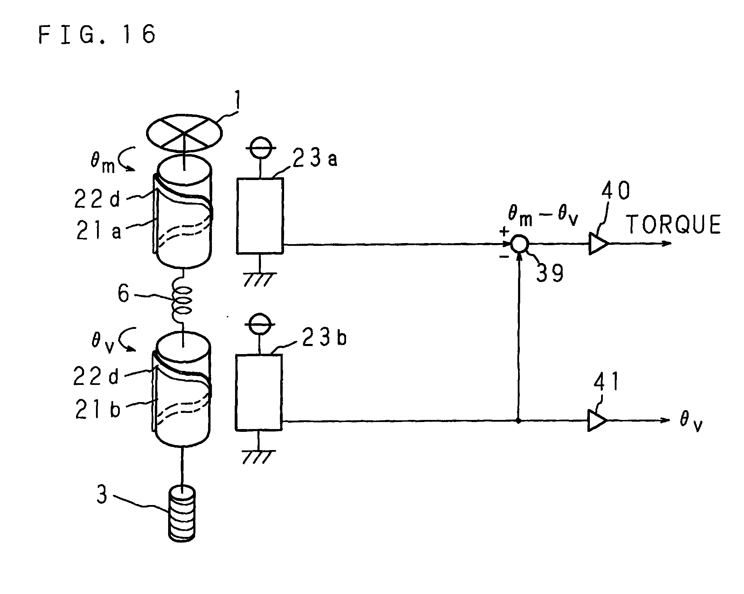

FIG. 16 is a principle view showing the essential construction of an eighth embodiment of a torque detecting device according to the present invention. In this embodiment, the torque detecting device is applied to a steering apparatus. A magnetic protrusion 22d is spirally formed on the circumferential surface of an intermediate portion of an input shaft 21a of a steering shaft having an upper end to which a steering wheel 1 is connected and a lower end to which the torsion bar 6 is connected. To detect the position of the protrusions 22d which is moved in the axial direction of the input shaft 21a when observation is performed from one rotational position owing to rotation of the input shaft 21a, an MR sensor 23a is disposed in parallel with the input shaft 21a such that a proper distance is maintained. The MR sensor 23a is secured to a stationary portion of a body of an automobile.

An output shaft 21b has an upper end connected to the torsion bar 6 and a lower end connected to a pinion gear 3. Similarly to the input shaft 21a, a magnetic protrusion 22d is spirally formed on the circumferential surface of an intermediate portion of the output shaft 21b. To detect the position of the protrusions 22d which is moved in the axial direction of the output shaft 21b when observation is performed from one rotational position owing to rotation of the output shaft 21b, an MR sensor 23b is disposed in parallel with the output shaft 21b such that a proper distance is maintained. The MR sensor 23b is secured to a stationary portion of a body of an automobile.

The protrusion 22d is spirally formed on the circumferential surfaces of the input shaft 21a and the output shaft 21b such that the start portion (0°) and the end portion (360°) are connected to each other, as shown in FIG. 15A.

Output voltage of the 23a is inputted to a subtraction circuit 39, while output voltage of the MR sensor 23b is inputted to the subtraction circuit 39 and an amplifier 41. Output voltage of the amplifier 41 is outputted as a signal indicating the rotational angle of the steering shaft detected by the rotational angle detecting device comprising the output shaft 21b, the protrusion 22d and the MR sensor 23b.

The torsional angle of the torsion bar 6 is at most several degrees. The rotational angle detecting device comprising the input shaft 21a, the protrusion 22d and the MR sensor 23a may output a signal indicating the rotational angle of the steering shaft.

Output voltage of a subtraction circuit 39 is inputted to the amplifier 40. Output voltage of the amplifier 40 is outputted as a signal detected by the torque detecting device and indicating the steering torque applied on the steering wheel 1.

The torque detecting device having the above-mentioned construction is arranged such that the protrusions 22d which is closest to the detecting surfaces of the MR sensors 23a and 23b is moved in the axial direction of each of the input shaft 21a and the output shaft 21b when the input shaft 21a and the output shaft 21b are rotated in ranges that 0° ≤ θ_m < 360° and

$0° \leq \theta_v < 360°$, respectively. The protrusion 22d is spirally formed on the circumferential surfaces of the input shaft 21a and the output shaft 21b such that the start portion (0°) and the end portion (360°) are connected to each other, as shown in FIG. 15A. Therefore, the position of the protrusions 22d which is closest to the detecting surfaces of the MR sensors 23a and 23b in the axial direction of the input shaft 21a and the output shaft 21b and the rotational angles of the input shaft 21a and the output shaft 21b can be made to correspond to each other.

As shown in FIG. 15B, the output voltages of the MR sensors 23a and 23b and the rotational angles of the input shaft 21a and the output shaft 21b are made to have the straight and linear relationship. In accordance with the output voltages of the MR sensors 23a and 23b, the rotational angles of the input shaft 21a and the output shaft 21b can be detected. Since the other operations are similar to those of the torque detecting device according to the second embodiment, the similar operations are omitted from description.

(Ninth Embodiment)

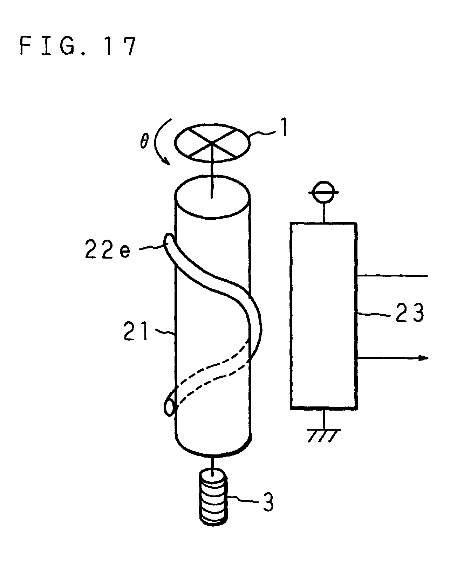

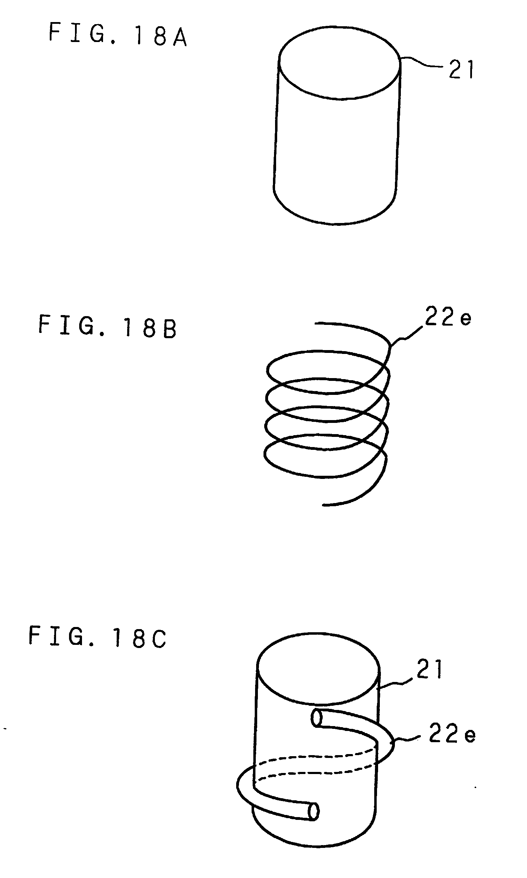

FIG. 17 is a principle view showing the essential construction of a ninth embodiment of a rotational angle detecting device according to the present invention. FIG. 18A, FIG. 18B and FIG. 18C are diagrams showing a method of manufacturing the rotational angle detecting device shown in FIG. 17. In this embodiment, the rotational angle detecting device is applied to a steering apparatus. A magnetic protrusion 22e is spirally formed on the circumferential surface of an intermediate portion of a steering shaft 21 having an upper end to which a steering wheel 1 is connected and a lower end to which a pinion gear 3 is connected.

To detect the position of the protrusions 22e which is moved in the axial direction of the steering shaft 21 when observation is performed from one rotational position owing to rotation of the input shaft 21a, an MR sensor 23 is disposed in parallel with the steering shaft 21 such that a proper distance is maintained. The MR sensor 23 is secured to a stationary portion of a body of an automobile.

The MR sensor 23 comprises a potential dividing circuit comprising, for example, two magnetic resistors so as to output the divided potential. To enlarge change in the magnetic field caused by the protrusion 22e to improve the sensitivity; a biasing magnet is disposed on the side which does not face the steering shaft 21. Thus, the magnetic field of the surface of the steering shaft 21 is intensified.

A coil-shape magnetic material (the protrusion 22e) constructed as shown in FIG. 18B is spirally wound around the circumferential surface of an intermediate portion of the steering shaft 21 constructed as shown in FIG. 18A so as to be welded or bonded as shown in FIG. 18C.

The rotational angle detecting device having the above-mentioned construction is arranged such that when the steering shaft 21 is rotated in a range that $0° \leq \theta < 360°$, the protrusion 22e which is closest to the detecting surface of the MR sensor 23 is moved in the axial direction of the steering shaft 21.

Since the protrusion 22e is spirally formed on the circumferential surface of the steering shaft 21, the position of the protrusion 22e which is closest to the detecting surface of the MR sensor 23 in the axial direction of the steering shaft 21 and the rotational angle of the steering shaft 21 can be made to correspond to each other. In accordance with the output voltage of the MR sensor 23, the rotational angle of the steering shaft 21 can be detected.

(Tenth Embodiment)

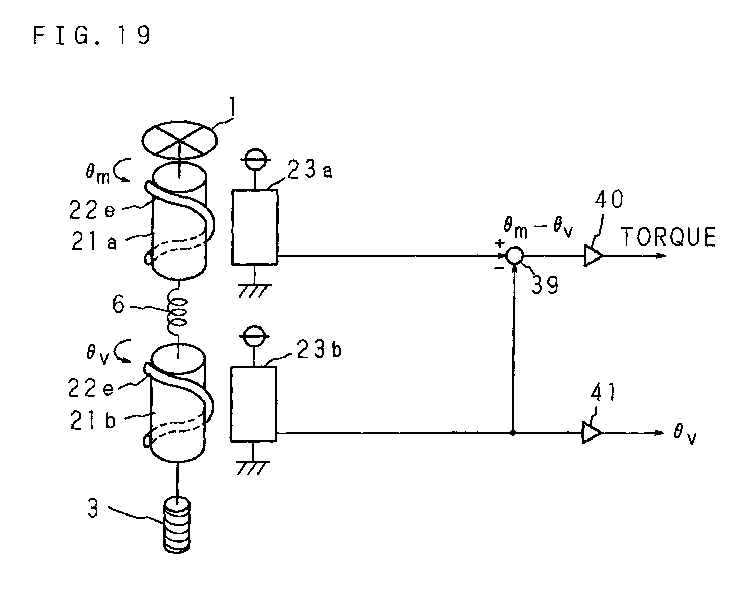

FIG. 19 is a principle view showing an essential construction of a tenth embodiment of the torque detecting device according to the present invention. In this embodiment, the torque detecting device is applied to a steering apparatus. A magnetic protrusion 22e is spirally formed on the circumferential surface of an intermediate portion of an input shaft 21a of a steering shaft having an upper end to which a steering wheel 1 is connected and a lower end to which a torsion bar 6 is connected. To detect the position of the protrusions 22e which is moved in the axial direction of the input shaft 21a when observation is performed from one rotational position owing to rotation of the output shaft 21b, an MR sensor 23a is disposed in parallel with the input shaft 21a MR sensor 23a such that a proper distance is maintained. The MR sensor 23a is secured to a stationary portion of a body of an automobile.

An output shaft 21b of the steering shaft has an upper end connected to the torsion bar 6 and a lower end connected to a pinion gear 3. Similarly to the input shaft 21a, a protrusion 22e made of magnetic material is formed on the circumferential surface of an intermediate portion of the output shaft 21b. To detect the position of the protrusion 22e, which is moved in the axial direction of the output shaft 21b in a state where observation is performed from one rotational position when the output shaft 21b has been rotated, an MR sensor 23b is formed in parallel with the output shaft 21b such that a proper distance is maintained. The MR sensor 23b is secured to a stationary portion of a body of an automobile.

A coil-shape magnetic member (the protrusion 22e) constructed as shown in FIG. 18B is spirally wound around the circumferential surfaces of intermediate portions of the input shaft 21a and the output shaft 21b so as to be welded or bonded as shown in FIG. 18C.

The output voltage of the MR sensor 23a is inputted to a subtraction circuit 39, while the output voltage of the MR sensor 23b is inputted to the subtraction circuit 39 and an amplifier 41. Output voltage of the amplifier 41 is outputted as a signal indicating the rotational angle of the steering shaft detected by the rotational angle detecting device comprising the output shaft 21b, the protrusion 22e and the MR sensor 23b.

The torsional angle of the torsion bar 6 is at most several degrees. The rotational angle detecting device comprising the input shaft 21a, the protrusion 22e and the MR sensor 23a may output a signal indicating the rotational angle of the steering shaft.

Output voltage of the subtraction circuit 39 is inputted to the amplifier 40. Output voltage of the amplifier 40 is outputted as a signal detected by the torque detecting device and indicating the steering torque applied on the steering wheel 1.

Since the operation of the torque detecting device constructed as described above is similar to that of the torque detecting device according to the second embodiment, the operation is omitted from description.

(Eleventh Embodiment)

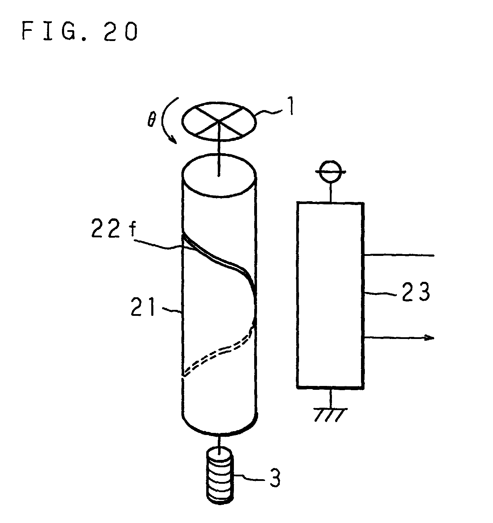

FIG. 20 is a principle view showing an essential construction of an eleventh embodiment of the rotational angle detecting device according to the present invention. In this embodiment, the rotational angle detecting device is applied to a steering apparatus. A groove 22f is spirally formed on the circumferential surface of an intermediate portion of a steering shaft 21 having an upper end to which a steering wheel 1 is connected and a lower end to which the pinion gear 3 is connected and made of magnetic material.

To detect, as a portion which is magnetically discontinuous, the position of the groove 22f which is moved in the axial direction of the steering shaft 21 when observation is performed from one rotational position owing to rotation of the steering shaft 21 an MR sensor 23 is disposed in parallel with the steering shaft 21 such that a proper distance is maintained. The MR sensor 23 is secured to a stationary portion of a body of an automobile.

The MR sensor 23 comprises a potential dividing circuit comprising, for example, two magnetic resistors so as to output the divided potential. To enlarge change in the magnetic field caused by the groove 22f to improve the sensitivity, a biasing magnet is provided for the side which does not face the steering shaft 21. Thus, the magnetic field of the surface of the steering shaft 21 is intensified.

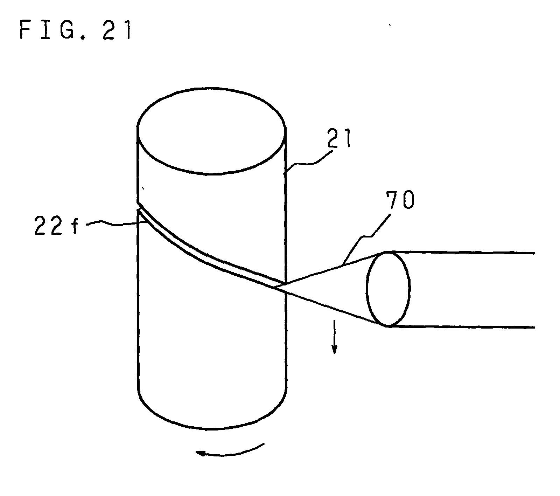

FIG. 21 is a diagram showing a method of manufacturing the rotational angle detecting device shown in FIG. 20. The steering shaft 21 is provided with the groove 22f in the circumferential surface of the intermediate portion thereof. The groove 22f is formed by spirally irradiating the circumferential surface of the intermediate portion with a beam 70, such as a laser beam or an electron beam, realizing a high energy density.

The rotational angle detecting device having the above-mentioned construction is arranged such that when the steering shaft 21 is rotated in a range that $0° \le \theta < 360°$, the groove 22f which is closest to the detecting surface of the MR sensor 23 is moved in the axial direction of the steering shaft 21.

The groove 22f is spirally formed on the circumferential surface of the steering shaft 21. Therefore, the position of the groove 22f which is closest to the detecting surface of the MR sensor 23 in the axial direction of the steering shaft 21 and the rotational angle of the steering shaft 21 can be made to correspond to each other. In accordance with the output voltage of the MR sensor 23, the rotational angle of the steering shaft 21 can be detected.

(Twelfth Embodiment)

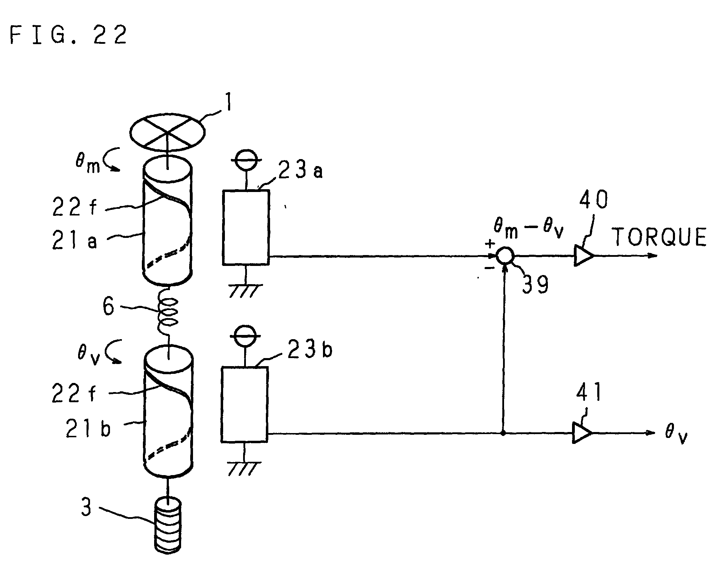

FIG. 22 is a principle view showing an essential construction of a twelfth embodiment of the torque detecting device according to the present invention. In this embodiment, the torque detecting device is applied to the steering apparatus. A groove 22f is spirally formed on the circumferential surface of an intermediate portion of the magnetic input shaft 21a having an upper end to which a steering wheel 1 is connected and a lower end to which a torsion bar 6 is connected. To detect the position of the groove 22f which is moved in the axial direction of the input shaft 21a when the input shaft 21a has been rotated in a case where observation is performed from one rotational position, an MR sensor 23a is provided in parallel with the input shaft 21a such that a proper distance is maintained. The MR sensor 23a is secured to a stationary portion of a body of an automobile.

A magnetic output shaft 21b of the steering shaft has an upper end connected to the torsion bar 6 and a lower end connected to a pinion gear 3. Similarly to the input shaft 21a, a groove 22f is spirally formed on the circumferential surface of an intermediate portion of the output shaft 21b. To detect the position of the groove 22f which is moved in the axial direction of the output shaft 21b when the output shaft 21b has been rotated in a state where observation is performed from one rotational position, an MR sensor 23b is disposed in parallel with the output shaft 21b such that a proper distance is maintained. The MR sensor 23b is secured to a stationary portion of a body of an automobile.

Each of the input shaft 21a and the output shaft 21b is provided with the groove 22f formed spirally in the circumferential surface of the intermediate portion by irradiating the beam 70, such as a laser beam or an electron beam, realizing a high energy density, as shown in FIG. 21.

Output voltage of the MR sensor 23a is inputted to a subtraction circuit 39, while output voltage of the MR sensor 23b is inputted to the subtraction circuit 39 and an amplifier 41. Output voltage of the amplifier 41 is outputted as a signal detected by the rotational angle detecting device comprising the output shaft 21b, the groove 22f and the MR sensor 23b and indicating the rotational angle of the steering shaft.

The torsional angle of the torsion bar 6 is at most several degrees. The rotational angle detecting device comprising the input shaft 21a, the groove 22f and the MR sensor 23a may output a signal indicating the rotational angle of the steering shaft.

Output voltage of the subtraction circuit 39 is inputted to the amplifier 40. Output voltage of the amplifier 40 is outputted as a signal indicating the steering torque detected by the torque detecting device and indicting the steering torque applied on the steering wheel 1.

The operation of the torque detecting device having the above-mentioned construction is similar to that of the torque detecting device according to the second embodiment. Therefore, the operation is omitted from description.

As an alternative to the groove 22f, the steering shaft 21 or the input shaft 21a and the output shaft 21b may be made of metastable austenite stainless steel, which is a non-magnetic material. Moreover, the surface is irradiated with the beam, such as an electron beam or a laser beam, realizing a high energy directly. Then, the surface is rapidly cooled to deposit the ferrite phase which is a ferromagnetic portion so that a portion which is magnetically discontinuous is formed.

(Thirteenth Embodiment)

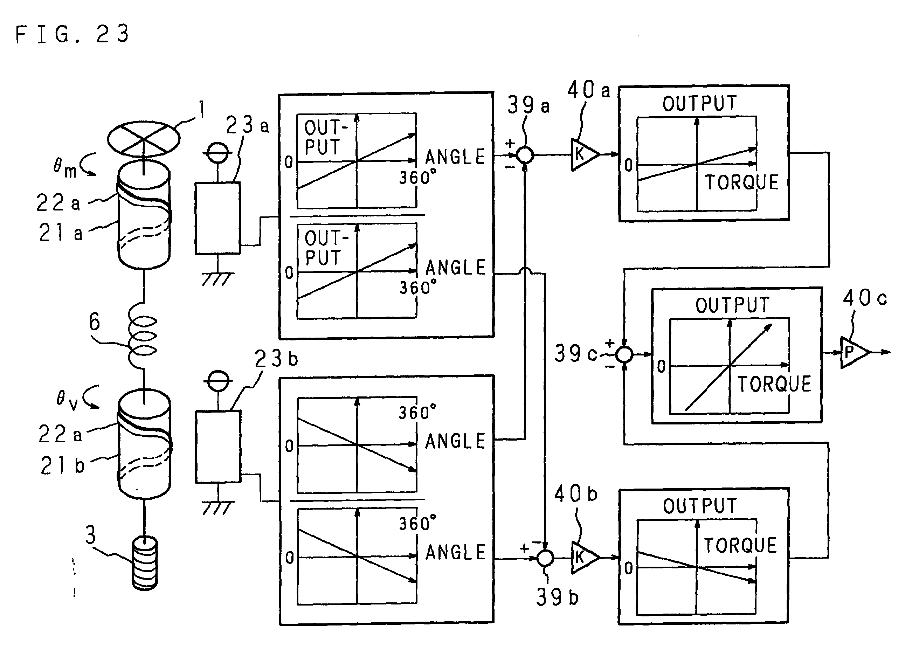

FIG. 23 is a principle view showing an essential construction of a thirteenth embodiment of the torque detecting device according to the present invention. In this embodiment, the torque detecting device is applied to a steering apparatus. A magnetic protrusion 22a is spirally formed on the circumferential surface of an intermediate portion of an input shaft 21a of a steering shaft having an upper end to which a steering wheel 1 is connected and a lower end to which a torsion bar 6 is connected. To detect the position of the protrusions 22a which is moved in the axial direction of the input shaft 21a when observation is performed from one rotational position owing to rotation of the input shaft 21a, an MR sensor 23a is disposed in parallel with the input shaft 21a such that a proper distance is maintained. The MR sensor 23a is secured to a stationary portion of a body of an automobile.

The upper end of the output shaft 21b of the steering shaft is connected to the torsion bar 6, while the lower end of the same is connected to a pinion gear 3. Similarly to the input shaft 21a, a magnetic protrusion 22a is spirally formed on the circumferential surface of an intermediate portion of the output shaft 21b. To detect the position of the protrusions 22a which is moved in the axial direction of the output shaft 21b when observation is performed from one rotational position owing to rotation of the output shaft 21b, an MR sensor 23b is disposed in parallel with the output shaft 21b such that a proper distance is maintained. The MR sensor 23b is secured to a stationary portion of a body of an automobile.

Output voltage of the MR sensor 23a is inputted to subtraction circuits 39a and 39b. Output voltage of the MR sensor 23b is inputted to the subtraction circuits 39a and 39b.

The subtraction circuit 39a calculates the difference by subtracting the output voltage of the MR sensor 23a from the output voltage of the MR sensor 23b to input the voltage of the calculated difference to the amplifier 40a. The amplifier 40a amplifies the inputted voltage to input a result to a subtraction circuit 39c.

The subtraction circuit 39b calculates the difference by subtracting the output voltage of the MR sensor 23a from the output voltage of the MR sensor 23b to input the voltage of the calculated difference to the amplifier 40b. The amplifier 40b amplifies the inputted voltage to input the amplified voltage to the subtraction circuit 39c.

The subtraction circuit 39c subtracts the output voltage of the amplifier 40b from the output voltage of the amplifier 40a so as to input the subtracted output voltage to an amplifier 40c. The amplifier 40c amplifies the inputted voltage to output a result as a signal indicating the steering torque applied on the steering wheel 1 detected by the torque detecting device.

The torque detecting device constructed as described above is arranged such that when the input shaft 21a and the output shaft 21b are rotated in ranges that $0° \leq \theta_m < 360°$ and $0° \leq \theta_v < 360°$, the protrusion 22a which is closest to the detecting surfaces of the MR sensors 23a and 23b is moved in the axial direction of each of the input shaft 21a and the output shaft 21b. The protrusion 22a is spirally formed on the circumferential surface of each of the input shaft 21a and the output shaft 21b. Therefore, the position of the protrusion 22a which is closest to the detecting surfaces of the MR sensors 23a and 23b in the axial direction of the input shaft 21a and the output shaft 21b and the rotational angles of the input shaft 21a and the output shaft 21b can be made to correspond to each other.

When steering torque has been applied on the steering wheel 1 and, therefore, a torsional angle of the torsion bar 6 has been made, the output voltages of the MR sensors 23a and 23b generate the voltage difference $\Delta V$ corresponding to the torsional angle. The subtraction circuits 39a and 39b calculate the voltage difference $\Delta V$ and $- \Delta V$. The subtraction circuit 39c calculate the difference $2\Delta V$ between the voltage difference $\Delta V$ and $- \Delta V$ calculated by the subtraction circuits 39a and 39b, respectively. The amplifier 40c amplifies the voltage difference $2\Delta V$ to output a result as a signal indicating the torque.

A signal indicating the rotational angle of the steering shaft detected by the rotational angle detecting device comprising the output shaft 21b, the protrusion 22a and the MR sensor 23b may be outputted from the amplifier 41. The other operations are similar to those of the torque detecting device according to the second embodiment. Therefore, the similar operations are omitted from description.

(Fourteenth Embodiment)

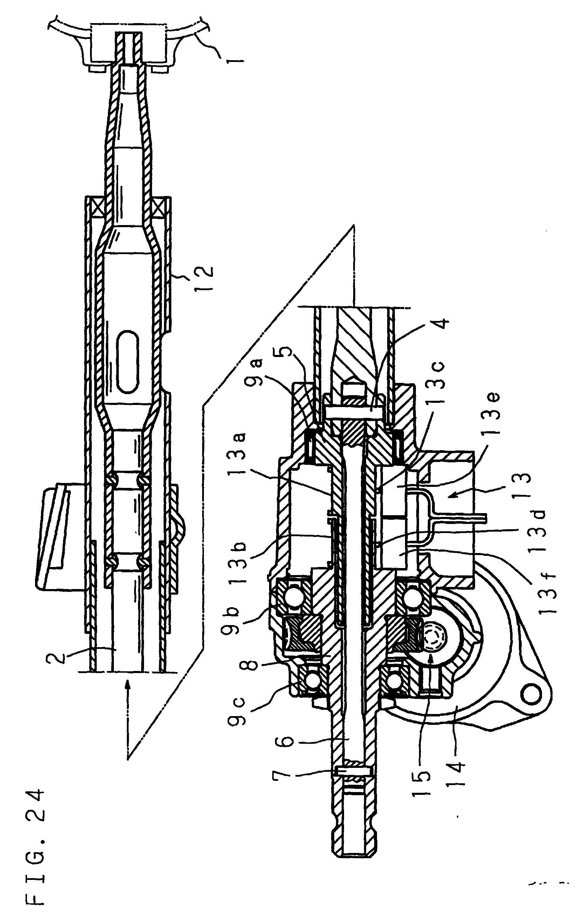

FIG. 24 is a vertical cross sectional view showing an essential construction of a fourteenth embodiment of a steering apparatus according to the present invention. The steering apparatus according to this embodiment comprises an upper shaft 2 which is attached to the upper end thereof and to which a steering wheel 1 is attached. A cylindrical input shaft 5 and an upper end of a torsion bar 6, which is inserted into the input shaft 5, are, through a first dowel pin 4, connected to the lower end of the upper shaft 2. A cylindrical output shaft 8 is, through a second dowel pin 7, connected to a lower end of the connecting shaft 6. The upper shaft 2, the input shaft 5 and the output shaft 8 are rotatively supported in a housing 12 through bearings 9a, 9b and 9c.

The housing 12 includes a torque detecting device 13 for detecting the steering torque in accordance with an amount of relative displacement of the input shaft 5 and the output shaft 8 connected to each other through the connecting shaft 6. Moreover, the housing 12 includes a reduction mechanism 15 for reducing the rotation of the electric motor 14 for assisting steering which is rotated in accordance with a detection result performed by the torque detecting device 13 so as to transmit the reduced rotation to the output shaft 8. The operation of the steering mechanism corresponding to the rotation of the steering wheel 1 is assisted by using the rotation of the electric motor 14. Thus, the labor which must be borne by a driver who performs steering can be reduced. The lower end of the output shaft 8 is connected to a rack and pinion type steering mechanism through a universal joint.

The torque detecting device 13 comprises a magnetic protrusion 13c formed spirally on the circumferential surface 13a of the input shaft 5. To detect the position of the magnetic protrusion 13c which is moved in the axial direction of the input shaft 5 when the input shaft 5 has been rotated in a state where observation is performed from one rotational position, an MR sensor 13e is disposed in parallel with the input shaft 5 such that a proper distance is maintained. The MR sensor 13e is secured to a stationary portion of a body of an automobile.

Similarly to the input shaft 5, the output shaft 8 has a magnetic protrusion 13d formed spirally on the circumferential surface 13b of the output shaft 8. To detect the position of the protrusion 13d which is moved in the axial direction of the output shaft 8 when the output shaft 8 has been rotated in a state where observation is performed from one rotational position, an MR sensor 13f is disposed in parallel with the output shaft 8 such that a proper distance is maintained. The MR sensor 13f is secured to a stationary portion of a body of an automobile.

The operation of the steering apparatus constructed as described above will now be described.

When the input shaft 5 and the output shaft 8 are rotated without any twisting of the connecting shaft 6, the input shaft 5, the output shaft 8 and the connecting shaft 6 are integrally rotated.

When the input shaft 5 and the output shaft 8 have been rotated, the protrusions 13c and 13d which are closest to the detecting surfaces of the MR sensors 13e and 13f are moved in the axial direction of the input shaft 5 and the output shaft 8, respectively. The protrusions 13c and 13d are spirally formed on the circumferential surfaces 13a and 13b of the input shaft 5 and the output shaft 8. The positions of the magnetic protrusions 13c and 13d, which are closest to the detecting surfaces of the MR sensors 13e and 13f, in the axial direction of the input shaft 5 and the output shaft 8 and the rotational angles of the input shaft 5 and the output shaft 8 can be made to correspond to each other.

For example, the output voltages of the MR sensors 13e and 13f and the rotational angles of the input shaft 5 and the output shaft 8 are set to have a similar linear relationship. When the input shaft 5 and the output shaft 8 have been rotated plural times, the outputs of the MR sensors 13e and 13f show the voltage waveform having a period of 360° as shown in FIG. 4A and FIG. 4B. In accordance with the output voltages of the MR sensors 13e and 13f, the rotational angles of the input shaft 5 and the output shaft 8 can be detected.

When the steering torque has been applied on the steering wheel 1 and the input shaft 5 and the output shaft 8 have been rotated such that the torsion bar 6 is twisted, the output voltages of the MR sensors 13e and 13f generate the difference in the voltage corresponding to the torsional angle as shown in FIG. 4C. The output voltages of the MR sensors 13e and 13f are inputted to a subtraction circuit (not shown) through corresponding output cables. The subtraction circuit calculates the difference in the voltage so as to obtain the torsional angle so that a signal corresponding to the steering torque is outputted.

The MR sensor 13f is able to output through the output cable a signal indicating the rotational angle of the steering wheel 1 detected by the rotational angle detecting device comprising the output shaft 8, the magnetic protrusion 13d and the MR sensor 13f.

The signal corresponding to the steering torque and the signal indicating the rotational angle of the steering wheel 1 are supplied to a control unit (not shown). The control unit controls the rotation of the electric motor 14 in response to each of the supplied signals.

(Fifteenth Embodiment)

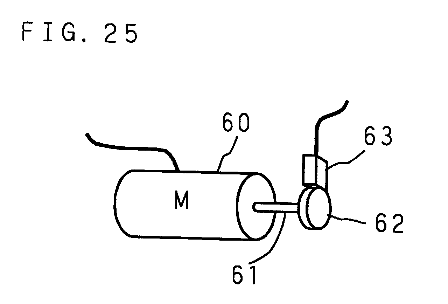

FIG. 25 is a principle view showing an essential construction of a fifteenth embodiment of the rotational angle detecting device according to the present invention. In this embodiment, the rotational angle detecting device is applied to a brushless DC motor. A displacement plate 62 formed into a disc shape which is a rotor having a rotating shaft which is a rotor shaft 61 of the brushless DC motor 60.

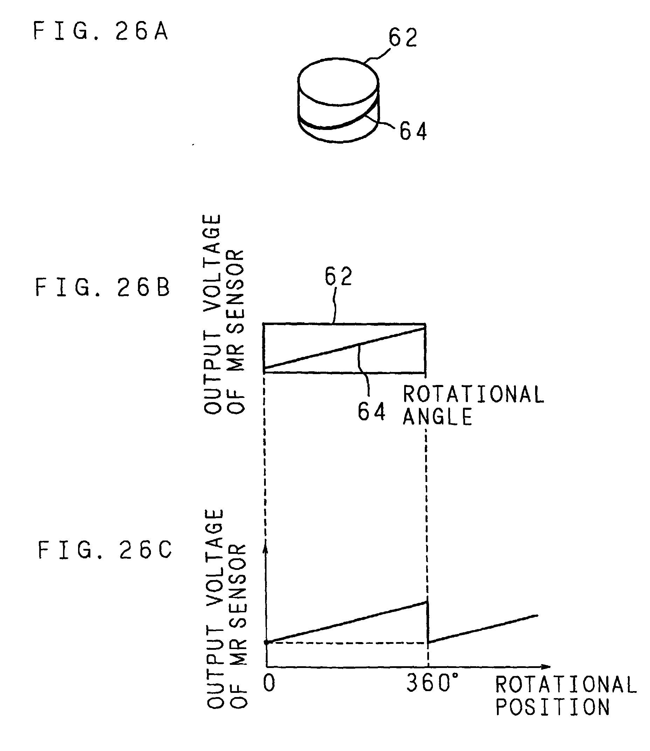

FIG. 26A, FIG. 26B and FIG. 26C are diagrams showing the construction and the operation of the rotational angle detecting device shown in FIG. 25. As shown in FIG. 26A, the displacement plate 62 comprises a magnetic protrusion 64 formed spirally on the circumferential surface of the displacement plate 62. To detect the position of the protrusion 64 which is moved in the axial direction of the rotor shaft 61 when the rotor shaft 61 and the displacement plate 62 of the brushless DC motor 60 have been rotated, an MR sensor 63 is disposed in parallel with the surface of the displacement plate 62 such that a proper distance is maintained. The MR sensor 63 is secured to a housing (not shown) which is a stationary member.

The brushless DC motor 60 comprises a driver circuit for detecting the position of the rotating rotor as a substitute for the commutator. In response to the detection signal, the driver circuit controls an electronic circuit to generate a rotational magnetic field.

A steering apparatus comprising the brushless DC motor requires that the rotor has an excellent position resolution and information about an accurate position to realize smooth steering feeling. Therefore, a resolver, a rotary encoder and the like have been employed. The foregoing units are costly units.

The rotational angle detecting device constructed as described above is arranged such that when the rotor shaft 61 of the brushless DC motor 60 and the displacement plate 62 have been rotated, the protrusion 64 which is closest to the detecting surface of the MR sensor 63 is moved in the axial direction of the rotor shaft 61.

The rotational angle detecting device having the above-mentioned constructed as described above is arranged such that the protrusion 64 which is closest to the detecting surface of the MR sensor 63 is moved in the axial direction of the rotor shaft 61 when the rotor shaft 61 of the brushless DC motor 60 and the displacement plate 62 are rotated.

The protrusion 64 is spirally formed on the circumferential surface of the displacement plate 62. Therefore, the position of the protrusion 64 which is closest to the detecting surface of the MR sensor 63 in the axial direction of the rotor shaft 61 and the rotational angle of the rotor shaft 61 can be made to correspond to each other. For example, as shown in FIG. 26B, setting is performed such that the output voltage of the MR sensor 63 and the rotational angle of the rotor shaft 61 have a linear relationship. Thus, the rotational position of the rotor of the brushless DC motor 60 can be detected in accordance with the output voltage of the MR sensor 63, as shown in FIG. 26C.

The MR sensor (magnetic position sensor) which has widely been used in recent years has been formed into the one-chip IC. Therefore, the MR sensor is a low-cost sensor. Moreover, the MR sensor realizing exerted resistance against environment can be mounted on an engine room of an automobile.

Moreover, the MR sensor can widely been used as well as application to the position sensor for the rotor of the brushless DC motor and the steering angle sensor for the steering wheel.

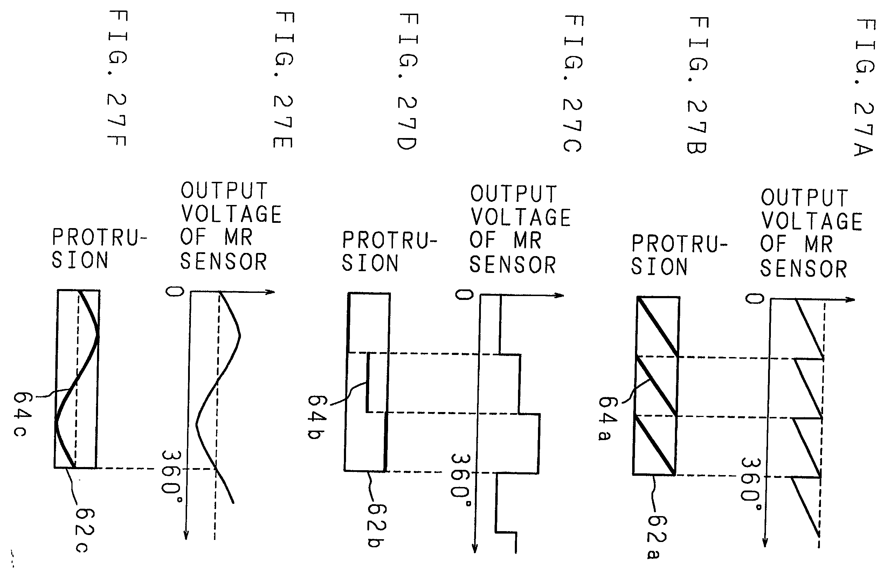

FIG. 27A through FIG. 27F are diagrams showing the construction and operation of the rotational angle detecting device according to the present invention. The pattern of the magnetic protrusion 64a when the circumferential surface of the displacement plate 62a has been developed is formed into a saw-tooth shape as shown in FIG. 27B, the output voltage of the MR sensor is, as shown in FIG. 27A, changed to form the saw-tooth shape similar to the pattern of the protrusion 64a when the displacement plate 62a has been rotated by 360°.

In the case where the pattern of the magnetic protrusion 64b when the circumferential surface of the displacement plate 62b has been developed is formed into the stepped-shape as shown in FIG. 27D, the output voltage of the MR sensor when the displacement plate 62b has been rotated by 360° is, as shown in FIG. 27C, changed to form the stepped shape similar to the pattern of the protrusion 64b as shown in FIG. 27C.

In the case where the pattern of the magnetic protrusion 64c when the circumferential surface of the displacement plate 62c has been developed is formed into the sine-wave shape as shown in FIG. 27F, the output voltage of the MR sensor when the displacement plate 62c has been rotated by 360° is changed to form the sine-wave shape similar to the pattern of the protrusion 64c as shown in FIG. 27E.

In each of the foregoing embodiments, the magnetic protrusion is provided as the portion which is magnetically discontinuous. The present invention is not limited to the protrusion. For example, a groove or a boundary of surfaces which are different magnetically may be provided. In the foregoing case, the portion which is magnetically discontinuous can be formed. Although the portion which is magnetically discontinuous is spirally formed on the circumferential surface of the rotor, the portion is not limited to the spiral shape.

(Sixteenth Embodiment)

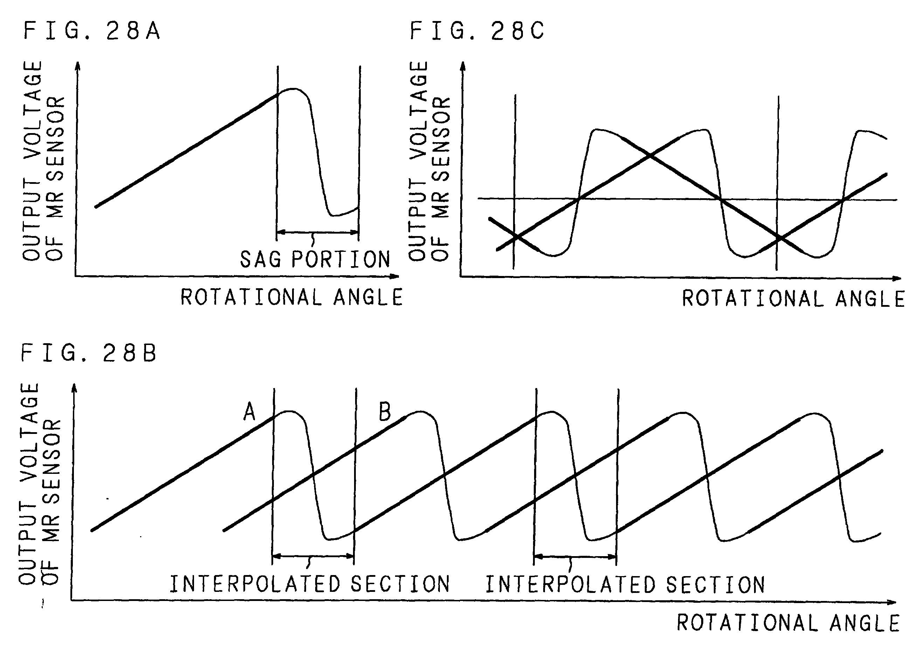

The foregoing torque detecting device encounters a fact that the output voltage of the MR sensor is formed into a nonlinear shape as shown in FIG. 28A because the characteristic of the output voltage is disordered between the start and end portions of the magnetic protrusions. Thus, a sag portion which cannot be used to detect the torque is undesirably formed. Therefore, a plurality of MR sensors are employed such that the phases of the output voltages are shifted as shown in FIG. 28B. Thus, the output voltage of the sag portion is corrected (interpolated).

For example, the phases of the output voltages of two MR sensors are shifted by 180° as shown in FIG. 28C. Moreover, either output voltage is inverted to make a comparison between the two output voltages so that the absolute angle is detected.

The foregoing method cannot easily manage the accuracy of the intersection of the output voltages of the two output voltages. When the output voltages of the two MR sensors are treated with an accuracy of 10 bits, the accuracy of the output voltage at the intersection must be 0.1 % or higher. In the foregoing case, the accuracy of the output voltage of the MR sensor cannot easily be managed when a manufacturing process is performed.

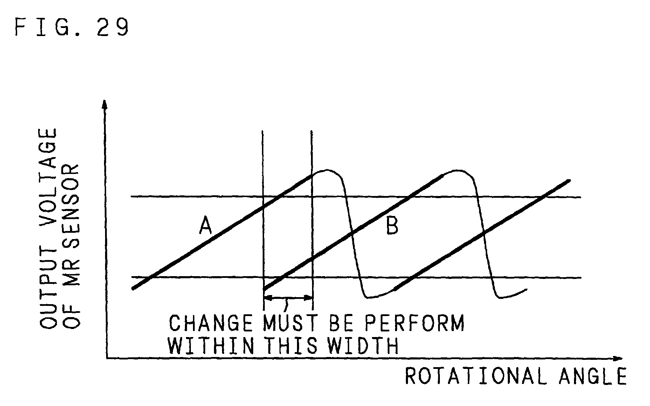

FIG. 29 is a diagram showing the operation of the torque detecting device according to the present invention. When the output voltages of the two MR sensors for performing mutual correction have small sag portion of the outputs with respect to the given shift of the phases, effective data (a straight line portions) overlaps the output switching portion as shown in FIG. 29. When the output voltage of the MR sensor is corrected, the output voltage is switched in the width in which effective data overlaps. As shown in FIG. 29, a level for switching the output voltage of the MR sensor is set for both upper and lower portions. When the output voltage of the MR sensor is deviated from the range between the levels, switching is performed.

For example, the two magnetic sensors for both input shaft and the output shaft are provided such that the positions which must be detected are different from each other by 180° in the circumferential direction of the outer surface. When no torque is being generated (no twisting is generated in the connecting shaft), the output voltages of the magnetic sensors for detecting the same positions of the input shaft and the output shaft are made to be the same.

When torque detection is started, both of the input shaft and the output shaft are set such that the output voltages of the magnetic sensors pass through the level which must be switched. The magnetic sensors which use the output voltage are previously selected and judged. When the magnetic sensor for the input shaft and/or the output shaft which uses the output voltage has not been determined, torque detection is not performed.

When the characteristic of the output voltage of the MR sensor has a sag portion, torque detection is permitted. A torque detecting device which is capable of easily managed the accuracy of the output voltage of the magnetic sensor when the manufacturing process is performed and a steering apparatus which rotates the electric motor in accordance with a detection result by the torque detecting device to generate force for assisting steering will now be described.

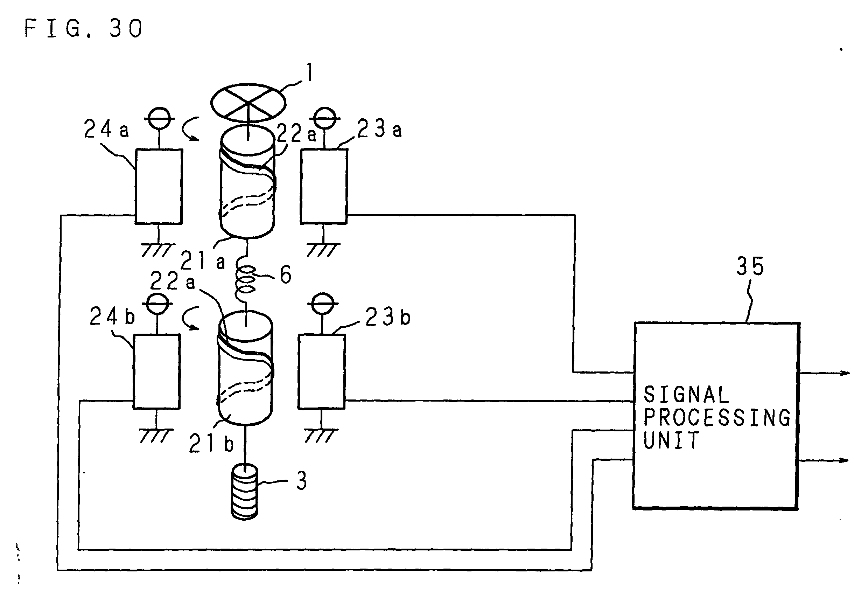

FIG. 30 is a principle view showing an essential construction of the torque detecting device according to an embodiment of the present invention.

In this embodiment, the torque detecting device is applied to a steering apparatus. A magnetic protrusion 22a is spirally formed on the circumferential surface of an intermediate portion of an input shaft 21a of a steering shaft having an upper end to which a steering wheel 1 is connected and a lower end to which the torsion bar 6 is connected.

To detect the position of the protrusions 22a which is moved in the axial direction of the input shaft 21a when observation is performed from one rotational position owing to rogation of the input shaft 21a, an MR sensor 23a is disposed in parallel with the input shaft 21a such that a proper distance is maintained. The MR sensor 23a is secured to a stationary portion of a body of an automobile.

To detect a position which is different from the position detected by the MR sensor 23a by 180° in the circumferential direction of the input shaft 21a, an MR sensor 24a is disposed in parallel with the input shaft 21a such that a proper distance is maintained. The MR sensor 24a is secured to a stationary portion of a body of an automobile.

The upper end of the output shaft 21b of the steering shaft is connected to the torsion bar 6 and the lower end of the same is connected to the pinion gear 3. Similarly to the input shaft 21a, a magnetic protrusion 22a is spirally formed on the circumferential surface of an intermediate portion of the output shaft 21b. To detect the position of the protrusion 22a which is moved in the axial direction of the output shaft 21b when the output shaft 21b has been rotated in a state where observation is performed from one rotational position, an MR sensor 23b is disposed in parallel with the output shaft 21b such that a proper distance is maintained. The MR sensor 23b is secured to a stationary portion of a body of an automobile.

To detect the position which is different from the position detected by the MR sensor 23b by 180° in the circumferential surface of the output shaft 21b, an MR sensor 24b is disposed in parallel with the output shaft 21b such that a proper distance is maintained. The MR sensor 24b is secured to a stationary portion of a body of an automobile.

When no torque is generated by the input shaft 21a and the output shaft 21b (when the connecting shaft is free from twisting), the MR sensors 23a, 23b, 24a and 24b are brought to a state such that the output voltages of the MR sensors 23a and 23b are the same. Moreover, the output voltages of the MR sensors 24a and 24b are the same.

Each of the MR sensors 23a, 23b, 24a and 24b comprises a potential dividing circuit comprising, for example, two magnetic resistors; and a biasing magnet provided for the surface which does not face the steering shaft. The biasing magnet enlarges change in the magnetic field owing to the magnetic protrusion 22a. Thus, the magnetic field of the surface of the steering shaft is intensified in order to improve the sensitivity of the MR sensors 23a, 23b, 24a and 24b.

Output voltage of each of the MR sensors 23a, 23b, 24a and 24b is inputted to a signal processing unit 35. Output voltage of the signal processing unit 35 is outputted as a signal indicating the steering torque applied on the steering wheel 1 detected by the torque detecting device.

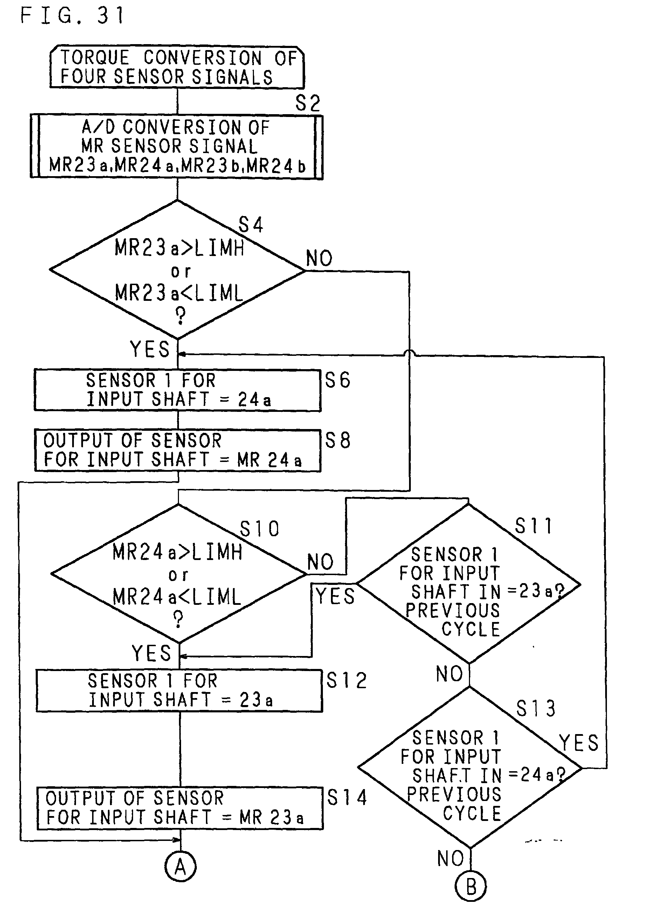

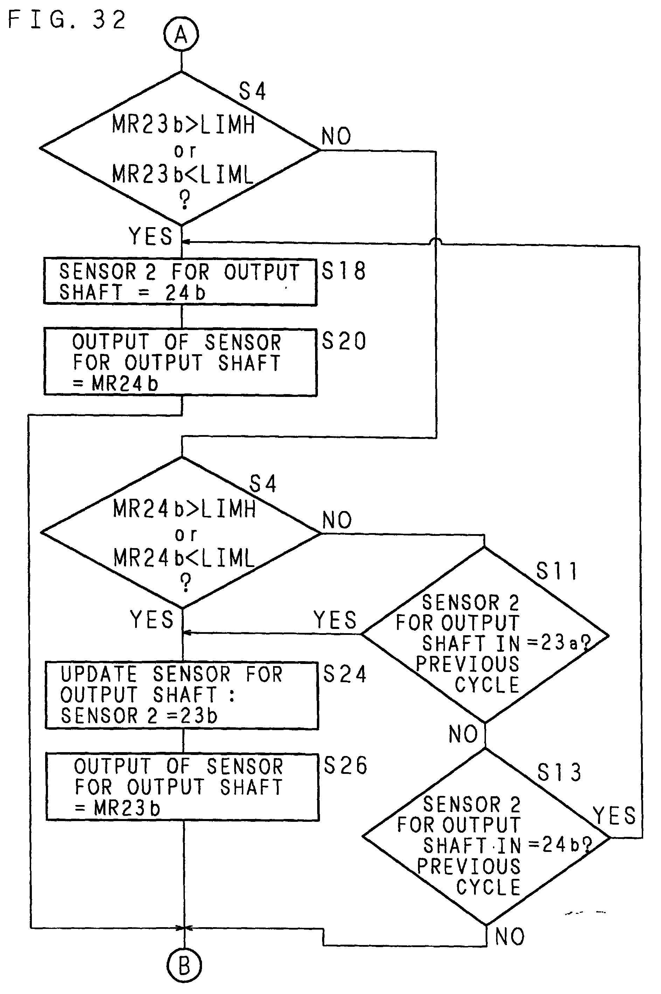

The operation of the torque detecting device having the above-mentioned construction will now be described with reference to a flow chart shown in FIG. 31 through FIG. 33.

FIG. 31 through FIG. 33 show a flow chart of the operation of the torque detecting device shown in FIG. 30. The torque detecting device is arranged such that the protrusions 22a which is closest to the detecting surfaces of the MR sensors 23a and 24a, 23b and 24b is moved in the axial direction of the input shaft 21a and the output shaft 21b whenever the input shaft 21a and the output shaft 21b rotate in a range that $0° \leq \theta < 360°$. Since the protrusion 22a is formed spirally on the circumferential surfaces of the input shaft 21a and the output shaft 21b, the position of the protrusions 22a which is closest to the detecting surfaces of the MR sensors 23a, 24a, 23b and 24b in the axial direction of the input shaft 21a and the output shaft 21b and the rotational angle of the input shaft 21a and the output shaft 21b can be made to correspond to each other.

When steering torque is applied on the steering wheel 1 causing a torsional angle to be generated in the torsion bar 6, the output voltage of each of the MR sensors 23a and 23b generate the difference in the voltage corresponding to the torsional angle. Also the output voltage of the MR sensors 24a and 24b generate the difference in the voltage corresponding to the torsional angle. The difference in the voltage is calculated by the signal processing unit 35 so that the torsional angle is obtained. Thus, a signal indicating the steering torque can be outputted.

Initially, the signal processing unit 35 executes analog to digital conversion of output voltages MR 23a, MR 24a, MR 23b and MR 24b of the MR sensors 23a, 24a, 23b and 24b (S2).

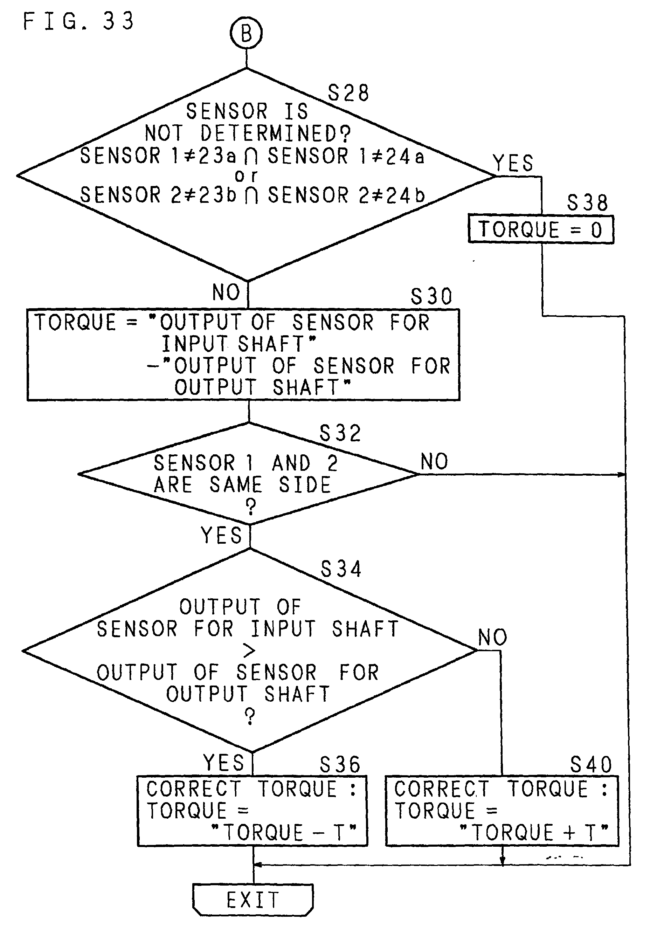

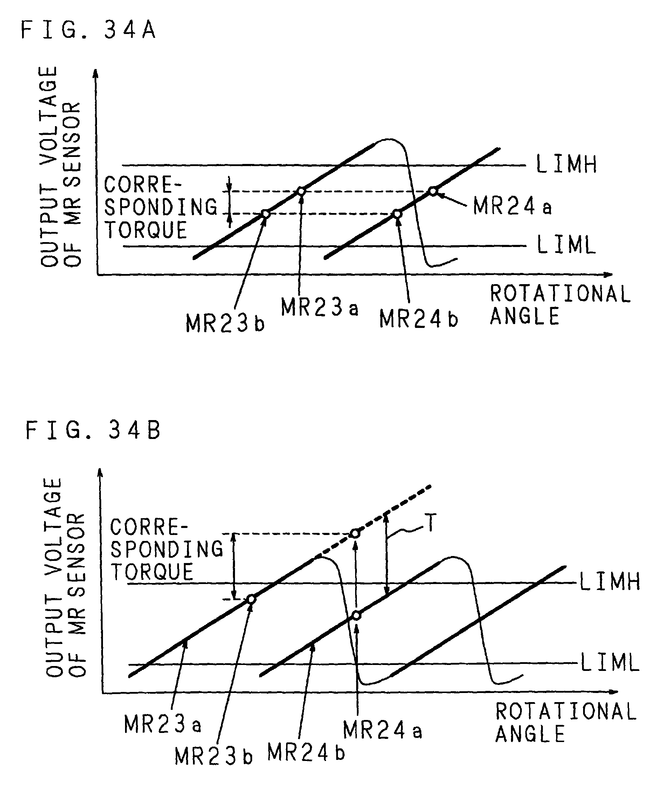

FIG. 33A and FIG. 33B are diagrams showing the operation of the torque detecting device shown in FIG. 30. As shown in FIG. 34A, the signal processing unit 35 has set upper and lower switching levels LIMH and LIML in such a manner that the output voltages MR 23a and MR 24a (MR 23b and MR 24b) can be switched in a portion in which effective data (the straight line portion) of the output voltages MR 23a and MR 24a (MR 23b and MR 24b) of the MR sensors 23a and 24a (23b and 24b) overlap. An assumption is made that effective data (the straight line portion) of the output voltages MR 23a and MR 24a (MR 23b and MR 24b) are in parallel with each other.

Then, the signal processing unit 35 judges whether or not the output voltage MR 23a of the MR sensor 23a is higher than the level LIML or the output voltage MR 23a is lower than the level LIML (S4). When either condition is satisfied, the signal processing unit 35 judges that the MR sensor 24a is the MR sensor for detecting the torque of the input shaft 21a (S6). Then, the signal processing unit 35 stores the output of the MR sensor 24a as the output voltage MR 24a (S8).

When either condition is not satisfied as a result of the judgement performed such that the signal processing unit 35 judges whether or not the output voltage MR 23a of the MR sensor 23a is higher than the level LIML or the output voltage MR 23a is lower than the level LIML (S4), the signal processing unit 35 performs the following process: whether or not the output voltage MR 24a of the MR sensor 24a is higher than the level LIMH or the output voltage MR 24a is lower than the level LIML is judged (S10). When either condition is satisfied, the signal processing unit 35 determines the MR sensor 23a as the MR sensor for detecting the torque of the input shaft 21a (S12). Thus, the signal processing unit 35 stores the output of the MR sensor 23a as the output voltage MR 23a (S14).

As described above, the signal processing unit 35 judges whether or not the output voltage MR 24a of the MR sensor 24a is higher than the level LIMH or the output voltage MR 24a is lower than the level LIML (S10). When either condition is not satisfied, whether or not the MR sensor for the input shaft 21a for use in the previous cycle for detecting the torque is the MR sensor 23a is judged (S11). When the previous MR sensor is the MR sensor 23a, the signal processing unit 35 determines the MR sensor 23a as the MR sensor for detecting the torque of the input shaft 21a (S12).

As described above, the signal processing unit 35 judges whether or not the MR sensor for the input shaft 21a for use in the previous cycle for detecting the torque is the MR sensor 23a (S11). When the MR sensor is not the MR sensor 23a, whether or not the MR sensor for the input shaft 21a for use in the cycle for detecting the torque is the MR sensor 24a is judged (S13). When the previous MR sensor is the MR sensor 24a, the signal processing unit 35 determines that the MR sensor 24a is the MR sensor for detecting the torque of the input shaft 21a (S6).

When the signal processing unit 35 has determined that the output of the MR sensor for detecting the torque of the input shaft 21a is the output voltage MR 24a (S8), or that the output of the MR sensor for detecting the torque of the input shaft 21a is the output voltage MR 23a (S14), the signal processing unit 35 judges whether or not the output voltage MR 23b of the MR sensor 23b is higher than the level LIMH or the output voltage MR 23b is lower than the level LIML (S16). When either condition is satisfied, the signal processing unit 35 determines that the MR sensor 24b is the MR sensor for detecting the torque of the output shaft 21b (S18). Thus, the signal processing unit 35 stores the output of the MR sensor 24b as the output voltage MR 24b (S20).

As described above, the signal processing unit 35 judges whether or not the output voltage MR 23b of the MR sensor 23b is higher than the level LIMH or the output voltage MR 23b is lower than the level LIML (S16). When either condition is not satisfied, the signal processing unit 35 judges whether or not the output voltage MR 24b of the MR sensor 24b is higher than the level LIMH or the output voltage 24b is lower than the level LIML (S22). When either condition is satisfied, the signal processing unit 35 determines the MR sensor 23b is the MR sensor for detecting the torque of the output shaft 21b (S24). Then, the signal processing unit 35 stores the output of the MR sensor 23b as the output voltage MR 23b (S26).

As described above, the signal processing unit 35 judges whether or not the output voltage MR 24b of the MR sensor 24b is higher than the level LIMH or the output voltage MR 24b is lower than the level LIML (S22). When either condition is not satisfied, the signal processing unit 35 judges whether or not the MR sensor for the output shaft 21b for use in the previous cycle for detecting the torque is the MR sensor 23b (S23). When the previous MR sensor is the MR sensor 23b, the signal processing unit 35 determines the MR sensor 23b as the MR sensor for detecting the torque of the output shaft 21b (S24).

As described above, the signal processing unit 35 judges whether or not the MR sensor for the output shaft 21b for use in the previous cycle for detecting the torque is the MR sensor 23b (S23). When the MR sensor is not the MR sensor 23b, the signal processing unit 35 judges whether or not the MR sensor for the output shaft 21b for use in the previous cycle for detecting the torque is the MR sensor 24b (S25). When the previous sensor is the MR sensor 24b, the signal processing unit 35 determines that the MR sensor 24b is the MR sensor for detecting the torque of the output shaft 21b (S18).

Then, the signal processing unit 35 judges whether or not the MR sensor for detecting the torque of the input shaft 21a has been determined (sensor 1 ≠ 23a ∩ sensor 1 ≠ 24a) or whether or not the MR sensor for detecting the torque of the output shaft 21b has not been determined (sensor 2 ≠ 23b ∩ sensor 2 ≠ 24b) (S28). When a judgment result is such that either or both of the MR sensors have not been determined {(sensor 1 ≠ 23a ∩ sensor 1 ≠ 24a) ∪ (sensor 2 ≠ 23b ∩ sensor 2 ≠ 24b)}, the signal processing unit 35 outputs a signal indicating that the detected torque is zero (S38).

The foregoing case is such that the MR sensor which has outputted the output voltage higher than the level LIMH or lower than the level LIML does not exist for the input shaft 21a and/or output shaft 21b (S4, S10, S16 and S22). Moreover, the MR sensor which has been used in the previous cycle for detecting the torque is not present (S13 and S25). Thus, the MR sensor for detecting the torque cannot be determined.

When an MR sensor which has outputted the output voltage higher than the level LIMH or the output voltage lower than the level LIML is present, the other MR sensor can be determined as the MR sensor for detecting the torque as shown in FIG. 34A. When any MR sensor which has outputted the output voltage higher than the level LIMH or lower than the level LIML is not present, presence of the MR sensor for use in the previous cycle for detecting the torque permits the MR sensor to continuously be used to detect the torque.

When the MR sensor for detecting the torque of the input shaft 21a and the MR sensor for detecting the torque of the output shaft 21b have been determined {(sensor 1 = 23a ∪ sensor 1 = 24a) ∩ (sensor 2 = 23b ∪ sensor 2 = 24b)}, the signal processing unit 35 calculates "the torque = the output voltage of the MR sensor of the input shaft - the output voltage of the MR sensor of the output shaft" (S30).

Then, the signal processing unit 35 judges whether or not the MR sensor for detecting the torque is such that the MR sensor for the input shaft 21a is the MR sensor 23a and the MR sensor for the output shaft 21b is the MR sensor 23b or whether or not the MR sensor for the input shaft 21a is the MR sensor 24a and the MR sensor for the output shaft 21b is the MR sensor 24b (that is, present on the same side) (S32). When either condition is satisfied, that is, in the case where all of the MR sensors for detecting the torque are present on the same side with respect to the input shaft 21a and the output shaft 21b and, therefore, the MR sensors have the same output characteristics as shown in FIG. 34A, the torque which is detected is expressed as deviation of the output characteristics. Therefore, correction of the torque is not required. Thus, the signal processing unit 35 outputs the calculated torque (S30) as the detected torque.

When the judgement performed by the signal processing unit 35 (S32) results in a fact that either condition is not satisfied, that is, in the case where the MR sensor for detecting the torque is the MR sensor 23a for the input shaft 21a and the MR sensor 24b for the output shaft 21b or in the case where the MR sensor 24a is the MR sensor for the input shaft 21a and the MR sensor 23b is the MR sensor for the output shaft 21b (S32), the signal processing unit 35 judges whether or not the output voltage of the MR sensor for the input shaft 21a is higher than the output voltage of the MR sensor for the output shaft 21b (S34). When the output voltage of the input shaft 21a is higher than that of the output shaft 21b, a predetermined voltage level T is subtracted from the calculated torque (S30) to correct the torque (S36). Then, the signal processing unit 35 outputs the corrected torque as the detected torque.

The signal processing unit 35 judges whether or not the output voltage of the MR for the input shaft 21a is higher tan the output voltage of the MR sensor for the output shaft 21b (S34). When the output voltage for the output shaft 21b is higher, the signal processing unit 35 adds the predetermined voltage level T to the calculated torque (S30) to correct the torque (S40), and outputs the corrected torque as the detected torque.

When the two MR sensors for use in detecting the torque are present on the different sides with respect to the input shaft 21a and the output shaft 21b (S32), their output characteristics are different from each other by the voltage level T corresponding to the difference in the position which must be detected (180° in the circumferential direction of the input shaft 21a and the output shaft 21b) as show in FIG. 34B.

Therefore, when the output voltage of the MR sensor for the input shaft 21a is higher than the output voltage of the MR sensor for the output shaft 21b (S34), the MR sensor for the input shaft 21a is the MR sensor 23a and the MR sensor for the output shaft 21b is the MR sensor 24b as shown in FIG. 34B. Therefore, the voltage level T is added to the output voltage MR 24b of the MR sensor 24b so that conversion into the output voltage MR 23b of the MR sensor 23b is performed. Thus, the correction of the torque is performed (S36).

When the output voltage of the MR sensor for the input shaft 21a is lower than the output voltage of the MR sensor for the output shaft 21b (S34), the MR sensor for the input shaft 21a is the MR sensor 24b and the MR sensor for the output shaft 21b is the MR sensor 23b as shown in FIG. 34B. Therefore, the voltage level T is added to the output voltage MR 24a of the MR sensor 24a so that conversion to the output voltage MR 23a of the MR sensor 23a is performed. Thus, the torque is corrected (S40).

(Seventeenth Embodiment)

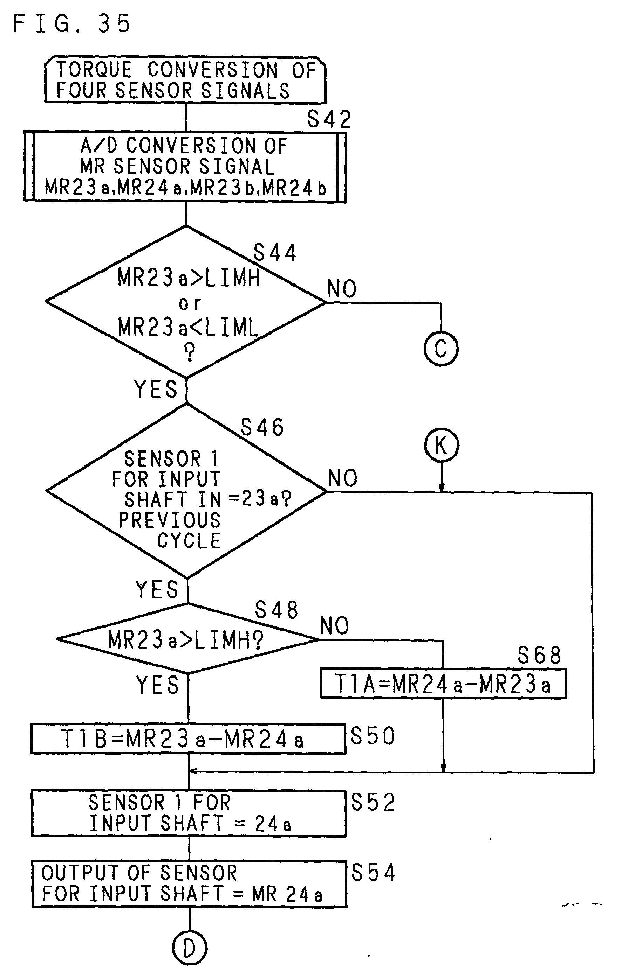

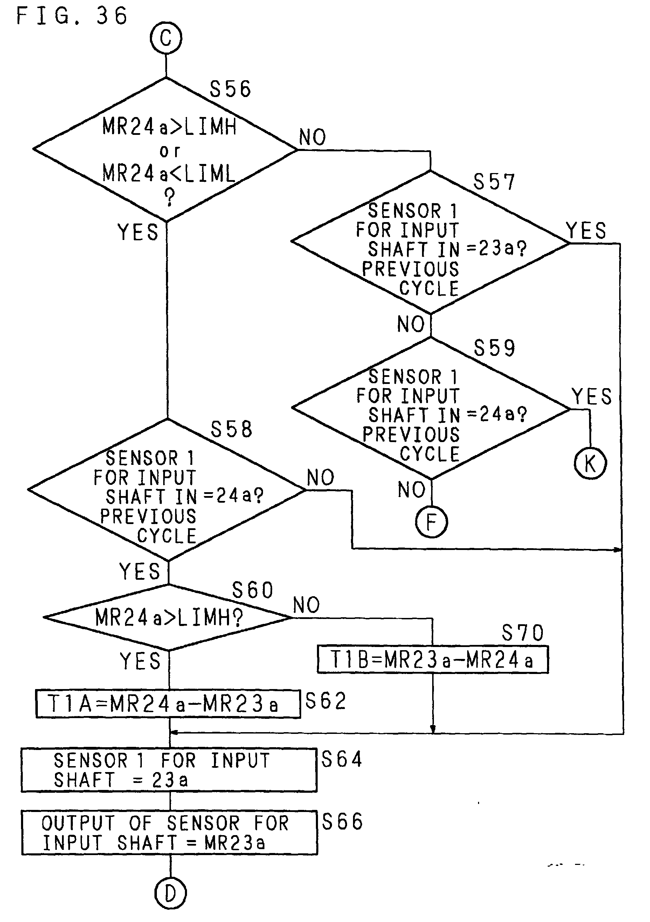

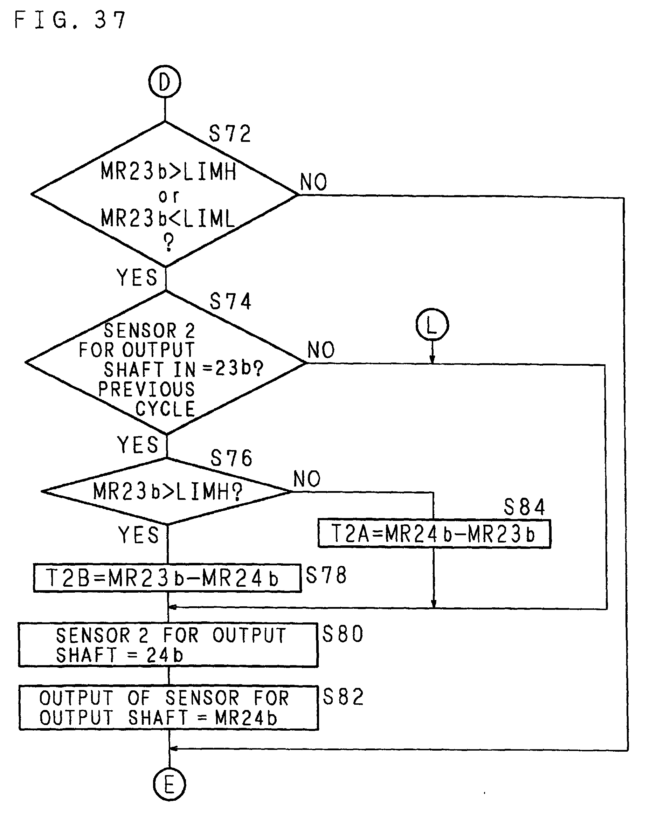

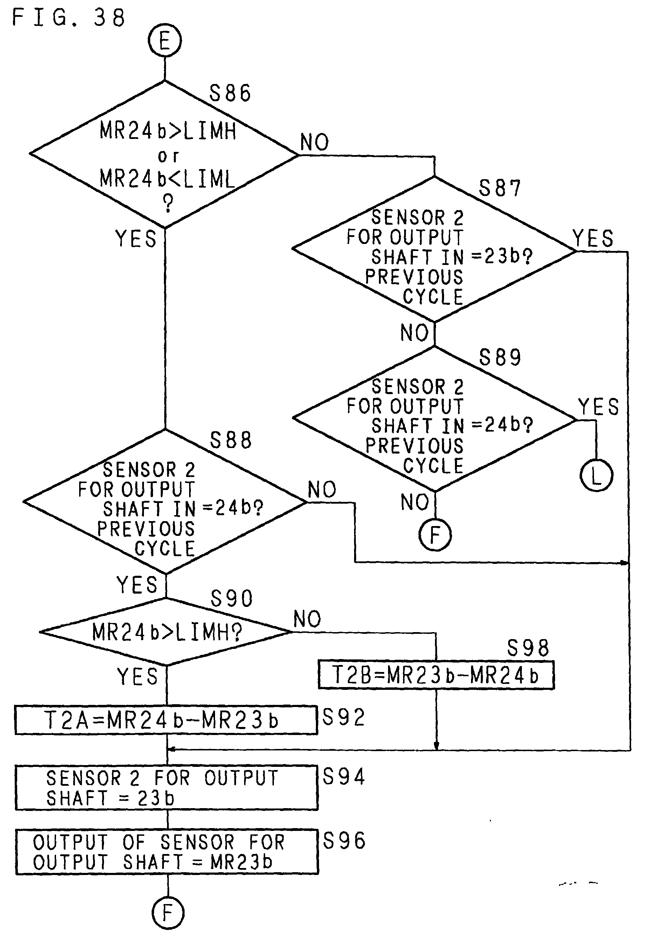

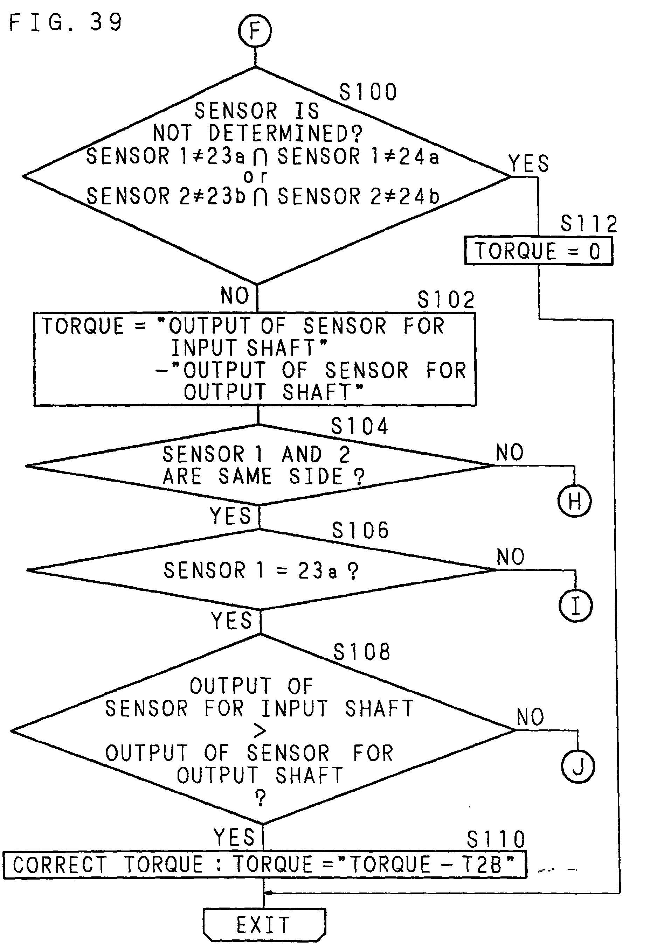

FIG. 35 through FIG. 40 is a flow chart of the operation of a seventeenth embodiment of the torque detecting device according to the present invention. The torque detecting device according to this embodiment is similar to the construction (FIG. 30) of the torque detecting device according to the sixteenth embodiment. Therefore, the construction is omitted from description.

Note that each of the difference in the positions which must be detected by the MR sensors 23a and 24a and the difference in the positions which must be detected by the MR sensors 23b and 24b is not required to be 180° in the circumferential surface of the input shaft 21a and the output shaft 21b. Moreover, the difference may be present for a predetermined distance in the axial direction of each of the input shaft 21a and the output shaft 21b.

The operation of the torque detecting device will now be described with reference to a flow chart shown in FIG. 35 through FIG. 40.

The torque detecting device is arranged such that the protrusions 22a which is closest to the detecting surfaces of the MR sensors 23a, 24a, 23b and 24b is moved in the axial direction of the input shaft 21a and the output shaft 21b when the input shaft 21a and the output shaft 21b are rotated in a range $0° \leq \theta < 360°$. Since the protrusion 22a is formed spirally on the circumferential surfaces of the input shaft 21a and the output shaft 21b, the position of the protrusions 22a which is closest to the detecting surfaces of the MR sensors 23a, 24a, 23b and 24b in the axial direction of the input shaft 21a and the output shaft 21b and the rotational angle of the input shaft 21a and the output shaft 21b can be made to correspond to each other.

When steering torque is applied on the steering wheel 1 causing a torsional angle to be generated in the torsion bar 6, the output voltage of each of the MR sensors 23a and 23b generate the difference in the voltage corresponding to the torsional angle. Also the output voltage of the MR sensors 24a and 24b generate the difference in the voltage corresponding to the torsional angle. The difference in the voltage is calculated by the signal processing unit 35 so that the torsional angle is obtained. Thus, a signal indicating the steering torque can be outputted.

Initially, the signal processing unit 35 performs analog to digital conversion of the output voltages MR 23a, MR 24a, MR 23b and MR 24b of the MR sensors 23a, 24a, 23b and 24b (S42).

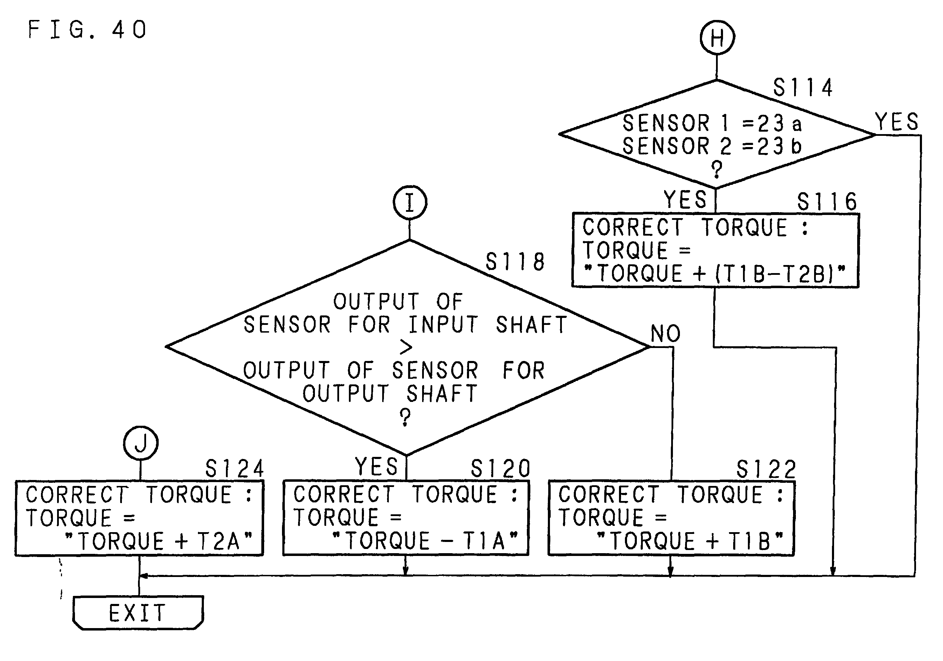

FIG. 40A and FIG. 40B are diagrams showing the operation of the torque detecting device according to the present invention. As shown in FIG. 40A and FIG. 40B, the signal processing unit 35 has set upper and lower switching levels LIMH and LIML in such a manner that the output voltages MR 23a and MR 24a (MR 23b and MR 24b) can be switched in a portion in which effective data (the straight line portion) of the output voltages MR 23a and MR 24a (MR 23b and MR 24b) of the MR sensors 23a and 24a (23b and 24b) overlap. An assumption is made that effective data (the straight line portion) of the output voltages MR 23a and MR 24a (MR 23b and MR 24b) are in parallel with each other.

Then, the signal processing unit 35 judges whether or not the output voltage MR 23a of the MR sensor 23a is higher than the level LIML or the output voltage MR 23a is lower than the level LIML (S44). When either condition is satisfied, the signal processing unit 35 judges that the MR sensor for the input shaft 21a for use in the previous cycle for detecting the torque is the MR sensor 23a (S46). When the previous MR sensor is the MR sensor 23a, whether or not the output voltage MR 23a of the MR sensor 23a is higher than level LIMH is judged (S48). When the output voltage MR 23a is higher, calculation that voltage level "T1B = MR 23a - MR 24a " is performed so as to be stored for use in conversion (S50). When the output voltage MR 23a is lower (S48), calculation that voltage level "T1A = MR 24a - MR 23a " is performed so as to be stored for use in conversion (S68).

Then, the signal processing unit 35 determines the MR sensor 24a as the MR sensor for detecting the torque of the input shaft 21a (S52). The output of the MR sensor 24a is stored as the output voltage MR 24a (S54).

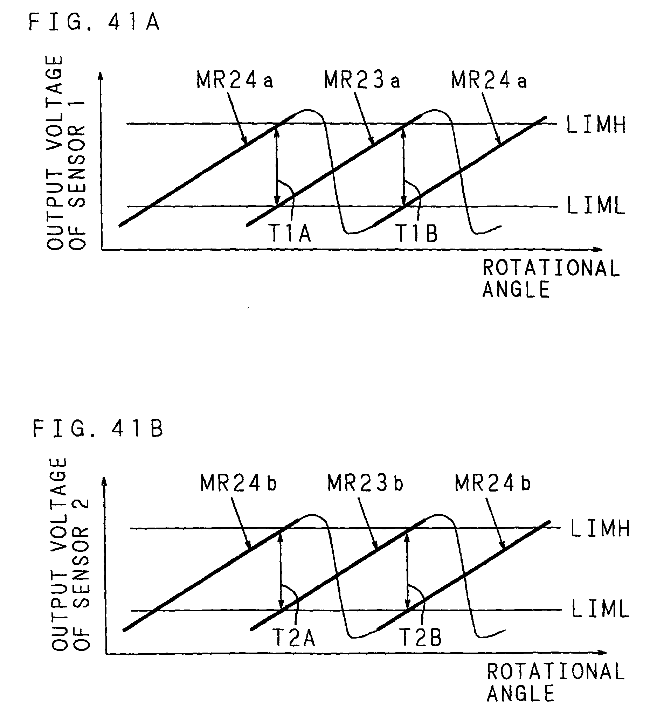

When the MR sensor for detecting the torque of the input shaft 21a is switched from the MR sensor 23a to the MR sensor 24a, their output voltages are different from each other by the voltage level corresponding to the difference in the position which must be detected. Therefore, conversion must be performed. Therefore, when the output voltage MR 23a of the MR sensor 23a is higher than the level LIMH (S48), the voltage level T1B for use in the conversion is calculated by using FIG. 41A so as to be stored. When the output voltage MR 23a of the MR sensor 23a is lower than the level LIMH (S48), that is, when the output voltage MR 23a is lower than the level LIML, voltage level T1A for use in the conversion is calculated by using FIG. 41A so as to be stored.

When the MR sensor for the input shaft 21a for use in the previous cycle for detecting the torque is not the MR sensor 23a (S46), that is, when the MR sensor 24a is used in the previous process and no switching is performed, any conversion is not required. Thus, the signal processing unit 35 determines the MR sensor 24a as the MR sensor for detecting the torque of the input shaft 21a (S52). Then, the signal processing unit 35 stores the output of the MR sensor 24a as the output voltage MR 24a (S54).

As described above, the signal processing unit 35 judges whether or not the output voltage MR 23a of the MR sensor 23a is higher than the level LIMH or the output voltage MR 23a is lower than the level LIML (S44). When either condition is not satisfied, whether or not the output voltage MR 24a of the MR sensor 24a is higher than the level LIMH or whether or not the output voltage MR 24a is lower than the level LIML (S56). When either condition is satisfied, whether or not the MR sensor for the input shaft 21a for use in the previous cycle for detecting the torque is the MR sensor 24a is judged (S58). When the previous MR sensor is the MR sensor 24a, whether or not the output voltage MR 24a of the MR sensor 24a is higher than the level LIMH (S60). When the output voltage MR 24a is higher, voltage level "T1A = MR 24a - MR 23a " is calculated for use in the conversion so as to be stored (S62). When the output voltage MR 24a is lower (S60), voltage level "T1B = MR 23a - MR 24a " is calculated for use in the conversion so as to be stored (S70).

Then, the signal processing unit 35 determines the MR sensor 23a as the MR sensor for detecting the torque of the input shaft 21a (S64). The output of the MR sensor 23a is stored as the output voltage MR 23a (S66).

When the MR sensor for detecting the torque of the input shaft 21a is switched from the MR sensor 24a to the MR sensor 23a, their output voltages are different from each other by the voltage level corresponding to the difference in the positions which must be detected. Therefore, conversion is required.

When the output voltage MR 24a of the MR sensor 24a is higher than the level LIMH (S60), the voltage level T1A for use in the conversion is calculated from FIG. 41A so as to be stored. When the output voltage MR 24a of the MR sensor 24a is lower than the level LIMH (S60), that is, when the output voltage MR 24a is lower than the level LIML, the voltage level T1B for use in the conversion is calculated from FIG. 41A so as to be stored.

As described above, the signal processing unit 35 judges whether or not the output voltage MR 24a of the MR sensor 24a is higher than the level LIMH or whether or not the output voltage MR 24a is lower than the level LIML (S56). When either condition is not satisfied, the signal processing unit 35 judges whether or not the MR sensor for the input shaft 21a for use in the previous cycle for detecting the torque is the MR sensor 23a (S57). When the previous MR sensor is the MR sensor 23a, the signal processing unit 35 determines that the MR sensor 23a is the MR sensor for detecting the torque of the input shaft 21a (S64).

As described above, the signal processing unit 35 judges whether or not the MR sensor for the input shaft 21a for use in the previous cycle for detecting the torque is the MR sensor 23a (S57). When the MR sensor is not the MR sensor 23a, whether or not the MR sensor for the input shaft 21a for use in the previous cycle for detecting the torque is the MR sensor 24a is judged (S59). When the previous MR sensor is the MR sensor 24a, the signal processing unit 35 determines the MR sensor 24a as the MR sensor for detecting the torque of the input shaft 21a (S52).

As described above, the signal processing unit 35 judges whether or not the MR sensor for the input shaft 21a for use in the previous cycle for detecting the torque is the MR sensor 24a (S59). When the MR sensor is not the MR sensor 24a, whether or not the MR sensor for detecting the torque of the input shaft 21a has not been determined (sensor 1 ≠ 23a ∩ sensor 1 ≠ 24a) or whether or not the MR sensor for detecting the torque of the output shaft 21b has not been determined (sensor 2 ≠ 23b ∩ sensor 2 ≠ 24b) (S100).

When the signal processing unit 35 has determined that the output of the MR sensor for the input shaft 21a is the output voltage MR 24a (S54) or when the signal processing unit 35 has determined that the output of the MR sensor for detecting the torque of the input shaft 21a is the output voltage MR 23a (S66), the signal processing unit 35 judges whether or not the output voltage MR 23b of the MR sensor 23b is higher than the level LIMH or whether or not the output voltage MR 23b is lower than the level LIML (S72). When either condition is satisfied, the signal processing unit 35 judges whether or not the MR sensor for the output shaft 21b for use in the previous cycle for detecting the torque is the MR sensor 23b (S74).

As described above, the signal processing unit 35 judges whether or not the previous MR sensor is the MR sensor 23b (S74). When the previous MR sensor is the MR sensor 23b, whether or not the output voltage MR 23b of the MR sensor 23b is higher than the level LIMH is judged (S76). When the output voltage MR 23b is higher, the voltage level "T2B = MR23b - MR24b " is calculated and stored for use in the conversion (S78). When the output voltage MR 23b is lower (S76), the voltage level "T2A = MR 24b - MR 23b " is calculated and stored for use in the conversion (S84).

Then, the signal processing unit 35 determines the MR sensor 24b as the MR sensor for detecting the torque of the output shaft 21b (S80). The output of the MR sensor 24b is stored as the output voltage MR 24b (S82).

When the MR sensor for detecting the torque of the output shaft 21b is switched from the MR sensor 23b to the MR sensor 24b, their output voltages are different from each other by the voltage level corresponding to the difference in the positions which must be detected. Therefore, conversion is required. Therefore, when the output voltage MR 23b of the MR sensor 23b is higher than the level LIMH (S76), the voltage level T2B for use in the conversion is calculated from FIG. 41B and stored (S78). When the output voltage MR 23b of the MR sensor 23b is lower than the level LIMH (S76), that is, when the output voltage MR 23b is lower than the level LIML, the voltage level T2A for use in the conversion is calculated from FIG. 41B and stored (S84).

When the MR sensor for the output shaft 21b for use in the previous cycle for detecting the torque is not the MR sensor 23b (S74), that is, when the previous MR sensor is the MR sensor 24b and, therefore, no switching of the MR sensor is performed, no conversion is required. Thus, the signal processing unit 35 determines the MR sensor 24b as the MR sensor for detecting the torque of the output shaft 21b (S80). Then, the signal processing unit 35 stores the output of the MR sensor 24b as the output voltage MR 24b (S82).

As described above, the signal processing unit 35 judges whether or not the output voltage MR 23b of the MR sensor 23b is higher than the level LIMH or whether or not the output voltage MR 23b is lower than the level LIML (S72). When either condition is not satisfied, whether or not the output voltage MR 24b of the MR sensor 24b is higher than the level LIMH or whether or not the output voltage MR 24b is lower than the level LIML is judged (S86). When either condition is construction, whether or not the MR sensor for the output shaft 21b for use in the previous cycle for detecting the torque is the MR sensor 24b is judged (S88). When the previous MR sensor is the MR sensor 24b, whether or not the output voltage MR 24b of the MR sensor 24b is higher than the level LIMH is judged (S90). When the output voltage MR 24b is higher, the voltage level "T2A = MR 24b - MR 23b " for use in the conversion is calculated and stored (S92). When the output voltage MR 24b is lower (S90), the voltage level "T2B = MR 23b - MR 24b " for use in the conversion is calculated and stored (S98).

Then, the signal processing unit 35 determines the MR sensor 23b as the MR sensor for detecting the torque of the output shaft 21b (S94). The output of the MR sensor 23b is stored as the output voltage MR 23b (S96).

When the MR sensor for detecting the torque of the output shaft 21b is switched from the MR sensor 24b to the MR sensor 23b, their output voltages are different from each other by the voltage level corresponding to the difference in the position which must be detected. Therefore, conversion is required.

When the output voltage MR 24b of the MR sensor 24b is higher than the level LIMH (S90), the voltage level T2A for use in the conversion is calculated and stored (S92). When the output voltage MR 24b of the MR sensor 24b is lower than the level LIMH (S90), that is, when the output voltage MR 24b is lower than the level LIML, the voltage level T2B for use in the conversion is calculated from FIG. 41B and stored (S98).

As described above, the signal processing unit 35 judges whether or not the output voltage MR 24b of the MR sensor 24b is higher than the level LIMH or the output voltage MR 24b is lower than the level LIML (S86). When either condition is not satisfied, the signal processing unit 35 judges whether or not the MR sensor for the output shaft 21b for use in the previous cycle for detecting the torque is MR sensor 23b (S87). When the previous MR sensor is the MR sensor 23b, the signal processing unit 35 determines that the MR sensor 23b is the MR sensor for detecting the torque of the output shaft 21b (S94).

As described above, the signal processing unit 35 judges whether or not the MR sensor for the output shaft 21b for use in the previous cycle for detecting the torque is the MR sensor 23b (S87). When the MR sensor is not the MR sensor 23b, the signal processing unit 35 judges whether or not the MR sensor for the output shaft 21b for use in the previous cycle for detecting the torque is the MR sensor 24b (S89). When the previous MR sensor is the MR sensor 24b, the signal processing unit 35 determines that the MR sensor 24b as the MR sensor for detecting the torque of the output shaft 21b (S80).

Then, the signal processing unit 35 judges whether or not the MR sensor for detecting the torque of the input shaft 21a has been determined (sensor 1 ≠

23a ∩ sensor 1 ≠ 24a) or whether or not the MR sensor for detecting the torque of the output shaft 21b has been determined (sensor 2 ≠ 23b ∩ sensor 2 ≠ 24b) (S100). When a judgment result is such that either or both of the MR sensors have not been determined {(sensor 1 ≠ 23a ∩ sensor 1 ≠ 24a) ∪ (sensor 2 ≠ 23b ∩ sensor 2 ≠ 24b)}, the signal processing unit 35 outputs a signal indicating that the detected torque is zero (S112).

The foregoing case is such that the MR sensor which has outputted the output voltage higher than the level LIMH or lower than the level LIML does not exist for the input shaft 21a and/or output shaft 21b (S44, S56. S72 and S86). Moreover, the MR sensor which has been used in the previous cycle for detecting the torque is not present (S59 and S89). Thus, the MR sensor for detecting the torque cannot be determined.

When an MR sensor which has outputted the output voltage higher than the level LIMH or the output voltage lower than the level LIML is present, the signal processing unit 35 determined that the other MR sensor is the MR sensor for detecting the torque as shown in FIG. 40A and FIG. 40B. When any MR sensor which has outputted the output voltage higher than the level LIMH or lower than the level LIML is not present, presence of the MR sensor for use in the previous cycle for detecting the torque permits the MR sensor to continuously be used to detect the torque.

When the MR sensor for detecting the torque of the input shaft 21a and the MR sensor for detecting the torque of the output shaft 21b have been determined {(sensor 1 = 23a ∪ sensor 1 = 24a) ∩ (sensor 2 = 23b ∪ sensor 2 = 24b)}, the signal processing unit 35 calculates "torque = output voltage of MR sensor for the input shaft - output voltage of the MR sensor for the output shaft" (S102).

Then, the signal processing unit 35 judges whether or not the MR sensor for detecting the torque is such that the MR sensor for the input shaft 21a is the MR sensor 23a and the MR sensor for the output shaft 21b is the MR sensor 23b or whether or not the MR sensor for the input shaft 21a is the MR sensor 24a and the MR sensor for the output shaft 21b is the MR sensor 24b (that is, present on the same side) (S104). When either condition is satisfied, whether or not the MR sensors for detecting the torque are the MR sensors 23a and 23b is judged (S114). When a judgement result is such that the MR sensors for detecting the torque are MR sensors 23a and 23b, that is, both of the MR sensor for detecting the torque are present on the same side with respect to the input shaft 21a and output shaft 21b and, therefore, the MR sensors have the same output characteristics as shown in FIG. 40A and FIG. 40B, the torque which is detected is expressed as deviation of the output characteristics. Therefore, correction of the torque is not required. Thus, the signal processing unit 35 outputs the calculated torque (S102) as the detected torque.

The signal processing unit 35 judges whether or not the MR sensors for detecting the torque are the MR sensors 23a and 23b (S114). When a judgement result is such that the MR sensors are not the MR sensors 23a and 23b, and that the MR sensors are the MR sensors 24a and 24b. The voltage level T1B which has been calculated (S50) is added to the calculated torque (S102). Moreover, the voltage level T2B which has been calculated is subtracted (S78). Thus, the correction of the torque is performed (S116). The corrected torque is outputted as the detected.

When either condition is not satisfied in the judgement result (S104), that is, when the MR sensor for detecting the torque is the MR sensor 23a for the input shaft 21a and the MR sensor 24b for the output shaft 21b or when the MR sensor is the MR sensor 24a for the input shaft 21a and the MR sensor 23b for the output shaft 21b (S104), judgement whether or not the MR sensor for detecting the torque is the MR sensor 23a for the input shaft 21a is performed (S106).

When the MR sensor for detecting the torque is the MR sensor 23a for the input shaft 21a (S106), the signal processing unit 35 judges whether or not the output voltage of the MR sensor for the input shaft 21a is higher than the output voltage of the MR sensor for the output shaft 21b (S108). When the output voltage for the input shaft 21a is higher, the voltage level T2B which has been calculated (S78) is subtracted from the calculated torque (S102) so that the torque is corrected (S110). The signal processing unit 35 outputs the corrected torque as the detected torque.

As described above, the signal processing unit 35 judges whether or not the output voltage of the MR sensor for the input shaft 21a is higher than the output voltage of the MR sensor for the output shaft 21b (S108). When the output voltage for the output shaft 21b is higher, the voltage value T2A which has been calculated (S84) is added to the calculated torque (S102). The signal processing unit 35 outputs the corrected torque as the detected torque (S124)

As described above, the signal processing unit 35 judges whether or not the MR sensor for detecting the torque is the MR sensor 23a for the input shaft 21a (S106). When the MR sensor for the input shaft 21a is not the MR sensor 23a, that is, when the MR sensor for the input shaft 21a is the MR sensor 24a, the signal processing unit 35 judges whether or not the output voltage of the MR sensor for the input shaft 21a is higher than the output voltage of the MR sensor for the output shaft 21b (S118). When the output voltage for the input shaft 21a is higher, the voltage level T1A which has been calculated (S68) is subtracted from the calculated torque (S102) so that correction of the torque is performed (S120). The signal processing unit 35 outputs the corrected torque as the detected torque.

As described above, the signal processing unit 35 judges whether or not the output voltage of the MR sensor for the input shaft 21a is higher than the output voltage of the MR sensor for the output shaft 21b (S118). When the output voltage for the output shaft 21b is higher, the voltage level T1B which has been calculated (S50) is added to the calculated torque (S102). Thus, the torque is corrected (S122). The signal processing unit 35 outputs the corrected torque as the detected torque.

When the two MR sensors for use to detect the torque are the MR sensor 24a and/or MR sensor 24b, the output voltages MR 24a and MR 24b of the MR sensors 24a and 24b are converted into output voltages 23a and MR 23b of the MR sensors 23a and 23b.

When the MR sensor for the input shaft 21a is the MR sensor 23a and the MR sensor for the output shaft 21b is the MR sensor 24b (S106) and when the output voltage of the MR sensor for the input shaft 21a is higher than the output voltage of the MR sensor for the output shaft 21b (S108). The voltage level T2B is added to the output voltage MR 24b of the MR sensor 24b as shown in FIG. 40A and FIG. 40B. Thus, conversion into the output voltage MR 23b of the MR sensor 23b is performed (S110).

When the MR sensor for the input shaft 21a is the MR sensor 23a and the MR sensor for the output shaft 21b is the MR sensor 24b (S106) and when the output voltage of the MR sensor for the input shaft 21a is lower than the output voltage of the MR sensor for the output shaft 21b (S108), the voltage value T2A is subtracted from the output voltage MR 24b of the MR sensor 24b shown in FIG. 40A and FIG. 40B. Thus, conversion into the output voltage MR 23b of the MR sensor 23b is performed (S124).

When the MR sensor for the input shaft 21a is the MR sensor 24a and the MR sensor for the output shaft 21b is the MR sensor 23b (S106) and when the output voltage of the MR sensor for the input shaft 21a is higher than the output voltage of the MR sensor for the output shaft 21b (S108), the voltage level T1A is subtracted from the output voltage MR 24a of the MR sensor 24a as shown in FIG. 40A and FIG. 40B. Thus, conversion into the output voltage MR 23a of the MR sensor 23a is performed.

When the MR sensor for the input shaft 21a is the MR sensor 24a and that for the output shaft 21b is the MR sensor 23b (S106) and when the output voltage of the MR sensor for the input shaft 21a is lower than the output voltage of the MR sensor for the output shaft 21b (S108), the voltage level T1B is added to the output voltage MR 24a of the MR sensor 24a as shown in FIG. 40A and FIG. 40B. Thus, conversion into the output voltage MR 23a of the MR sensor 23a is performed.

When the MR sensor for the input shaft 21a is the MR sensor 24a and the MR sensor for the output shaft 21b is the MR sensor 24b (S114), as shown in FIG. 40A and FIG. 40B, the voltage level T1B is added to the output voltage MR 24a of the MR sensor 24a to convert into the output voltage MR 23a of the MR sensor 23a and the voltage level T2B is added to the output voltage MR 24b of the MR sensor 24b to convert into the output voltage MR 23b of the MR sensor 23b (S116).

Since "T1B + T1A = T2B + T2A " is a voltage level (constant) corresponding to 360°, subtraction of the voltage level T1A from the output voltage MR 24a of the MR sensor 24a, conversion into the output voltage MR 23a of the MR sensor 23a, subtraction of the voltage value T2A from the output voltage MR 24b of the MR sensor 24b and conversion into the output voltage MR 23b of the MR sensor 23b attain the same result as the case where the individual conversion is performed by using the voltage levels T1B and T2B.

That is, by FIG. 40A and FIG. 40B, though the subtraction of the voltage level T1A which has been calculated (S68) from the calculated torque (S102) and addition of the voltage value T2A which has been calculated (S84) are performed to correct the torque, the result is the same value after the correction has been performed in the foregoing case of the correction of the torque (S116).

In the seventeenth embodiment of the torque detecting device, the torque can accurately be performed when the difference in the positions which must be detected by the MR sensors 23a and 24a and the difference in the positions which must be detected by the MR sensors 23b and 24b are not accurately distant by 180° in the circumferential direction of the input shaft 21a and output shaft 21b.

(Eighteenth Embodiment)

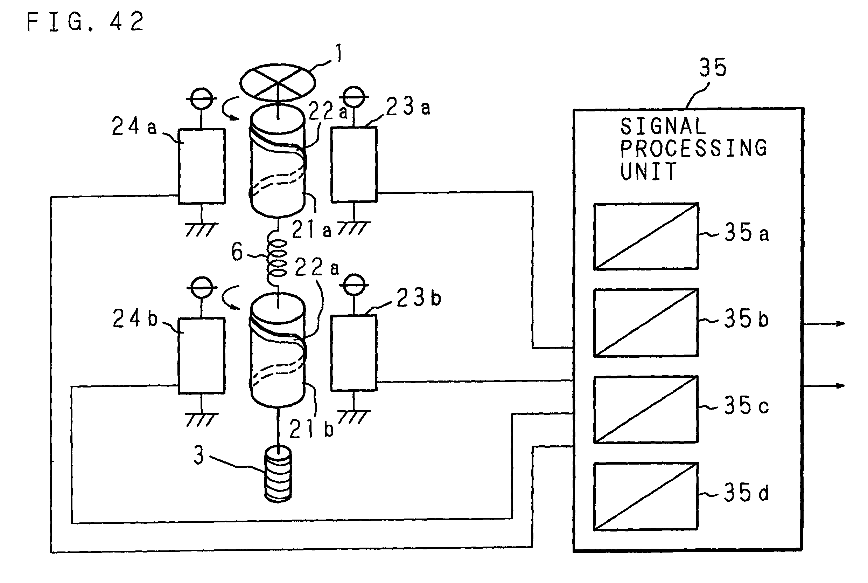

FIG. 42 is a principle view showing an essential construction of an eighteenth embodiment of the torque detecting device according to the present invention. The torque detecting device according to this embodiment has a construction that voltages outputted from the MR sensors 23a, 23b, 24a and 24b to correspond to the detecting positions are inputted to the signal processing unit 35. The signal processing unit 35 performs analog to digital conversion of the inputted voltages to input the digital values to the tables 35a, 35b, 35c and 35d for each output voltage.

The tables 35a, 35b, 35c and 35d is constructed by EPROM (Erasable and Programmable ROM) formed into a matrix configuration to output digital signals corresponding to the inputted digital signals.

In the tables 35a, 35b, 35c and 35d, the detecting positions and characteristics of the output voltages of the MR sensors 23a, 23b, 24a and 24b are stored such that the positions and the characteristics are made to correspond to one another when the torque detecting device has been manufactured.

The tables 35a, 35b, 35c and 35d output the voltage levels (digital signals) which must be outputted to correspond to the output voltage levels (digital signals) when the MR sensors 23a, 23b, 24a and 24b have detected the positions.

When the MR sensors 23a and 24a are switched, the tables 35a and 35b correct the output voltages of the MR sensors 23a, 23b, 24a and 24b in such a manner that the output voltages which must be outputted are free from any deviation and smooth switching is permitted. The tables 35c and 35d correct the output voltage in such a manner that the output voltages which must be outputted are free from any deviation and smooth switching is permitted when the MR sensors 23b and 24b are switched.

The signal processing unit 35 uses the output voltages of the MR sensors 23a, 23b, 24a and 24b corrected by the tables 35a, 35b, 35c and 35d to perform the operation of the signal processing unit 35 described in the sixteenth and seventeenth embodiment.

Since the other constructions and operations of the torque detecting device are similar to those of the torque detecting device according to the sixteenth and seventeenth embodiment, the similar constructions and operations are omitted from description.

(Nineteenth Embodiment)

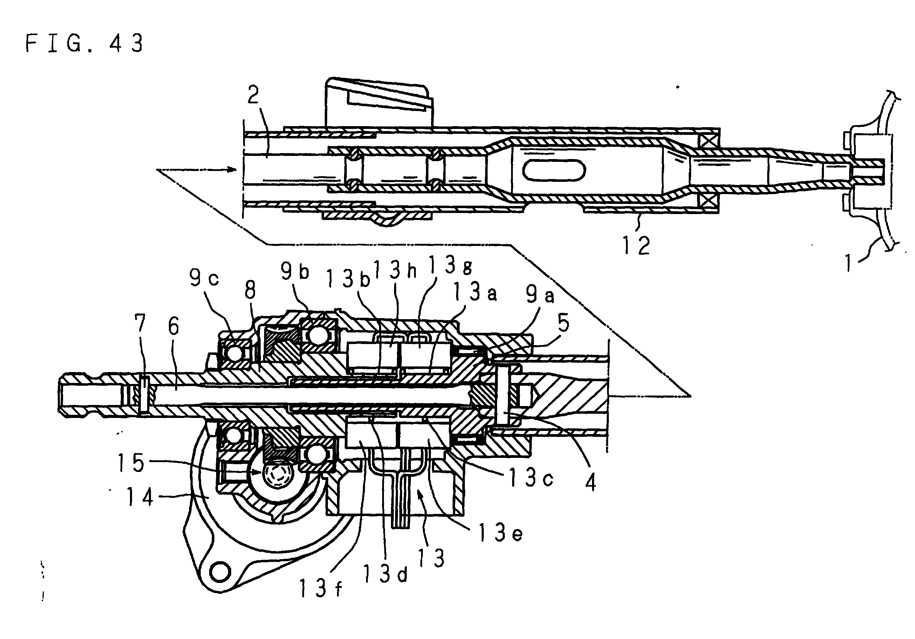

FIG. 43 is a vertical cross sectional view showing an essential construction of a nineteenth embodiment of a steering apparatus according to the present invention. The steering apparatus according to this embodiment comprises an upper shaft 2 which is attached to the upper end thereof and to which a steering wheel 1 is attached. A cylindrical input shaft 5 and an upper end of a torsion bar 6, which is inserted into the input shaft 5, are, through a first dowel pin 4, connected to the lower end of the upper shaft 2. A cylindrical output shaft 8 is, through a second dowel pin 7, connected to a lower end of the torsion bar 6. The upper shaft 2, the input shaft 5 and the output shaft 8 are rotatively supported in a housing 12 through bearings 9a, 9b and 9c.

The housing 12 includes a torque detecting device 13 for detecting the steering torque in accordance with an amount of relative displacement of the input shaft 5 and the output shaft 8 connected to each other through the torsion bar 6. Moreover, the housing 12 includes a reduction mechanism 15 for reducing the rotation of the electric motor 14 for assisting steering which is rotated in accordance with a detection result performed by the torque detecting device 13 so as to transmit the reduced rotation to the output shaft 8. The operation of the steering mechanism corresponding to the rotation of the steering wheel 1 is assisted by using the rotation of the electric motor 14. Thus, the labor which must be borne by a driver who performs steering can be reduced. The lower end of the output shaft 8 is connected to a rack and pinion steering mechanism through a universal joint.

The torque detecting device 13 comprises a magnetic protrusion 13c formed spirally on the circumferential surface 13a of the input shaft 5. To detect the position of the magnetic protrusion 13c which is moved in the axial direction of the input shaft 5 when the input shaft 5 has been rotated in a state where observation is performed from one rotational position, an MR sensor 13e is disposed in parallel with the input shaft 5 such that a proper distance is maintained. Moreover, an MR sensor 13g is disposed in parallel with the input shaft 5 at a position apart from the MR sensor 13e by 180° in the circumferential direction of the input shaft 5 such that a proper distance is maintained. The MR sensor 13g is secured to a stationary portion of a body of an automobile.

Similarly to the input shaft 5, the output shaft 8 has a magnetic protrusion 13d formed spirally on the circumferential surface 13b of the output shaft 8. To detect the position of the protrusion 13d which is moved in the axial direction of the output shaft 8 when the output shaft 8 has been rotated in a state where observation is performed from one rotational position, an MR sensor 13f is disposed in parallel with the output shaft 8 at a position apart from the output shaft 8. An MR sensor 13e is disposed by 180° in the circumferential direction such that a proper distance is maintained. The MR sensor 13h is secured to a stationary portion of a body of an automobile.

The operation of the steering apparatus constructed as described above will now be described.

When the input shaft 5 and the output shaft 8 are rotated without any twisting of the torsion bar 6, the input shaft 5, the output shaft 8 and the torsion bar 6 are integrally rotated.

When the input shaft 5 and the output shaft 8 have been rotated, the protrusions 13c and 13d which are closest to the detecting surfaces of the MR sensors 13e and 13g, 13f and 13h are moved in the axial direction of the input shaft 5 and the output shaft 8. The protrusions 13c and 13d are spirally formed on the circumferential surfaces 13a and 13b of the input shaft 5 and the output shaft 8. The positions of the protrusions 13c and 13d, which are closest to the detecting surfaces of the MR sensors 13e, 13g, 13f and 13h, in the axial direction of the input shaft 5 and the output shaft 8 and the rotational angles of the input shaft 5 and the output shaft 8 can be made to correspond to each other.

For example, the output voltages of the MR sensors 13e, 13g, 13f and 13h and the rotational angles of the input shaft 5 and the output shaft 8 are set to have a similar linear relationship. When the input shaft 5 and the output shaft 8 have been rotated plural times, the outputs of the MR sensors 13e, 13g, 13f and 13h show the voltage waveform having a period of 360°. In accordance with the output voltages of the MR sensors 13e, 13g, 13f and 13h, the rotational angles of the input shaft 5 and the output shaft 8 can be detected.

When the steering torque has been applied on the steering wheel 1 and the input shaft 5 and the output shaft 8 have been rotated such that the torsion bar 6 is twisted, the output voltages of the MR sensors 13e, 13g, 13f and 13h generate the difference in the voltage corresponding to the torsional angle. The output voltages of the MR sensors 13e, 13g, 13f and 13h are inputted to a signal processing unit (not shown) through corresponding output cables. Similarly to the signal processing unit 35 according to the sixteenth to eighteenth embodiments, the signal processing unit calculates the difference in the voltage so as to obtain the torsional angle so that a signal corresponding to the steering torque is outputted

(Twentieth Embodiment)

A process for detecting breakdown of the rotational angle detecting device and the torque detecting device according to the present invention will now be described.

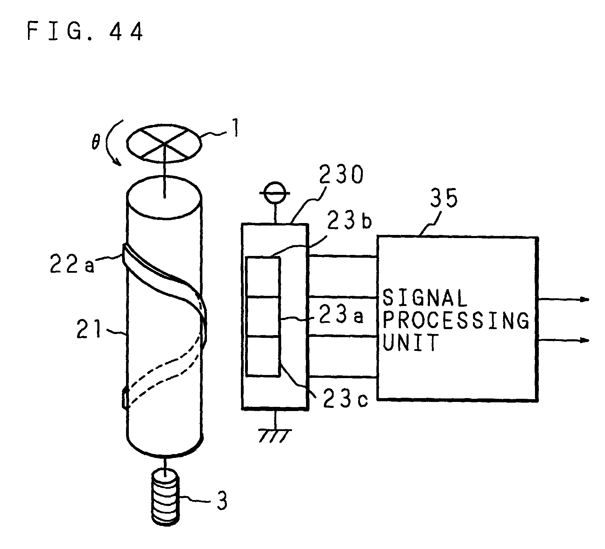

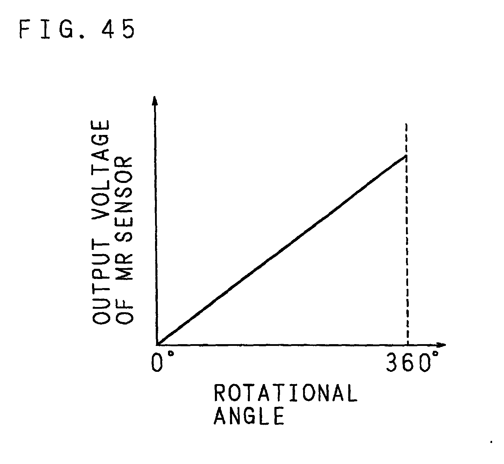

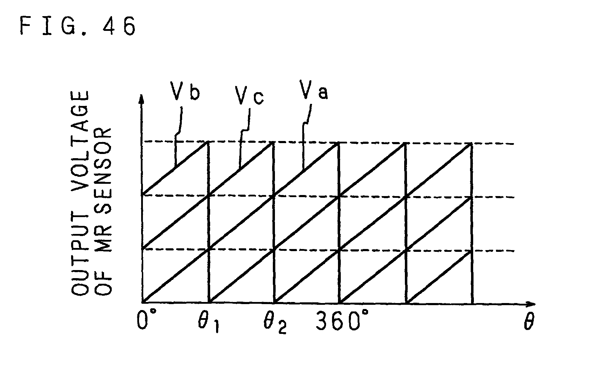

FIG. 44 is a principle view showing an essential construction of the embodiment of the rotational angle detecting device according to the present invention. FIG. 45 is a diagram showing the operation of the rotational angle detecting device shown in FIG. 44. FIG. 46 is a diagram showing the operation of the rotational angle detecting device shown in FIG. 44. In this embodiment, the rotational angle detecting device is applied to a steering apparatus. A protrusion 22a made of magnetic material is spirally formed on the surface of an intermediate portion of a steering shaft 21 having an upper end to which a steering wheel 1 is connected and lower end to which a pinion gear 3 is connected.

The rotational angle detecting device according to this embodiment comprises an MR sensor 23a for detecting the position of the protrusion 22a which is moved in the axial direction of the steering shaft 21 when the steering shaft 21 is rotated and which is viewed from a position of rotation. The MR sensor 23a is disposed in parallel with the steering shaft 21 such that the MR sensor 23 is disposed apart from the steering shaft 21 for a proper distance. The MR sensor 23a is secured to a stationary portion of a body of an automobile. Moreover, MR sensor 23b and 23c (a second magnetic sensor and a second detector) are provided to detect the positions of the protrusions 22a which are distant from the protrusion 22a which is detected by the MR sensor 23a for a predetermined distance. The MR sensors 23a, 23b and 23c are contained in one package 230 so that an integrated construction is formed.

Position signals detected by the MR sensors 23a, 23b and 23c are supplied to the signal processing unit 35 so as to be used to judge breakdown. Moreover, a position signal detected by the MR sensor 23a is used to detect the rotational angle of the steering shaft 21.

Each of the MR sensors 23a, 23b and 23c comprises a potential dividing circuit comprising, for example, two magnetic resistors; and a common biasing magnet disposed on the surface which does not face the steering shaft 21. The biasing magnet intensifies the magnetic field of the surface of the steering shaft 21 in order to improve the sensitivity of each of the MR sensors 23a, 23b and 23c.

The rotational angle detecting device having the above-mentioned construction is arranged such that the protrusion 22a which is closest to the detecting surface of the MR sensor 23a is moved in the axial direction of the steering shaft 21 when the steering shaft 21 has been rotated in a range that $0° \leq \theta < 360°$.

Since the protrusion 22a is spirally formed on the circumferential surface of the steering shaft 21, the position of the protrusion 22a which is closest to the detecting surface of the MR sensor 23a in the axial direction of the steering shaft 21 and the rotational angle of the steering shaft 21 can be made to correspond to each other. For example, the output voltage of the MR sensor 23a which is the position signal detected by the MR sensor 23a and the rotational angle of the steering shaft 21 have a linear relationship as shown in FIG. 45. Thus, the rotational angle of the steering shaft 21 can be detected in accordance with the output voltage of the MR sensor 23a.

Similarly to the MR sensor 23a, the MR sensors 23b and 23c output position signals. Since the MR sensors 23b and 23c are disposed to detect the position of the protrusion 22a which is distant from the protrusion 22a which is detected by the MR sensor 23a for a predetermined distance, their output voltages are different from each other by the voltage corresponding to the rotational angles $\theta_1$ and $\theta_2$ of the steering shaft 21, as shown in FIG. 46.

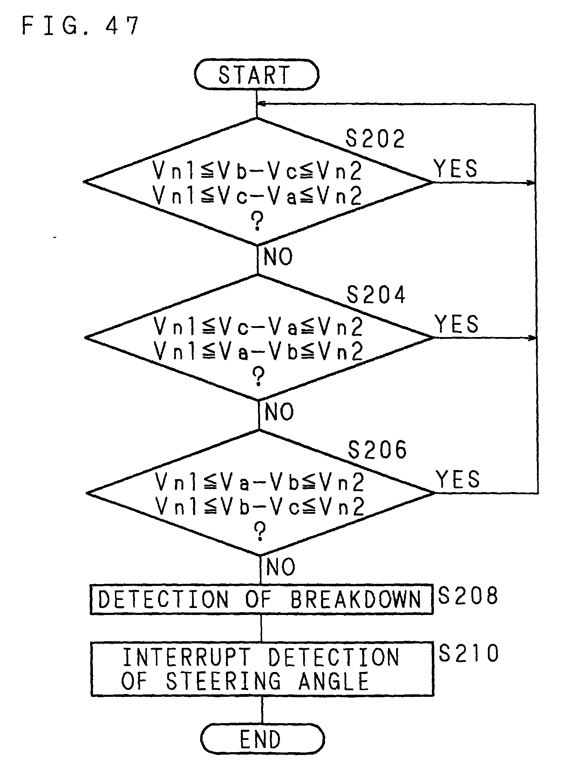

FIG. 47 is a flow chart showing the operation of the rotational angle detecting device shown in FIG. 44. When the output voltages Va, Vb and Vc of the MR sensors 23a, 23b and 23c have been inputted to the signal processing unit 35, the signal processing unit 35 uses the voltages Vn1 and Vn2 to judged whether or not $Vn1 \leq Vb - Vc \leq Vn2$ and $Vn1 \leq Vc - Va \leq Vn2$ (S202). The voltages Vn1 and Vn2 are determined in accordance with the output voltages of the MR sensors 23a, 23b and 23c corresponding to the rotational angle $\theta_1$, $\theta_2 - \theta_1$ and $360° - \theta_2$ of the steering shaft 21.

When $Vn1 \leq Vb - Vc \leq Vn2$ and $Vn1 \leq Vc - Va \leq Vn2$ (S202), signal processing unit 35 judges that the rotational angle $\theta$ of the steering shaft 21 satisfies the range $0° \leq \theta < \theta_1$ and the sensors are free from any failure. Then, the signal processing unit 35 again restarts the judgement (S202).

When the relationships that $Vn1 \leq Vb - Vc \leq Vn2$ and $Vn1 \leq Vc - Va \leq Vn2$ are not satisfied (S202), the signal processing unit 35 judges that the rotational angle $\theta$ of the steering shaft 21 does not satisfies the range $0° \leq \theta < \theta_1$. Thus, the signal processing unit 35 judges whether or not $Vn1 \leq Vc - Va \leq Vn2$ and $Vn1 \leq Va - Vb \leq Vn2$ (S204). When $Vn1 \leq Vc - Va \leq Vn2$ and $Vn1 \leq Va - Vb \leq Vn2$, the signal processing unit 35 judges that the rotational angle θ of the steering shaft 21 satisfies $\theta_1 \leq \theta < \theta_2$. Thus, the signal processing unit 35 judges that the sensors are free from any failure. Thus, the signal processing unit 35 again restarts the judgement (S202).

When the relationship that Vn1 ≤ Vc - Va ≤ Vn2 and Vn1 ≤ Va - Vb ≤ Vn2 are not satisfied (S204), the signal processing unit 35 judges that the rotational angle θ of the steering shaft 21 does not satisfy the range $\theta_1 \leq \theta < \theta_2$. Thus, the signal processing unit 35 judges whether or not Vn1 ≤ Va - Vb ≤ Vn2 and Vn1 ≤ Vb - Vc ≤ Vn2 (S206). When Vn1 ≤ Va - Vb ≤ Vn2 and Vn1 ≤ Vb - Vc ≤ Vn2, the signal processing unit 35 judges that the rotational angle θ of the steering shaft 21 satisfies that $\theta_2 \leq \theta \leq 360°$. Thus, the signal processing unit 35 judges that the sensors are free from any failure. Thus, the signal processing unit 35 again restarts the judgement (S202).

When the relationships that Vn1 ≤ Va - Vb ≤ Vn2 and Vn1 ≤ Vb - Vc ≤ Vn2 is not satisfied (S206), the signal processing unit 35 determines that the rotational angle θ of the steering shaft 21 does not satisfy that $\theta_2 \leq \theta \leq 360°$, that is, the rotational angle θ of the steering shaft 21 does not satisfy that 0° to 360°. Moreover, when the output voltages of the MR sensors 23a, 23b and 23c are normal, because that they have period of 360° as shown in FIG. 46, the signal processing unit 35 determines that the sensor encounters a failure and detects the breakdown (S208). Thus, the signal processing unit 35 interrupts detection of the steering angle (S210).

(Twenty-First Embodiment)

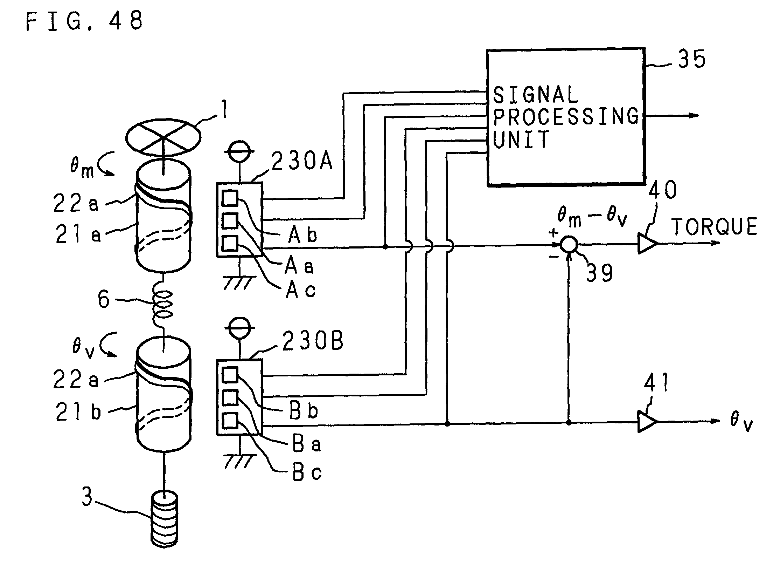

FIG. 48 is a principle view showing an essential construction of a twenty-first embodiment of the torque detecting device according to the present invention. In this embodiment, the torque detecting device is applied to a steering apparatus. A magnetic protrusion 22a is spirally formed on the circumferential surface of an intermediate portion of an input shaft 21a of a steering shaft having an upper end to which a steering wheel 1 is connected and a lower end to which a torsion bar (connecting shaft) 6 is connected.

When the input shaft 21a has been rotated, an MR sensor Aa is disposed in parallel with the input shaft 21a such that a proper distance is maintained to detect the magnetic protrusion 22a which is moved in the axial direction of the input shaft 21a when observation is performed from one rotational position. The MR sensor 23a is secured to a stationary predetermined of a body of an automobile. Moreover, MR sensors Ab and Ac are provided to detect the position of the protrusion 22a which is distant from the protrusion 22a which is detected by the MR sensor Aa for a predetermined distance. The MR sensors Aa, Ab and Ac are contained in one package 230A so that an integrated construction is formed.

An output shaft 21b of the steering shaft has an upper end connected to the torsion bar 6 and a lower end connected to a pinion gear 3. Similarly to the input shaft 21a, a magnetic protrusion 22a is spirally disposed on the circumferential surface of an intermediate portion of the output shaft 21b. An MR sensor Ba for detecting the position of the protrusion 22a which is moved in the axial direction of the output shaft 21b when observation is performed from one rotational position is disposed in parallel with the output shaft 21b such that a proper distance is maintained. The MR sensor Ba is secured to a stationary portion of a body of an automobile. Moreover, MR sensors Bb and Bc are disposed to detect the position of the protrusion 22a which is distant from the protrusion 22a which is detected by the MR sensor Ba for a predetermined distance. The MR sensors Ba, Bb and Bc are contained in one package 230B so that an integrated construction is formed.

Output voltage of the MR sensor Aa is inputted to a subtraction circuit 39, while the output voltage of the MR sensor Ba is inputted to the subtraction circuit 39 and an amplifier 41. Output voltage of the amplifier 41 is outputted as a signal indicating the rotational angle of the steering shaft detected by the rotational angle detecting device comprising the output shaft 21b, the protrusion 22a and the MR sensor Ba.

The torsional angle of the torsion bar 6 is at most several degrees. A signal indicating the rotational angle of the steering shaft may be outputted by the rotational angle detecting device comprising the input shaft 21a, the protrusion 22a and the MR sensor Aa.

Output voltage of the subtraction circuit 39 is inputted to an amplifier 40. Output voltage of the amplifier 40 is outputted as a signal indicating the steering torque applied on the steering wheel 1 detected by the torque detecting device.

Position signals detected by the MR sensors Aa, Ab, Ac, Ba, Bb and Bc are supplied to the signal processing unit 42 so as to be used to judge a failure.

When the input shaft 21a and the output shaft 21b of the torque detecting device constructed as described above rotate such that $0° \leq \theta_m < 360°$ and $0° \leq \theta_v < 360°$, the protrusion 22a which is closest to the detecting surfaces of the MR sensor Aa and Ba is moved to the axial direction of each of the input shaft 21a and the output shaft 21b. Since the protrusion 22a is spirally formed on the circumferential surface of each of the input shaft 21a and the output shaft 21b, the position of the protrusion 22a, which is closest to the detecting surfaces of the MR sensors Aa and Ba in the axial direction of each of the input shaft 21a and the output shaft 21b and the rotational angle of each of the input shaft 21a and the output shaft 21b can be made to correspond to each other.

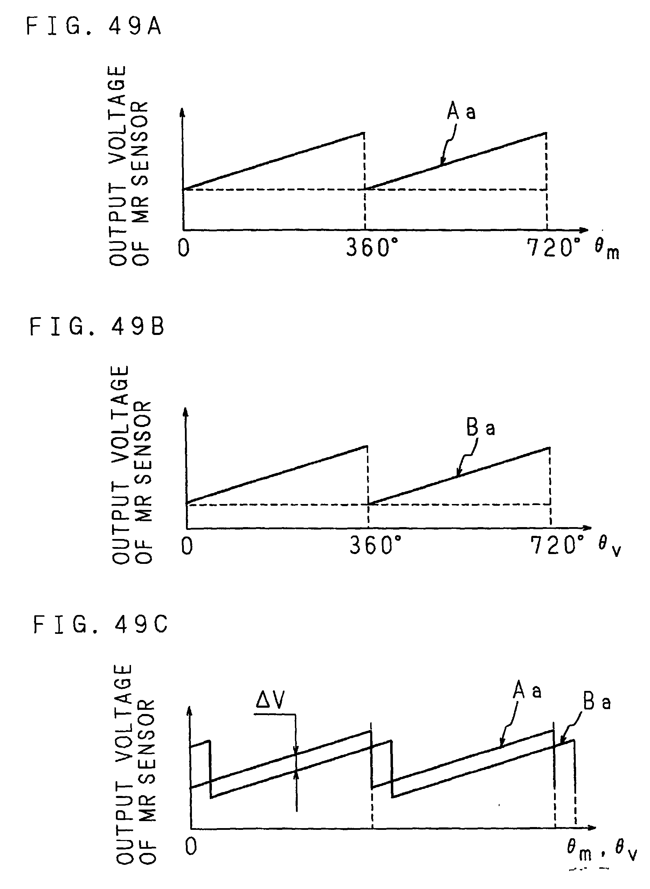

FIG. 49A, FIG. 49B and FIG. 49C are diagrams showing the operation of the torque detecting device. For example, the output voltage of each of the MR sensors Aa and Ba and the rotational angle of each of the input shaft 21a and the output shaft 21b have a similar linear relationship. When the input shaft 21a and output shaft 21b are rotated plural times, the output of each of the MR sensors Aa and Ba is, as shown in FIG. 49A and FIG. 49B, shows a voltage waveform having a period of 360°. In accordance with the output voltage of each of the MR sensors Aa and Ba, the rotational angle of each of the input shaft 21a and the output shaft 21b can be detected.

When steering torque has been applied on the steering wheel 1 and, therefore, the torsion bar 6 has a torsional angle, the output voltage of each of the MR sensors Aa and Ba encounters voltage difference corresponding to the torsional angle, for example, as shown in FIG. 49C. When the voltage difference is calculated by the subtraction circuit 39, the torsional angle can be obtained. A signal indicating the steering torque can be outputted from the amplifier 40.

A signal indicating the rotational angle of the steering shaft which has been detected by the rotational angle detecting device comprising the output shaft 21b, the magnetic protrusion 22a and the MR sensor Ba can be outputted from the amplifier 41.

The signal processing unit 42 is supplied with the detection signal detected by the MR sensors Aa, Ab, Ac, Ba, Bb and Bc to judge a failure for each of sets which is a set consisting of the MR sensors Aa, Ab and Ac and a set consisting of the MR sensors Ba, Bb and Bc. The operation for judging a failure which is performed by the signal processing unit 42 is similar to the operation (see FIG. 46 and FIG. 47) for judging a failure of the MR sensors 23a, 23b and 23c which is performed by the signal processing unit 35. Therefore, the operation is omitted from description.

(Twenty-Second Embodiment)

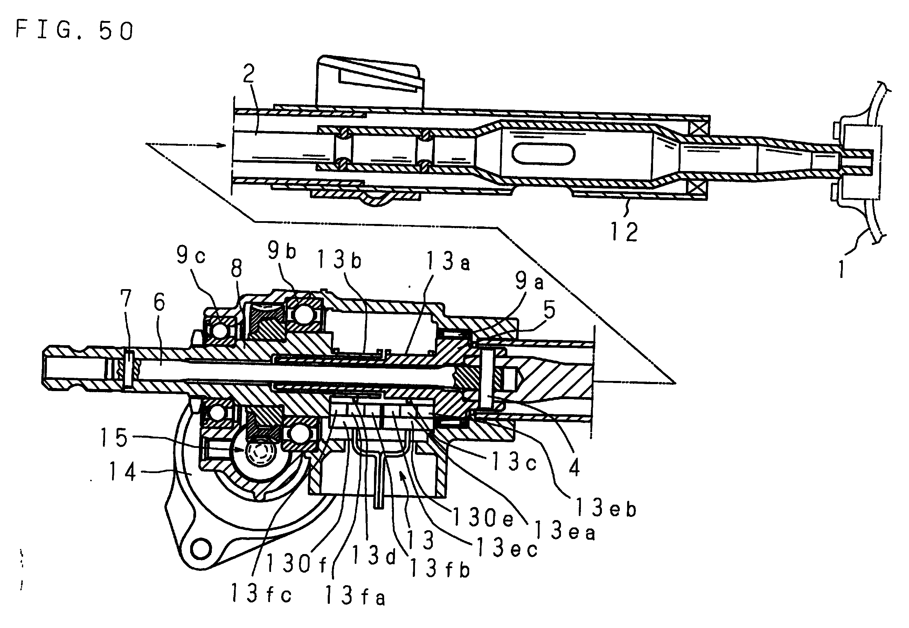

FIG. 50 is a vertical cross sectional view showing an essential construction of a twenty-second embodiment of a steering apparatus according to the present invention. The steering apparatus according to this embodiment comprises an upper shaft 2 which is attached to the upper end thereof and to which a steering wheel 1 is attached. A cylindrical input shaft 5 and an upper end of a torsion bar (a connecting shaft) 6 which is inserted into the input shaft 5 through the first dowel pin 4 are connected to the lower end of the upper shaft 2. A cylindrical output shaft 8 is, through a second dowel pin 7, connected to a lower end of the torsion bar 6. The upper shaft 2, the input shaft 5 and the output shaft 8 are rotatively supported in a housing 12 through bearings 9a, 9b and 9c.

The housing 12 includes a torque detecting device 13 for detecting the steering torque in accordance with an amount of relative displacement of the input shaft 5 and the output shaft 8 connected to each other through the torsion bar 6. Moreover, the housing 12 includes a reduction mechanism 15 for reducing the rotation of the electric motor 14 for assisting steering which is rotated in accordance with a detection result performed by the torque detecting device 13 so as to transmit the reduced rotation to the output shaft 8. The operation of the steering mechanism corresponding to the rotation of the steering wheel 1 is assisted by using the rotation of the electric motor 14. Thus, the labor which must be borne by a driver who performs steering can be reduced. The lower end of the output shaft 8 is connected to a rack and pinion steering mechanism through a universal joint.

The torque detecting device 13 comprises a magnetic protrusion 13c formed spirally on the circumferential surface 13a of the input shaft 5. To detect the position of the magnetic protrusion 13c which is moved in the axial direction of the input shaft 5 when the input shaft 5 has been rotated in a state where observation is performed from one rotational position, an MR sensor 13ea is disposed in parallel with the input shaft 5 such that a proper distance is maintained. The MR sensor 13ea is secured to a stationary portion of a body of an automobile. Moreover, MR sensors 13eb and 14ec are disposed to detect the position of the protrusion 13c, for a predetermined distance, distant from the protrusion 13c which is detected by the MR sensor 13ea. The MR sensors 13ea, 13eb and 13ec are contained in one package 130e so that an integrated construction is formed.

Similarly to the input shaft 5, the output shaft 8 has a magnetic protrusion 13d formed spirally on the circumferential surface 13b of the output shaft 8. To detect the position of the protrusion 13d which is moved in the axial direction of the output shaft 8 when the output shaft 8 has been rotated in a state where observation is performed from one rotational position, an MR sensor 13fa is disposed in parallel with the output shaft 8 such that a proper distance is maintained. The MR sensor 13fa is secured to a stationary portion of a body of an automobile.

Moreover, MR sensors 13fb and 13fc are disposed to detect the position of the protrusion 13d distant from the protrusion 13d, which is detected by the MR sensor 13fa, for a predetermined distance. The MR sensors 13fa, 13fb and 13fc are contained in one package 130f so that an integrated construction is formed.

The position signals detected by the MR sensors 13ea, 13eb, 13ec, 13fa, 13fb and 13fc are supplied to a signal processing unit (not shown) so as to be used to judge a failure.

The operation of the steering apparatus constructed as described above will now be described.

When the input shaft 5 and the output shaft 8 are rotated without any twisting of the torsion bar 6, the input shaft 5, the output shaft 8 and the torsion bar 6 are integrally rotated.

When the input shaft 5 and the output shaft 8 have been rotated, the protrusions 13c and 13d which are closest to the detecting surfaces of the MR sensors 13ea and 13fa are moved in the axial direction of the input shaft 5 and the output shaft 8. The protrusions 13c and 13d are spirally formed on the circumferential surfaces 13a and 13b of the input shaft 5 and the output shaft 8. The positions of the magnetic protrusions 13c and 13d, which are closest to the detecting surfaces of the MR sensors 13ea and 13fa, in the axial direction of the input shaft 5 and the output shaft 8 and the rotational angles of the input shaft 5 and the output shaft 8 can be made to correspond to each other.

For example, the output voltages of the MR sensors 13ea and 13fa and the rotational angles of the input shaft 5 and the output shaft 8 are set to have a similar linear relationship. When the input shaft 5 and the output shaft 8 have been rotated plural times, the outputs of the MR sensors 13ea and 13fa show the voltage waveform having a period of 360° as shown in FIG. 49A and FIG. 49B. In accordance with the output voltages of the MR sensors 13ea and 13fa, the rotational angles of the input shaft 5 and the output shaft 8 can be detected.

When the steering torque has been applied on the steering wheel 1 and the input shaft 5 and the output shaft 8 have been rotated such that the torsion bar 6 is twisted, the output voltages of the MR sensors 13ea and 13fa generate the difference in the voltage corresponding to the torsional angle as shown in FIG. 49C. The output voltages of the MR sensors 13ea and 13fa are inputted to a subtraction circuit (not shown) through corresponding output cables. The subtraction circuit calculates the difference in the voltage so as to obtain the torsional angle so that a signal corresponding to the steering torque is outputted.

The MR sensor 13fa is able to output a signal indicating the rotational angle of the steering wheel 1 detected by the rotational angle detecting device comprising the output shaft 8, the magnetic protrusion 13d and the MR sensor 13fa.

The signal corresponding to the steering torque and the signal indicating the rotational angle of the steering wheel 1 are supplied to a control unit (not shown). The control unit controls the rotation of the electric motor 14 in response to each of the supplied signals.

A signal processing unit (not shown) is supplied with the position signals detected by the MR sensor 13ea, 13eb, 13ec, 13fa, 13fb and 13fc to judge a failure of each of a set consisting of the MR sensor 13ea, 13eb and 14ec and a set consisting of the MR sensors 13fa, 13fb and 13fc. The operation for judging a failure is similar to the operation (see FIG. 46 and FIG. 47) for the MR sensors 23a, 23b and 23c which is performed by the signal processing unit 35 according to the twentieth embodiment. Therefore, the operation is omitted from description.

In the twentieth to twenty-second embodiments, the protrusion 22a is required to be a portion which is magnetically discontinuous. For example, any one of the foregoing construction may be employed: a groove provided for magnetic material; a magnetic protrusion provided for a non-magnetic member or a protrusion provided for a magnetic member and made of a non-magnetic material. As an alternative to the MR sensor, a Hall element may be employed.

(Twenty-Third Embodiment)

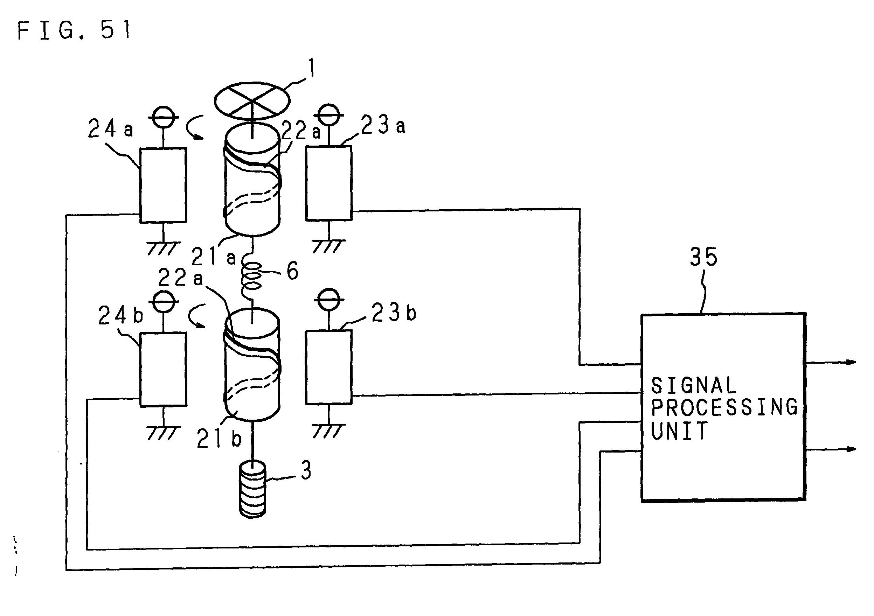

FIG. 51 is a principle view showing an essential construction of a twenty-third embodiment of the torque detecting device according to the present invention. In this embodiment, the torque detecting device is applied to a steering apparatus. A magnetic protrusion 22a is spirally formed on the circumferential surface of an intermediate portion of an input shaft 21a of a steering shaft having an upper end to which a steering wheel 1 is connected and a lower end to which a torsion bar (a connecting shaft) is connected.

To detect the position of the protrusion 22a, which is moved in the axial direction of the input shaft 21a, when observation is performed from one rotational position, an MR sensor 23a is disposed in parallel with the input shaft 21a such that a proper distance is maintained. The MR sensor 23a is secured to a stationary portion of a body of an automobile.

To detect a position which is different from the position which is detected by the MR sensor 23a by 180° in the circumferential direction of the input shaft 21a, an MR sensor 24a is disposed in parallel with the input shaft 21a such that a proper distance is maintained. The MR sensor 24a is secured to a stationary portion of a body of an automobile.

The upper end of the output shaft 21b of the steering shaft is connected to the torsion bar 6 and the lower end of the same is connected to the pinion gear 3. Similarly to the input shaft 21a, a magnetic protrusion 22a is spirally formed on the circumferential surface of an intermediate portion of the output shaft 21b. To detect the position of the protrusion 22a which is moved in the axial direction of the output shaft 21b when the output shaft 21b has been rotated in a state where observation is performed from one rotational position, an MR sensor 23b is disposed in parallel with the output shaft 21b such that a proper distance is maintained. The MR sensor 23b is secured to a stationary portion of a body of an automobile.

To detect the position which is different from the position which is detected by the MR sensor 23b by 180° in the circumferential surface of the output shaft 21b, an MR sensor 24b is disposed in parallel with the output shaft 21b such that a proper distance is maintained. The MR sensor 24b is secured to a stationary portion of a body of an automobile.

When no torque is generated by the input shaft 21a and the output shaft 21b (when the torsion bar 6 is free from twisting), the MR sensors 23a, 24a, 23b and 24b are brought to a state such that the output voltages of the MR sensors 23a and 23b are the same. Moreover, the output voltages of the MR sensors 24a and 24b are the same.

Each of the MR sensors 23a, 24a, 23b and 24b comprises a potential dividing circuit comprising, for example, two magnetic resistors; and a biasing magnet provided for the side which does not face the steering shaft. The biasing magnet enlarges change in the magnetic field owing to the magnetic protrusion 22a. Thus, the magnetic field of the surface of the steering shaft is intensified in order to improve the sensitivity of the MR sensors 23a, 24a, 23b and 24b.

Output voltage of each of the MR sensors 23a, 24a, 23b and 24b is inputted to a signal processing unit 35. Output voltage of the signal processing unit 35 is outputted as a signal indicating the steering torque applied on the steering wheel 1 detected by the torque detecting device.

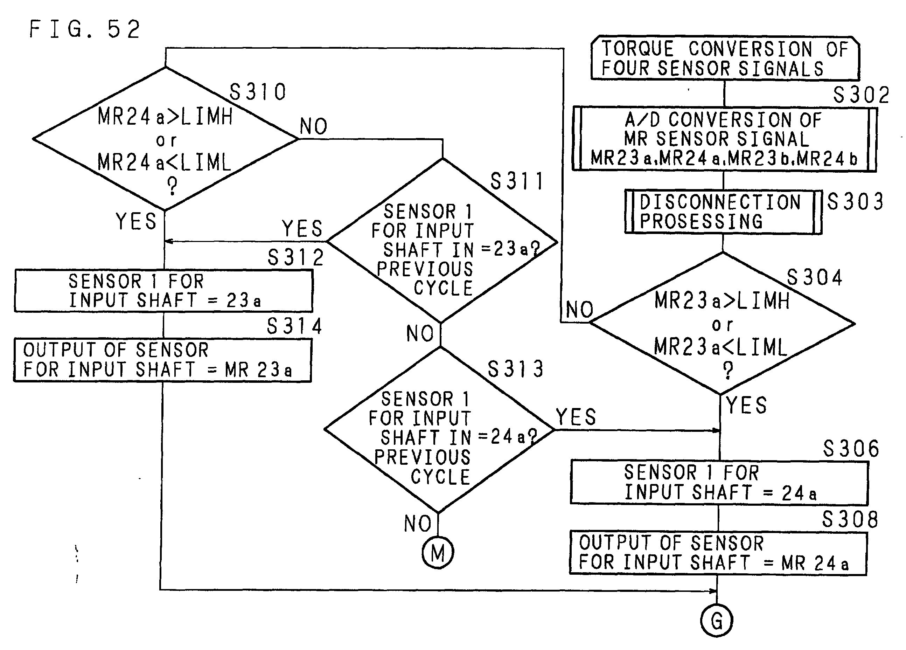

The operation of the torque detecting device having the above-mentioned construction will now be described with reference to a flow chart shown in FIG. 52 to FIG. 59.

FIG. 52 through FIG. 59 show a flow chart of the operation of the torque detecting device shown in FIG. 51. The torque detecting device is arranged such that the protrusions 22b which is closest to the detecting surfaces of the MR sensors 23a, 24a, 23b and 24b is moved in the axial direction of the input shaft 21a and the output shaft 21b when the input shaft 21a and the output shaft 21b rotate in a range that $0° \leq \theta < 360°$. Since the protrusion 22a is formed spirally on the circumferential surfaces of the input shaft 21a and the output shaft 21b, the position of the protrusions 22b which is closest to the detecting surfaces of the MR sensors 23a, 24a, 23b and 24b in the axial direction of the input shaft 21a and the output shaft 21b and the rotational angle of the input shaft 21a and the output shaft 21b can be made to correspond to each other.

When steering torque is applied on the steering wheel 1 causing a torsional angle to be generated in the torsion bar 6, the output voltage of each of the MR sensors 23a and 23b generate the difference in the voltage corresponding to the torsional angle. Also the output voltage of the MR sensors 24a and 24b generate the difference in the voltage corresponding to the torsional angle. The difference in the voltage is calculated by the signal processing unit 35 so that the torsional angle is obtained. Thus, a signal indicating the steering torque can be outputted.

Initially, the signal processing unit 35 performs analog to digital conversion of the output voltages MR 23a, MR 24a, MR 23b and MR 24b of the MR sensors 23a, 24a, 23b and 24b (S302).

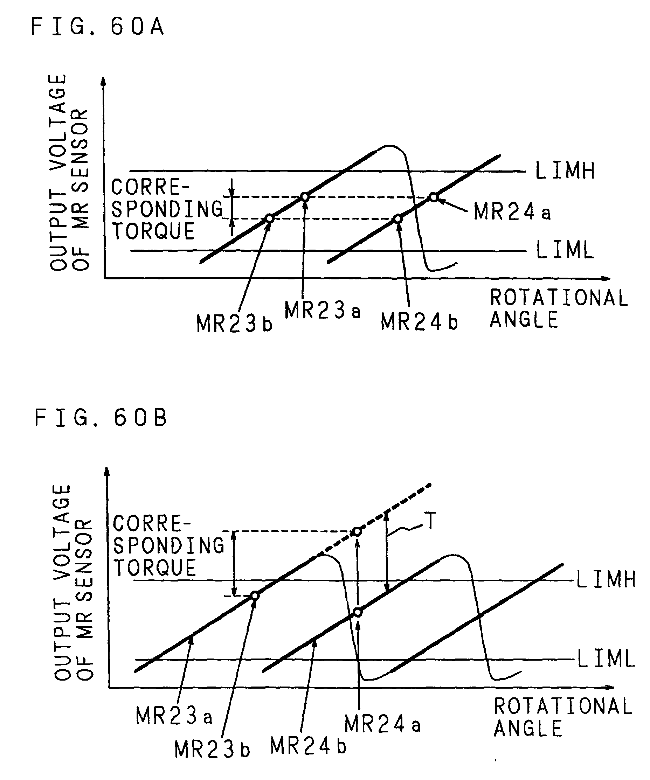

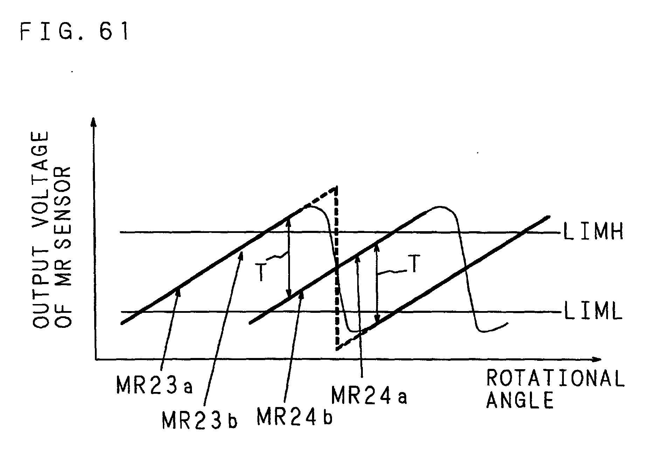

FIG. 60A, FIG. 60B and FIG. 61 are diagrams showing the operation of the torque detecting device shown in FIG. 51. As shown in FIG. 60A, the signal processing unit 35 has set upper and lower switching levels LIMH and LIML in such a manner that the output voltages MR 23a and MR 24a (MR 23b and MR 24b) can be switched in a portion in which effective data portions (the straight line portion) of the output voltages MR 23a and MR 24a (MR 23b and MR 24b) of the MR sensors 23a and 24a (23b and 24b) overlap. An assumption is made that effective data portions (the straight line portion) of the output voltages MR 23a and MR 24a (MR 23b and MR 24b) are in parallel with each other.

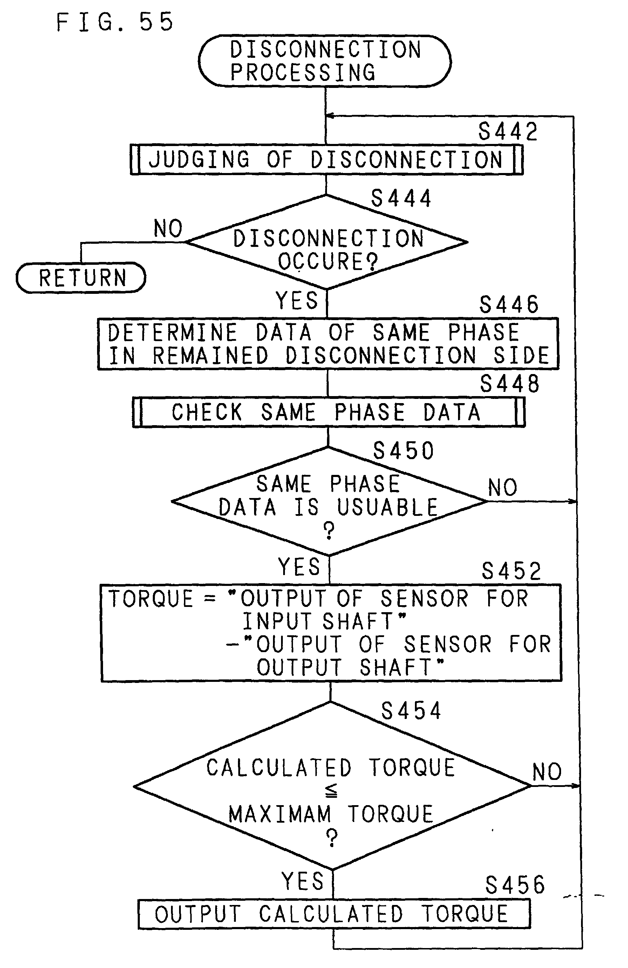

Then, the signal processing unit 35 judges whether or not any one of the MR sensors 23a, 24a, 23b and 24b has encountered a failure (for example, disconnection). When disconnection occurred in any one of the MR sensors 23a, 24a, 23b and 24b, the signal processing unit 35 performs a disconnection processing for recovering disconnection (S303). At performing the disconnection processing, at first, the signal processing unit 35 judges whether or not disconnection occurred any one of MR sensors 23a, 24a, 23b and 24b in accordance with a fact, for example, that any one of the output voltages MR 23a, MR 24a, MR 23b and MR 24b is higher than a predetermined value (FIG. 55: S442).

When no disconnection occurs (S444) as a result of the judgement (S442) whether or not disconnection has occurred in any one of the MR sensors 23a, 24a, 23b and 24b, the operation is returned.

When disconnection has occurred (S444), a pair is selected from a pair consisting of the MR sensors 23a and 23b and a pair consisting of the MR sensors 24a and 24b which does not include the disconnected MR sensor. Thus, the output voltages of the MR sensor in the pair (same phase data) is determined as data for use to detect the torque (S446).

Then, the signal processing unit 35 checks whether or not the output voltage determined as data (S446) is not a "sag portion" as shown in FIG. 60A and, therefore, it can be used to detect the torque (S448).

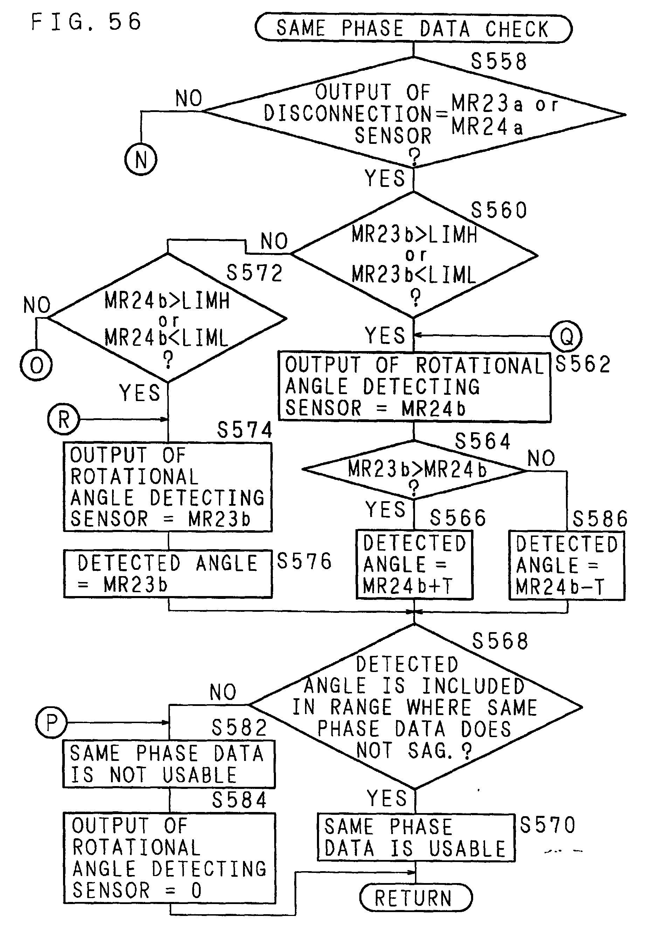

When the checking is made (S448), the signal processing unit 35 judges whether or not the disconnected MR sensor is a sensor corresponding to the input shaft 21a and the generated output voltage is MR 23a or MR 24a (FIG. 56: S558). When the output voltage is MR 23a or MR 24a, a judgement is made whether or not the output voltage MR 23b of the MR sensor 23b for the output shaft 21b is higher than the level LIMH or whether or not the output voltage MR 23b is lower than the level LIML (S560). When either condition is satisfied, the MR sensor 24b is determined as the MR sensor for detecting the angle for checking whether or not the determined (FIG. 55: S446) output voltage can be used to detect the torque. Then, the output voltage of the MR sensor 24b is determined as the output voltage MR 24b (S562).

Then, the signal processing unit 35 judges whether or not the output voltage MR 23b is higher than the output voltage MR 24b (S564). When the output voltage MR 23b is higher as shown in FIG. 61, the predetermined voltage level T is added to the determined (S562) output voltage MR 24b to obtain the voltage indicating the detected angle (S566). When the output voltage MR 23b is lower as shown in FIG. 61, the voltage level T is subtracted from the determined (S562) output voltage MR 24b to perform correction so that the voltage indicating the detected angle is obtained (S586).

When the MR sensor for detecting the angle is the MR sensor 24b or MR sensor 24a, their output characteristics are different from those of the MR sensors 23b and 23a by the voltage level T corresponding to the difference (180° in the circumferential direction of the input shaft 21a and the output shaft 21b) in the position which must be detected. Therefore, the output voltage 24b is corrected in accordance with the relationship between the level of the output voltage MR 23b and that of the output voltage MR 24b.

The signal processing unit 35 judges whether or not the output voltage MR 23b of the MR sensor 23b is higher than the level LIMH or whether or not the output voltage MR 23b is lower than the level LIML (S560). When either condition is not satisfied, whether or not the output voltage MR 24b of the MR sensor 24b is higher than the level LIMH or whether or not the output voltage MR 24b is lower than the level LIML is judged (S572). When either condition is satisfied, the MR sensor 23b is determined as the MR sensor for detecting the angle. Moreover, the output voltage of the MR sensor 23b is determined as the output voltage MR 23b (S574) so that the output voltage MR 23b is employed as the voltage indicating the detected angle (S576).

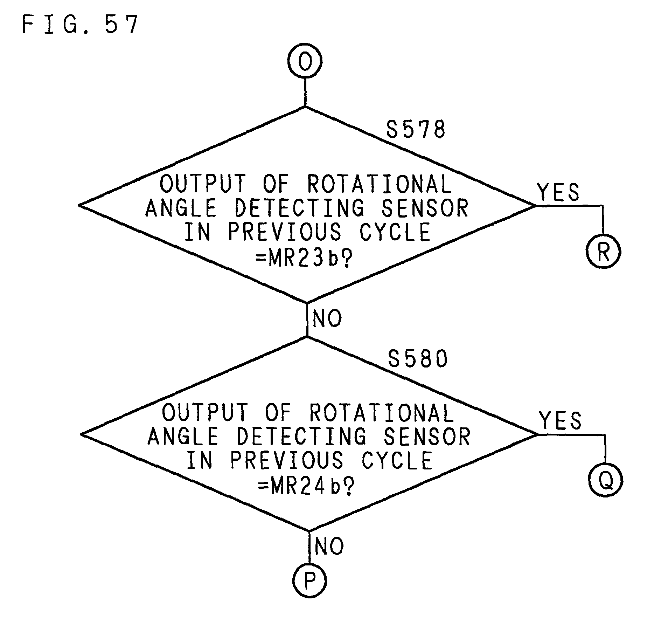

The signal processing unit 35 judges whether or not the output voltage MR 24b of the MR sensor 24b is higher than the level LIMH or whether or not the output voltage MR 24b is lower than the level LIML (S572). When either condition is not satisfied, a judgement is made whether or not the MR sensor for use in the previous cycle for detecting the torque is the MR sensor 23b (FIG. 57: S578). When the MR sensor 23b is used in the previous cycle, the MR sensor 23b is determined as the MR sensor for detecting the angle and the output voltage of the MR sensor 23b is determined as the output voltage MR 23b (FIG. 56: S574).

As described above, the signal processing unit 35 judges whether or not the MR sensor for use in the previous cycle for detecting the torque is the MR sensor 23b (FIG. 57: S578). When the MR sensor 23b is not used in the previous cycle, the signal processing unit 35 judges whether or not the MR sensor for use in the previous cycle for detecting the torque is the MR sensor 24b (FIG. 57: S580). When the MR sensor 24b is used in previous cycle, the MR sensor 24b is determined as the MR sensor for detecting the angle. Moreover, the output of the MR sensor 24b is determined as the output voltage MR 24b (FIG. 56: S562).

When the voltage indicating the detected angle has been determined (S576, S566 and S586), the signal processing unit 35 judges whether or not the detected angle is present in a range (a second range) which is not the "sag portion" in the output voltage of the MR sensor determined (FIG. 55: S446) as data for use to detect the torque (S568). When the angle is included in the range, the signal processing unit 35 judges that the determined (S446) output voltage can be used to detect the torque (S570). Then, the operation is returned.

When the signal processing unit 35 has judged that the detected angle is not included in the "sag portion", the signal processing unit 35 judges that the determined (FIG. 55: S446) output voltage cannot be used to detect the torque (S582). Then, no MR sensor for detecting the angle is determined (S584). Then, the operation is returned.

As described above, the signal processing unit 35 judges whether or not the MR sensor for use in the previous cycle for detecting the torque is the MR sensor 24b (FIG. 57: S580). When the previous MR sensor is not the MR sensor 24b, any sensor cannot be determined as the MR sensor which can be used to detect the angle. Therefore, whether or not the judged (FIG. 55: S446) output voltage can be used to detect the torque cannot be checked. Therefore, the signal processing unit 35 judges that the determined (S446) output voltage cannot be used to detect the torque (S582). Then, the signal processing unit 35 does not determine any MR sensor for use in detecting the angle (S584). Then, the operation is returned.

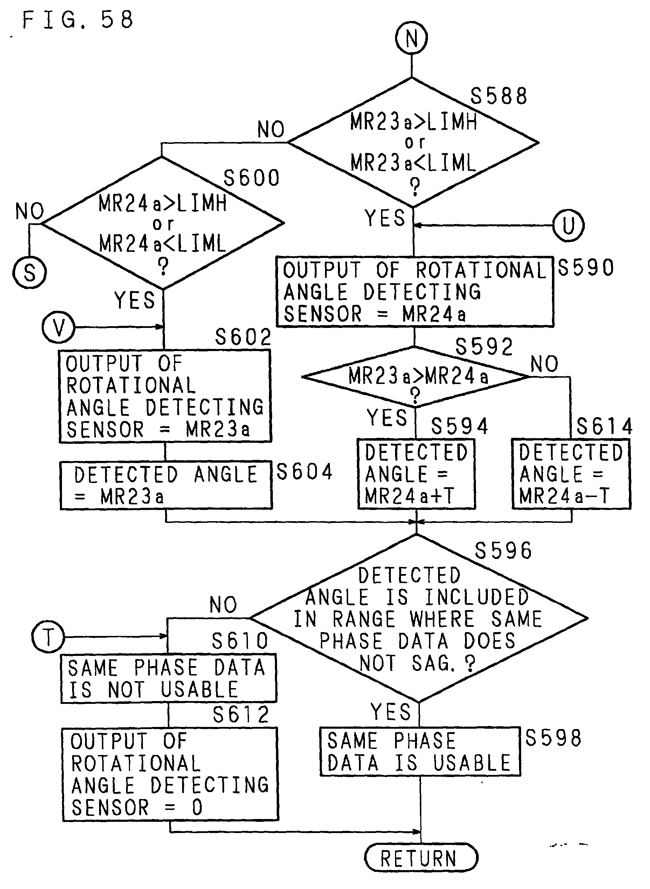

The signal processing unit 35 judges whether or not the disconnected MR sensor is the sensor for the input shaft 21a and whether or not the output voltage of the disconnected is MR 23a or MR 24a (FIG. 56: S568). When the output voltage is MR 23a or MR 24a, the signal processing unit 35 judges whether or not the output voltage MR 23a of the MR sensor 23a for the input shaft 21a is higher than the level LIMH or whether or not the output voltage MR 23a is lower than the level LIML (FIG. 58: S588). When either condition is satisfied, the signal processing unit 35 determines the MR sensor 24a as the MR sensor for detecting the angle to judge that the determined (FIG. 55: S446) output voltage can be used to detect the torque. Then, the output of the MR sensor 24a is determined as the output voltage MR 24a (FIG. 58: S590).

Then, the signal processing unit 35 judges whether or not the output voltage MR 23a is higher than the output voltage MR 24a (S592). When the output voltage MR 23a is higher as shown in FIG. 61, the predetermined voltage level T is added to the determined (S590) output voltage MR 24a to perform correction. Moreover, the corrected voltage is employed as the voltage indicating the detected angle (S594). When the output voltage MR 23a is lower as shown in FIG. 61, the voltage level T is subtracted from the determined (S590) output voltage MR 24a to perform correction. The corrected voltage is employed as the voltage indicating the detected angle (S614).

When the MR sensor for detecting the angle is the MR sensor 24b or the MR sensor 24a. The output characteristics of the foregoing MR sensor is different from those of the MR sensors 23b and 23a which must be used to detect the angle by the voltage level T corresponding to the difference (180° in the circumferential direction of the input shaft 21a and output shaft 21b) which must be detected. Therefore, the output voltage MR 24a is corrected in accordance with the relationship between the level of the output voltage MR 23a and the output voltage MR 24a.

The signal processing unit 35 judges whether or not the output voltage MR 23a of the MR sensor 23a is higher than the level LIMH or whether or not the output voltage MR 23a is lower than the level LIML (S588). When either condition is not satisfied, the signal processing unit 35 judges whether or not the output voltage MR 24a of the MR sensor 24a is higher than the level LIMH or whether or not the output voltage MR 24a is lower than the level LIML (S600). When either condition is satisfied, the MR sensor 23a is determined as the MR sensor for detecting the angle. Moreover, the output of the MR sensor 23a is determined as the output voltage MR 23a (S602). Then, the foregoing voltage is employed as the voltage indicating the detected angle (S604).

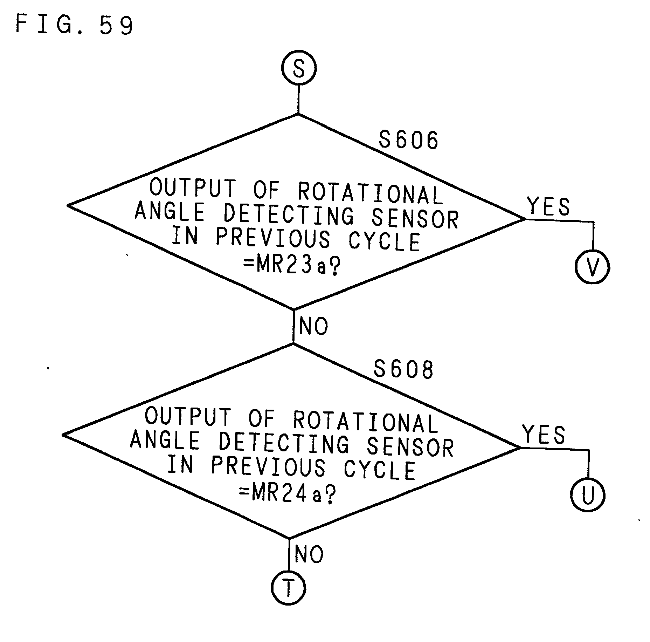

The signal processing unit 35 judges whether or not the output voltage MR 24a of the MR sensor 24a is higher than the level LIMH or whether or not the output voltage MR 24a is lower than the level LIML (S600). When either condition is not satisfied, the signal processing unit 35 judges whether or not the MR sensor for use in the previous cycle for detecting the angle is the MR sensor 23a (FIG. 59: S606). When the previous MR sensor is the MR sensor 23a, the signal processing unit 35 determines that the MR sensor 23a is the MR sensor for detecting the angle. Moreover, the output of the MR sensor 23a is determined as the output voltage MR 23a (FIG. 58: S602).

The signal processing unit 35 judges whether or not the MR sensor for use in the previous cycle for detecting the angle is the MR sensor 23a (FIG. 59: S606). When the MR sensor is not the MR sensor 23a, the signal processing unit 35 judges whether or not the MR sensor for use in the previous cycle for detecting the angle is the MR sensor 24a (S608). When the previous MR sensor is the MR sensor 24a, the signal processing unit 35 determines that the MR sensor 24a is the MR sensor for detecting the angle. Moreover, the output of the MR sensor 24a is employed as the output voltage MR 24a (FIG. 58: S590).

After the voltage indicating the detected angle has been determined (S604, S594 and S614), the signal processing unit 35 judges whether or not the detected angle is included in a range (a second range) which is not the "sag portion" in the output voltage of the MR sensor determined (S446) as data for use to detect the torque (S596). When the angle is included in the foregoing range, the signal processing unit 35 judges that the determined (FIG. 55: S446) output voltage can be used to detect the torque (FIG. 58: S598). Then, the operation is returned.

When the signal processing unit 35 has judged that the detected angle is not included in the "sag portion" (S596), the signal processing unit 35 judges that the determined (S446) output voltage can be used to detect the torque (S610). Thus, the signal processing unit 35 does not determine any MR sensor for detecting the angle (S612). Then, the operation is returned.

The signal processing unit 35 judges whether or not the MR sensor for use in the previous cycle for detecting the angle is the MR sensor 24a (FIG. 59: S608). When the previous MR sensor is not the MR sensor 24a, the MR sensor which can be used to detect the angle cannot be determined. Therefore, whether or not the determined (FIG. 55: S446) output voltage can be used to detect torque cannot be determine. Therefore, the signal processing unit 35 determines that the determined (S446) output voltage cannot be used to detect torque (FIG. 58: S610). Thus, the signal processing unit 35 does not determine the MR sensor for detecting the torque (S612). Then, the operation is returned.

The signal processing unit 35 checks the determined (FIG. 55: S446) output voltage (S448). When the output voltage cannot be used to detect torque (S450), the operation is returned to a process for judging (S442) whether or not any one of the MR sensors 23a, 24a, 23b and 24b is disconnected (S442).

The signal processing unit 35 checks the determined (S446) output voltage (S448). When the output voltage can be used to detect torque (S450), the output voltage for the output shaft is subtracted from the determined (S446) output voltage for the input shaft to calculate the voltage level indicating the torque applied on the input shaft 21a (S452).

Then, the signal processing unit 35 judges whether or not the calculated (S452) torque is lower than the predetermined maximum torque (S454). When the calculated torque is larger than the maximum torque, the signal processing unit 35 judges that the calculated torque is an abnormal value and generates no output. Then, the operation is returned to the process for judging whether or not the MR sensors 23a, 23b, 24a and 24b is disconnected (S442).

When the corrected (S452) torque is not large than the maximum torque (S454), the signal processing unit 35 outputs the calculated torque (S456). Then, the operation is returned to the process for judging whether or not the MR sensors 23a, 23b, 24a and 24b is disconnected (S442).

The signal processing unit 35 judges whether or not any one of the MR sensors 23a, 24a, 23b and 24b is disconnected (FIG. 55: S442). When no disconnection take place (S444) and, therefore, the operation is returned, the signal processing unit 35 judges whether or not the output voltage MR 23a of the MR sensor 23a is higher than the level LIMH or whether or not the output voltage MR 23a is lower than the level LIML (FIG. 52: S304). When either conthtion is satisfied, the MR sensor 24a is determined as the MR sensor for detecting torque (S306) for the input shaft 21a. Moreover, the output of the MR sensor 24a is stored as the output voltage MR 24a (S308).

The signal processing unit 35 judges whether or not the output voltage MR 23a of the MR sensor 23a is higher than the level LIMH or whether or not the output voltage MR 23a is lower than the level LIML (S304). When either condition is not satisfied, the signal processing unit 35 judges whether or not the output voltage MR 24a of the MR sensor 24a is higher than the level LIMH or whether or not the output voltage MR 24a is lower than the level LIML (S310). When either condition is satisfied, the MR sensor 23a is determined as the MR sensor for detecting torque (S312) for the input shaft 21a. Moreover, the output of the MR sensor 23a is stored as the output voltage MR 23a (S314).

The signal processing unit 35 judges whether or not the output voltage MR 24a of the MR sensor 24a is higher than the level LIMH or whether or not the output voltage MR 24a is lower than the level LIML (S310). When either condition is not satisfied, the signal processing unit 35 judges whether or not the MR sensor for the input shaft 21a for use in the previous cycle for detecting the torque is the MR sensor 23a (S311). When the previous MR sensor is the MR sensor 23a, the signal processing unit 35 determines the MR sensor 23a as the MR sensor for detecting the torque for the input shaft 21a (S312).

The signal processing unit 35 judges whether or not the MR sensor for the input shaft 21a for use in the previous cycle for detecting the torque is the MR sensor 23a (S311). When the previous MR sensor is not the MR sensor 23a, the signal processing unit 35 judges whether or not the MR sensor for the input shaft 21a for use in the previous cycle for detecting the torque is the MR sensor 24a (S313). When the previous MR sensor is the MR sensor 24a, the signal processing unit 35 determines that the MR sensor 24a as the MR sensor for detecting the torque for the input shaft 21a (S306).

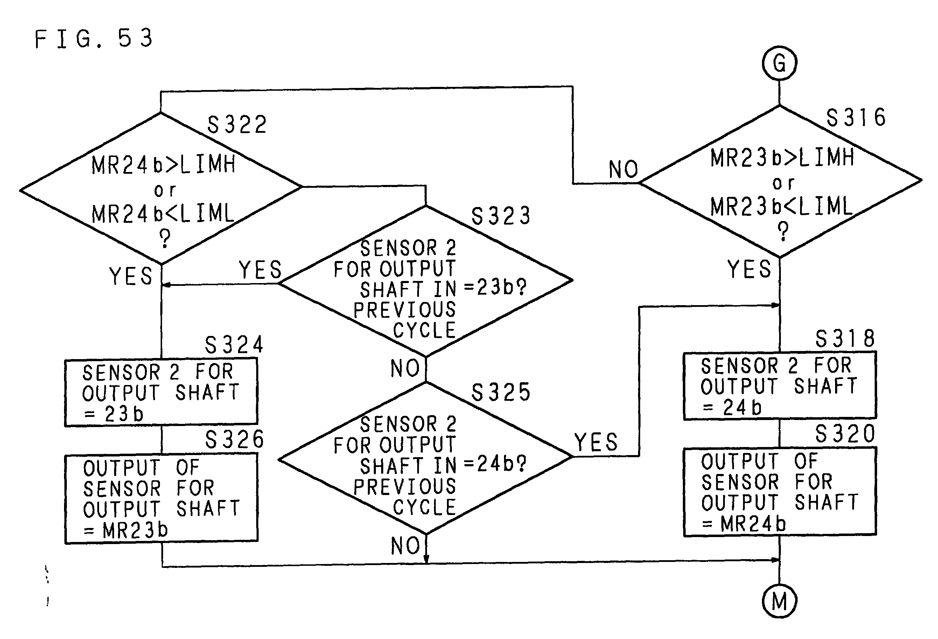

When the output voltage MR 24a is determined as the output of the MR sensor for detecting the torque for the input shaft 21a (S308) or when the output voltage MR 23a is determined as the output of the MR sensor for detecting the torque of the input shaft 21a (S314), the signal processing unit 35 judges whether or not the output voltage MR 23b of the MR sensor 23b is higher than the level LIMH or whether or not the output voltage MR 23b is lower than the level LIML (FIG. 53: S316). When either condition is satisfied, the MR sensor 24b is determined as the MR sensor for detecting the torque for the output shaft 21b (S318). Moreover, the output is stored as the output voltage MR 24b (S320).

The signal processing unit 35 judges whether or not the output voltage MR 23b of the MR sensor 23b is higher than the level LIMH or whether or not the output voltage MR 23b is lower than the level LIML (S316). When either condition is satisfied, the signal processing unit 35 judges whether or not the output voltage MR 24b of the MR sensor 24b is higher than the level LIMH or whether or not the output voltage MR 24b is lower than the level LIML (S322). When either condition is satisfied, the MR sensor 23b is determined as the MR sensor for detecting the torque for the output shaft 21b (S324). Then, the output of the foregoing MR sensor is stored as the output voltage MR 23b (S326).

The signal processing unit 35 judges whether or not the output voltage MR 24b of the MR sensor 24b is higher than the level LIMH or whether or not the output voltage MR 24a is lower than the level LIML (S322). When either condition is not satisfied, the signal processing unit 35 judges whether or not the MR sensor for the output shaft 21b for use in the previous cycle for detecting the torque is the MR sensor 23b (S323). When the previous MR sensor is the MR sensor 23b, the signal processing unit 35 determines the MR sensor 23b as the MR sensor for detecting the torque for the output shaft 21b (S324).

The signal processing unit 35 judges whether or not the MR sensor for the output shaft 21b for use in the previous cycle for detecting the torque is the MR sensor 23b (S323). When the previous MR sensor is not the MR sensor 23b, the signal processing unit 35 judges whether or not the MR sensor for the output shaft 21b for use in the previous cycle for detecting the torque is the MR sensor 24b (S325). When the previous MR sensor is the MR sensor 24b, the signal processing unit 35 determines that the MR sensor 24b is the MR sensor for detecting the torque for the output shaft 21b (S318).

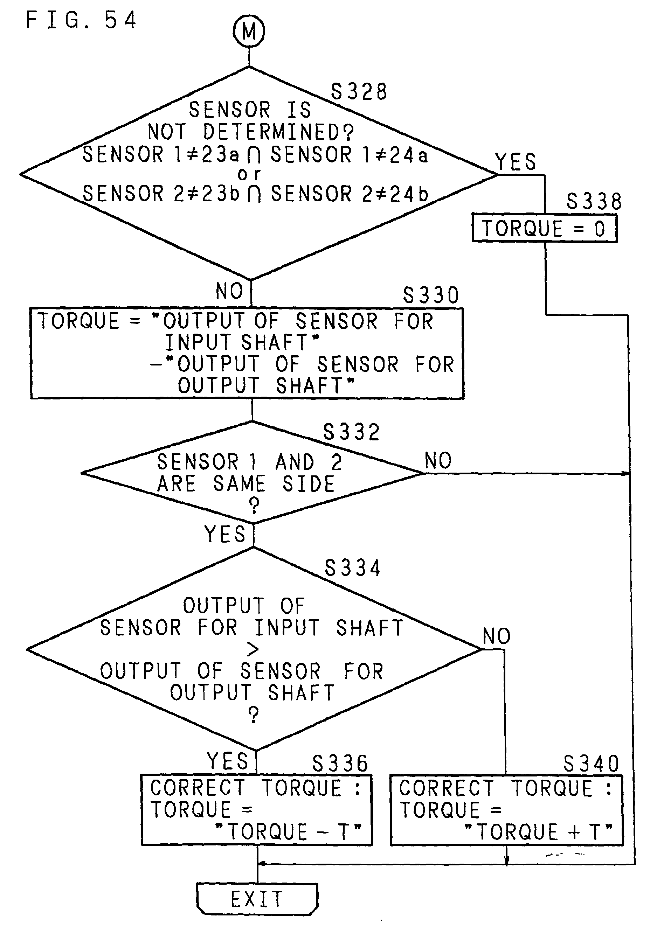

Then, the signal processing unit 35 judges whether or not the MR sensor for the input shaft 21a for detecting torque has not been determines (sensor 1 ≠ 23a ∩ sensor 1 ≠ 24a) or whether or not the MR sensor for detecting the torque for the output shaft 21b has not been determined (sensor 2 ≠ 23b ∩ sensor 2 ≠ 24b) (FIG. 54: S528). When a result of the judgment is such that either or both of the MR sensors have not been determined {(sensor 1 ≠ 23a ∩ sensor 1 ≠ 24a) ∪ (sensor 2 ≠ 23b ∩ sensor 2 ≠ 24b)}, the signal processing unit 35 outputs a signal such that the detected torque is zero.

The foregoing case is such that the MR sensor which has outputted the output voltage higher than the level LIMH or lower than the level LIML does not exist for the input shaft 21a and/or output shaft 21b (S304, S310, S316 and S322). Moreover, the MR sensor which has been used in the previous cycle for detecting the torque is not present (S313 and S325). Thus, the MR sensor for detecting the torque cannot be determined.

When an MR sensor which has outputted the output voltage higher than the level LIMH or the output voltage lower than the level LIML is present, the other MR sensor can be determined as the MR sensor for detecting the torque as shown in FIG. 60A. When any MR sensor which has outputted the output voltage higher than the level LIMH or lower than the level LIML is not present, in the case where an MR sensor for use in the previous cycle for detecting the torque is present (S311, S313, S323 and S325), the MR sensor can be continuously used to detect the torque.

When the MR sensor for detecting the torque for the input shaft 21a and the MR sensor for detecting the torque for the output shaft 21b have been determined {(sensor 1 = 23a ∪ sensor 1 = 24a) ∩ (sensor 2 = 23b ∪ sensor 2 = 24b)}, the signal processing unit 35 calculates "the torque = the output voltage of the MR sensor for the input shaft - the output voltage of the MR sensor for the output shaft" (S330).

Then, the signal processing unit 35 judges whether or not the MR sensor for detecting the torque is such that the MR sensor for the input shaft 21a is the MR sensor 23a and the MR sensor for the output shaft 21b is the MR sensor 23b or whether or not the MR sensor for the input shaft 21a is the MR sensor 24a and the MR sensor for the output shaft 21b is the MR sensor 24b (S332). When either condition is satisfied, that is, in the case where all of the MR sensors for detecting the torque are present on the same side with respect to the input shaft 21a and the output shaft 21b and, therefore, the MR sensors have the same output characteristics, the torque which is detected is expressed as deviation of the output characteristics. Therefore, correction of the torque is not required. Thus, the signal processing unit 35 outputs the calculated torque (S330) as the detected torque.

When the judgement performed by the signal processing unit 35 (S332) results in a fact that either condition is not satisfied, that is, in the case where the MR sensor for detecting the torque is the MR sensor 23a for the input shaft 21a and the MR sensor 24b for the output shaft 21b or in the case where the MR sensor 24a is the MR sensor for the input shaft 21a and the MR sensor 23b is the MR sensor for the output shaft 21b (S332), the signal processing unit 35 judges whether or not the output voltage of the MR sensor for the input shaft 21a is higher than the output voltage of the MR sensor for the output shaft 21b (S334). When the output voltage for the input shaft 21a is higher than that for the output shaft 21b, a predetermined voltage level T is subtracted from the calculated torque (S330) to correct the torque (S336). Then, the signal processing unit 35 outputs the corrected torque as the detected torque.

The signal processing unit 35 judges whether or not the output voltage of the MR sensor for the input shaft 21a is higher tan the output voltage of the MR sensor for the output shaft 21b (S334). When the output voltage for the output shaft 21b is higher, the predetermined voltage level T is added to the calculated torque (S330) to correct the torque (S340). The signal processing unit 35 outputs the corrected torque as the detected torque.

When the two MR sensors for use in detecting the torque are present on the different sides with respect to the input shaft 21a and the output shaft 21b (S332), their output characteristics are different from each other by the voltage level T corresponding to the difference in the position which must be detected (180° in the circumferential direction of the input shaft 21a and the output shaft 21b) as show in FIG. 60B.

Therefore, when the output voltage of the MR sensor for the input shaft 21a is higher than the output voltage of the MR sensor for the output shaft 21b (S334), the MR sensor for the input shaft 21a is the MR sensor 23a and the MR sensor for the output shaft 21b is the MR sensor 24b as shown in FIG. 60B. Therefore, the voltage level T is added to the output voltage MR 24b of the MR sensor 24b so that conversion into the output voltage MR 23b of the MR sensor 23b is performed so that the correction of the torque is performed (S336).

On the other hand, when the output voltage of the MR sensor for the input shaft 21a is lower than the output voltage of the MR sensor for the output shaft 21b (S334), the MR sensor for the input shaft 21a is the MR sensor 24a and the MR sensor for the output shaft 21b is the MR sensor 23b as shown in FIG. 60B. Therefore, the voltage level T is added to the output voltage MR 24a of the MR sensor 24a so that conversion into the output voltage MR 23a of the MR sensor 23a is performed so that the correction of the torque is performed (S340).

(Twenty-Fourth Embodiment)

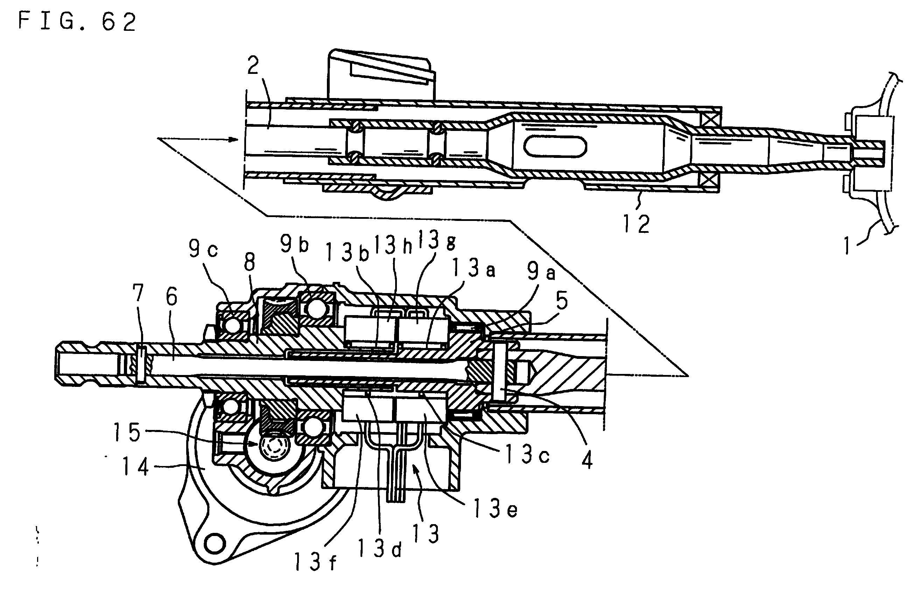

FIG. 62 is a vertical cross sectional view showing an essential construction of a twenty-fourth embodiment of a steering apparatus according to the present invention. The steering apparatus according to this embodiment comprises an upper shaft 2 which is attached to the upper end thereof and to which a steering wheel 1 is attached. A cylindrical input shaft 5 and an upper end of a torsion bar (a connecting shaft) 6, which is inserted into the input shaft 5, are, through a first dowel pin 4, connected to the lower end of the upper shaft 2. A cylindrical output shaft 8 is, through a second dowel pin 7, connected to a lower end of the torsion bar 6. The upper shaft 2, the input shaft 5 and the output shaft 8 are rotatively supported in a housing 12 through bearings 9a, 9b and 9c.

The housing 12 includes a torque detecting device 13 for detecting the steering torque in accordance with an amount of relative displacement of the input shaft 5 and the output shaft 8 connected to each other through the torsion bar 6. Moreover, the housing 12 includes a reduction mechanism 15 for reducing the rotation of the electric motor 14 for assisting steering which is rotated in accordance with a detection result performed by the torque detecting device 13 so as to transmit the reduced rotation to the output shaft 8. The operation of the steering mechanism corresponding to the rotation of the steering wheel 1 is assisted by using the rotation of the electric motor 14. Thus, the labor which must be borne by a driver who performs steering can be reduced. The lower end of the output shaft 8 is connected to a rack and pinion steering mechanism through a universal joint.

The torque detecting device 13 comprises a magnetic protrusion 13c formed spirally on the circumferential surface 13a of the input shaft 5. To detect the position of the magnetic protrusion 13c which is moved in the axial direction of the input shaft 5 when the input shaft 5 has been rotated in a state where observation is performed from one rotational position, an MR sensor 13e is disposed in parallel with the input shaft 5 such that a proper distance is maintained. Moreover, an MR sensor 13g is disposed in parallel with the input shaft 5 at a position apart from the MR sensor 13e by 180° in the circumferential direction of the input shaft 5 such that a proper distance is maintained. The MR sensors 13c, 13e and 13g are secured to stationary portions of a body of an automobile, respectively.

Similarly to the input shaft 5. the output shaft 8 has a magnetic protrusion 13d formed spirally on the circumferential surface of the output shaft 8. To detect the position of the protrusion 13d which is moved in the axial direction of the output shaft 8 when the output shaft 8 has been rotated in a state where observation is performed from one rotational position, an MR sensor 13f is disposed in parallel with the output shaft 8 such that a proper distance is maintained. Moreover, an MR sensor 13h is disposed in parallel with the output shaft 8 at a position apart from the MR sensor 13f by 180° in the circumferential direction of the output shaft 8 such that a proper distance is maintained. The MR sensors 13d, 13f and 13h are secured to stationary portions of a body of an automobile, respectively.

The operation of the steering apparatus constructed as described above will now be described.

When the input shaft 5 and the output shaft 8 are rotated without any twisting of the torsion bar 6, the input shaft 5, the output shaft 8 and the torsion bar 6 are integrally rotated.

When the input shaft 5 and the output shaft 8 have been rotated, the protrusions 13c and 13d which are closest to the detecting surfaces of the MR sensors 13e and 13g, 13f and 13h are moved in the axial direction of the input shaft 5 and the output shaft 8. The protrusions 13c and 13d are spirally formed on the circumferential surfaces 13a and 13b of the input shaft 5 and the output shaft 8. The positions of the magnetic protrusions 13c and 13d, which are closest to the detecting surfaces of the MR sensors 13e, 13g, 13f and 13h, in the axial direction of the input shaft 5 and the output shaft 8 and the rotational angles of the input shaft 5 and the output shaft 8 can be made to correspond to each other.

For example, the output voltages of the MR sensors 13e and 13g, 13f and 13h and the rotational angles of the input shaft 5 and the output shaft 8 are set to have a similar linear relationship. When the input shaft 5 and the output shaft 8 have been rotated plural times, the outputs of the MR sensors 13e and 13g, 13f and 13h show the voltage waveform having a period of 360°. In accordance with the output voltages of the MR sensors 13e, 13g, 13f and 13h, the rotational angles of the input shaft 5 and the output shaft 8 can be detected.

When the steering torque has been applied on the steering wheel 1 and the input shaft 5 and the output shaft 8 have been rotated such that the torsion bar 6 is twisted, the output voltages of the MR sensors 13e and 13g, 13f and 13h generate the difference in the voltage corresponding to the torsional angle. The output voltages of the MR sensors 13e and 13g, 13f and 13h are inputted to a signal processing unit (not shown) through corresponding output cables. Similarly to the signal processing unit 35 according to the twenty-third embodiment, the signal processing unit calculates the difference in the voltage so as to obtain the torsional angle so that a signal corresponding to the steering torque is outputted. Moreover, when disconnection occurred in any one of the MR sensors 13e, 13g, 13f and 13h, the signal processing unit 35 calculates as much as possible the voltage difference with use of the MR sensors in which disconnection does not occur to detect the torsional angle and output signal corresponding to the steering torque.

(Twenty-Fifth Embodiment)

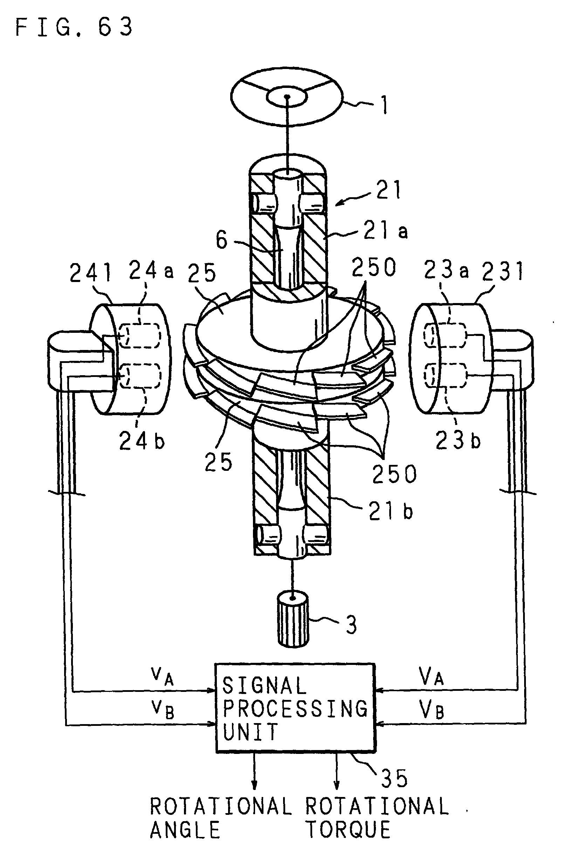

FIG. 63 is a schematic view showing the constructions of a rotational angle detecting device and a torque detecting device according to the present invention and applied to a steering apparatus for an automobile. As shown in FIG. 63, an input shaft (a first shaft) 21a having an upper end connected to a steering wheel 1 and an output shaft (a second shaft) 21b having a lower end connected to a pinion gear 3 of a steering mechanism are coaxially connected to each other through a torsion bar 6 having a small diameter. Thus, a steering shaft 21 for connecting the steering wheel 1 and the steering mechanism is constructed. The rotational angle detecting device and the torque detecting device according to the present invention are constructions adjacent to a portion in which the input shaft 21a and the output shaft 21b are connected to each other. The constructions will now be described.

A disc-shape target plate 25 is coaxially fitted and secured to the input shaft 21a at a position adjacent to the portion for connecting the output shaft 21b. A plurality of targets (10 in figure) 250 are parallelly provided on the circumferential surface of the target plate 25 by same intervals. The targets 250, as shown in figure, are protrusions each of which is made of magnetic material and which are inclined with respect to the axial direction of the input shaft 21a to which the target plate 25 has been fit by substantially the same angles.

A similar target plate 25 is fitted and secured to the output shaft 21b at a position adjacent to the portion in which the output shaft 21b and the input shaft 21a are connected to each other. A plurality of targets 250 each of which is inclined by substantially the same angle with respect to the axial direction of the output shaft 21b to which the target plate 25 has been fitted are provided on the circumferential surface of the target plate 25. The targets 250 are accurately aligned to the targets 250 of the input shaft 21a in the circumferential direction.

Two sensor boxes 231 and 241 are disposed on the outside of the target plate 25 to, from different positions, face the outer ends of the targets 250 provided on the circumferential surface of the target plate 25. The sensor boxes 231 and 241 are secured and supported by a stationary portion, such as a housing which supports the input shaft 21a and the output shaft 21b. The sensor box 231 includes an MR sensor 23a disposed opposite to the targets 250 for the input shaft 21a and an MR sensor 23b disposed opposite to the targets 250 for the output shaft 21b. The MR sensor 23a and the MR sensor 23b are accurately aligned in the circumferential direction. Similarly, the sensor box 241 includes an MR sensor 24a disposed opposite to the targets 250 for the input shaft 21a and an MR sensor 24b disposed opposite to the targets 250 for the output shaft 21b. The MR sensor 24a and the MR sensor 24b are accurately aligned in the circumferential direction.

The MR sensors 23a, 23b, 24a and 24b are sensors, such as the magnetoresistance effect elements (MR elements), having electric characteristics (the resistance) which are changed owing to an action of a magnetic field. The output voltage of each sensor is changed according to change in the ambient magnetic field. Outputs of the MR sensors 23a, 23b, 24a and 24b are extracted to the outside of the sensor boxes 231 and 241 so as to be supplied to a signal processing unit 35 comprising a microprocessor.

The MR sensors 23a, 23b, 24a and 24b are disposed opposite to the targets 250 which are protrusions made of the magnetic material. The targets 250 are provided on the circumferential surfaces of the input shaft 21a and output shaft 21b such that the targets 250 are inclined by a predetermined angle with respect to the axial direction of each of the input shaft 21a and the output shaft 21b. When the input shaft 21a and the output shaft 21b have been rotated around the axis, the MR sensors 23a, 23b, 24a and 24b, therefore, outputted electric signals which are proportionally changed according to change in the rotational angle of each of the input shaft 21a and the output shaft 21b when the corresponding targets 250 pass through the opposite positions.

At this time, the output voltages of the MR sensors 23a and 24a correspond to the rotational angle of the input shaft 21a on which the corresponding targets 250 are provided. The output voltages of the MR sensors 23b and 24b correspond to the rotational angle of the output shaft 21b on which the corresponding targets 250 are provided. Therefore, the rotational angle of the output shaft 21b can be calculated from the output voltages of the MR sensors 23a and 24a. The rotational angle of the output shaft 21b can be calculated from the MR sensors 23a and 24a.

The difference between the output voltage of the MR sensor 23a and that from the MR sensor 23b or the difference between the output voltage of the MR sensor 24a and that of the MR sensor 24b correspond to the difference in the rotational angle (the relative change in the angle) between the input shaft 21a and the output shaft 21b. The relative change in the angle corresponds to a torsional angle generated in the torsion bar 6 for connecting the input shaft 21a and the output shaft 21b to each other, the torsional angle being generated owing to the rotational torque applied on the input shaft 21a. Therefore, the rotational torque applied on the input shaft 21a can be calculated in accordance with the difference in the output voltage.

In this embodiment, the targets 250 are provided for the input shaft (the first shaft) 21a and the output shaft (the second shaft) 21b connected to each other through the torsion bar 6, the torsional characteristic of which has been known. When a rotating shaft having the known torsional characteristic is an object which must be detected, a construction may, of course be, employed in which the targets 250 are directly provided on the positions apart from one another in the axial direction of the rotating shaft. Thus, the targets 250 are detected by the MR sensors (the magnetic sensors).

The rotational angle and the rotational torque are calculated by the signal processing unit 35 to which the output voltages of the MR sensors 23a, 23b, 24a and 24b are inputted. Since the procedures for the calculations have been described, the procedures are omitted from description. To obtain accurate results from the calculations, the output characteristics of the MR sensors 23a and 24a for the input shaft 21a and the MR sensors 23b and 24b for the output shaft 21b must be constant. Moreover, the same output voltages must be generated to correspond to passing of the targets 250 to which the MR sensors are correspond.

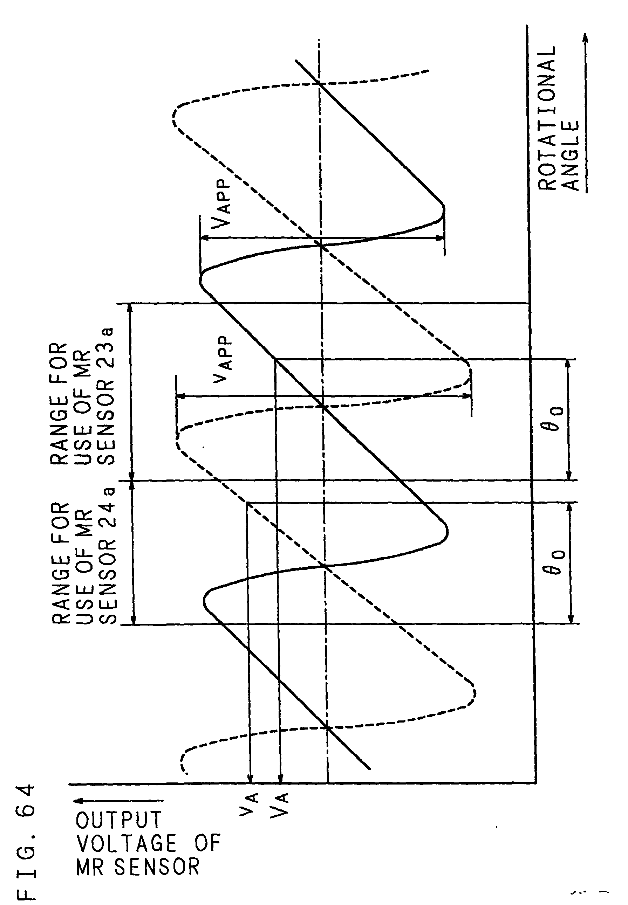

FIG. 64 is graph showing a state of change in the output voltages of the MR sensors 23a and 24a for the input shaft 21a. The axis of abscissa of the graph stands for the rotational angle θ of the input shaft 21a which must be detected. A solid line in the graph indicate the output voltage of the MR sensor 23a, while a short dashed line indicates the output voltage of the MR sensor 24a. In a case where the target plate 25 comprising the 10 targets 250 provided on the circumferential surface thereof is employed, the output voltages of the MR sensors 23a and 24a are changed such that one period is a period in which the input shaft 21a is rotated by 36° (= 360°/10). Thus, repetition of a region in which linear change occurs in a period in which each of the targets 250 and a region in which nonlinearly change occurs in a period in which the discontinuous portions between the adjacent targets 250 pass are performed.

The reason why the two MR sensors 23a and 24a are provided for the input shaft 21a lies in that unreliable calculations must be prevented in which uncertain output voltages obtained from the nonlinearly-changed regions are used. The positions of the MR sensors 23a and 24a in the circumferential direction of the target plate 25 are adjusted such that output voltages having the phases which are shifted by about a half period are generated. Thus, when either of the output voltages of the MR sensors 23a and 24a is present in the nonlinearly region, the other output voltage is present in the linear region. The two MR sensors 23a and 24a are switched under condition that, for example, each output voltage is changed to a level higher (or lower) than a predetermined threshold voltage. Moreover, ranges for use the output voltages of the MR sensors 23a and 24a are set as illustrated. Thus, the rotational angle of the overall surface can be calculated by using the output voltage of the linearly-changed region.

A state of change in the output voltage of each of the MR sensors 23a and 24a in the linearly-changed region varies according to the output characteristics of the MR sensors 23a and 24a. FIG. 64 shows a case where the output characteristics of the MR sensors 23a and 24a are considerably different from each other. The difference in the output characteristic appears as the difference in the change rate of the output voltage in the linearly-changed region as illustrated. When the rotational angle from the start point of the range for use is commonly $\theta_0$, output voltage $V_A$ can be obtained when the MR sensor 23a is used. On the other hand, output voltage $v_A$ is obtained when the MR sensor 24a is used. The rotational angles which are calculated in accordance with the foregoing output voltages vary according to use of the MR sensor 23a or the MR sensor 24a.

Moreover, the output characteristics of the MR sensors 23a and 24a are changed owing to an influence of the temperature. In addition, change with time occurs. Therefore, the rotational angle calculated in accordance with the output voltage of the same MR sensor (23a or 24a) involves an error caused from the ambient temperature and an error which occurs with time. An error in the operation caused from the difference in the output characteristic identically applies to the MR sensors 23b and 24b for the output shaft 21b. As described above, also the rotational torque calculated by using the difference in the voltage between the MR sensors 23a and 24a and the difference in the voltage between the MR sensor 24a and the MR sensor 24b involves a similar error.

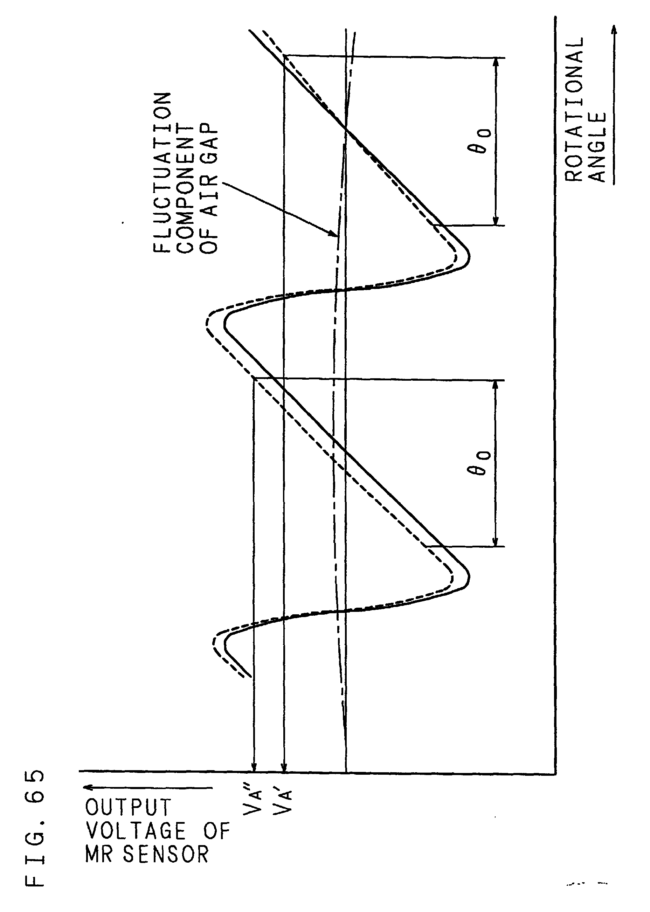

FIG. 65 is a graph showing a state of change in the output voltage of one MR sensor (for example, MR sensor 23a). As described above, the output voltages of the MR sensor 23a is changed such that one period is a rotational angle corresponding to one target 250. The linearly-changed region and the nonlinearly-changed region are repeated.

As described above, the MR sensor 23a is secured and supported by the stationary portion. On the other hand, the targets 250 which must be detected by the MR sensor 23a are provided on the circumferential surface of the input shaft 21a which is freely rotatively supported. When concentricity between the portion to which the MR sensor 23a is secured and the input shaft 21a cannot satisfactorily be maintained or if the input shaft 21a is staggered, the air gap between the MR sensor 23a and each of the targets 250 varies during the rotation.

When the foregoing change in the air gap occurs, the output voltage of the MR sensor 23a is raised owing to approach of the target 250 in a case where the air gap is small. On the contrary, if the air gap is large, the output voltage is lowered owing to movement away from the target 250. An alternate long and short dash line shown in FIG. 65 indicates a fluctuation component of the air gap. When the foregoing fluctuation component is included, the actual output voltage of the MR sensor 23a is brought to a state in which the fluctuation component is superimposed on the original periodical change as indicated with a solid, line shown in FIG. 65. Thus, a state indicated with a short dashed line shown in FIG. 65 is realized. As a result, an output voltage obtainable when the rotational angle from the start point of the range for use is identically $\theta_0$ varies in each period corresponding to the target 250 as indicated with symbols $V_A$ ' and $V_A$'' shown in FIG. 65. The accuracy of each of the rotational angle and the rotational torque calculated in accordance with the foregoing output voltages deteriorates.

Therefore, when the signal processing unit 35 directly uses the output voltages of the MR sensors 23a, 23b, 24a and 24b to calculate the rotational angle and the rotational torque, a result of the calculation includes an error caused from the difference in the output characteristics of the MR sensors 23a, 23b, 24a and 24b and an error caused from change in the air gap from the targets 250. Therefore, the present invention is constructed to prevent occurrence of the foregoing error by causing the signal processing unit 35 to perform the following gain correction and offset correction.

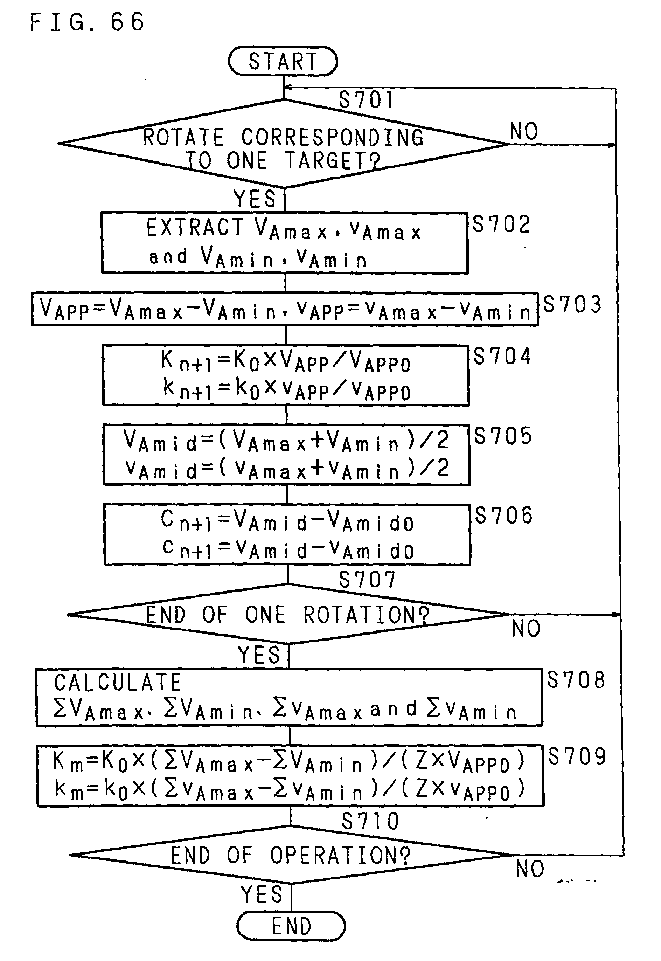

FIG. 66 is a flow chart showing the contents of the gain and offset correction operations. The gain and offset correction operations are performed as interruption processing for each of the MR sensors 23a, 23b, 24a and 24b which are performed between the calculating operations for the rotational angle and the rotational torque. In the following description, a correction procedure for each of the MR sensors 23a and 24a for detecting the input shaft 21a will now be described.

The signal processing unit 35 monitors the output voltages of the MR sensors 23a and 24a sequentially fetched so as to be used in the calculations of the rotational angle and the rotational torque. The signal processing unit 35 judges whether or not the input shaft 21a which must be detected has rotated by an amount corresponding to one target 250 (S701). When a judgement is made that rotation for one target 250 has been performed, the signal processing unit 35 extracts the maximum value $V_{Amax}$ and the minimum value $V_{Amin}$ of the output voltage $V_A$ of the MR sensor 23a and maximum value $v_{Amax}$ and the minimum value $v_{Amin}$ of the output voltage $v_A$ of the MR sensor 24a during the rotation (S702). Then, the difference $V_{APP}$ (= $V_{Amax}$ - $V_{Amin}$) and $v_{APP}$ (= $v_{Amax}$ - $v_{Amin}$) between the maximum value and the minimum value are calculated (S703).

Then, the signal processing unit 35 applies the obtained difference $V_{APP}$ and $v_{APP}$ to the following equations to calculate corrective gains $K_{n+1}$ and $k_{n+1}$ for the MR sensors 23a and 24a (S704).

$$K_{n+1} = K_0 \times V_{APP}/V_{APP0} \qquad (1)$$

$$k_{n+1} = k_0 \times v_{APP}/v_{APP0} \qquad (2)$$

Wherein each of $V_{APP0}$ and $v_{APP0}$ is the differences (the reference difference) between the maximum output voltage and minimum output voltage obtainable during one rotation of the target 250 and each of $K_0$ and $k_0$ is a reference gain set for each reference difference.

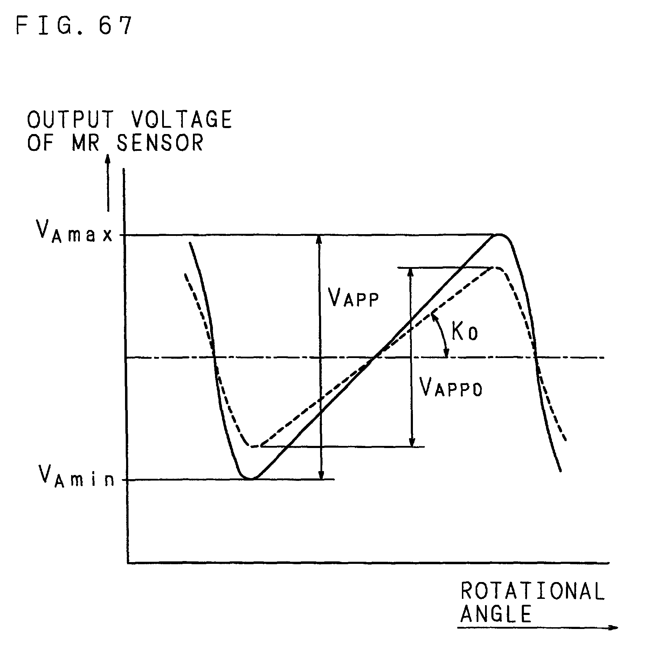

FIG. 67 is a graph showing the corrective gain calculated as described above. In FIG. 67, change in the output voltage of the MR sensor 23a is shown. A solid line shown in FIG. 67 indicates an actual output voltage of the MR sensor 23a. As described above, a state is realized in which linear change and nonlinear change occur in the difference $V_{APP}$ between the maximum value $V_{Amax}$ and the minimum value $V_{Amin}$ such that a rotational angle corresponding to one target 250 is one period.

A short dashed line shown in FIG. 67 indicates a reference characteristic set for the MR sensor 23a. The foregoing characteristic is set such that linear change and nonlinear change occur in the reference difference $V_{APP0}$ in one period. The reference gain $K_0$ represents a change rate (an inclination) in the linearly-changed region of the reference characteristic. Therefore, a value obtained by multiplying the actual output voltage $V_A$ obtained from the output characteristic indicated with the solid line at a proper rotational angle with

the corrective gain $K_{n+1}$ obtained in accordance with equation (1) becomes output voltage V of the reference characteristic at the same rotational angle. Similarly, a value obtained by multiplying the output voltage $V_A$ of the MR sensor 24a with the corrective gain $k_{n+1}$ obtained in accordance with equation (2) becomes output voltage v of the reference characteristic set for the MR sensor 24a.

In the calculations of the rotational angle performed by the signal processing unit 35, the output voltages $V_A$ and $v_A$ of the MR sensors 23a and 24a are not used as it is. In this case, results obtained by multiplying the output voltages $V_A$ and $v_A$ with the corrective gains $K_{n+1}$ and $k_{n+1}$ obtained in accordance with the equations (1) and (2) are used. Thus, the rotational angle can be calculated in accordance with the reference characteristic. Therefore, the influences of the difference in the output characteristics of the MR sensors 23a and 24a and change in the output characteristics can be eliminated when the rotational angle of the input shaft 21a which must be detected can accurately be calculated. Also the output voltages $V_B$ and $v_B$ of the MR sensors 23b and 24b arranged to detect the output shaft 21b are similarly subjected to the gain correction. Thus, the accuracy of calculations for the rotational torque, which is performed similarly, can be improved.

Subscripts (n + 1) provided for the corrective gains $K_{n-1}$ and $k_{n+1}$ indicate application to the output voltages $V_A$ and $v_A$ obtained during passing of the target 250 at a next time (n + 1 th time) to the present (n th time). The signal processing unit 35 calculates the corrective gain for use during passing of a next target 250 whenever each target 250 passes.

As an alternative to the arrangement that the difference $V_{APP}$ and $v_{APP}$ between the maximum value and the minimum value as shown in the equations (1) and (2) are used to calculate the corrective gains $K_{n+1}$ and $k_{n+1}$, the maximum value $V_{Amax}$ and $v_{Amax}$ or the minimum value $V_{Amin}$ and $v_{Amin}$ may be used as it is. In the foregoing case, the maximum value and the minimum value include error components owing to an influence of the air gap which is changed between the MR sensors 23a and 24a and the targets 250 during the rotation of the input shaft 21a. Therefore, it is preferable that the difference $V_{APP}$ and $v_{APP}$ are used to calculate the corrective gain $K_{n+1}$ and $k_{n+1}$.

As described above, the corrective gains $K_{n+1}$ and $k_{n+1}$ are calculated. Then, the signal processing unit 35 calculates an average value $V_{Amid}$ (= ($V_{Amax}$ + $V_{Amin}$)/2) of the output voltages of the MR sensor 23a and an average value $v_{Amid}$ (= ($v_{Amax}$ + $v_{Amin}$)/2) of the output voltages of the MR sensor 24a (S705). Then, the obtained average values are applied to the following equations to calculate offset amounts $C_{n+1}$ and $c_{n+1}$ of each of the MR sensors 23a and 24a (S706).

$$C_{n+1} = V_{Amid} - V_{Amid0} \qquad (3)$$

$$c_{n+1} = v_{Amid} - v_{Amid0} \qquad (4)$$

Where $V_{Amid0}$ and $v_{Amid0}$ are average values between the maximum output and the minimum output of the MR sensors 23a and 24a which can be obtained during one rotation of the target 250 in a preferred state of use realized by omitting change factor of the air gap, such as runout with respect to the target 250 and staggering of the input shaft 21a.

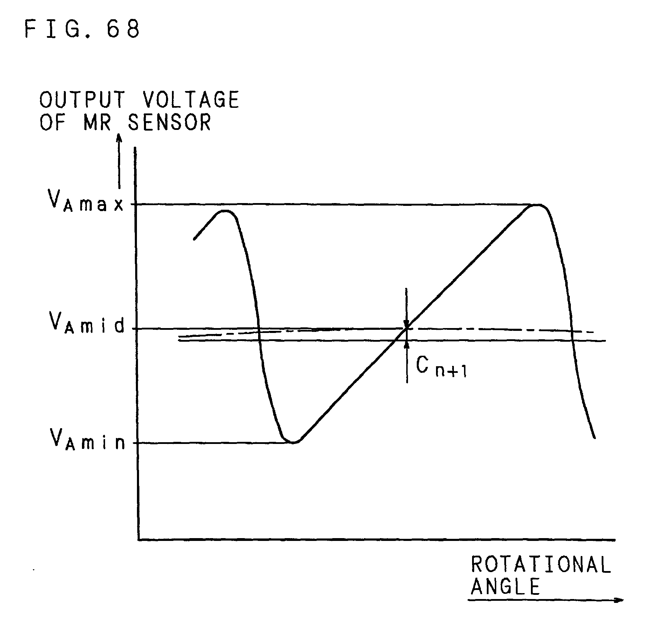

FIG. 68 is a graph showing the calculated offset amounts. In FIG. 68, a state of change in the output voltage of the MR sensor 23a is shown. The output voltage of the MR sensor 23a is changed such that linear and nonlinear change occur between the maximum value $V_{Amax}$ and the minimum value $V_{Amin}$ in each period in which rotation corresponding to one target 250 is performed. As described above, the output voltage sometimes includes an error component caused from change in the air gap between the MR sensor 23a and each of the targets 250.

A solid line shown in the graph indicates a state of change in an actual output voltage including the foregoing error component. As indicated with an alternate long and short dash line, the output voltage has a medium point which is changed at a moderate period to correspond to the change in the air gap. The foregoing value $V_{Amid}$ ($= V_{Amax} + V_{Amin})/2$) is a voltage level of the foregoing medium point in the rotational angle corresponding to one target 250. Note that $C_{n+1}$ calculated in accordance with the equation (3) is an offset amount from the preferred medium point indicated with a thin line shown in the drawing, that is, a preferred medium point obtained by omitting the influence of the change in the air gap. Therefore, the foregoing offset amount $C_{n+1}$ is added to the actual output voltage $V_A$ of the MR sensor 23a so that the fluctuation component of the air gap included in the output voltage $V_A$ is omitted. Similarly, the offset amount $c_{n+1}$ obtainable from the equation (4) is added to the output voltage $v_A$ of the MR sensor 24a so that the fluctuation component of the air gap in the output voltage $v_A$ is omitted.

When the signal processing unit 35 calculate the rotational angle, the actual output voltages $V_A$ and $v_A$ of the MR sensors 23a and 24a are not used as it is. In this case, results obtained by adding the offset amounts $C_{n+1}$ and $c_{n+1}$ obtained in accordance with the equations (3) and (4) are used. Thus, the influence of the change in the output caused from the change in the air gap can be eliminated, so that the rotational angle of the input shaft 21a which must be detected is accurately calculated. Note that similar offset corrections are performed for the output voltages $V_B$ and $v_B$ of the MR sensors 23b and 24b used to detect the output shaft 21b. Thus, the accuracy of the calculation of the rotational torque which is performed similarly can be improved.

Similarly to the corrective gains $K_{n+1}$ and $k_{n+1}$, subscripts (n + 1) provided for the offset amounts $C_{n+1}$ and $c_{n+1}$ indicate application to the output voltages

$V_A$ and $v_A$ obtained during passing of the target 250 at a next time (n + 1 th time) to the present time (n th time). The signal processing unit 35 calculates the offset amount for use during passing of a next target 250 whenever each target 250 passes.

As an alternative to the arrangement that the average values $V_{Amid}$ and $v_{Amid}$ of the maximum value and the minimum value are not used as shown in the equations (3) and (4). As an alternative to this, the maximum value $V_{Amax}$ and $v_{Amax}$ or the minimum values $V_{Amin}$ and $v_{Amin}$ may be used as it is to perform the calculations. In the foregoing case, the maximum value and the minimum value include error components owing to an influence of the change in the output characteristics of the MR sensors 23a and 24a. Therefore, it is preferable that the offset amounts $C_{n+1}$ and $c_{n+1}$ are calculated by using the average values $V_{Amid}$ and $v_{Amid}$.

The signal processing unit 35 repeats the operations in steps S701 to S706 until all of the targets 250 provided on the surface of the input shaft 21a pass, that is, the input shaft 21a rotates one time (S707). When a judgement is made that one rotation has been completed, cumulative values ($\Sigma V_{Amax}$, $\Sigma V_{Amin}$, $\Sigma v_{Amax}$ and $\Sigma v_{Amin}$) of the maximum value and the minimum value of the output voltages of the MR sensors 23a and 24a extracted during the rotation are calculated (S708). Then, average gains $K_m$ and $k_m$ during one rotation are calculated in accordance with the following equations (S709). The foregoing calculation is repeated until a predetermined operation interruption conditions, such as shutdown of power supply, is satisfied.

$$K_m = K_0 \times (V_{Amax} - V_{Amin})/(Z \times V_{APP0}) \qquad (5)$$

$$k_m = k_0 \times (v_{Amax} - v_{Amin})/(Z \times v_{APP0}) \qquad (6)$$

Where Z is the number of the targets 250 parallelly provided on the surface of the input shaft 21a.

The calculated average gains $K_m$ and $k_m$ are average gains in the present atmosphere for the detection. The foregoing values are used as reference gains when the corrective gains are calculated.

In the foregoing embodiment, the construction has been described in which the present invention is applied to the steering shaft 21 for connecting the steering wheel 1 and the steering mechanism of the steering apparatus for an automobile. As a matter of course, the rotational angle detecting device and the torque detecting device according to the present invention can widely be used in the purposes for detecting the rotational angle and the rotational torque of a rotating shaft which rotates around an axis.

(Twenty-Sixth Embodiment)

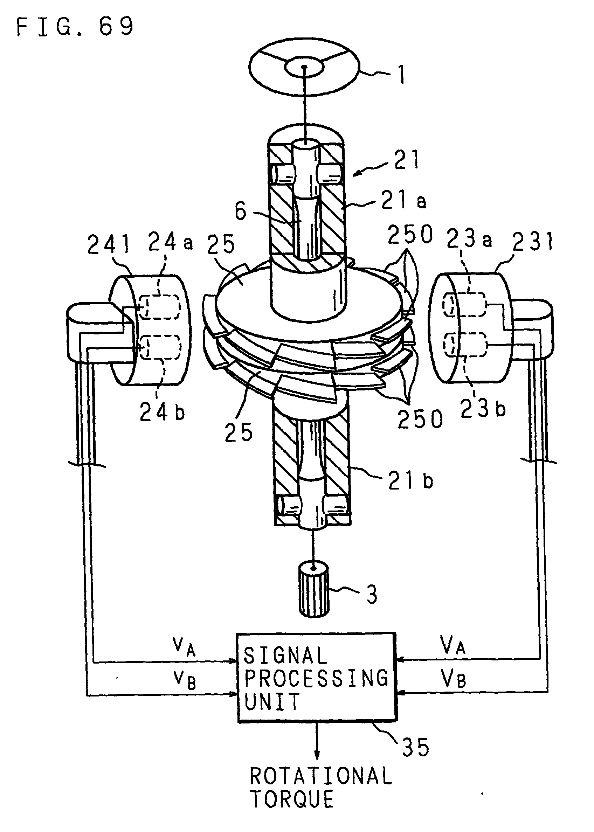

FIG. 69 is a schematic view showing the constructions of a rotational angle and a torque detecting device according to the present invention and applied to a steering apparatus for an automobile. As shown in FIG. 69, an input shaft (a first shaft) 21a having an upper end connected to a steering wheel 1 and an output shaft (a second shaft) 21b having a lower end connected to a pinion gear 3 of a steering mechanism are coaxially connected to each other through a torsion bar 6 having a small diameter. Thus, a steering shaft 21 for connecting the steering wheel 1 and the steering mechanism is constructed. The rotational angle detecting device and the torque detecting device according to the present invention are constructed adjacent to a portion in which the input shaft 21a and the output shaft 21b are connected to each other. The constructions will now be described.

A disc-shape target plate 25 is coaxially fitted and secured to the input shaft 21a at a position adjacent to the portion for connecting the output shaft 21b. A plurality of targets 250 (10 in figure) are parallelly provided on the circumferential surface of the target plate 25 by same intervals. The targets 250 are protrusions each of which is made of magnetic material and which are inclined with respect to the axial direction of the input shaft 21a to which the target plate 25 has been fit by substantially the same angles.

A similar target plate 25 is fitted and secured to the output shaft 21b at a position adjacent to the portion in which the output shaft 21b and the input shaft 21a are connected to each other. A plurality of targets 250 each of which is inclined by substantially the same angle with respect to the axial direction of the output shaft 21b to which the target plate 25 has been fitted are provided on the circumferential surface of the target plate 25. The targets 250 are aligned to the targets 250 of the input shaft 21a in the circumferential direction.

Two sensor boxes 231 and 241 are disposed on the outside of the target plate 25 to, from different positions, face the outer ends of the targets 250 provided on the circumferential surface of the target plate 25. The sensor boxes 231 and 241 are secured and supported by a stationary portion, such as a housing which supports the input shaft 21a and the output shaft 21b.

The sensor box 231 includes an MR sensor 23a disposed opposite to the targets 250 for the input shaft 21a and an MR sensor 23b disposed opposite to the targets 250 for the output shaft 21b. The MR sensor 23a and the MR sensor 23b are accurately aligned in the circumferential direction. Similarly, the sensor box 241 includes an MR sensor 24a disposed opposite to the targets 250 for the input shaft 21a and an MR sensor 24b disposed opposite to the targets 250 for the output shaft 21b. The MR sensor 24a and the MR sensor 24b are accurately aligned in the circumferential direction.

The MR sensors 23a, 23b, 24a and 24b are sensors, such as the magnetoresistance effect elements (MR elements), having electric characteristics (the resistance) which are changed owing to an action of a magnetic field. The output voltages $V_A$, $V_B$, $v_A$ and $v_B$ of each sensor are extracted to the outside of the sensor boxes 231 and 241 so as to be supplied to a signal processing unit 35 comprising a microprocessor.

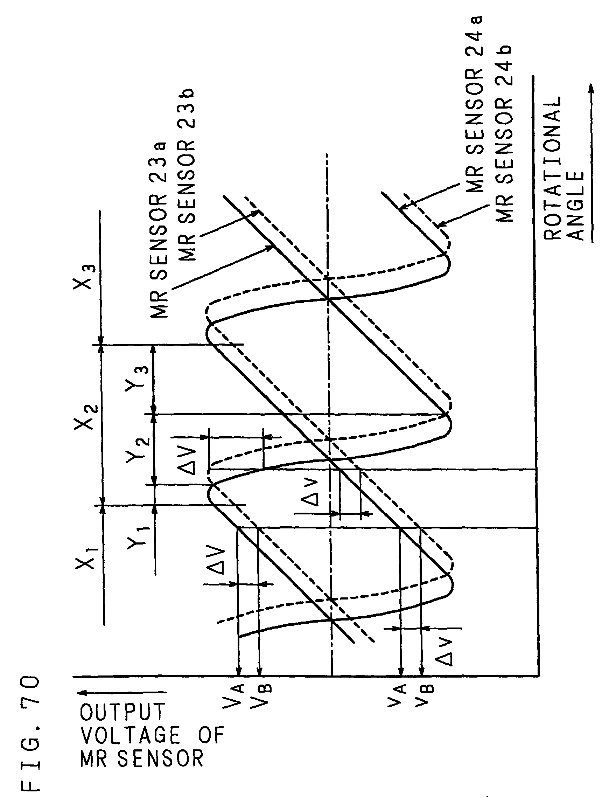

FIG. 70 is a graph showing an example of change in the output voltages of the MR sensors 23a, 23b, 24a and 24b. The axis of abscissa of the graph stands for the rotational angle of the input shaft 21a or the output shaft 21b. A solid line in the graph indicates the output voltages of the MR sensors 23a and 24a for the input shaft 21a. A short dashed line indicates the output voltages of the MR sensors 23b and 24b for the output shaft 21b.

As described above, the MR sensors 23a, 23b, 24a and 24b are disposed opposite to the targets 250 which are provided on the circumferential surfaces of the input shaft 21a and output shaft 21b to make a predetermined angle of inclination and each of which is made of magnetic material. The length of each of the targets 250 is finite in the circumferential direction of the input shaft 21a or the output shaft 21b. Thus, a discontinuous portion is present among the targets 250. Therefore, when the input shaft 21a and output shaft 21b have been rotated around the axis, the MR sensors 23a, 23b, 24a and 24b output voltage signals which are linearly changed to correspond to change in the rotational angle of the input shaft 21a or the output shaft 21b during passing of the corresponding targets 250. When the discontinuous portion between the adjacent targets 250 passes, voltage signals which are nonlinearly changed to correspond to the change in the rotational angle are outputted.

As a result, the output voltages of the MR sensors 23a, 23b, 24a and 24b are, as shown in FIG. 70, the region (the linearly-changed region) in which the linear change occurs and the region (nonlinearly-changed region) are repeated during passing of each of the targets 250. The period of the repetition corresponding to the number of the targets 250 provided on the circumferential surface of the target plate 25. In a case where 10 targets 250 are provided on the circumferential surface of the target plate 25, the foregoing repetition occurs such that a period of time in which the input shaft 21a or the output shaft 21b is rotated by 36° (= 360°/10).

Then, attention is paid to change in the output of the MR sensor 23a for the input shaft 21a and change in the output of the MR sensor 23b for the output shaft 21b, the MR sensor 23b being disposed to align to the MR sensor 23a in the circumferential direction. In the foregoing case, the foregoing changes occurs such that predetermined shift of the phase takes place as illustrated. The amount of the shift corresponds to the difference (a relative displacement of the angle) in the rotational angle between the input shaft 21a and the output shaft 21b. The relative displacement of the angle corresponds to the torsional angle generated in the torsion bar 6 for connecting the input shaft 21a and the output shaft 21b under the action of the rotational torque applied on the input shaft 21a. Therefore, the rotational torque applied on the input shaft 21a can be calculated in accordance with the difference $\Delta V$ (= $V_A$ - $V_B$) between the output voltage $V_A$ of the MR sensor 23a and the output voltage $V_B$ of the MR sensor 23b.

Also similar shift of the phase occurs between the output of the MR sensor 24a for the input shaft 21a and the output of the MR sensor 24b for the output shaft 21b. In accordance with the output difference $\Delta v$ (= $v_A$ - $v_B$) generated between the MR sensor 24a and the MR sensor 24b, the above-mentioned rotational torque can be calculated.

In the illustrated embodiment, the construction has been described in which the targets 250 are provided for the input shaft (the first shaft) 21a and the output shaft (the second shaft) 21b connected to each other through the torsion bar 6 having the known torsional characteristic. When a rotating shaft having a known torsional characteristic is detected, a construction may be employed in which the targets 250 are directly disposed apart from one another in the axial direction of the rotating shaft. Moreover, the rotational torque is calculated in accordance with the difference in the output of the MR sensors (the magnetic sensors) disposed opposite to the targets 250.

The rotational torque is calculated is performed by the signal processing unit 35 to which the output voltages of the MR sensors 23a, 23b, 24a and 24b are inputted. Since the procedure for the calculation has been described, the procedure is omitted from description.

The reason why the two MR sensors 23a and 24a and the two MR sensors 23b and 24b are parallelly disposed on the outside of the targets 250 of the input shaft 21a and the output shaft 21b will now be described. An uncertain output obtainable in the nonlinearly-changed region shown in FIG. 70 must be omitted when the calculation of the rotational torque is performed. The two MR sensor 23a and 23b in the sensor box 231 and the two MR sensor 24a and 24b in the other sensor box 241 are disposed opposite to each other such that the phases are shifted by a half period in the circumferential direction of each target plate 25. As shown in FIG. 70, when either pair of the outputs is in the nonlinear region, the other pair of the outputs is in the linearly-changed region.

The signal processing unit 35 selects either of the set including the MR sensors 23a and 23b or the set including the MR sensors 24a and 24b which is present in the linearly-changed region. In accordance with the difference in the output of the selected set, the rotational torque is calculated. The torque detecting device is characterized by the selecting operation.

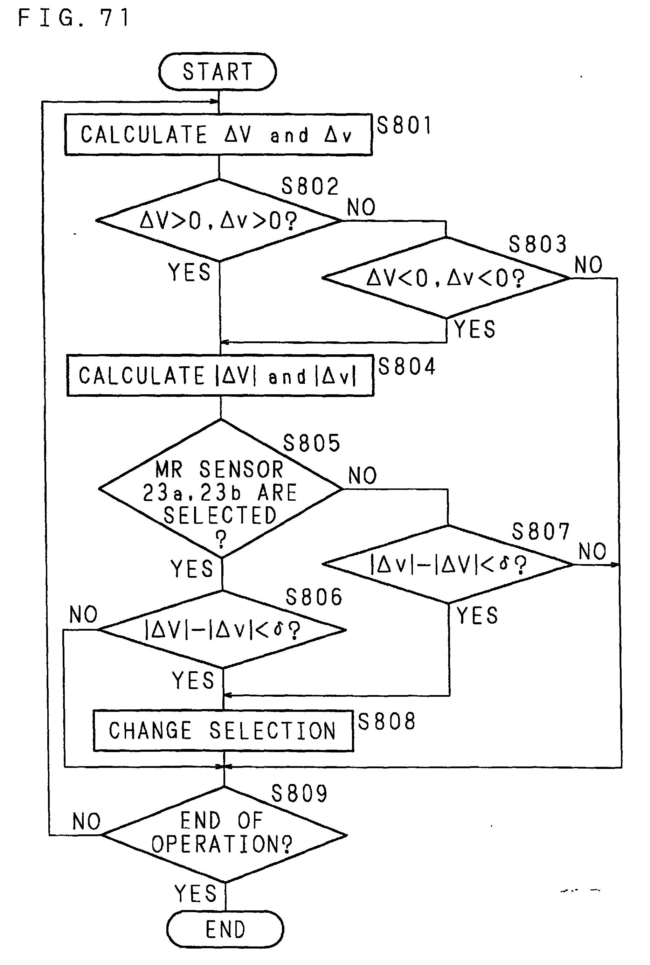

FIG. 71 is a flow chart showing the contents of the operation for selecting the MR sensors. The operation is performed as an interruption processing between the calculating operations for calculating the rotational torque which is performed at predetermined sampling intervals. Initially, the signal processing unit 35 calculates the difference $\Delta V$ in the output between the MR sensors 23a and 23b and the difference $\Delta v$ in the output between the MR sensors 24a and 24b (S801).

Then, the sign of each of the calculated differences $\Delta V$ and $\Delta v$ in the output is detected (S802 and S803). When the two signs are the same, that is, when both of the signs are positive or when both of the signs are negative, the operation proceeds to S804. When the signs are different from each other, the following operation is not performed. The operation proceeds to S809 to be described later.

In S804, the signal processing unit 35 calculates the absolute value $|\Delta V|$ and $|\Delta v|$ of the difference $\Delta V$ and the difference $\Delta v$ calculated in S801. Then, a fact that the pair which is being selected is MR sensors 23a and 23b or MR sensors 24a and 24b is detected (S805). When the MR sensors 23a and 23b are being selected, the operation proceeds to S806. When the MR sensors 24a and 24b are being selected, the operation proceeds to S807. The difference obtained by subtracting the absolute value of the difference in the output of the non-selected MR sensor from the absolute value of the difference in the output of the MR sensor which is being selected so as to make a comparison with a predetermined reference value $\delta$.

When a judgement is made that the absolute value of the difference in the output of the MR sensor which is being selected is smaller than the absolute value of the difference in the output of the non-selected MR sensor by a reference value, the present selection of the MR sensor is changed (S808). When a judgement is made that the absolute value is not smaller as described above, the present selection of the MR sensor is maintained. Then, the operation proceeds to S809. In S809, whether or not a predetermined operation interruption conthtion, such as shutdown of power supply, is satisfied is judged. The operations in S801 to S808 are repeated until the operation interruption condition is satisfied.

As a result of the foregoing operation, a judgement of the difference in the output of the MR sensor which is being selected and the sign of the difference in the output of the non-selected MR sensor are performed (S802 and S803). When the MR sensors have the same sign, the absolute value of the difference in the output of the MR sensor which is being selected and the absolute value of the difference in the output of the non-selected MR sensor are compared with each other (S806 and S807). Only when a determination has been made that the former value is smaller than the latter value by the predetermined quantity (the reference value $\delta$), switching from the MR sensor which is being selected to the non-selected MR sensor is performed.

The meaning of the foregoing operation will now be described with reference to FIG. 70. In a case of FIG. 70, when the rotational angle of the input shaft 21a is enlarged, the output voltages of the MR sensors 23a and 23b and those of the MR sensors 24a and 24b are changed to the right-hand portion of the graph such that repetition between the linearly-changed region and the nonlinearly-changed region takes place. In the first region expressed as $X_1$, the difference $\Delta V$ in the output between the MR sensors 23a and 23b in the linearly-changed region is used to calculate the rotational angle.

In the latter half of the first region $X_1$, the outputs of the MR sensors 23a and 23b encounters a phenomenon that the change rate is lowered as the distance to the nonlinearly-changed region is shortened. The output of the two MR sensors 23a and 23b are changed with the shift of the phase owing to the action of the rotational torque. Therefore, lowering of the change rate of either MR sensor (the MR sensor 23a in a case shown in FIG. 70) occurs first. As a result, the difference $\Delta V$ in the output between the MR sensors 23a and 23b is reduced as the distance to the end of the first region $X_1$ is shortened.

In the latter half of the first region $X_1$, also the outputs of the non-selected MR sensor 24a and the MR sensor 24b are included in the linearly-changed region. The linearly-changed region has a shift of the phase by a half period from the nonlinearly-changed region for the MR sensors 23a and 23b which are being selected. Therefore, the linearly-changed region includes a portion adjacent to the end of the first region $X_1$. Hence it follows that the voltage difference $\Delta v$ between the non-selected MR sensors 24a and 24b is not changed adjacent to the end of the first region $X_1$.

At this time, switching from the MR sensors 23a and 23b which are being selected to the non-selected MR sensors 24a and 24b is performed as a result of a comparison of the magnitude of the absolute value of the difference in the output which is performed in S806. In the following second region $X_2$, the voltage difference $\Delta v$ between the MR sensors 24a and 24b continued from the linearly-changed region is used to calculate the rotational torque.

A state of change in the outputs of the MR sensors 23a and 23b in the second region $X_2$ after the foregoing switching has been performed will now be described. The second region $X_2$ is divided into a region $Y_1$ in front of a point at which the output curve of the MR sensor 23a which is first shifted to the nonlinearly-changed region intersects the output curve of the MR sensor 23b; a region $Y_2$ in which the relationship of the magnitude of the outputs of the MR sensors 23a and 23b is inverted such that the output of the MR sensor 23b is larger than the output of the MR sensor 23a; and a region $Y_3$ in which the output curves of the MR sensors 23a and 23b again intersect each other and the relationship of the magnitude of the outputs of the MR sensors 23a and 23b are again inverted.

In the region $Y_1$, the relationship of the magnitude of the absolute value of the difference in the output is maintained. The selection of the MR sensor 24a and the MR sensor 24b is maintained owing to a result of the comparison of the magnitude of the absolute value of the difference in the output which is performed in S807.

In the region $Y_2$, the change rate of the outputs of the MR sensors 23a and 23b in the nonlinearly-changed region is high. Therefore, voltage difference $\Delta V$ of the MR sensors 23a and 23b is large than the voltage difference $\Delta v$ of the MR sensor 24a and the MR sensor 24b which are being selected. When the comparison is performed in S807, there is apprehension that the operation proceeds to S808 so that the switching to the MR sensors 23a and 23b in the nonlinearly-changed region is undesirably performed. However, the difference in the output between the MR sensor 24a and the MR sensor 24b which are being selected is positive in the region $Y_2$. On the other hand, the difference in the output of the non-selected MR sensors 23a and 23b is negative. Therefore, the operations in S804 to S808 are not performed because of a result of the judgement of the sign in S802 and S803. Hence it follows that the selection of the MR sensor 24a and the MR sensor 24b is maintained.

In the region $Y_3$, the relationship of the magnitude of the outputs of the non-selected MR sensors 23a and 23b is again inverted. The comparison in S807 is performed. The outputs of the MR sensors 23a and 23b is again shifted to the linearly-changed region in the region $Y_3$. Therefore, the absolute value $|\Delta V|$ of the difference in the output between the non-selected MR sensors 23a and 23b is not considerably larger than the absolute value $|\Delta v|$ of the difference in the output of the MR sensor 24a and the MR sensor 24b which are being selected. As a result of the comparison performed in S807, the selection of the MR sensor 24a and the MR sensor 24b is maintained.

The foregoing selection of the MR sensor 24a and the MR sensor 24b is switched as the distance to the end of the second region $X_2$ is shortened and the output of the MR sensor 24a is about to shift to the nonlinearly-changed region. Then, the voltage difference $\Delta V$ between the MR sensors 23a and 23b is used to calculate the rotational torque.

As described above, the change rates of the outputs of the MR sensors 23a and 23b and those of the MR sensor 24a and the MR sensor 24b are lowered before the selection is switched. Therefore, it is effective to directly obtain the change rate by differentiating each output to perform similar switching when the change rate is lower than a predetermined level.

The foregoing method, however, encounters a fact that the absolute value of the change rate is affected by the magnitude of the change rate in each linearly-changed region. Therefore, the change rate in the linearly-changed region is changed in accordance with the magnitude of the rotational speed of the objective rotating shaft (the steering shaft 21). When the foregoing change rate is used to calculate the rotational torque of the steering shaft 21 having the rotational speed which is not constant, there is apprehension that the incorrect switching is performed. Therefore, it is preferable that the method of using the differentiated value to perform switching is employed as an auxiliary method for the foregoing selecting method only when the rotational speed of the steering shaft 21 satisfies a predetermined range. When the rotational torque of a general rotating shaft with which the rotational speed is not considerably changed is detected, the switching method using the differentiated value can mainly be employed.

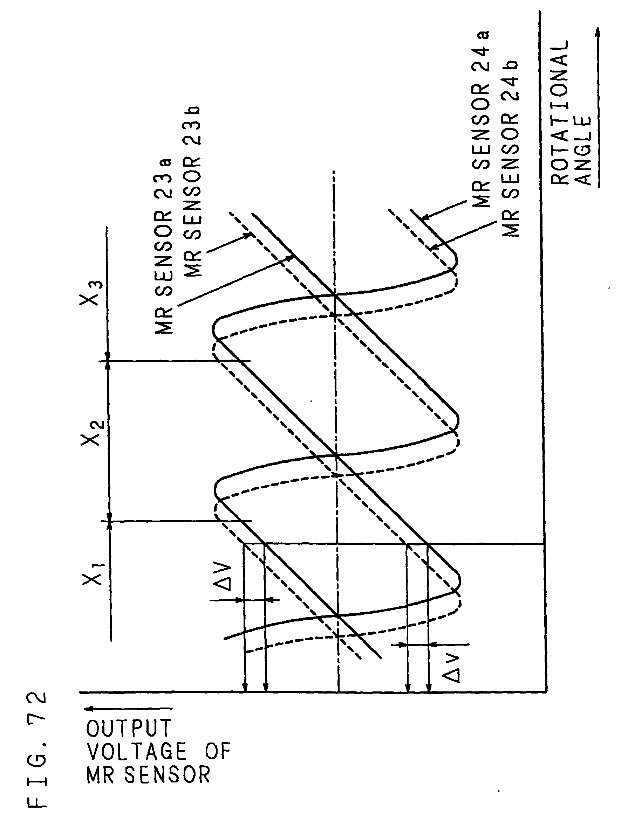

FIG. 72 is a graph showing an example of a state of change in the output voltages of the MR sensors 23a, 23b, 24a and 24b. A state is illustrated in which the output voltages of the MR sensors 23a, 23b, 24a and 24b are changed owing to applying of the rotational torque, the direction of which is inverted to the direction in the case shown in FIG. 70.

In the foregoing case, only the relationship of the magnitude of the outputs of the MR sensors 23a and 23b and that of the MR sensors 24a and 24b are different. Therefore, similar selection of the MR sensors 23a and 23b or MR sensor 24a and the MR sensor 24b is performed. FIG. 72 shows the first region $X_1$, the second region $X_2$ and the third region $X_3$ similar to FIG. 70. In the first region $X_1$ and the third region $X_3$, the MR sensors 23a and 23b are selected. Then, the voltage difference $\Delta V$ between the MR sensors 23a and 23b is used to calculate the rotational torque. In the second region $X_2$, the MR sensor 24a and the MR sensor 24b are selected to perform the rotational torque by using their voltage difference $\Delta v$.

The foregoing selecting operation is performed in accordance with a result of the comparison of the outputs of the MR sensors which are being selected and the non-selected MR sensors. Therefore, even if the output characteristic of each MR sensor is changed owing to an influence of the ambient temperature, MR sensors present in the linearly-changed region can correctly be selected. Therefore, the signal processing unit 35 is able to correctly select the MR sensors present in the linearly-changed region at any moment of time during the calculation of the signal processing unit 35. A result of the detection is used to accurately calculate the rotational torque. Hence it follows that control of the electric motor for assisting steering and other controls can satisfactorily be performed in accordance with a result of the calculations.

Note that the foregoing embodiment has been described about application to the purpose for detecting the rotational torque (the steering torque) of the steering shaft 21 for connecting the steering wheel 1 and the steering mechanism of a steering apparatus for an automobile. As a matter of course, the torque detecting device according to the present invention can widely been applied to the purpose for detecting the rotational torque of the rotating shaft.

(Twenty-Seventh Embodiment)

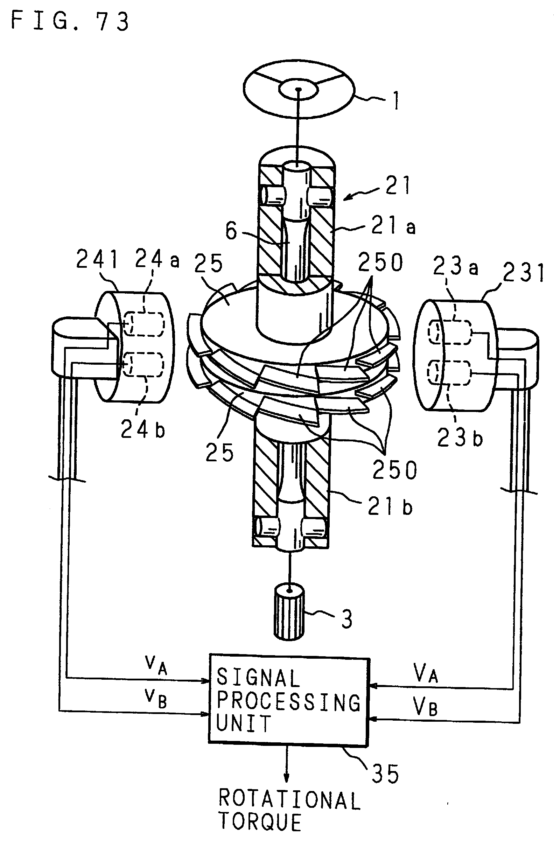

FIG. 73 is a schematic view showing the construction of the torque detecting device according to the present invention and applied to a steering apparatus for an automobile. As shown in FIG. 73, an input shaft (a first shaft) 21a having an upper end connected to a steering wheel 1 and an output shaft (a second shaft) 21b having a lower end connected to a pinion gear 3 of a steering mechanism are coaxially connected to each other through a torsion bar 6 having a small diameter. Thus, a steering shaft 21 for connecting the steering wheel 1 and the steering mechanism is constructed. The rotational angle detecting device and the torque detecting device according to the present invention are constructions adjacent to a portion in which the input shaft 21a and the output shaft 21b are connected to each other. The constructions will now be described.

A disc-shape target plate 25 is coaxially fitted and secured to the input shaft 21a at a position adjacent to the portion for connecting the output shaft 21b. A plurality of targets (10 in figure) 250 are parallelly provided on the circumferential surface of the target plate 25 by same intervals. The targets 250 are protrusions each of which is made of magnetic material and which are inclined with respect to the axial direction of the input shaft 21a to which the target plate 25 has been fit by substantially the same angles.

A similar target plate 25 is fitted and secured to the output shaft 21b at a position adjacent to the portion in which the output shaft 21b and the input shaft 21a are connected to each other. A plurality of targets 250 each of which is inclined by substantially the same angle with respect to the axial direction of the output shaft 21b to which the target plate 25 has been fitted are provided on the circumferential surface of the target plate 25. The targets 250 are aligned to the targets 250 of the input shaft 21a in the circumferential direction.

Two sensor boxes 231 and 241 are disposed on the outside of the target plate 25 to, from different positions, face the outer ends of the targets 250 provided on the circumferential surface of the target plate 25. The sensor boxes 231 and 241 are secured and supported by a stationary portion, such as a housing which supports the input shaft 21a and the output shaft 21b.

The sensor box 231 includes an MR sensor 23a disposed opposite to the targets 250 for the input shaft 21a and an MR sensor 23b disposed opposite to the targets 250 for the output shaft 21b. The MR sensor 23a and the MR sensor 23b are accurately aligned in the circumferential direction. Similarly, the sensor box 241 includes an MR sensor 24a disposed opposite to the targets 250 for the input shaft 21a and an MR sensor 24b disposed opposite to the targets 250 for the output shaft 21b. The MR sensor 24a and the MR sensor 24b are accurately aligned in the circumferential direction.

The MR sensors 23a, 23b, 24a and 24b are sensors, such as the magnetoresistance effect elements (MR elements), having electric characteristics (the resistance) which are changed owing to an action of a magnetic field. The output voltage of each sensor is changed according to change in the ambient magnetic field. Outputs of the MR sensors 23a, 23b, 24a and 24b are extracted to the outside of the sensor boxes 231 and 241 so as to be supplied to a signal processing unit 35 comprising a microprocessor.

The MR sensors 23a, 23b, 24a and 24b are disposed opposite to the targets 250 which are protrusions made of the magnetic material. The targets 250 are provided on the circumferential surfaces of the input shaft 21a and output shaft 21b such that the targets 250 are inclined by a predetermined angle with respect to the axial direction of each of the input shaft 21a and the output shaft 21b. When the input shaft 21a and the output shaft 21b have been rotated around the axis, the MR sensors 23a, 23b, 24a and 24b, therefore, output electric signals which are proportionally changed according to change in the rotational angle of each of the input shaft 21a and the output shaft 21b when the corresponding targets 250 pass through the opposite positions.

At this time, the output voltages of the MR sensors 23a and 24a correspond to the rotational angle of the input shaft 21a for which the corresponding targets 250 are provided. The output voltages of the MR sensors 23b and 24b correspond to the rotational angle of the output shaft 21b for which the corresponding targets 250 are provided. Therefore, the rotational angle of the output shaft 21b can be calculated from the output voltages of the MR sensors 23a and 24a. The rotational angle of the output shaft 21b can be calculated from the MR sensors 23a and 24a.

The difference between the output voltage of the MR sensor 23a and that from the MR sensor 23b or the difference between the output voltage of the MR sensor 24a and that of the MR sensor 24b correspond to the difference in the rotational angle (the relative change in the angle) between the input shaft 21a and the output shaft 21b. The relative change in the angle corresponds to a torsional angle generated in the torsion bar 6 for connecting the input shaft 21a and the output shaft 21b to each other, the torsional angle being generated owing to the rotational torque applied on the input shaft 21a. Therefore, the rotational torque applied on the input shaft 21a can be calculated in accordance with the difference in the output voltage.

In this embodiment, the targets 250 are provided for the input shaft (the first shaft) 21a and the output shaft (the second shaft) 21b connected to each other through the torsion bar 6, the torsional characteristic of which has been known. When a rotating shaft having the known torsional characteristic is an object which must be detected, a construction may, of course be, employed in which the targets 250 are directly provided for the positions apart from one another in the axial direction of the rotating shaft. Thus, the targets 250 are detected by the MR sensors (the magnetic sensors).

The rotational torque is calculated by the signal processing unit 35 to which the output voltages of the MR sensors 23a, 23b, 24a and 24b are inputted. Since the procedures for the calculations have been described, the procedures are omitted from description. To obtain accurate results from the calculations, the output characteristics of the MR sensors 23a and 24a for the input shaft 21a and the MR sensors 23b and 24b for the output shaft 21b must be constant. Moreover, the same output voltages must be generated to correspond to passing of the targets 250 to which the MR sensors are correspond.

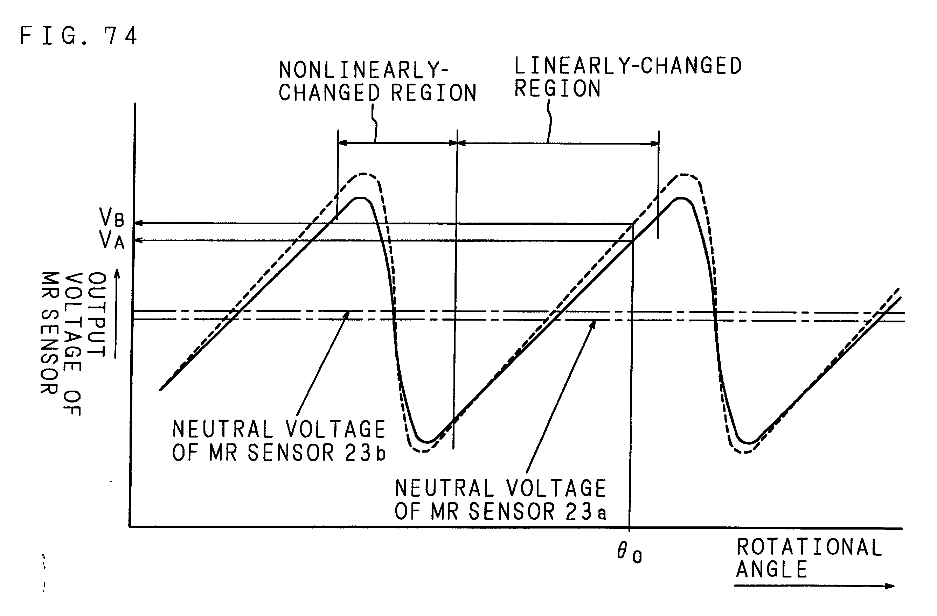

FIG. 74 is graph showing a state of change in the output voltages of the MR sensors 23a and 24a for the input shaft 21a. The axis of abscissa of the graph stands for the rotational angle of the input shaft 21a which must be detected. A solid line in the graph indicate the output voltage of the MR sensor 23a, while a short dashed line indicates the output voltage of the MR sensor 24a. In a case where the target plate 25 comprising the 10 targets 250 provided on the circumferential thereof is employed, the output voltages of the MR sensors 23a and 23b are changed such that one period is a period in which the input shaft 21a is rotated by 36° (= 360°/10). Thus, repetition of a region in which linear change occurs in a period in which each of the targets 250 and a region in which nonlinearly change occurs in a period in which the discontinuous portions between the adjacent targets 250 pass are performed.

The reason why the two MR sensors 23a and 24a, 23b and 24b are provided for the input shaft 21a and the output shaft 21b lies in that unreliable calculations must be prevented in which uncertain output voltages obtained from the nonlinearly-changed regions are used. The positions of the MR sensors 23a and 24a in the circumferential direction of the target plate 25 are adjusted such that output voltages having the phases which are shifted by about a half period are generated. Thus, when either of the output voltages is present in the nonlinearly region, the other output voltage is present in the linear region. Therefore, switching between MR sensor 23a and 24a, or between MR sensor 23b and 24b is performs under condition that, for example, each output voltage is changed to a level higher (or lower) than a predetermined threshold voltage. Moreover, ranges for use the output voltages of the MR sensors 23a and 24a are set as illustrated. Thus, the rotational torque of the overall surface can be calculated by using the output voltage of the linearly-changed region.

In FIG. 74, when a state of change in the output voltage is compared between the MR sensor 23a and the MR sensor 23b, the output voltages are difference from each other in the angle of inclination in the linearly-changed region. Moreover, the medium point voltages of the change width indicated with an alternate long and short dash line are different from each other. Since the output voltages are different from each other, the output voltages of the MR sensors 23a and 23b are made to be $V_A$ and $V_B$ when the rotational angle indicated with symbol $\theta_0$ is the same. The accuracy of the rotational angles of the input shaft 21a and the output shaft 21b calculated by using the foregoing output voltages and that of the rotational torque calculated in accordance with the difference in the rotational angle deteriorate. In FIG. 74, the difference in the output voltage between the MR sensors 23a and 23b are highlighted for the convenience of description.

The difference in the inclination is caused from the difference in the output characteristics of the MR sensors 23a and 23b. The output characteristics are changed owing to the ambient temperature. In addition, change with time occurs. The difference in the medium point voltage is caused from the difference in the air gap between each of the MR sensors 23a and 23b and the targets 250 opposite to the MR sensors 23a and 23b. To eliminate the difference in the output voltage caused as shown in FIG. 74, the MR sensors 23a and 23b must have identical characteristics and the accuracy of mounting the MR sensors 23a and 23b must be improved as much as possible. The foregoing requirements cannot easily Simultaneously, be satisfied

In the present invention, the signal processing unit 35 calculates the rotational torque such that output voltages of the MR sensors 23a and 23b (or MR sensor 24a and the MR sensor 24b) are not used as it is. Results of multiplication of the output voltages with corrective gain set as follows so as to eliminate an error in the calculation of the torque caused from the difference in the output voltages of the MR sensors 23a and 23b (or MR sensor 24a and the MR sensor 24b).

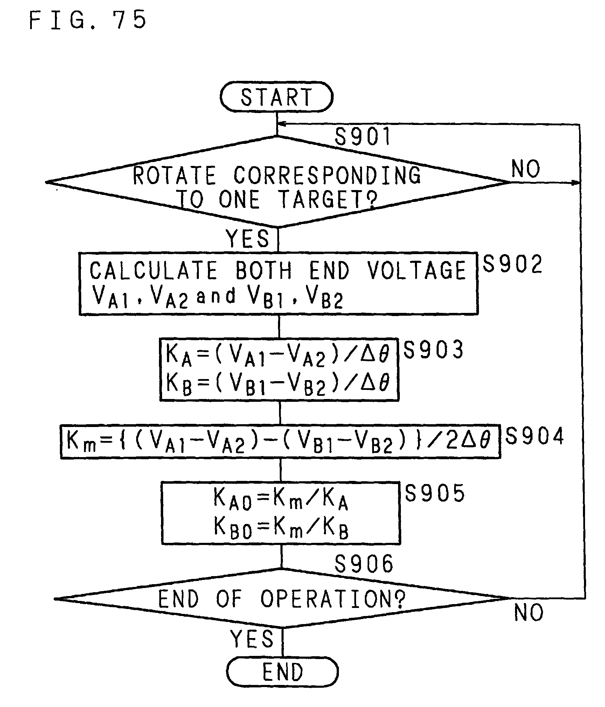

FIG. 75 is a flow chart showing the contents of the process for setting the corrective gain. The operation for setting the corrective gain is performed as an interruption processing which is performed between calculations of the rotational torque which is performed at predetermined sampling intervals for each of the MR sensors 23a, 23b, 24a and 24b. The following description is performed about the MR sensors 23a and 23b opposite to the targets 250 of the input shaft 21a and the output shaft 21b at the aligning positions in the circumferential direction.

The signal processing unit 35 monitors the output voltages of the MR sensors 23a and 23b sequentially fetched so as to be used in the calculations of the rotational angle and the rotational torque. The signal processing unit 35 waits for a moment of time at which each of the input shaft 21a and the output shaft 21b has rotated by an angular degree corresponding to one target 250 (S901). When a judgement is made that rotation corresponding to one target 250 has been completed, the signal processing unit 35 obtains output voltages

$V_{A1}$ and $V_{A2}$ of the MR sensor 23a and output voltages $V_{B1}$ and $V_{B2}$ of the MR sensor 23b at the two ends of a predetermined rotational angle range $\Delta\theta$ (S902).

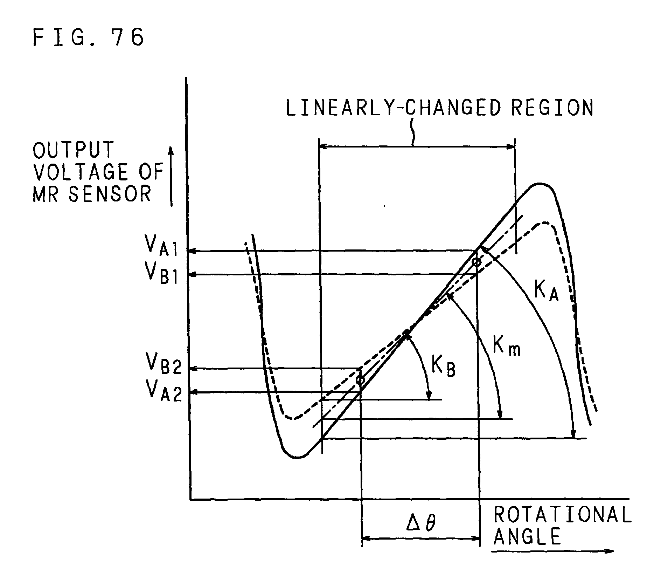

FIG. 76 is a graph showing the operation for setting the corrective gain. Similarly to FIG. 74, change in the output voltage of each of the MR sensors 23a and 23b in a period in which one target 250 passes, that is, change in the output voltages in one period is indicated with a solid line. Moreover, the output voltage of the MR sensor 23b is indicated with a short dashed line. In S901, a reference to the output voltages of the MR sensors 23a and 23b in one period shown in FIG. 76 is made. In S902, voltages $V_{A1}$ and $V_{A2}$ and voltages $V_{B1}$ and $V_{B2}$ at the two ends of the rotational angle range $\Delta\theta$ are obtained. Note that $\Delta\theta$ may arbitrarily be set in an angular range which is included in the linearly-changed region.

Then, the signal processing unit 35 applies the voltages $V_{A1}$ and $V_{A2}$ and voltages $V_{B1}$ and $V_{B2}$ at the two ends to the following equations to calculate sensor gains $K_A$ and $K_B$ (S903).

$$K_A = (V_{A1} - V_{A2})\Delta\theta \qquad (11)$$

$$K_B = (V_{B1} - V_{B2})/\Delta\theta \qquad (12)$$

The sensor gains $K_A$ and $K_B$ calculated from the above-mentioned equations represent the change rates (inclinations) of the output voltages in the linearly-changed regions of the MR sensors 23a and 23b as can be understood from FIG. 76.

Then, the voltages $V_{A1}$ and $V_{A2}$ and voltages $V_{B1}$ and $V_{B2}$ at the two ends are applied to the following equations to calculate average sensor gain $K_m$ of the two MR sensors 23a and 23b (S904):

$$K_m = \{(V_{A1} - V_{A2})/2 - (V_{B1} - V_{B2})/2\}\Delta\theta \qquad (13)$$
$$= \{(V_{A1} - V_{A2}) - (V_{B1} - V_{B2})\}/2\Delta\theta$$

The average sensor gain $K_m$ calculated from the foregoing equation represents the change rate of the average value of the output voltages of the MR sensors 23a and 23b in the linearly-changed region, that is, the inclination of the straight line indicated with an alternate long and short dash line shown in FIG. 76.

Finally, the signal processing unit 35 applies the sensor gains $K_A$ and $K_B$ calculated in S903 and the average sensor gain $K_m$ calculated in S904 to the following equations to calculate corrective gains $K_{A0}$ and $K_{B0}$ with which the actual outputs for the MR sensors 23a and 23b are multiplied (S905).

$$K_{A0} = K_m / K_A \qquad (14)$$

$$K_{B0} = K_m / K_B \qquad (15)$$

The corrective gain $K_{A0}$ and $K_{B0}$ calculated from the foregoing equations are corrective values to make the peculiar sensor gains $K_A$ and $K_B$ of the MR sensors 23a and 23b to coincide with the average sensor gain $K_m$. Results of multiplying the actual output voltages of the MR sensors 23a and 23b with the sensor gains $K_{A0}$ and $K_{B0}$ are indicated with points on the average characteristics indicated with an alternate long and short dash line shown in FIG. 76. Thus, the error components included in the output voltages of the MR sensors 23a and 23b caused from the difference in the output characteristics and the difference in the air gap from the corresponding targets 250 can be eliminated.

The calculation of the rotational torque which is performed by the signal processing unit 35 is performed such that the actual output voltages $V_A$ and $V_B$ of the MR sensors 23a and 23b are not used as it is. As an alternative to this, values obtained by multiplying the foregoing actual output voltages with the corrective gains $K_{A0}$ and $K_{B0}$ calculated in the equations (14) and (15) are employed. Thus, accurate results of calculations of the rotational torque from which the error components have been omitted can be obtained. Note that the calculated corrective gains $K_{A0}$ and $K_{B0}$ are applied to the output voltages $V_A$ and $V_B$ obtained during a next (n + 1 th) passing of the targets 250 following the present (n the) passing.

The signal processing unit 35 repeats the operations in S901 to S905 until a predetermined operation interruption condition, such as shutdown of electric power, is satisfied (S906). Thus, the rotational torque can accurately be calculated at any moment of time during the calculation. Thus, a variety of controls, such as control of the electric motor for assisting steering, can satisfactorily be performed.

Although the foregoing embodiment has been described about the application to the purpose for detecting the rotational torque (the steering torque) of the steering shaft for connecting the steering wheel 1 and the steering mechanism of the steering apparatus for an automobile, the torque detecting device according to the present invention may, of course, widely be applied to the purpose for detecting the rotational torque of a rotating shaft.

(Twenty-Eighth Embodiment)

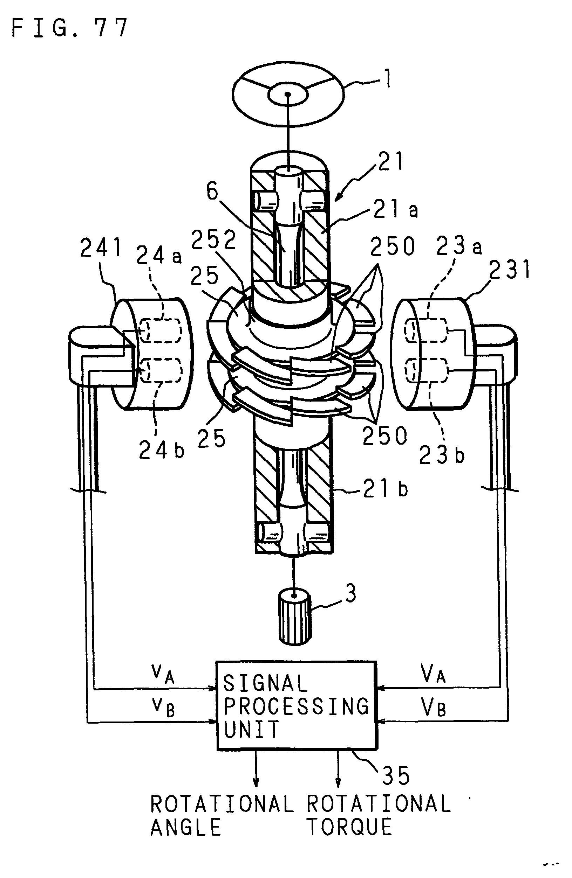

FIG. 77 is a schematic view showing the construction of a rotational angle detecting device and a torque detecting device (hereinafter called an "device of the present invention") according to the present invention and applied to the steering apparatus for an automobile. As shown in FIG. 77, an input shaft (a first shaft) 21a having an upper end connected to a steering wheel 1 and an output shaft (a second shaft) 21b having a lower end connected to a pinion gear 3 of a steering mechanism are coaxially connected to each other through a torsion bar 6 having a small diameter. Thus, a steering shaft 21 for connecting the steering wheel 1 and the steering mechanism is constructed. The rotational angle detecting device and the torque detecting device according to the present invention are constructed adjacent to a portion in which the input shaft 21a and the output shaft 21b are connected to each other. The constructions will now be described.

A disc-shape target plate 25 is coaxially fitted and secured to the input shaft 21a at a position adjacent to the portion for connecting the output shaft 21b. A plurality of targets (8 in figure) 250 are parallelly provided on the circumferential surface of the target plate 25 by same intervals. The targets 250 are inclined with respect to the axial direction of the input shaft 21a to which the target plate 25 has been fit by substantially the same angles.

A similar target plate 25 is fitted and secured to the output shaft 21b at a position adjacent to the portion in which the output shaft 21b and the input shaft 21a are connected to each other. A plurality of targets 250 each of which is inclined by substantially the same angle with respect to the axial direction of the output shaft 21b to which the target plate 25 has been fitted are provided on the circumferential surface of the target plate 25. The targets 250 are aligned to the targets 250 of the input shaft 21a in the circumferential direction.

Two sensor boxes 231 and 241 are disposed on the outside of the target plate 25 to, from different positions, face the outer ends of the targets 250 provided on the circumferential surface of the target plate 25. The sensor boxes 231 and 241 are secured and supported by a stationary portion, such as a housing which supports the input shaft 21a and the output shaft 21b.

The sensor box 231 includes an MR sensor 23a disposed opposite to the targets 250 for the input shaft 21a and an MR sensor 23b disposed opposite to the targets 250 for the output shaft 21b. The MR sensor 23a and the MR sensor 23b are accurately aligned in the circumferential direction. Similarly, the sensor box 241 includes an MR sensor 24a disposed opposite to the targets 250 for the input shaft 21a and an MR sensor 24b disposed opposite to the targets 250 for the output shaft 21b. The MR sensor 24a and the MR sensor 24b are accurately aligned in the circumferential direction.

The MR sensors 23a, 23b, 24a and 24b are sensors, such as the magnetoresistance effect elements (MR elements), having electric characteristics (the resistance) which are changed owing to an action of a magnetic field. The output voltages $V_A$, $V_B$, $v_A$ and $v_B$ from each sensor are extracted to the outside of the sensor boxes 231 and 241 so as to be supplied to a signal processing unit 35 comprising a microprocessor.

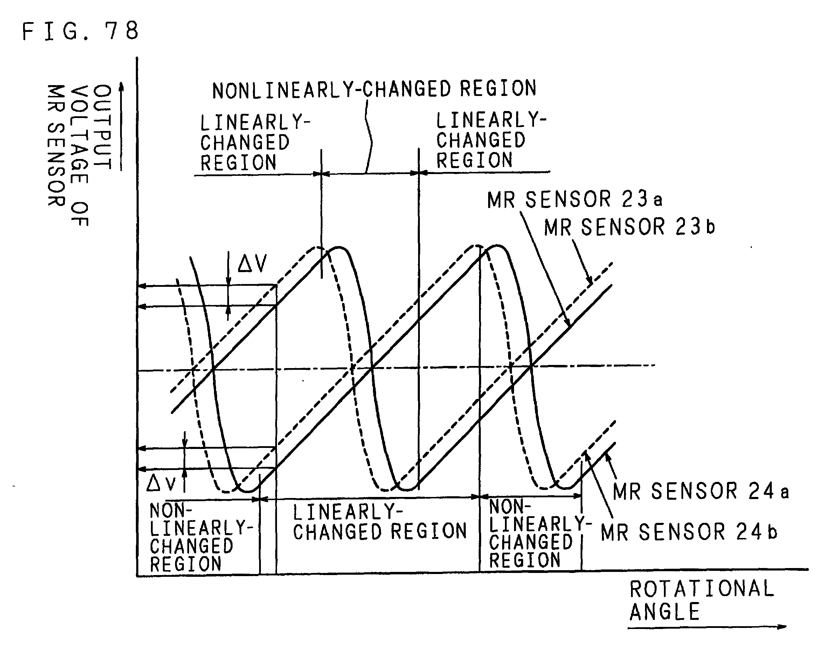

FIG. 78 is a graph showing an example of change in the output voltages of the MR sensors 23a, 23b, 24a and 24b. The axis of abscissa of the graph stands for the rotational angle of the input shaft 21a or the output shaft 21b. A solid line in the graph indicates the output voltages of the MR sensors 23a and 24a for the input shaft 21a. A short dashed line indicates the output voltages of the MR sensors 23b and 24b for the output shaft 21b.

As described above, the MR sensors 23a, 23b, 24a and 24b are disposed opposite to the targets 250 which are provided on the circumferential surfaces of the input shaft 21a and output shaft 21b to make a predetermined angle of inclination and each of which is made of magnetic material. The length of each of the targets 250 is finite in the circumferential direction of the input shaft 21a or the output shaft 21b. Thus, a discontinuous portion is present among the targets 250. Therefore, when the input shaft 21a and output shaft 21b have been rotated around the axis, the MR sensors 23a, 23b, 24a and 24b output voltage signals which are linearly changed to correspond to change in the rotational angle of the input shaft 21a or the output shaft 21b during passing of the corresponding targets 250. When the discontinuous portion between the adjacent targets 250 passes, voltage signals which are nonlinearly changed to correspond to the change in the rotational angle are outputted.

As a result, the output voltages of the MR sensors 23a, 23b, 24a and 24b are, as shown in FIG. 78, the region (the linearly-changed region) in which the linear change occurs during each target 250 passes and the region (nonlinearly-changed region) in which the nonlinear change occurs during each discontinuous portion between each target 250 passes are repeated during passing of each of the targets 250. The period of the repetition corresponding to the number of the targets 250 provided on the circumferential surface of the target plate 25. In a case where 8 targets 250 are provided on the circumferential surface of the target plate 25, the foregoing repetition occurs such that a period of time in which the input shaft 21a or the output shaft 21b is rotated by 45° (= 360°/8).

The output voltages $V_A$ and $v_A$ of the MR sensors 23a and 24a correspond to the rotational angle of the input shaft 21a provided with the corresponding targets 250. The output voltages $V_B$ and $v_B$ of the MR sensors 23b and 24b correspond to the rotational angle of the output shaft 21b provided with the opposite targets 250. Therefore, the rotational angle of the input shaft 21a can be calculated in accordance with the output voltages $V_A$ and $v_A$ of the MR sensors 23a and 24a. The rotational angle of the output shaft 21b can be calculated in accordance with the output voltages $V_B$ and $v_B$ of the MR sensors 23b and 24b.

The voltage difference $\Delta V$ (= $V_A$ - $V_B$) between the output voltage $V_A$ of the MR sensor 23a and the output voltage $V_B$ of the MR sensor 23b or the voltage difference $\Delta v$ (= $v_A$ - $v_B$) between the output voltage $v_A$ of the MR sensor 24a and the output voltage $v_B$ of the MR sensor 24b corresponds to the position deviation in the circumferential direction occurring between the targets 250 for the input shaft 21a and the targets 250 for the output shaft 21b. That is, the foregoing differences correspond to the difference in the rotational angle (the relative displacement of the angle) between the input shaft 21a and the output shaft 21b. The relative displacement of the angle corresponds to the amount of twisting amount generated in the torsion bar 6 for connecting the input shaft 21a and the output shaft 21b to each other when the rotational torque applied on the input shaft 21a acts. Therefore, the rotational torque applied on the input shaft 21a can be calculated in accordance with the calculated voltage difference $\Delta V$ or $\Delta v$.

The foregoing calculations of the rotational angle and the rotational torque are performed in the signal processing unit 35 to which the output voltages of the MR sensors 23a, 23b, 24a and 24b are inputted. The procedure of the foregoing calculating process has been described. Therefore, the procedure is omitted from description.

The reason why two MR sensors 23a and 24a and two MR sensors 23b and 24b are provided on the outside of the targets 250 for the input shaft 21a and the output shaft 21b will now be described. That is, incorrect calculation of the rotational torque using the uncertain output obtainable in the nonlinearly-changed region shown in FIG. 78 must be prevented. The two MR sensor 23a and 23b in the sensor box 231 and the two MR sensor 24a and 24b in the other sensor box 241 are disposed opposite to each other such that the phases are shifted by a half period in the circumferential direction of each target plate 25. As shown in FIG. 78, when either pair of the outputs is in the nonlinear region, the other pair of the outputs is in the linearly-changed region. The signal processing unit 35 selects either of the pair of the MR sensors 23a and 23b or the pair MR sensor 24a and the MR sensor 24b which is present in the linearly-changed region. The outputs and the difference in the output of the selected pair are used to calculate the rotational angle and the rotational torque.

In this embodiment, the construction is arranged such that the targets 250 are provided for the input shaft (the first shaft) 21a and the output shaft (the second shaft) 21b connected to each other through the torsion bar 6. When a rotating shaft having a known torsional characteristic is detected, a construction may be employed in which the targets 250 are directly disposed at positions apart from each other in the axial direction of the rotating shaft. Moreover, the rotational torque is calculated in accordance with the difference in the output of the MR sensors (the magnetic sensors) disposed opposite to the targets 250.

To accurately calculate the rotational angle and the rotational torque, change in the output in the linearly-changed region for use in the calculation stably occurs. To achieve this, the targets 250 of the input shaft 21a opposite to the MR sensors 23a and 24a and the targets 250 for the output shaft 21b opposite to the MR sensors 23b and 24b must have high accuracy of the shape including the concentricity with respect to the two shafts 21a and 21b and accurate angle of inclination with respect to the axial direction of the two shafts 21a and 21b.

In the device of the present invention, the targets 250 is, as shown in FIG. 77, integrally formed with the circumferential surface of the target plate 25 fitted and secured to the input shaft 21a and output shaft 21b and formed into the disc-like shape.

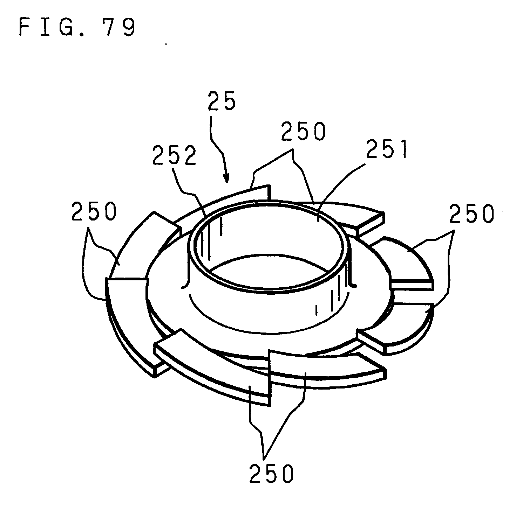

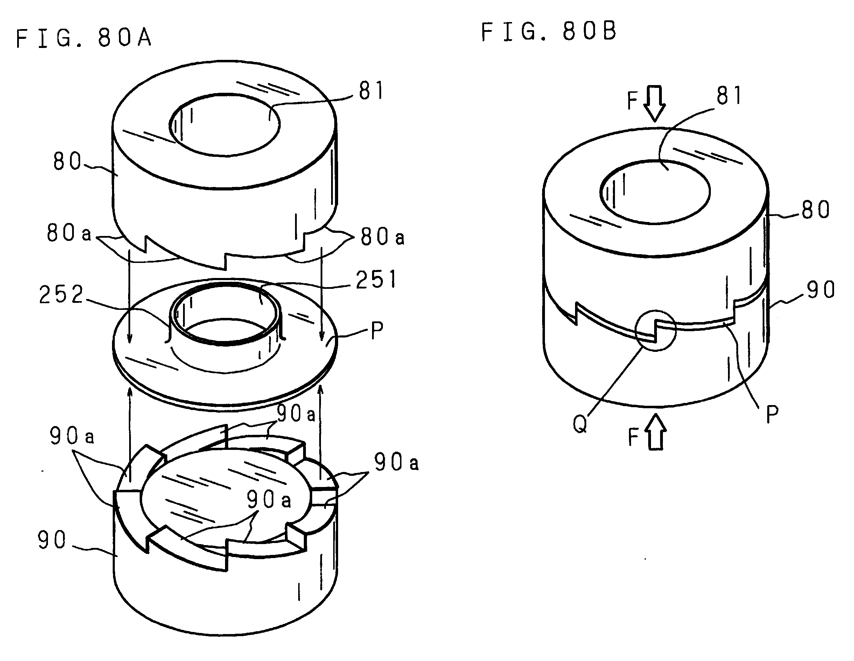

FIG. 79 is a perspective view showing the shape of the target plate 25. FIG. 80A and FIG. 80B are diagram showing a procedure for manufacturing the target plate 25. As shown in FIG. 79, the target plate 25 is a disc-shape plate having a fitting hole 215 in the axis thereof. The fitting hole 251 has an inner diameter corresponding to the outer diameter of the input shaft 21a or the output shaft 21b. The outer periphery of the target plate 25 is divided into a plurality of sections (8 in the illustrated case) in the circumferential direction such that each section has a predetermined width in the inward portion of the outer end of the target plate 25. The target plate 25 is bent to cause each section to face the same direction. Thus, 8 targets 250 each having the above-mentioned shape are integrally formed.

When the foregoing target plate 25 is manufactured, a material plate P having the fitting hole 251 at the axis thereof and formed into an annular shape is employed. The material plate P is manufactured by punching a thin plate made of magnetic material which may be a low-cost material, such as SPCC (Carbon Steels for machine structural use of Japanese Industrial Standard (JIS)). The fitting hole 251 is a through hole so as to be fitted to the input shaft 21a or the output shaft 21b from outside. The illustrated material plate P integrally comprises an edging boss portion 252 having a proper length.

As shown in FIG. 80A, the target plate 25 is manufactured by steps of coaxially placing the material plate P between an upper mold 80 and a lower mold 90; approaching the upper mold 80 and the lower mold 90; sandwiching the material plate P between the molds 80 and 90; and applying a predetermined pressing load F in the vertical direction.

As shown in FIG. 80A, eight tapered surfaces 90a each of which is inclined in the same direction with respect to the axial direction to make a predetermined angle are formed on the upper surface of the lower mold 90. The tapered surfaces 90a are inwards formed from the outer end to have a predetermined width at the same intervals in the circumferential direction, Also the lower surface of the upper mold 80 has tapered surfaces 80a similar to the tapered surfaces 90a. The circumferential surface of the material plate P held between the molds 80 and 90 is bent along the tapered surfaces 80a and 90a owing to the applied pressing load F. Then, the material plate P is sheared along the joint portion between the outer ends of the tapered surfaces 80a and 90a.

Therefore, the upper mold 80 and the lower mold 90 are separated from each other after the foregoing press-working process. Then, the molded product is removed. Thus, the bent portion formed along the tapered surfaces 80a and 90a is supplied from each other owing to the shearing process. Thus, as shown in FIG. 79, target plate 25 can be manufactured which has the targets 250 formed integrally with the outer end.

As shown in FIG. 80A and FIG. 80B, the upper mold 80 has a center through hole 81 capable of receiving the boss portion 252 formed at the axis of the material plate P. The center hole 81 receives the boss portion 252 projecting over the axis of the material plate P during the molding operation to prevent deviation of the position of the material plate P. The boss portion 252 maintains the shape formed before the molding process such that collapse between the upper mold 80 and the lower mold 90 can be prevented. The thus-manufactured target plate 25 is fitted to the input shaft 21a and the output shaft 21b from outside through the boss portion 252 as shown in FIG. 77. Any one of mounting methods including press-fitting, bonding or welding is employed to secure the target plate 25 in both of the circumferential direction and the axial direction, the target plate 25 being mounted coaxially with the two shafts 21a and 21b.

The targets 250 of the target plate 25 manufactured as described above is formed by the pressing process performed between the tapered surface 80a of the upper mold 80 and the tapered surface 90a of the lower mold 90. Therefore, the targets 250 realizes high accuracy of the shape thereof including the angle of inclination with respect to the axial direction and the length in the circumferential direction. Therefore, calculations of the rotational angle and the rotational torque in accordance with the outputs of the MR sensors 23a, 23b, 24a and 24b disposed opposite to the targets 250 can considerably accurately be performed.

On the other hand, the target plate 25 can easily be manufactured by one pressing operation performed between the upper mold 80 and the lower mold 90 shown in FIG. 80A and FIG. 80B. The material of the target plate 25 may be a low-cost thin plate made of magnetic material. Therefore, the magnitude cost can be reduced.

In this embodiment, the material plate P integrally comprising the boss portion 252 for edging the fitting hole 251 is employed. The boss portion 252 may be formed together with the targets 250 in the press-working process which is performed between the upper mold 80 and the lower mold 90. The boss portion 252 is formed by providing a projection which can be inserted into the center hole 81 of the upper mold 80 for the axis portion of the upper surface of the lower mold 90 and by bending the inner end of the fitting bole 251 at a position between the provided projection and the center hole 81.

In this embodiment, application is performed to the purpose for detecting the rotational angle (the steering angle) and the rotational torque (the steering torque) of the steering shaft 21 for connecting the steering wheel 1 and the steering mechanism of the steering apparatus for an automobile. As a matter of course, the device according to the present invention may widely be applied to the purpose for detecting the rotational angle and/or the rotational torque of the rotating shaft.

(Twenty-Ninth Embodiment)

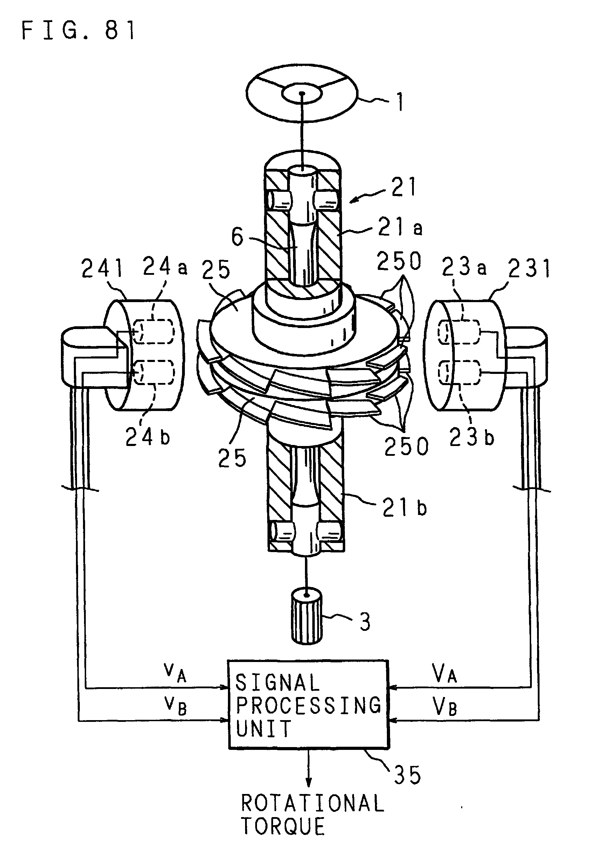

FIG. 81 is a schematic view showing the construction of the torque detecting device according to the present invention. As shown in FIG. 81, an input shaft (a first shaft) 21a having an upper end connected to a steering wheel 1 and an output shaft (a second shaft) 21b having a lower end connected to a pinion gear 3 of a steering mechanism are coaxially connected to each other through a torsion bar 6 having a small diameter. Thus, a steering shaft 21 for connecting the steering wheel 1 and the steering mechanism is constructed. The torque detecting device according to the present invention are constructions adjacent to a portion in which the input shaft 21a and the output shaft 21b are connected to each other. The constructions will now be described.

A disc-shape target plate 25 is coaxially fitted and secured to the input shaft 21a at a position adjacent to the portion for connecting the output shaft 21b. A plurality of targets (10 in figure) 250 are integrally formed on the outer surface of the target plate 25 by same intervals. The targets 250 are protrusions each of which is made of magnetic material and which are inclined with respect to the axial direction of the input shaft 21a to which the target plate 25 has been fit by substantially the same angles. A similar target plate 25 is fitted and secured to the output shaft 21b at a position adjacent to the portion in which the output shaft 21b and the input shaft 21a are connected to each other. A plurality of targets 250 each of which is inclined by substantially the same angle with respect to the axial direction of the output shaft 21b to which the target plate 25 has been fitted are provided on the circumferential surface of the target plate 25. The targets 250 are aligned to the targets 250 of the input shaft 21a in the circumferential direction.

Two sensor boxes 231 and 241 are disposed on the outside of the target plate 25 to, from different positions, face the outer ends of the targets 250 provided on the circumferential surface of the target plate 25. The sensor boxes 231 and 241 are secured and supported by a stationary portion, such as a housing which supports the input shaft 21a and the output shaft 21b.

The sensor box 231 includes an MR sensor 23a disposed opposite to the targets 250 for the input shaft 21a and an MR sensor 23b disposed opposite to the targets 250 for the output shaft 21b. The MR sensor 23a and the MR sensor 23b are accurately aligned in the circumferential direction. Similarly, the sensor box 241 includes an MR sensor 24a disposed opposite to the targets 250 for the input shaft 21a and an MR sensor 24b disposed opposite to the targets 250 for the output shaft 21b. The MR sensor 24a and the MR sensor 24b are accurately aligned in the circumferential direction.

The MR sensors 23a, 23b, 24a and 24b are sensors, such as the magnetoresistance effect elements (MR elements), having electric characteristics (the resistance) which are changed owing to an action of a magnetic field. The output voltage of each sensor is changed according to change in the ambient magnetic field. Outputs $V_A$, $V_B$, $v_A$ and $v_B$ of the MR sensors 23a, 23b, 24a and 24b are extracted to the outside of the sensor boxes 231 and 241 so as to be supplied to a signal processing unit 35 comprising a microprocessor.

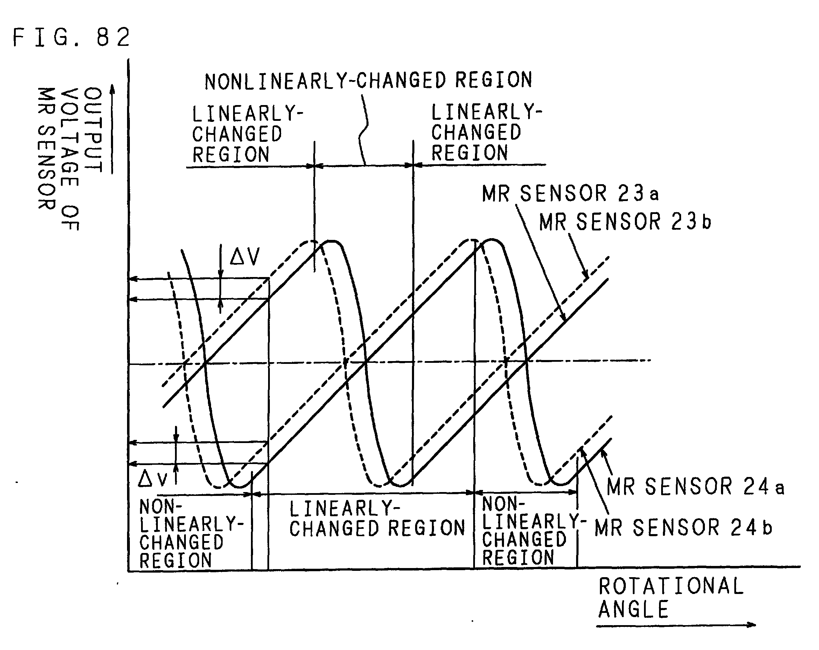

FIG. 82 is graph showing an example of change in the output voltages of the MR sensors 23a, 23b, 24a and 24b. The axis of abscissa of the graph stands for the rotational angle of the input shaft 21a or the output shaft 21b. A solid line in the graph indicates the output voltages of the MR sensors 23a and 24a for the input shaft 21a. A short dashed line indicates the output voltages of the MR sensors 23b and 24b for the output shaft 21b.

As described above, the MR sensors 23a, 23b, 24a and 24b are disposed opposite to the targets 250 which are provided on the circumferential surfaces of the input shaft 21a and output shaft 21b to make a predetermined angle of inclination and each of which is made of magnetic material. The length of each of the targets 250 is finite in the circumferential direction of the input shaft 21a or the output shaft 21b. Thus, a discontinuous portion is present among the targets 250. Therefore, when the input shaft 21a and output shaft 21b have been rotated around the axis, the MR sensors 23a, 23b, 24a and 24b output voltage signals which are linearly changed to correspond to change in the rotational angle of the input shaft 21a or the output shaft 21b during passing of the corresponding targets 250. When the discontinuous portion between the adjacent targets 250 passes, voltage signals which are nonlinearly changed to correspond to the change in the rotational angle are outputted.

As a result, the output voltages of the MR sensors 23a, 23b, 24a and 24b are, as shown in FIG. 82, the region (the linearly-changed region) in which the linear change occurs during each target 250 passes and the region (nonlinearly-changed region) in which the nonlinear change occurs during each discontinuous portion between each target 250 passes are repeated during passing of each of the targets 250. The period of the repetition corresponding to the number of the targets 250 provided on the circumferential surface of the target plate 25. In a case where 10 targets 250 are provided on the circumferential surface of the target plate 25, the foregoing repetition occurs such that a period of time in which the input shaft 21a or the output shaft 21b is rotated by 36° (= 360°/10).

The output voltages $V_A$ and $v_A$ of the MR sensor 23a and 24a correspond to the rotational angle of the input shaft 21a provided with the targets 250 to which the MR sensors 23a and 24a are disposed to opposite. The output voltages $V_B$ and $v_B$ of the MR sensors 23b and 24b correspond to the rotational angle of the output shaft 21b provided with the targets 250 to which the MR sensors 23b and 24b are disposed to opposite. Therefore, the voltage difference $\Delta V$ (= $V_A$ - $V_B$) between the output voltage $V_A$ of the MR sensor 23a and the output voltage $V_B$ of the MR sensor 23b or the voltage difference $\Delta v$ (= $v_A$ - $v_B$) between the output voltage $v_A$ of the MR sensor 24a and the output voltage $v_B$ of the MR sensor 24b correspond to an amount of deviation of the position in the circumferential direction generated between the targets 250 for the input shaft 21a and the targets 250 for the input shaft 21a. That is, the foregoing difference corresponds to the difference (relative displacement of the angle) in the rotational angle between the input shaft 21a and the output shaft 21b. The relative displacement of the angle corresponds to an amount of twisting generated in the torsion bar 6 for connecting the input shaft 21a and the output shaft 21b when the rotational torque which is applied on the input shaft 21a is effective. Thus, the rotational torque (the steering torque) applied on the input shaft 21a can be calculated in accordance with the voltage difference $\Delta V$ or $\Delta v$.

The reason why the two MR sensors 23a and 24a and the two MR sensors 23b and 24b are disposed on the outside of the targets 250 of the input shaft 21a and the output shaft 21b will now be described. An uncertain output obtainable in the nonlinearly-changed region shown in FIG. 82 must be omitted when the calculation of the rotational torque is performed. The two MR sensor 23a and 23b in the sensor box 231 and the two MR sensor 24a and 24b in the other sensor box 241 are disposed opposite to each other such that the phases are shifted by a half period in the circumferential direction of each target plate 25. As shown in FIG. 82, when either pair of the outputs is in the nonlinear region, the other pair of the outputs is in the linearly-changed region.

The calculation of the rotational torque is performed by the signal processing unit 35 to which the output voltages of the MR sensors 23a, 23b, 24a and 24b are inputted. The signal processing unit 35 selects either pair from a pair consisting of the MR sensors 23a and 23b and a pair consisting of the MR sensor 24a and the MR sensor 24b which is present in the linearly-changed region. The outputs and the difference in the output of the selected sensors are used to calculate the torque. Since the calculating procedure has been described, the procedure is omitted from description.

To accurately calculate the rotational torque, change in the output of the MR sensors 23a and 23b and the MR sensors 24a and 24b in the linearly-changed region for use in the calculation stably occurs. However, the torsion bar 6 for connecting the input shaft 21a and the output shaft 21b is twisted owing to the rotational torque applied on the input shaft 21a. Moreover, there is apprehension that deflection and deformation of the torsion bar 6 occur in the cross section including the axis. The influence of the deflection and deformation causes change in the output of the MR sensors 23a and 23b and the MR sensor 24a and the MR sensor 24b to become unstable. Therefore, the accuracy of calculating the rotational torque sometimes determines.

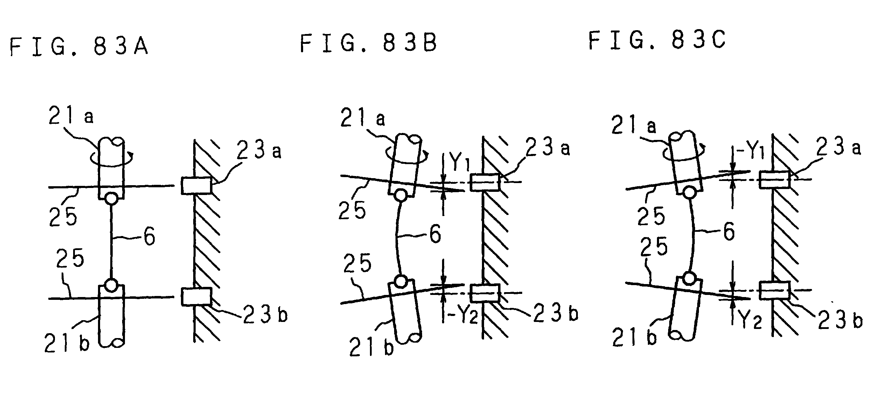

FIG. 83A, FIG. 83B and FIG. 83C are diagram showing an influence of the deflection of the torsion bar 6 on the output of the MR sensor. The torque detecting device constructed as described above comprises the target plate 25 fitted to the input shaft 21a and the output shaft 21b connected to each other by the torsion bar 6; and the MR sensor 23a and the MR sensor 23b (the MR sensor 24a and MR sensor 24b are omitted from illustration) provided on the circumferential surface of the target plate 25.

FIG. 83A shows a state in which the torsion bar 6 is free from deflection. When the input shaft 21a and the output shaft 21b have been rotated in the foregoing state, the target plate 25 fitted to each of the input shaft 21a and the output shaft 21b rotates while maintaining its attitude. Thus, the relationship of the position from the MR sensors 23a and 23b disposed on the circumferential surface of the target plate 25 is not changed.

FIG. 83B and FIG. 83C shows a state in which deflection of the torsion bar 6 has occurred. When the input shaft 21a and the output shaft 21b have been rotated in the foregoing state, individual rotation occurs at the connection end of the torsion bar 6 to correspond to the angle of deflection. Thus, movement having width of $Y_1$ and $Y_2$ in the axial direction occurs at the outer end of the target plate 25 in opposite directions. Thus, an air gap between the MR sensors 23a and 23b disposed opposite to each other is changed.

The states shown in FIG. 83B and FIG. 83C are repeatedly realized such that one rotation of the input shaft 21a and the output shaft 21b is one period. Therefore, the fluctuation component corresponding to the movement widths $\pm Y_1$ and $\pm Y_2$ are superimposed on the output of the MR sensors 23a and 23b opposite to the target plate 25. The rotational torque calculated in accordance with the output including the fluctuation component includes an error corresponding to the movement widths $\pm Y_1$ and $\pm Y_2$. As a result, the calculating accuracy of the rotational torque deteriorates.

To prevent the deterioration in the detecting accuracy, the present invention is constructed as follows.

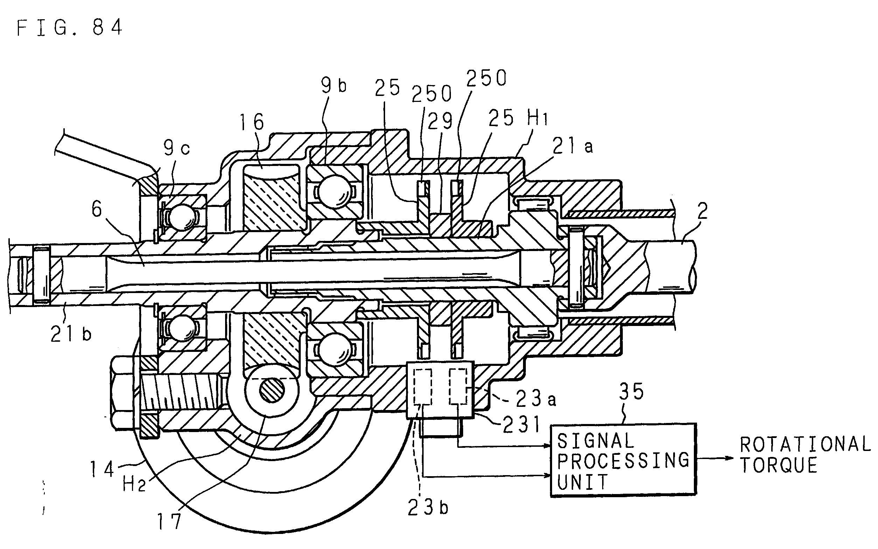

FIG. 84 is a vertical cross sectional view showing an essential portion of a steering apparatus for an automobile comprising the torque detecting device according to the present invention. Referring to FIG. 84, reference numeral 21a represents an input shaft and 21b represents an output shaft. Both of the input shaft 21a and the output shaft 21b are hollow shafts which are coaxially connected to each other through a torsion bar 6 having a smaller diameter and inserted into the hollow portions. The input shaft 21a and the output shaft 21b are rotatively supported in a common housing formed into a cylindrical shape.

The housing is constructed by coaxially integrating a sensor housing $H_1$ for the input shaft 21a and a transmission housing $H_2$ for the output shaft 21b. The upper end of the input shaft 21a projecting over (in the right-hand portion of the drawing) the sensor housing $H_1$ is connected to a steering wheel (not shown) through an upper shaft (a steering column) 2. Thus, rotational torque applied on the steering wheel for steering acts through the upper shaft 2. Moreover, the lower end of the output shaft 21b downwards projecting (the left-hand portion of the drawing) over the transmission housing $H_2$ is connected to a steering mechanism (not shown) through connecting members including a universal joint. Thus, rotations of the output shaft 21b are transmitted to the steering mechanism so that steering is performed.

The output shaft 21b is supported by pairwise bearings (ball bearings) 9c and 9b secured to the transmission housing $H_2$ and the lower opening of the sensor housing $H_1$, the output shaft 21b is being supported in an inboard support manner. A worm wheel 16 is coaxially secured between the support positions. A worm gear 17 integrally formed with an output end of an electric Motor 14 for assisting steering is engaged to the circumferential surface of the worm wheel 16. Thus, rotations of the electric motor 14 are transmitted to the output shaft 21b at a predetermined reduction ratio through the worm gear 17 and the worm wheel 16.

The sensor housing $H_1$ includes the target plate 25 secured to each of the input shaft 21a and the output shaft 21b; and the MR sensors 23a and 23b disposed opposite to the target plate 25. Thus, the torque detecting device according to the present invention is constructed.

The target plate 25 is a disc-shape member having a plurality of the targets 250 formed as described above and provided on the circumferential surface thereof. Either of the target plate 25 is press-fit to the upper end of the output shaft 21b projecting over the bearing 9b through the boss portion coaxially projecting. Thus, the target plate 25 is able to integrally rotate together with the output shaft 21b. The other target plate 25 is fitted to an intermediate portion of the input shaft 21a through the projecting boss portion so as to be secured to the target plate 25 for the output shaft 21b by press-fitting such that the circumferential positions are aligned. Thus, the target plate 25 is able to integrally rotate together with the input shaft 21a.

A limiting ring 29 formed into an annular shape having a rectangular cross section is engaged and supported by the input shaft 21a at a position between the target plates 25. The limiting ring 29 has two sides brought into contact with the opposite surfaces of the target plates 25.

The MR sensors 23a and 23b are disposed in the sensor box 231 secured to the wall of the sensor housing $H_1$ such that the MR sensors 23a and 23b are disposed opposite to the circumferential surface of the target plate 25 having the targets 250. As described above, the MR sensors 23a and 23b are the MR sensors capable of generating outputs which are changed to correspond to passing of the targets 250 caused from rotation of the input shaft 21a or the output shaft 21b. The outputs of the MR sensors 23a and 23b are supplied to the signal processing unit 35.

The signal processing unit 35 calculates, as described above, the rotational torque applied on the input shaft 21a in accordance with the difference in the output between the MR sensors 23a and 23b. FIG. 84 shows one MR sensor 23a and one MR sensor 23b for each of the target plates 25 engaged to and supported by the input shaft 21a and the output shaft 21b such that the MR sensors 23a and 23b are disposed opposite to the target plates 25. However, it is preferable that two MR sensors 23a and 24a and two MR sensors 23b and 24b are disposed opposite to each other as shown in FIG. 81. Thus, the MR sensors 23a and 23b or MR sensor 24a and the MR sensor 24b are selected to use in the calculation of the rotational torque.

As shown in FIG. 84, the torque detecting device according to the present invention comprises the limiting ring 29 interposed between the opposite target plates 25 to which the MR sensors 23a and 23b are opposite. The two sides of the limiting plat 29 are brought into contact with the opposite surfaces of the target plates 25. Thus, inclination of the target plate 25 is limited in the plane including the axis of each of the input shaft 21a and output shaft 21b. Thus, the target plate 25 rotates without any movement of the outer end to correspond to the rotations of the input shaft 21a and the output shaft 21b. Therefore, change in the air gap between the targets 250 provided on the circumferential surface of the target plates 25 and the MR sensors 23a and 23b can considerably be prevented. Therefore, change factor of the air gap which is superimposed on the outputs of the MR sensors 23a and 23b can be reduced. As a result, calculation of the rotational torque which is performed by the signal processing unit 35 can accurately be performed.

The limiting member for limiting inclination of the target plate 25 may arbitrarily be constructed. The limiting ring 29 formed into the annular shape having the rectangular cross section can easily be manufactured. Moreover, fitting can easily be performed by engaging the input shaft 21a. When the two sides of the limiting ring 29 are brought into contact with the target plates 25, a required effect can be obtained. The limiting ring 29 may be engaged to and supported by the output shaft 21b. The shape of the limiting ring 29 is not limited to the rectangular cross sectional shape. Thus, an annular member having a required shape can be employed for limiting ring 29.

In the foregoing embodiment, the present invention is applied to the purpose for detecting the rotational angle (the steering angle) and the rotational torque (the steering torque) of the steering shaft 21 for connecting the steering wheel 1 and the steering mechanism of the steering apparatus for an automobile. As a matter of course, the device according to the present invention may widely be applied to the purpose for detecting the rotational angle and/or rotational torque of a rotating shaft.

INDUSTRIAL APPLICABILITY

In the first invention, the portion of the rotor which is magnetically discontinuous in the axial and circumferential directions of the rotor is provided on the surface of the rotor. The magnetic sensor detects the position of the discontinuous portion in the axial direction. In accordance with the position detected by the magnetic sensor, the rotational angle of the rotor from the magnetic sensor as the base point is detected. As a result, the rotational angle detecting device which does not comprise any contact and sliding portion and which realizes satisfactory durability can be realized.

In the second invention, the portion of the rotor which is magnetically discontinuous in the axial and circumferential directions of the rotor is spirally provided on the surface of the rotor. Therefore, the position of the portion which is magnetically discontinuous in the axial direction of the rotor and the rotational angle of the rotor made from the magnetic sensor as the base point can be made correspond to each other. When the position of the portion which is magnetically discontinuous in the axial direction of the rotor is detected, the rotational angle of the rotor from the magnetic sensor as the base point can be detected. As a result, the rotational angle detecting device which does not comprise any contact and sliding portion and which realizes satisfactory durability can be realized.

In the third invention, the plural portions which are magnetically discontinuous are provided on the surface of the rotor at the same intervals. Therefore, change in the position of the portion which is magnetically discontinuous in the axial direction of the rotor can be enlarged with respect to the rotational angle from the magnetic sensor as the base point. Therefore, the amplifying gain can be reduced. Thus, satisfactory stability against disturbance can be realized.

In the fourth invention, the portion which is magnetically discontinuous is provided nonlinearly with respect to the rotational angle to make an output of the magnetic sensor to be linear with respect to the rotational angle. In particular, the output of the magnetic sensor disposed at an end of the portion which is magnetically discontinuous can be made to be linear with respect to the rotational angle. Therefore, a rotational angle detecting device which does not comprise a multiplicity of sensors, the cost of which can be reduced and which has a linear output characteristic can be realized.

Since the fifth invention is constructed such that the portion which is magnetically discontinuous is divided into an axial direction of said rotor at the same position of the circumferential direction of said rotor, and the divided portions are connected with each other in an axial direction of said rotor. Therefore, the rotational angle detecting device in which the output is free from any fluctuation at an end of the portion which is magnetically discontinuous can be realized.

Since the sixth invention has the construction such that the portion which is magnetically discontinuous is formed by winding a coil around the circumferential surface of the rotor and by welding or bonding the coil, time required a processing can be shortened. Therefore, the manufacturing cost can be reduced.

Since the seventh invention has the construction such that the portion which is magnetically discontinuous is formed by irradiating the circumferential surface of the rotor with the energy beam, an adjustment process can easily be completed. Therefore, the pattern of the portion which is magnetically discontinuous can accurately and freely be processed.

In the eighth invention, the protrusion made of the magnetic material is spirally provided on the circumferential surface of the rotor. Moreover, the magnetoresistance effect element detects the position of the protrusion in the axial direction of the rotor. In accordance with the detected position, the rotational angle of the rotor from the plural magnetoresistance effect elements as the base points of the rotor is detected. As a result, the rotational angle detecting device which does not comprise any contact and sliding portion and which realizes satisfactory durability can be realized.

In the ninth invention, the torque applied on the input shaft is detected in accordance with the torsional angle generated in the connecting shaft for connecting the input shaft and the output shaft. The rotational angle detecting device according to any one of the first invention to eighth invention is attached to each of the input shaft and the output shaft. The rotational angle difference detector detects the difference in the rotational angle detected by each of the rotational angle detecting devices. The detected difference of the rotational angle is made to be the torsional angle. Thus, a torque detecting device realizing a simple construction and capable of reducing manufacturing cost can be realized.

In the tenth invention, the torque applied on the input shaft is detected in accordance with the torsional angle generated in the connecting shaft for connecting the input shaft and the output shaft. The rotational angle detecting device according to any one of the first invention to eighth invention is attached to each of the input shaft and the output shaft. Thus, the difference in the reversed polarity between the detection signals outputted from the rotational angle detecting devices is calculated by the two first calculators. The second calculator calculates the difference in the differences calculated by the two first calculators. The difference calculated by the second calculator is made to be the torsional angle. Thus, the difference between the detection signals outputted from the rotational angle detecting devices is enlarged. As a result, the amplifying gain can be reduced. Thus, the torque detecting device which is stable against disturbance, which realizes a simple construction and which is able to reduce the manufacturing cost can be realized.

In the eleventh invention, the input shaft is connected to the steering wheel, the electric motor for assisting steering is driven and controlled in accordance with the steering torque applied on the steering wheel and the output shaft is interlocked to the electric motor for assisting steering. The torque detecting device according to the ninth invention or the tenth invention detects the steering torque applied on the input shaft in accordance with the torsional angle generated in the connecting shaft for connecting the input shaft and the output shaft. The rotational angle detecting device included in the torque detecting device detects the steering angle of the steering wheel. As a result, the steering apparatus comprising the torque detecting device according to the ninth invention or the tenth invention can be realized. Moreover, the steering apparatus is able to use two rotational angle detecting devices according to any one of the first invention to eighth invention as the rotational angle detecting devices.

In the twelfth invention, the portion which is magnetically discontinuous is provided for the circumferential surface of each of the input shaft and the output shaft connected to each other by a connecting shaft such that the portion which is magnetically discontinuous is displaced in the axial direction and a circumferential direction. The first and second magnetic sensors detect the position of the portion which is magnetically discontinuous in the axial direction of each of the input shaft and the output shaft. The third and fourth magnetic sensors detect the position of the portion which is magnetically discontinuous in the axial direction which is disposed apart from the positions detected by the first and second magnetic sensors. The judging unit judges whether or not the positions detected by the first to fourth magnetic sensors are included in a predetermined range. The selector selects the positions for detecting the torsional angle of the connecting shaft for each of the input shaft and the output shaft. The torsional angle detector detects the torsional angle in accordance with the positions selected by the selector so that torque which is applied on the input shaft is detected in accordance with the torsional angle detected by the torsional angle detector. Therefore, when a sag portion is present in the characteristic of the output voltage of the magnetic sensors, torque can be detected. Thus, the torque detecting device can be realized which is capable of easily managing the accuracy of the output voltage of the magnetic sensor when a manufacturing process is performed.

In the thirteenth invention, the corrector corrects the torsional angle detected by the torsional angle detector in accordance with the position and the predetermined intervals selected by the selector. Therefore, the output voltage of each of the third and fourth magnetic sensors for detecting the positions different from the positions detected by the first and second magnetic sensors by a predetermined angle is used to correct the sag portion of the output voltage of each of the first and second magnetic sensors. Therefore, when a sag portion is present in the characteristic of the output voltage of the first and second magnetic sensors, torque can be detected. Thus, the torque detecting device can be realized which is capable of easily managing the accuracy of the output voltage of the magnetic sensor when a manufacturing process is performed.

In the fourteenth invention, the calculator calculates the corrective value for correcting the torsional angle detected by the torsional angle detector in accordance with the positions selected by the selector and the positions detected by the first to fourth magnetic sensors. The corrector corrects the torsional angle in accordance with the corrective value calculated by the calculator and the positions selected by the selector. Thus, the output voltage of each of the third and fourth magnetic sensors for detecting the position different from the positions detected by the first and second magnetic sensors by a predetermined angle is used to correct the sag portion of the output voltage of each of the first and second magnetic sensors. Therefore, when a sag portion is present in the characteristics of the output voltage of the magnetic sensors, torque can be detected. Thus, the torque detecting device can be realized which is capable of easily managing the accuracy of the output voltage of the magnetic sensor when a manufacturing process is performed.

In the fifteenth invention, the portion which is magnetically discontinuous is spirally formed on the circumferential surface of each of the input shaft and the output shaft. Therefore, the position in the axial direction detected by each magnetic sensor and the angle in the circumferential direction can be made correspond to each other. Therefore, when, a sag portion is present in the characteristic of the output voltage of the magnetic sensor, torque can be detected. Thus, the torque detecting device can be realized which is capable of easily managing the accuracy of the output voltage of the magnetic sensor when a manufacturing process is performed.

In the sixteenth invention, the plural portions which are magnetically discontinuous are provided on the circumferential surfaces of the input shaft and the output shaft at the same intervals. Therefore, the output voltage of the magnetic sensor per angle in the circumferential direction can be enlarged. Therefore, when a sag portion is present in the characteristic of the output voltage of the magnetic sensor, torque can be detected. Thus, the torque detecting device can be realized which is capable of easily managing the accuracy of the output voltage of the magnetic sensor when a manufacturing process is performed.

In the seventeenth invention, the portion which is magnetically discontinuous is a protrusion made of the magnetic material. Therefore, when a sag portion is present in the characteristics of the output voltage of the magnetic sensor, torque can be detected. Thus, the torque detecting device can be realized which is capable of easily managing the accuracy of the output voltage of the magnetic sensor when a manufacturing process is performed.

In the eighteenth invention, the storage units store the electric signals which are outputted to correspond to the positions detected by the first to fourth magnetic sensors and electric signals which are previously set and must be outputted to correspond to the positions detected by the first to fourth magnetic sensors corresponding to one another. The output unit outputs the electric signal which must be outputted in accordance with the electric signal outputted from the first to fourth magnetic sensors and the contents stored in each of the storage units. Thus, each electric signal outputted from the output unit is made to be each signal indicating the position detected by each of the first to fourth magnetic sensors. Therefore, when a sag portion is present in the characteristic of the output voltage of the magnetic sensors, torque can be detected. Thus, the torque detecting device can be realized which is capable of easily managing the accuracy of the output voltage of the magnetic sensor when a manufacturing process is performed.

In the nineteenth invention, the input shaft is connected to the steering wheel. The electric motor for assisting steering is driven and controlled in accordance with the steering torque applied on the steering wheel. The output shaft is interlocked to the electric motor. Any one of the torque detecting device according to the twelfth invention to eighteenth invention detects the steering torque applied on the input shaft in accordance with the torsional angle generated in the connecting shaft for connecting the input shaft and the output shaft. Thus, the steering apparatus can be realized which is capable of detecting torque when a sag portion is present in the characteristic of the output voltage of the magnetic sensors of the torque detecting device and easily managing the accuracy of the output voltage of the magnetic sensor when the torque detecting device is manufactured.

In the twentieth invention, the portion which is magnetically discontinuous is provided on the circumferential surface of the rotating shaft such that the portion which is magnetically discontinuous is displaced in the axial and circumferential directions of the rotating shaft. The first magnetic sensor detects the position of the portion in the axial direction. Thus, the rotational angle from the first magnetic sensor as the base point of the rotating shaft is detected in accordance with the position detected by the first magnetic sensor. The one or more second magnetic sensors are provided for detecting a position distant from the position which must be detected by the first magnetic sensor for a predetermined distance. The judging unit judges a breakdown in accordance with the distance of the positions detected by the second and first magnetic sensors. Thus, the rotational angle detecting device can be realized which does not include a contact and sliding portion, which realizes satisfactory durability, and a breakdown of which can easily be detected.

In the twenty-first invention, the portion which is magnetically discontinuous is spirally provided on the circumferential surface of the rotating shaft in the axial and circumferential directions thereof. By detecting the position of the portion which is magnetically discontinuous in the axial direction, the rotational angle of the rotating shaft from the first magnetic sensor as the base point can be detected. The one or more second magnetic sensors are provided for detecting positions distant from the position which must be detected by the first magnetic sensor for a predetermined distance. The judging unit judges breakdown in accordance with the distance between positions detected by the second magnetic sensor and the first magnetic sensor. Thus, the rotational angle detecting device can be realized which does not include a contact and sliding portion, which realizes satisfactory durability, and a breakdown of which can easily be detected.

In the twenty-second invention, the protrusion made of magnetic material is spirally formed on the circumferential surface in the axial direction of a rotating shaft. The first magnetic sensor detects the position of the protrusion in the axial direction of the rotating shaft. Thus, the rotational angle of the rotating shaft from the first magnetic sensor as the base point in the circumferential direction is detected. The one or more second magnetic sensor are provided for detecting a position distant from the position which must be detected by the first magnetic sensor for a predetermined distance. The judging unit judges breakdown in accordance with the distance of the positions detected by the second magnetic sensor and the first magnetic sensor. Thus, the rotational angle detecting device can be realized which does not include a contact and sliding portion, which realizes satisfactory durability, and a breakdown of which can easily be detected.

In the twenty-third invention, the torque applied on the input shaft is detected in accordance with the torsional angle generated in the connecting shaft for connecting the input shaft and the output shaft. The rotational angle detecting device according to any one of the twentieth invention to the twenty-second invention is attached to each of the input shaft and the output shaft. The detector detects the difference in the rotational angle detected by each of the rotational angle detecting devices. The detected difference in the rotational angle is made to be the torsional angle generated in the connecting shaft. Thus, the torque detecting device can be realized which has a simple construction, which is capable of reducing the manufacturing cost and which is arranged to detect breakdown.

In the twenty-fourth invention, the input shaft is connected to the steering wheel. The electric motor for assisting steering is driven and controlled in accordance with steering torque applied on the steering wheel. The output shaft is interlocked to the electric motor. The torque detecting device according to the twenty-third invention detects the steering torque applied on the input shaft in accordance with the torsional angle generated in the connecting shaft for connecting the input shaft and the output shaft. Thus, the rotational angle detecting device included in the torque detecting device detects the rotational angle of the steering wheel. Thus, the steering apparatus comprising the torque detecting device according to the twenty-third invention can be realized. Moreover, the steering apparatus is able to use either or both of the rotational angle detecting device according to any one of the twentieth invention to twenty-second invention as the rotational angle detecting device.

In the twenty-fifth invention, the first and second magnetic sensors detect the positions of portions which are magnetically discontinuous formed on the circumferential surface of each of the input shaft and the output shaft connected to each other by a connecting shaft with displacement in the axial and circumferential directions. The position of the portion distant from the position of the portion detected by the first magnetic sensor and the second magnetic sensor for a predetermined distance in the circumferential direction and/or the axial direction is detected by the third and fourth magnetic sensors. Then, whether or not the position detected by each of the first to fourth magnetic sensors is present in a first range is judged. The position for detecting the torsional angle of the connecting shaft is selected for each of the input shaft and the output shaft in accordance with a judgement result. The torsional angle is detected in accordance with each of the selected positions. The torque applied on the input shaft is detected in accordance with the detected torsional angle. The first selector selects a pair from a pair consisting of the first magnetic sensor and the second magnetic sensor and a pair consisting of the third magnetic sensor and the fourth magnetic sensor which does not include a magnetic sensor encountered breakdown when any one of the first to fourth magnetic sensor has encountered breakdown. The judging unit judges whether or not the position of the portion detected by the magnetic sensors in the pair selected by the first selector is present in a second range which is larger than the first range; and a detector for detecting the torsional angle in accordance with the position of the portion when the judging unit has judged that the position of the portion is present in the second range. Thus, the torque applied on the input shaft is detected in accordance with the torsional angle detected by the detector. Thus, the torque detecting device can be realized which comprises four magnetic sensors and which is capable of preventing interruption of torque detection in a case where breakdown of one of the magnetic sensors has occurred so that assisting steering is not rapidly changed.

In the twenty-sixth invention, the second selector selects the pair from the pair consisting of the first magnetic sensor and the third magnetic sensor and the pair consisting of the second magnetic sensor and the fourth magnetic sensor which does not include the magnetic sensor encountered breakdown. The judging unit judges whether or not the two positions detected by the pairwise magnetic sensors selected by the second selector are present in the first range. The third selector selects one position from the two positions in accordance with a judgement result made by the judging unit. The corrector corrects the position selected by the third selector in accordance with the two positions and each of a predetermined distance. Thus, whether or not the position of the portion is present in the second range in accordance with the position corrected by the corrector. As a result, the torque detecting device can be realized which comprises the four magnetic sensors and which is capable of preventing interruption of torque detection in a case where breakdown of one of the magnetic sensors has occurred so that assisting steering is not rapidly changed.

In the twenty-seventh invention, the portion which is magnetically discontinuous is spirally provided on the circumferential surface of each of the input shaft and the output shaft. Therefore, the position detected by each of the magnetic sensors in the axial direction and an angle in the circumferential direction can be made correspond to each other. Therefore, the torque detecting device can be realized which is capable of preventing interruption of torque detection in a case where breakdown of one of the four magnetic sensors has occurred so that assisting steering is not rapidly changed.

In the twenty-eighth invention, a plurality of the portions which are magnetically discontinuous are provided on the circumferential surface of each of the input shaft and the output shaft at the same intervals. Therefore, the output voltage of the magnetic sensor per angle in the circumferential direction can be raised. Therefore, the torque detecting device can be realized which is capable of preventing interruption of torque detection in a case where breakdown of one of the four magnetic sensors has occurred so that assisting steering is not rapidly changed.

In the twenty-ninth invention, the portion which is magnetically discontinuous is a protrusion made of magnetic material. Therefore, the torque detecting device can be realized which is able to detect the torque when a sag portion is present in the characteristic of the output voltage of the magnetic sensor and which is capable of preventing interruption of torque detection in a case where breakdown of one of the four magnetic sensors has occurred so that assisting steering is not rapidly changed.

In the thirtieth invention, the input shaft is connected to the steering wheel. The electric motor for assisting steering is driven and controlled in accordance with steering torque applied on the steering wheel. The output shaft is interlocked to the electric motor. The torque detecting device according to any one of the twenty-fifth invention to twenty-ninth invention detects the steering torque applied on the input shaft in accordance with the torsional angle generated in the connecting shaft for connecting the input shaft and the output shaft. Thus, the steering apparatus can be realized which comprises a torque detecting device having four magnetic sensors, which is capable of preventing interruption of torque detection in a case where breakdown of one of the four magnetic sensors has occurred so that assisting steering is not rapidly changed.

In the thirty-first invention, the hysteresis of the output of the magnetic sensor disposed opposite to the targets is monitored. In accordance with the maximum value and the minimum value of the output generated during passing of the previous target, the gain with which the output of the magnetic sensor during passing of a next target is multiplied is sequentially corrected. When the next target passes, the rotational angle is calculated in accordance with a result of multiplication of the actual output of the magnetic sensor with the corrective gain. Thus, change in the output characteristics of the magnetic sensor caused from an influence of the temperature and an influence caused from time is compensated.

In the thirty-second invention, the difference between the maximum value and a minimum value of the output of the magnetic sensor during passing of the target is obtained as a value on which any influence of change of the air gap is not exerted. The reference gain set with respect to the reference difference is multiplied with the ratio of the difference and the predetermined reference difference to obtain an accurate corrective gain. In a period in which the next target passes, the corrective gain is multiplied with the actual output of the magnetic sensor so as to be made coincide with the reference output characteristic. In accordance with a result, an accurate rotational angle is calculated.

In the thirty-third invention, the hysteresis of the output of the magnetic sensor disposed opposite to the targets is monitored. In accordance with the maximum value and the minimum value of the output during passing of the previous target, the offset amount superimposed on the output owing to change of the air gap between the target and the magnetic sensor is sequentially obtained. In a period in which a next target passes, the obtained amount of offset for the previous target is added to the actual output of the magnetic sensor to omit an error in the output caused from change of the air gap. In accordance with a result, an accurate rotational angle is calculated.

In the thirty-fourth invention, the average value of the maximum value and the minimum value of the output of the magnetic sensor during passing of the previous target is obtained as a value on which any influence is exerted from the output characteristics of the magnetic sensor. The difference between the foregoing value and the predetermined reference average value is made to be the offset amount which is added to the output of the magnetic sensor generated in a period in which a next target passes. In accordance with a result of addition, an accurate rotational angle from which an influence of change of the air gap has been omitted is calculated.

In the thirty-fifth invention, a plurality of the magnetic sensors are provided in the circumferential direction of the target such that the phases of the magnetic sensors are shifted in the circumferential direction. Therefore, influences of the difference in the output characteristics of each magnetic sensor and that in the air gap between each magnetic sensor and the target can be eliminated. Thus, an accurate rotational angle is calculated.

In the thirty-sixth invention, two rotational angle detecting devices which can obtain an accurate rotational angle without any influence of the output characteristics of each magnetic sensor and that of the air gap between the magnetic sensor and the target are disposed in the axial direction of the rotating shaft which must be detected. In accordance with the difference in the rotational angle detected by each of the rotational angle detecting devices, the rotational torque applied on the rotating shaft can accurately be detected.

In the thirty-seventh invention, the member formed by coaxially connecting the first shaft and the second shaft through the torsion bar must be detected. The target is parallelly provided for each of the first and second shafts. Moreover, a magnetic sensor is disposed opposite to the targets to accurately detect the rotational torque applied on the first and second shafts in accordance with the difference in the rotational angle generated between the two shafts with a twist of the torsion bar.

In the thirty-eighth invention, above-mentioned rotational angle detecting device and torque detecting device are applied to the steering apparatus for an automobile. Accurately detected values of the steering angle and the steering torque are obtained. The obtained results are used to, for example, drive and control the rotation of the electric motor for assisting steering. Thus, a reliable electric power steering apparatus is provided.

In the thirty-ninth invention, the torque detecting device has the construction that the two pairs of the targets and the magnetic sensors are provided in the axial direction of the rotating shaft which must be detected. In accordance with the difference in the output between the magnetic sensors in the two pairs, the rotational torque is calculated. When change in the outputs of the selected magnetic sensors in the two pairs which are being used to calculate the rotational torque is observed, attention is given to a fact that the sign of the difference in the output is inverted between a linearly-changed region and a nonlinearly-changed region. In accordance with inversion of the sign and reduction in the absolute value of the difference in the output occurring before the inversion, shift from the linearly-changed region to the nonlinearly-changed region is judged. In accordance with a result of the judgement, a magnetic sensor for use to calculate the rotational torque is selected.

In the fortieth invention, a judgement is performed such that the output of the selected magnetic sensor is being shifted from the linearly-changed region to the nonlinearly-changed region when the absolute value of the difference in the output of the magnetic sensors for use to calculate the present rotational torque is smaller than the absolute value of the difference in the output of the non-selected magnetic sensor, that is, the magnetic sensor which is not used to calculate the present rotational torque. Thus, switching of the magnetic sensor which is being selected at present to the non-selected magnetic sensor is performed. When the difference in the output of the non-selected magnetic sensor presents in the nonlinearly-changed region, there is apprehension that the foregoing relationship about the magnitude of the absolute value is held. Therefore, also the sign of the difference in the output of the magnetic sensors which are being selected and those which are not being selected is detected. The foregoing switching is performed only when the signs of the differences are the same.

In the forty-first invention, the targets are parallelly provided on the first shaft and the second shaft coaxially connected to each other through the torsion bar. Two magnetic sensors are disposed opposite to each other on the outside of each target. The great difference in the rotational angle generated between the two shafts with twisting of the torsion bar is accurately detected by selecting the magnetic sensor. A result of the detection is used to accurately detect the rotational angle which is applied on the first and second shafts.

In the forty-second invention, the torque detecting device according to the thirty-ninth invention to forty-first invention capable of accurately calculating the torque is applied to a steering apparatus for an automobile. An accurately detected value of the steering torque which is applied on the steering shaft for performing steering is detected. A result of the detection is used to perform various controls, such as control of the electric motor for assisting steering.

In the forty-third invention, the hysteresis of the outputs of the magnetic sensors opposite to the targets disposed apart from one another in the axial direction of the rotating shaft is monitored. The average value of the outputs of the magnetic sensors in a period in which the previous target passes is obtained. The corrective gain for making the outputs of the two magnetic sensors to coincide with the foregoing average value is previously set. In a period in which a next target passes, the outputs of the magnetic sensors are not directly used. As an alternative to this, a result obtained by multiplying the set corrective gain with the foregoing outputs is used to calculate the rotational torque. Thus, change in the output characteristics of the magnetic sensor caused from an influence of the temperature and an influence owing to time is compensated.

In the forty-fourth invention, the plural magnetic sensors are disposed on the outside of each of the two targets provided for the rotating shaft. An influence of the difference in the output characteristics of each magnetic sensor can be eliminated, causing accurate calculation of the rotational torque to be performed.

In the forty-fifth invention, the targets are parallelly provided for each of the first and second shafts coaxially connected to each other through the torsion bar. The magnetic sensors are disposed opposite to the targets. Thus, a great difference in the rotational angle generated between the two shafts with the twisting of the torsion bar is accurately calculated by setting the foregoing corrective gain. A result of the calculation is used to accurately detect the rotational angle applied on the first and second shafts.

In the forty-sixth invention, above-mentioned torque detecting device is applied to a steering apparatus for an automobile. An accurately detected value of the steering torque applied on the steering shaft for performing steering is detected. A result of the detection is used to perform various controls, such as control of the electric motor for assisting steering.

In the forty-seventh invention, the plural targets inclined with respect to the axial direction and provided in the circumferential direction are integrally formed with the outer periphery of the annular disc-shape plate having a fitting hole for fitting the rotating shaft formed in the axis thereof and made of magnetic material by press-working performed from the two positions in the direction of the thickness of the annular disc-shape plate. The thus-manufactured target plate is, from outside, secured to the rotating shaft through the fitting hole. Thus, a target realizing excellent accuracy of the shape thereof can easily be manufactured. The magnetic sensor is disposed on the outside of the targets to opposite the targets. In accordance with an output of the magnetic sensor, an accurate rotational angle is obtained.

In the forty-eighth invention, two target plates integrally comprising targets realizing excellent accuracy of the shape is fitted to the rotating shaft in the axial direction of the rotating shaft. Moreover, the magnetic sensor is disposed opposite to each target at a position on the outside of the target plate. In accordance with the difference in the rotational angles each of which is obtained in accordance with the output of the magnetic sensor, accurate rotational torque is obtained.

In the forty-ninth invention, the target plate integrally comprising the targets realizing excellent accuracy of the shape is fitted to the first shaft and second shaft which are coaxially connected to each other through the torsion bar. Moreover, the magnetic sensors are disposed on the outside of the target plates to be opposite to the target plates. Thus, the great difference in the rotational angle generated between the first and second shafts with twisting of the torsion bar is accurately detected. The result of the detection is used to detect the rotational torque with high accuracy applied on the first and second shafts.

In the fiftieth invention, the rotational angle detecting device according to the forty-seventh invention capable of detecting the rotational angle with high accuracy and the torque detecting device according to the forty-eighth invention and/or the forty-ninth invention capable of detecting the rotational torque with high accuracy is applied to a steering apparatus of an automobile. An accurately detected value of the rotational angle (the steering angle) of the steering shaft and that of the rotational torque (the steering torque) applied on the steering shaft are detected. Results of the detection are used to perform various controls, such as the control of the electric motor for assisting steering.

In the fifty-first invention, the limiting member is disposed between the target plates fitted to the first and second shafts and having the targets on the circumferential surface thereof. Thus, inclination of the target plates occurring in a plane including the axis caused from deflection and deformation of the torsion bar is limited. Thus, change in the position of the targets provided for the outer surface is prevented. Thus, occurrence of a detection error of the rotational torque can be prevented.

In the fifty-second invention, the two sides of the annular member fitted to the first and second shafts are brought into contact with the target plates fitted to the two shafts. The limiting member limits the inclination of the target plates. The annular member maintains its attitude such that the first and second shafts are used as support members. Thus, limitation of the inclination of the target plate can reliably be performed. Change in the position of the target can be prevented to detect the rotational torque with high accuracy.

In the fifty-third invention, the torque detecting device according to the fifty-first invention or the fifty-second invention capable of detecting the rotational torque with high accuracy is applied to a steering apparatus for an automobile. The rotational torque (the steering torque) applied on the steering shaft for connecting the steering wheel and the steering mechanism is accurately detected. A result of the detection is used to perform various controls, such as control of the electric motor for assisting steering.

**Claims**

1. A rotational angle detecting device comprising:

   a rotor having a portion which is magnetically discontinuous in an axial and a circumferential directions thereof and
   a magnetic sensor for detecting the position in an axial direction of said rotor where magnetically change occurs on the circumferential surface of said rotor when said rotor rotates; wherein
   a rotational angle of said rotor from said magnetic sensor as the base point is detected in accordance with the position detected by said magnetic sensor.

2. A rotational angle detecting device according to claim 1, wherein said portion which is magnetically discontinuous is provided spirally on the circumferential surface of said rotor.

3. A rotational angle detecting device according to claim 2, wherein a plurality of said portions which are magnetically discontinuous are provided on the circumferential surface of said rotor at the same intervals.

4. A rotational angle detecting device according to any one of claims 1 to 3, wherein said portion which is magnetically discontinuous is formed nonlinearly with respect to said rotational angle to make an output of the magnetic sensor to be linear with respect to said rotational angle.

5. A rotational angle detecting device according to any one of claims 1 to 4, wherein

   said portion which is magnetically discontinuous is divided into an axial direction of said rotor at the same position of the circumferential direction of said rotor, and
   the divided portions are connected with each other in an axial direction of said rotor.

6. A rotational angle detecting device according to any one of claims 1 to 5, wherein said portion which is magnetically discontinuous is formed by winding a coil around the circumferential surface of said rotor and by welding or bonding the coil.

7. A rotational angle detecting device according to any one of claims 1 to 5, wherein said portion which is magnetically discontinuous is formed by irradiating the circumferential surface of said rotor with an energy beam.

8. A rotational angle detecting device, comprising:

a rotor having protrusions formed spirally on the circumferential surface thereof and made of magnetic material; and
plural magnetoresistance effect elements for detecting the position in an axial direction of said rotor when said rotor rotates; wherein
a rotational angle of said rotor from said plural magnetoresistance effect elements as the base points is detected in accordance with the positions detected by said plural magnetoresistance effect elements.

9. A torque detecting device for detecting torque applied on an input shaft in accordance with a torsional angle generated in a connecting shaft for connecting said input shaft and an output shaft, comprising:

rotational angle detecting devices according to any one of claims 1 to 8 attached to each of said input shaft and said output shaft, respectively; and
a rotational angle difference detector for detecting the difference between the rotational angles detected by said rotational angle detecting devices; wherein
the difference in the rotational angle detected by said rotational angle difference detector is made to be the torsional angle.

10. A torque detecting device for detecting torque applied on an input shaft in accordance with a torsional angle generated in a connecting shaft for connecting said input shaft and an output shaft, comprising:

rotational angle detecting devices according to any one of claims 1 to 8 attached to each of said input shaft and said output shaft, respectively;
two first calculators for calculating the opposite-phase difference between detection signals detected by said rotational angle detecting devices; and
a second calculator for calculating the difference between the differences calculated by said two first calculator; wherein

the difference detected by said second calculator is made to be the torsional angle.

11. A steering apparatus, comprising:

an input shaft connected to a steering wheel;
an electric motor for assisting steering which is driven and controlled in accordance with steering torque applied on said steering wheel;
an output shaft interlocked to said electric motor; and
a torque detecting device for detecting the steering torque applied on said input shaft in accordance with the torsional angle generated in a connecting shaft for connecting said input shaft and said output shaft; wherein
a rotational angle detecting device included in said torque detecting device detects the rotational angle of said steering wheel.

12. A torque detecting device, comprising:

an input shaft and an output shaft each having a portion which is magnetically discontinuous in an axial and a circumferential directions thereof;
a connecting shaft for connecting said input shaft and said output shaft;
first and second magnetic sensors for detecting the positions where magnetic change occurs on the circumferential surfaces in the axial direction of said input shaft and said output shaft when said input shaft and said output shaft rotate;
third and fourth sensors for detecting the positions in said axial direction which are distant from said positions detected by said first and second magnetic sensors for a predetermined distance in said circumferential direction and/or said axial direction;
a judging unit for judging whether or not said positions detected by said first to fourth magnetic sensors are included in a predetermined range;
a selector for selecting the position for detecting a torsional angle of said connecting shaft for each of said input shaft and said output shaft in accordance with a judgement result made by said judging unit; and
a torsional angle detector for detecting the torsional angle in accordance with each position selected by said selector; wherein
the torque applied on said input shaft is detected in accordance with the torsional angle detected by said torsional angle detector.

13. A torque detecting device according to claim 12, further comprising a corrector for correcting the torsional angle detected by said torsional angle detector in accordance with each position selected by said sensor and each predetermined distance.

14. A torque detecting device according to claim 12, further comprising:

a calculator for calculating a corrective value for correcting the torsional angle detected by said torsional angle detector in accordance with each position selected by said sensor and the position detected by each of said first to fourth magnetic sensors; and
a corrector for correcting the torsional angle in accordance with the corrective value calculated by said calculator and each position selected by said selector.

15. A torque detecting device according to any one of claims 12 to 14, wherein said portion which is magnetically discontinuous is provided spirally on each circumferential surface of said input shaft and said output shaft.

16. A torque detecting device according to claim 15, wherein a plurality of said portions which are magnetically discontinuous are provided on the circumferential surface of each of said input shaft and said output shaft at the same intervals.

17. A torque detecting device according to any one of claims 12 to 16, wherein said portion which is magnetically discontinuous is formed by protrusions made of magnetic material.

18. A torque detecting device according to claim 26, further comprising:

storage units in which electric signals which are outputted to correspond to the positions detected by said first to fourth magnetic sensors and predetermined electric signals which must be outputted to correspond to the positions detected by said first to fourth magnetic sensors are made to correspond to one another and stored therein; and
an output unit for outputting each electric signal which must be outputted in accordance with the electric signals outputted from said first to fourth magnetic sensors and the contents stored in each storage unit;
wherein each electric signal outputted from said output unit is made to be the signals indicting the positions detected by said first to fourth magnetic sensors.

19. A steering apparatus, comprising:

an input shaft connected to a steering wheel;
an electric motor for assisting steering which is driven and controlled in accordance with the steering torque applied on said steering wheel;
an output shaft interlocked to said electric motor; and
a torque detecting device according to any one of claims 12 to 18 for detecting the steering torque applied on said input shaft in accordance with the torsional angle generated in a connecting shaft for connecting said input shaft and said output shaft.

20. A rotational angle detecting device, comprising:

a rotating shaft having a portion which is magnetically discontinuous on the circumferential surface thereof in an axial and a circumferential directions thereof; and
first magnetic sensors for detecting the positions where magnetic change occurs on the circumferential surfaces of said rotating shaft in said axial direction when said rotating shaft rotates; wherein
a rotational angle of said rotating shaft from said magnetic sensor as the base point is detected in accordance with the position detected by said magnetic sensor, further comprising;
one or more second magnetic sensors for detecting a position distant from the position which must be detected by said first magnetic sensor for a predetermined distance; and
a judging unit for judging a failure in accordance with the distance between the position detected by said second magnetic sensor and said first magnetic sensor.

21. A rotational angle detecting device according to claim 20, wherein said portion which is magnetically discontinuous is provided spirally on the circumferential surface of said rotating shaft.

22. A rotational angle detecting device, comprising:

a rotating shaft having protrusions provided spirally on the circumferential surface thereof and made of magnetic material;
a first magnetic sensor for detecting the position where magnetic change occurs on the circumferential surface of said rotating shaft in said axial direction when said rotating shaft rotates; wherein
a rotational angle of said rotating shaft from said first magnetic sensor in the circumferential direction of said rotating shaft is detected in accordance with the position detected by said first magnetic sensor, further comprising;

one or more second magnetic sensors for detecting a position distant from the position which must be detected by said first magnetic sensor for a predetermined distance; and

a judging unit for judging a failure in accordance with the intervals between the position detected by said second magnetic sensor and said first magnetic sensor.

23. A torque detecting device for detecting torque applied on an input shaft in accordance with the torsional angle generated in a connecting shaft for connecting said input shaft and an output shaft, comprising:

a rotational angle detecting device according to any one of claims 20 to 22 attached to each of said input shaft and said output shaft; and
a detector for detecting the difference in the angles detected by said rotational angle detecting devices; wherein
the difference in the angle detected by said detector is made to be a torsional angle.

24. A steering apparatus, comprising:

an input shaft connected to a steering wheel;
an electric motor for assisting steering which is driven and controlled in accordance with the steering torque applied on said steering wheel;
an output shaft interlocked to said electric motor and
a torque detecting device according to claim 23 for detecting the steering torque applied on said input shaft in accordance with the torsional angle generated in a connecting shaft for connecting said input shaft and said output shaft; wherein
a rotational angle detecting device included in said torque detecting device detects the rotational angle of said steering wheel.

25. A torque detecting device, comprising:

an input shaft and an output shaft each having a portion which is magnetically discontinuous in an axial and a circumferential directions thereof;
a connecting shaft for connecting said input shaft and said output shaft;
first and second magnetic sensors for detecting the positions where magnetic change occurs on the circumferential surfaces of said input shaft and said output shaft in said axial direction when said input shaft and said output shaft rotate;
third and fourth magnetic sensors for detecting the positions in said axial direction which are distant from said positions detected by said first and second magnetic sensors for a predetermined distance in said circumferential direction and/or said axial direction; wherein

whether or not said positions detected by said first to fourth magnetic sensors are included in a first range is judged;
the position for detecting a torsional angle of said connecting shaft for each of said input shaft and said output shaft is detected in accordance with the judgement result is made;
a torsional angle is detected in accordance with each position selected by said selector; and
the torque applied on said input shaft is detected in accordance with the torsional angle; further comprising;
a first selector for selecting a pair which does not include a broken magnetic sensor from a pair consisting of said first magnetic sensor and said second magnetic sensor and a pair consisting of said third magnetic sensor and said fourth magnetic sensor when any one of said first to fourth magnetic sensor has been broken;
a judging unit for judging whether or not the positions detected by said magnetic sensor of the pair selected by said first selector is included in a second range which is larger than said first range; and
a detector for detecting the torsional angle in accordance with said position when said judging unit has judged that the position is included in said second range; wherein
torque applied on said input shaft is detected in accordance with the torsional angle detected by said detector.

26. A torque detecting device according to claim 25, wherein

said judging unit includes:
a second selector for selecting a pair which does not include a broken magnetic sensor from a pair consisting of said first magnetic sensor and said third magnetic sensor and a pair consisting of said second magnetic sensor and said fourth magnetic sensor;
a judging unit for judging whether or not two positions detected by said magnetic sensors in a pair selected by said second selector are included in said first range;
a third selector for selecting one position from said two positions in accordance with a judgement result made by said judging unit; and
a corrector for correcting the position selected by said third selector in accordance with said two positions and said predetermined distance; wherein

whether or not said position is included in said second range is judged in accordance with the position corrected by said corrector.

27. A torque detecting device according to claim 25 or 26, wherein said portion which is magnetically discontinuous is provided spirally on each circumferential surface of said input shaft and said output shaft.

28. A torque detecting device according to claim 27, wherein a plurality of said portions which are magnetically discontinuous are provided on the circumferential surface of each of said input shaft and said output shaft at the same intervals.

29. A torque detecting device according to any one of claims 25 to 28, wherein said portion which is magnetically discontinuous is formed by protrusions made of magnetic material.

30. A steering apparatus, comprising:

an input shaft connected to a steering wheel;
an electric motor for assisting steering which is driven and controlled in accordance with the steering torque applied on said steering wheel;
an output shaft interlocked to said electric motor; and
a torque detecting device according to any one of claims 25 to 29 for detecting the steering torque applied on said input shaft in accordance with the torsional angle generated in a connecting shaft for connecting said input shaft and said output shaft.

31. A rotational angle detecting device, comprising:

a plurality of targets disposed in the circumferential direction of a rotating shaft such that said targets are inclined with respect to an axial direction of said rotating shaft by substantially the same angles;
magnetic sensor disposed opposite to the position where said targets are disposed to generate outputs which are changed when each target passes; and
an angle calculator for calculating the rotational angle of said rotating shaft in accordance with a result obtained by multiplying outputs of said magnetic sensor with a gain, wherein
said angle calculator includes a gain corrector for correcting said gain in accordance with a maximum value and a minimum value of outputs of said magnetic sensor when said plural targets pass.

32. A rotational angle detecting device according to claim 31, wherein said gain corrector obtains a ratio of the difference between the maximum value and the minimum value and a predetermined reference difference to obtain a corrective gain by multiplying a result with the reference gain set for said reference difference.

33. A rotational angle detecting device, comprising:

a plurality of targets disposed in the circumferential direction of a rotating shaft such that said targets are inclined with respect to an axial direction of said rotating shaft by substantially the same angles;
magnetic sensor disposed opposite to the position where said targets are disposed to generate outputs which are changed when each target passes; and
an angle calculator for calculating the rotational angle of said rotating shaft in accordance with a result obtained by multiplying outputs of said magnetic sensor with a gain, wherein
said angle calculator includes an offsetting unit for offsetting said output in accordance with a maximum value and a minimum value of outputs of said magnetic sensor when said plural targets pass.

34. A rotational angle detecting device according to claim 33, wherein said offsetting unit makes the difference between an average value of said maximum value and said minimum value and a predetermined reference average value to be an offset amount.

35. A rotational angle detecting device according to any one of claims 31 to 34, wherein a plurality of said magnetic sensors are provided in the circumferential direction on the outside of said target such that the phases are shifted.

36. A torque detecting device, comprising:

two rotational angle detecting devices according to any one of claims 31 to 35 disposed apart from each other in the axial direction of said rotating shaft; and
a torque calculator for calculating the torque applied on said rotating shaft in accordance with the difference in the rotational angle detected by each rotational angle detecting device.

37. A torque detecting device according to claim 36, wherein

said rotating shaft is a member constructed by coaxially connecting a first shaft and a second shaft to each other through a torsion bar; and

said targets are disposed adjacent to connecting portion between said first shaft and said second shaft.

**38.** A steering apparatus, comprising:

a rotational angle detecting device according to any one of claims 31 to 35 constructed such that a steering shaft for connecting a steering wheel and a steering mechanism is said rotating shaft; and

a torque detecting device according to claim 36 and/or 37.

**39.** A torque detecting device, comprising:

two pairs of plural targets and two magnetic sensors, wherein

said plural targets are disposed in the circumferential direction of a rotating shaft and inclined with respect to an axial direction of said rotating shaft by substantially the same angles; and

said two magnetic sensors are disposed opposite to each other at positions on the outside of said targets such that the phases of said magnetic sensors are shifted in the circumferential direction to generate outputs which are changed when each target passes;

are provide apart from each other in the axial direction of said rotating shaft, and the difference between outputs of either of selected magnetic sensor in each pair is used to calculate the rotational torque applied on said rotating shaft; further comprising:

a comparator for comparing the absolute value of the difference in the output of the selected magnetic sensors and the difference in the output of the non-selected magnetic sensors;

a judging unit for judging the sign of the difference in the output between selected magnetic sensors and the sign of the difference in the output between non-selected magnetic sensors; and

a selector for selecting a magnetic sensor for use in calculating the rotational torque in accordance with a judgement result by said judging unit and a comparison result by said comparator.

**40.** A torque detecting device according to claim 39, wherein

said selector changes selection of said magnetic sensor when the comparison by said comparator has resulted in a fact that the absolute value of the difference in the output of the selected magnetic sensors is larger than the absolute value of the difference in the output of the non-selected magnetic sensors by a predetermined quantity under condition that the judgement result by said judging unit are such that the selected magnetic sensors and the non-selected magnetic sensors are the same.

**41.** A torque detecting device according to claim 39 or 40, wherein

said rotating shaft is a member constructed by coaxially connecting a first shaft and a second shaft to each other through a torsion bar; and said targets are disposed adjacent to connecting portions between said first shaft and said second shaft.

**42.** A steering apparatus, comprising:

a torque detecting device according to any one of claims 39 to 41 constructed such that a steering shaft for connecting a steering wheel and a steering mechanism is said rotating shaft.

**43.** A torque detecting device, comprising:

two sets of plural targets and a magnetic sensor, wherein

said plural targets are disposed in the circumferential direction of a rotating shaft and inclined with respect to an axial direction of said rotating shaft by substantially the same angles; and

said magnetic sensors are disposed opposite to the position corresponding to said targets to generate output changed when each target passes;

are disposed apart from each other in the axial direction of said rotating shaft; and

a torque calculating unit for calculating the rotational torque applied on said rotating shaft in accordance with the difference in the output of the magnetic sensors of two sets; wherein said torque calculating unit obtains an average value of said two pairs of said magnetic sensors during passing of each of said plural targets to set a corrective gain with which each output is multiplied so as to make coincide the outputs of the two sets of said magnetic sensors with said average value.

**44.** A torque detecting device according to claim 43, wherein a plurality of said two sets of said magnetic sensors are disposed in the circumferential direction on the outside of said target such that the phase of said magnetic sensors are shifted.

**45.** A torque detecting device according to claim 43 or 44, wherein

said rotating shaft is a member constructed by coaxially connecting a first shaft and a second shaft to each other through a torsion bar; and said targets are disposed adjacent to connecting portions between said first shaft and said second shaft.

**46.** A steering apparatus, comprising:

a torque detecting device according to any one of claims 43 to 45 constructed such that a steering shaft for connecting a steering wheel and a steering mechanism is said rotating shaft.

**47.** A rotational angle detecting device, comprising:

a plurality of targets made of magnetic material and disposed in the circumferential direction of a rotating shaft such that said targets are inclined by substantially the same angles with respect to the axial direction of said rotating shaft; and
magnetic sensor disposed opposite to said targets and to generate output changed when each target passes; wherein
the rotational angle of said rotating shaft is detected in accordance with the output generated by said magnetic sensors when said magnetic sensor passes; further comprising:
a target plate formed into an annular disc-like shape having a fitting hole for fitting to said rotating shaft at an axis thereof from outside and integrally comprising said targets by a bending process.

**48.** A torque detecting device, comprising:

two rotational angle detecting devices according to claim 47 disposed apart from each other on the rotating shaft in the axial direction of said rotating shaft; wherein
the rotational torque applied on said rotating shaft is calculated in accordance with the difference in the rotational angle detected by said rotational angle detecting devices.

**49.** A torque detecting device according to claim 48, wherein

said rotating shaft is a member constructed by coaxially connecting a first shaft and a second shaft to each other through a torsion bar; and said targets are fitted from outside adjacent to connecting portions between said first shaft and said second shaft.

**50.** A steering apparatus, comprising:

a rotational angle detecting device according to claim 47 constructed such that a steering shaft for connecting a steering wheel and a steering mechanism is said rotating shaft; and
a torque detecting device according to claim 48 and/or 49.

**51.** A torque detecting device, comprising:

a plurality of targets made of magnetic material and provided on the circumferential direction of each of first and second shafts coaxially connected to each other through a torsion bar; and magnetic sensors disposed opposite to said targets on the outside of said targets; wherein the rotational torque applied on each of said first and second shafts is detected in accordance with the difference in the outputs generated by said magnetic sensors when each of said targets passes; further comprising:
target plates fit to said first and second shafts from outside, respectively and having said targets formed thereon; and
a limiting member disposed between said target plates to limit inclination of said target plates in a plane including the axis.

**52.** A torque detecting device according to claim 51, wherein

said limiting member is constructed by an annular member engaged and supported by said first or second shafts and having two sides brought into contact with said target plates.

**53.** A steering apparatus, comprising:

a torque detecting device according to claim 51 or 52 having said first shaft which is an input shaft connected to a steering wheel and a second shaft which is an output shaft connected to a steering mechanism.

FIG. 1

# FIG. 2

FIG. 3

EP 1 087 218 A1

FIG. 4A

FIG. 4B

FIG. 4C

FIG. 5

FIG. 6A

22 b

AXIAL
DIRECTION

0                    360°

ROTATIONAL
ANGLE

FIG. 6B

OUTPUT VOLTAGE
OF MR SENSOR

0                    360°

ROTATIONAL
ANGLE

FIG. 7

FIG. 8A

FIG. 8B

FIG. 8C

F I G. 9

FIG. 10A

AXIAL DIRECTION

0        ROTATIONAL        360°
              ANGLE

FIG. 10B

OUTPUT VOLTAGE OF MR SENSOR

0        ROTATIONAL        360°
              ANGLE

FIG. 11A

FIG. 11B

FIG. 12

FIG. 13

FIG. 14A

AXIAL DIRECTION

0    ROTATIONAL    360°
     ANGLE

FIG. 14B

TARGET
OUTPUT

OUTPUT VOLTAGE
OF MR SENSOR

ACTUAL
OUTPUT

0    ROTATIONAL    360°
     ANGLE

FIG. 15A

AXIAL DIRECTION

0   ROTATIONAL 360°
    ANGLE

FIG. 15B

TARGET
OUTPUT

OUTPUT VOLTAGE
OF MR SENSOR

ACTUAL
OUTPUT

0   ROTATIONAL 360°
    ANGLE

FIG. 16

EP 1 087 218 A1

FIG. 17

91

FIG. 18A

21

FIG. 18B

22e

FIG. 18C

21

22e

FIG. 19

EP 1 087 218 A1

FIG. 20

FIG. 21

21

70

22 f

FIG. 22

EP 1 087 218 A1

# FIG. 23

EP 1 087 218 A1

FIG. 24

EP 1 087 218 A1

FIG. 25

FIG. 26A

62

64

FIG. 26B

OUTPUT VOLTAGE OF MR SENSOR

62

64 ROTATIONAL ANGLE

FIG. 26C

OUTPUT VOLTAGE OF MR SENSOR

0          360°   ROTATIONAL POSITION

FIG. 27A

OUTPUT VOLTAGE OF MR SENSOR

0          360°

FIG. 27B

PROTRU-SION

62a

64a

FIG. 27C

OUTPUT VOLTAGE OF MR SENSOR

0          360°

FIG. 27D

PROTRU-SION

62b

64b

FIG. 27E

OUTPUT VOLTAGE OF MR SENSOR

0          360°

FIG. 27F

PROTRU-SION

62c

64c

FIG. 28C

FIG. 28A

FIG. 28B

ROTATIONAL ANGLE

OUTPUT VOLTAGE OF MR SENSOR

SAG PORTION

ROTATIONAL ANGLE

INTERPOLATED SECTION

INTERPOLATED SECTION

ROTATIONAL ANGLE

A

B

FIG. 29

OUTPUT VOLTAGE OF MR SENSOR

A

B

CHANGE MUST BE PERFORM
WITHIN THIS WIDTH

ROTATIONAL ANGLE

FIG. 30

FIG. 31

```
          ┌─────────────────────────┐
          │ TORQUE CONVERSION OF    │
          │ FOUR SENSOR SIGNALS     │
          └─────────────────────────┘
                      │                    S2
          ┌─────────────────────────┐
          │   A/D CONVERSION OF      │
          │   MR SENSOR SIGNAL       │
          │ MR23a,MR24a,MR23b,MR24b  │
          └─────────────────────────┘
                      │
                     S4
                 ╱MR23a>LIMH╲              NO
                ╱    o r     ╲─────────────────┐
                ╲ MR23a<LIML ╱                 │
                 ╲    ?     ╱                   │
                  YES                           │
          ┌─────────────────────────┐ S6       │
          │     SENSOR 1 FOR         │          │
          │   INPUT SHAFT = 24a      │          │
          └─────────────────────────┘          │
                      │                         │
          ┌─────────────────────────┐ S8        │
          │   OUTPUT OF SENSOR       │          │
          │ FOR INPUT SHAFT = MR 24a │          │
          └─────────────────────────┘          │
                      │                         │
                    S10                        S11
                ╱MR24a>LIMH╲    NO      ╱ SENSOR 1    ╲
               ╱    o r     ╲──────────╱  FOR INPUT    ╲
               ╲ MR24a<LIML ╱    YES   ╲ SHAFT IN =23a? ╱
                ╲    ?     ╱            ╲ PREVIOUS      ╱
                 YES                    ╲  CYCLE      ╱
          ┌─────────────────────────┐ S12      NO
          │     SENSOR 1 FOR         │           │
          │   INPUT SHAFT = 23a      │          S13
          └─────────────────────────┘    ╱ SENSOR 1    ╲  YES
                      │                  ╱  FOR INPUT    ╲
          ┌─────────────────────────┐   ╲ SHAFT IN =24a? ╱
          │   OUTPUT OF SENSOR       │S14╲ PREVIOUS      ╱
          │ FOR INPUT SHAFT = MR 23a │   ╲  CYCLE      ╱
          └─────────────────────────┘        NO
                      │                        │
                     (A)                      (B)
```

FIG. 32

Ⓐ

S4

⟨ MR23b>LIMH or MR23b<LIML ? ⟩ — NO

YES

SENSOR 2 FOR OUTPUT SHAFT = 24b    S18

OUTPUT OF SENSOR FOR OUTPUT SHAFT = MR24b    S20

S4

⟨ MR24b>LIMH or MR24b<LIML ? ⟩ — NO

YES

S11

⟨ SENSOR 2 FOR OUTPUT SHAFT IN =23a? PREVIOUS CYCLE ⟩ — YES

NO

UPDATE SENSOR FOR OUTPUT SHAFT : SENSOR 2 =23b    S24

OUTPUT OF SENSOR FOR OUTPUT SHAFT = MR23b    S26

S13

⟨ SENSOR 2 FOR OUTPUT SHAFT IN =24b? PREVIOUS CYCLE ⟩ — YES

NO

Ⓑ

FIG. 33

B

**S28**
SENSOR IS
NOT DETERMINED?
SENSOR 1≠23a ∩ SENSOR 1≠24a
or
SENSOR 2≠23b ∩ SENSOR 2≠24b — YES

**S38**
TORQUE = 0

NO

**S30**
TORQUE = "OUTPUT OF SENSOR FOR
INPUT SHAFT"
−"OUTPUT OF SENSOR FOR
OUTPUT SHAFT"

**S32**
SENSOR 1 AND 2
ARE SAME SIDE
? — NO

YES

**S34**
OUTPUT OF
SENSOR FOR INPUT SHAFT
>
OUTPUT OF SENSOR FOR
OUTPUT SHAFT
? — NO

YES **S36**
CORRECT TORQUE :
TORQUE =
"TORQUE − T"

**S40**
CORRECT TORQUE :
TORQUE =
"TORQUE + T"

EXIT

FIG. 34A

FIG. 34B

FIG. 35

```
        ┌─────────────────────────────┐
        │ TORQUE CONVERSION OF        │
        │ FOUR SENSOR SIGNALS         │
        └─────────────────────────────┘
                      │
        ┌─────────────────────────────┐  S42
        │ A/D CONVERSION OF           │
        │ MR SENSOR SIGNAL            │
        │ MR23a,MR24a,MR23b,MR24b     │
        └─────────────────────────────┘
                      │
              ◇ MR23a>LIMH          S44
              ◇   or          ──NO──→ (C)
              ◇ MR23a<LIML
              ◇   ?
                  │YES
                                        (K)
              ◇ SENSOR 1          S46
              ◇ FOR INPUT
              ◇ SHAFT IN=23a?  ──NO──→
              ◇ PREVIOUS
              ◇ CYCLE
                  │YES
              ◇ MR23a>LIMH?  S48  ──NO──→
                  │YES                ┌────────────────────┐ S68
                                      │ T1A=MR24a−MR23a    │
        ┌────────────────────────┐ S50 └────────────────────┘
        │ T1B=MR23a−MR24a        │
        └────────────────────────┘
                      │
        ┌────────────────────────┐ S52
        │ SENSOR 1 FOR           │
        │ INPUT SHAFT = 24a      │
        └────────────────────────┘
                      │
        ┌────────────────────────┐ S54
        │ OUTPUT OF SENSOR       │
        │ FOR INPUT SHAFT = MR24a│
        └────────────────────────┘
                      │
                     (D)
```

FIG. 36

© 

S56
MR24a>LIMH
or
MR24a<LIML
?

NO

YES

S57
SENSOR 1
FOR INPUT
SHAFT IN =23a?
PREVIOUS
CYCLE

YES

NO

S59
SENSOR 1
FOR INPUT
SHAFT IN =24a?
PREVIOUS
CYCLE

YES

Ⓚ

S58
SENSOR 1
FOR INPUT
SHAFT IN =24a?
PREVIOUS
CYCLE

NO

NO

Ⓕ

YES

S60
MR24a>LIMH?

NO

YES

S70
T1B=MR23a−MR24a

T1A=MR24a−MR23a    S62

SENSOR 1 FOR INPUT
SHAFT = 23a    S64

OUTPUT OF SENSOR FOR
INPUT SHAFT = MR23a    S66

Ⓓ

FIG. 37

FIG. 38

(E)

S86
MR24b>LIMH
or
MR24b<LIML
?

NO

S87
SENSOR 2
FOR OUTPUT
SHAFT IN =23b?
PREVIOUS
CYCLE

YES

YES

NO

S89
SENSOR 2
FOR OUTPUT
SHAFT IN =24b?
PREVIOUS
CYCLE

YES

(L)

NO

(F)

S88
SENSOR 2
FOR OUTPUT
SHAFT IN =24b?
PREVIOUS
CYCLE

NO

YES

S90
MR24b>LIMH?

NO

S98
T2B=MR23b−MR24b

YES

T2A=MR24b−MR23b   S92

SENSOR 2 FOR OUTPUT   S94
SHAFT = 23b

OUTPUT OF SENSOR FOR   S96
OUTPUT SHAFT = MR23b

(F)

FIG. 39

(F)

S100

SENSOR IS
NOT DETERMINED?
SENSOR 1≠23a ∩ SENSOR 1≠24a
or
SENSOR 2≠23b ∩ SENSOR 2≠24b

YES

S112

TORQUE = 0

NO

S102

TORQUE = "OUTPUT OF SENSOR FOR
INPUT SHAFT"
−"OUTPUT OF SENSOR FOR
OUTPUT SHAFT"

S104

SENSOR 1 AND 2
ARE SAME SIDE ?

NO

(H)

YES

S106

SENSOR 1 = 23a ?

NO

(I)

YES

S108

OUTPUT OF
SENSOR FOR INPUT SHAFT
>
OUTPUT OF SENSOR FOR
OUTPUT SHAFT
?

NO

(J)

YES

S110

CORRECT TORQUE : TORQUE ="TORQUE − T2B"

EXIT

FIG. 40

(H)

S114

SENSOR 1 =23 a
SENSOR 2 =23 b
?

YES

YES    S116

CORRECT TORQUE :
TORQUE =
"TORQUE + (T1B−T2B)"

(I)

S118

OUTPUT OF
SENSOR FOR INPUT SHAFT
>
OUTPUT OF SENSOR FOR
OUTPUT SHAFT
?

NO

(J)

S124

CORRECT TORQUE :
TORQUE =
"TORQUE + T2A"

YES    S120

CORRECT TORQUE :
TORQUE =
"TORQUE − T1A"

S122

CORRECT TORQUE :
TORQUE =
"TORQUE + T1B"

EXIT

EP 1 087 218 A1

114

FIG. 41A

FIG. 41B

FIG. 42

FIG. 43

FIG. 44

SIGNAL
PROCESSING
UNIT

FIG. 45

FIG. 46

FIG. 47

```
          ┌───────────┐
          │   START   │
          └─────┬─────┘
                │◄─────────────────────────────┐
                ▼                               │
              S202                              │
         ╱          ╲                           │
        ╱ Vn1≦Vb-Vc≦Vn2 ╲    YES                │
       ╱  Vn1≦Vc-Va≦Vn2  ╲──────────────►       │
        ╲       ?        ╱                      │
         ╲              ╱                       │
              │NO                               │
                ▼                               │
              S204                              │
         ╱          ╲                           │
        ╱ Vn1≦Vc-Va≦Vn2 ╲    YES                │
       ╱  Vn1≦Va-Vb≦Vn2  ╲──────────────►       │
        ╲       ?        ╱                      │
         ╲              ╱                       │
              │NO                               │
                ▼                               │
              S206                              │
         ╱          ╲                           │
        ╱ Vn1≦Va-Vb≦Vn2 ╲    YES                │
       ╱  Vn1≦Vb-Vc≦Vn2  ╲──────────────────────┘
        ╲       ?        ╱
         ╲              ╱
              │NO
                ▼
   ┌───────────────────────────┐
   │ DETECTION OF BREAKDOWN     │ S208
   └─────────────┬─────────────┘
                 ▼
   ┌───────────────────────────┐
   │ INTERRUPT DETECTION        │ S210
   │ OF STEERING ANGLE          │
   └─────────────┬─────────────┘
                 ▼
          ┌───────────┐
          │    END    │
          └───────────┘
```

S202: $Vn1 \leqq Vb - Vc \leqq Vn2$, $Vn1 \leqq Vc - Va \leqq Vn2$ ?

S204: $Vn1 \leqq Vc - Va \leqq Vn2$, $Vn1 \leqq Va - Vb \leqq Vn2$ ?

S206: $Vn1 \leqq Va - Vb \leqq Vn2$, $Vn1 \leqq Vb - Vc \leqq Vn2$ ?

FIG. 48

FIG. 49A

OUTPUT VOLTAGE
OF MR SENSOR

Aa

0          360°         720°  $\theta_m$

FIG. 49B

OUTPUT VOLTAGE
OF MR SENSOR

Ba

0          360°         720°  $\theta_v$

FIG. 49C

OUTPUT VOLTAGE
OF MR SENSOR

$\Delta V$          Aa    Ba

0                              $\theta_m$, $\theta_v$

FIG. 50

EP 1 087 218 A1

124

FIG. 51

EP 1 087 218 A1

1

24a  22a  23a

SIGNAL
PROCESSING
UNIT

35

21a

6

22a

24b  23b

21b

3

# FIG. 52

FIG. 53

FIG. 54

(M)

S328

SENSOR IS
NOT DETERMINED?
SENSOR 1≠23a ∩ SENSOR 1≠24a
or
SENSOR 2≠23b ∩ SENSOR 2≠24b

YES

S338

TORQUE = 0

NO

S330

TORQUE = "OUTPUT OF SENSOR FOR
INPUT SHAFT"
−"OUTPUT OF SENSOR FOR
OUTPUT SHAFT"

S332

SENSOR 1 AND 2
ARE SAME SIDE
?

NO

YES

S334

OUTPUT OF
SENSOR FOR INPUT SHAFT
>
OUTPUT OF SENSOR FOR
OUTPUT SHAFT
?

NO

YES    S336

CORRECT TORQUE :
TORQUE =
"TORQUE − T"

S340

CORRECT TORQUE :
TORQUE =
"TORQUE + T"

EXIT

FIG. 55

**DISCONNECTION PROCESSING**

S442 JUDGING OF DISCONNECTION

S444 DISCONNECTION OCCURE?
NO → RETURN
YES

S446 DETERMINE DATA OF SAME PHASE IN REMAINED DISCONNECTION SIDE

S448 CHECK SAME PHASE DATA

S450 SAME PHASE DATA IS USUABLE ?
NO →
YES

S452 TORQUE = "OUTPUT OF SENSOR FOR INPUT SHAFT" − "OUTPUT OF SENSOR FOR OUTPUT SHAFT"

S454 CALCULATED TORQUE ≦ MAXIMAM TORQUE ?
NO →
YES

S456 OUTPUT CALCULATED TORQUE

FIG. 56

( SAME PHASE DATA CHECK )

S558

OUTPUT OF DISCONNECTION = MR23a or SENSOR MR24a ?

NO → (N)

YES

S560

MR23b>LIMH or MR23b<LIML ?

NO → S572

MR24b>LIMH or MR24b<LIML ?

NO → (O)

YES → (R)

YES

(Q) → S562 OUTPUT OF ROTATIONAL ANGLE DETECTING SENSOR = MR24b

S574 OUTPUT OF ROTATIONAL ANGLE DETECTING SENSOR = MR23b

S576 DETECTED ANGLE = MR23b

S564 MR23b>MR24b ?

YES → S566 DETECTED ANGLE = MR24b+T

NO → S586 DETECTED ANGLE = MR24b-T

S568 DETECTED ANGLE IS INCLUDED IN RANGE WHERE SAME PHASE DATA DOES NOT SAG. ?

NO → (P)

S582 SAME PHASE DATA IS NOT USABLE

S584 OUTPUT OF ROTATIONAL ANGLE DETECTING SENSOR = 0

YES → S570 SAME PHASE DATA IS USABLE

( RETURN )

130

FIG. 57

S578

OUTPUT OF ROTATIONAL
ANGLE DETECTING SENSOR
IN PREVIOUS CYCLE
=MR23b?

YES

Ⓡ

NO

S580

OUTPUT OF ROTATIONAL
ANGLE DETECTING SENSOR
IN PREVIOUS CYCLE
=MR24b?

YES

Ⓠ

NO

Ⓟ

## FIG. 58

N

S588

MR23a>LIMH
or
MR23a<LIML
?

NO ← → YES

S600

MR24a>LIMH
or
MR24a<LIML
?

NO → S

YES

V →

U

OUTPUT OF ROTATIONAL
ANGLE DETECTING
SENSOR = MR24a    S590

S602

OUTPUT OF
ROTATIONAL
ANGLE DETECTING
SENSOR = MR23a

S592

MR23a>MR24a
?    NO

YES    S594    S614

DETECTED ANGLE    S604
= MR23a

DETECTED
ANGLE =
MR24a+T

DETECTED
ANGLE =
MR24a-T

S596

DETECTED
ANGLE IS INCLUDED
IN RANGE WHERE SAME
PHASE DATA DOES
NOT SAG. ?

NO

T →    S610

SAME PHASE DATA
IS NOT USABLE

S612

OUTPUT OF
ROTATIONAL
ANGLE DETECTING
SENSOR = 0

YES

SAME PHASE
DATA IS USABLE    S598

RETURN

FIG. 59

FIG. 60A

FIG. 60B

FIG. 61

FIG. 62

FIG. 63

SIGNAL
PROCESSING
UNIT

$V_A$

$V_B$

$V_A$

$V_B$

ROTATIONAL
ANGLE

ROTATIONAL
TORQUE

FIG. 64

FIG. 65

EP 1 087 218 A1

FIG. 66

```
                    ( START )
                         │
         ┌───────────────┴──────────────┐      S701
         ╱        ROTATE CORRESPONDING    ╲      NO
        ╱          TO ONE TARGET?          ╲──────────────┐
         ╲                                 ╱              │
          ╲───────────────┬──────────────╱               │
                     YES  │                               │
         ┌────────────────┴───────────────┐   S702        │
         │   EXTRACT $V_{Amax}$, $v_{Amax}$            │               │
         │   and $V_{Amin}$, $v_{Amin}$               │               │
         └────────────────┬───────────────┘               │
         ┌────────────────┴───────────────────────┐ S703   │
         │ $V_{APP}=V_{Amax}-V_{Amin}$, $v_{APP}=v_{Amax}-v_{Amin}$ │   │
         └────────────────┬───────────────────────┘       │
         ┌────────────────┴───────────────┐   S704        │
         │   $K_{n+1}=K_0\times V_{APP}/V_{APP0}$          │               │
         │   $k_{n+1}=k_0\times v_{APP}/v_{APP0}$          │               │
         └────────────────┬───────────────┘               │
         ┌────────────────┴───────────────┐   S705        │
         │ $V_{Amid}=(V_{Amax}+V_{Amin})/2$              │               │
         │ $v_{Amid}=(v_{Amax}+v_{Amin})/2$              │               │
         └────────────────┬───────────────┘               │
         ┌────────────────┴───────────────┐   S706        │
         │   $C_{n+1}=V_{Amid}-V_{Amid0}$                 │               │
         │   $c_{n+1}=v_{Amid}-v_{Amid0}$                 │               │
         └────────────────┬───────────────┘               │
                          │              S707              │
         ┌────────────────┴──────────────┐                │
         ╱     END OF ONE ROTATION?        ╲      NO        │
        ╱                                   ╲──────────────┤
         ╲                                 ╱               │
          ╲──────────────┬──────────────╱                 │
                    YES  │                                 │
         ┌───────────────┴────────────────────────┐ S708   │
         │ CALCULATE                                │        │
         │ $\Sigma V_{Amax}$, $\Sigma V_{Amin}$, $\Sigma v_{Amax}$ and $\Sigma v_{Amin}$ │  │
         └───────────────┬────────────────────────┘        │
         ┌───────────────┴────────────────────────────────┐ S709 │
         │ $K_m=K_0\times(\Sigma V_{Amax}-\Sigma V_{Amin})/(Z\times V_{APP0})$ │ │
         │ $k_m=k_0\times(\Sigma v_{Amax}-\Sigma v_{Amin})/(Z\times v_{APP0})$ │ │
         └───────────────┬────────────────────────────────┘     │
                         │              S710                     │
         ┌───────────────┴──────────────┐                        │
         ╱     END OF OPERATION?          ╲      NO               │
        ╱                                  ╲─────────────────────┘
         ╲                                ╱
          ╲─────────────┬──────────────╱
                   YES  │
                    ( END )
```

## FIG. 67

OUTPUT VOLTAGE
OF MR SENSOR

$V_{Amax}$

$V_{APP}$

$K_0$

$V_{APP0}$

$V_{Amin}$

ROTATIONAL
ANGLE

FIG. 68

OUTPUT VOLTAGE
OF MR SENSOR

$V_{Amax}$

$V_{Amid}$

$C_{n+1}$

$V_{Amin}$

ROTATIONAL
ANGLE

FIG. 69

SIGNAL
PROCESSING
UNIT

35

ROTATIONAL
TORQUE

EP 1 087 218 A1

FIG. 70

FIG. 71

FIG. 72

FIG. 73

SIGNAL
PROCESSING
UNIT

ROTATIONAL
TORQUE

FIG. 74

NONLINEARLY-CHANGED REGION    LINEARLY-CHANGED REGION

$V_B$
$V_A$

OUTPUT VOLTAGE OF MR SENSOR

NEUTRAL VOLTAGE OF MR SENSOR 23b

NEUTRAL VOLTAGE OF MR SENSOR 23a

$\theta_0$

ROTATIONAL ANGLE

EP 1 087 218 A1

FIG. 75

START

S901

ROTATE CORRESPONDING
TO ONE TARGET?  →  NO

YES

CALCULATE BOTH END VOLTAGE  S902
$V_{A1}$, $V_{A2}$ and $V_{B1}$, $V_{B2}$

$K_A = (V_{A1} - V_{A2}) / \Delta\theta$  S903
$K_B = (V_{B1} - V_{B2}) / \Delta\theta$

$K_m = \{(V_{A1} - V_{A2}) - (V_{B1} - V_{B2})\} / 2\Delta\theta$  S904

$K_{A0} = K_m / K_A$  S905
$K_{B0} = K_m / K_B$

S906

END OF OPERATION?  →  NO

YES

END

FIG. 76

LINEARLY-CHANGED REGION

OUTPUT VOLTAGE OF MR SENSOR

$V_{A1}$
$V_{B1}$
$V_{B2}$
$V_{A2}$

$K_A$
$K_m$
$K_B$

$\Delta\theta$

ROTATIONAL ANGLE

FIG. 77

SIGNAL
PROCESSING
UNIT

$V_A$

$V_B$

$V_A$

$V_B$

ROTATIONAL ROTATIONAL
ANGLE        TORQUE

# FIG. 78

**OUTPUT VOLTAGE OF MR SENSOR**

NONLINEARLY-CHANGED REGION

LINEARLY-CHANGED REGION

LINEARLY-CHANGED REGION

MR SENSOR 23a

MR SENSOR 23b

ΔV

ΔV

NON-LINEARLY-CHANGED REGION

LINEARLY-CHANGED REGION

NON-LINEARLY-CHANGED REGION

MR SENSOR 24a

MR SENSOR 24b

ROTATIONAL ANGLE

EP 1 087 218 A1

FIG. 79

FIG. 80A

FIG. 80B

80

80a          80a

252          251

P

90a

90a          90a

90a

90

81

F

81

80

90

Q          F          P

EP 1 087 218 A1

FIG. 81

SIGNAL
PROCESSING
UNIT

$V_A$

$V_B$

$V_A$

$V_B$

ROTATIONAL
TORQUE

FIG. 82

EP 1 087 218 A1

FIG. 83A          FIG. 83B          FIG. 83C

EP 1 087 218 A1

FIG. 84

SIGNAL
PROCESSING
UNIT

ROTATIONAL
TORQUE

EP 1 087 218 A1

# INTERNATIONAL SEARCH REPORT

| | International application No. |
|---|---|
| | PCT/JP00/02163 |

**A. CLASSIFICATION OF SUBJECT MATTER**
Int.Cl⁷  G01L3/10, G01D5/20, G01B7/30

According to International Patent Classification (IPC) or to both national classification and IPC

**B. FIELDS SEARCHED**

Minimum documentation searched (classification system followed by classification symbols)
Int.Cl⁷  G01L3/10, G01D5/20, G01B7/30

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2000 |
| Kokai Jitsuyo Shinan Koho | 1971-2000 | Jitsuyo Shinan Toroku Koho | 1996-2000 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP, 5-011445, Y2 (Agency of Industrial Science and Technology et al.),<br>22 March, 1993 (22.03.93),<br>Full text; all drawings  (Family: none)<br>Full text; all drawings  (Family: none)<br>Full text; all drawings  (Family: none) | 1,2,8<br>3,5-7,9,11<br>4,10,12-53 |
| Y<br>A | JP, 64-023133, A (Koyo Seiko Co., Ltd.),<br>25 January, 1989 (25.01.89),<br>Full text; all drawings  (Family: none)<br>Full text; all drawings  (Family: none) | 5,9,11<br>10,12-53 |
| Y<br>A | US, 4764767, A (Kabushiki Kaisha SG),<br>16 August, 1988 (16.08.88),<br>Column 7, lines 1 to 26; Figs. 5 to 6<br>Full text; all drawings<br>& JP, 62-047501, A  & EP, 212662, A<br>& DE, 3681376, C | 3<br>1-2,4-53 |
| Y | JP, 4-024530, A (Ono Sokki Co., Ltd.),<br>28 January, 1992 (28.01.92),<br>page 2, lower right column, lines 1-16, Figs. 1 to 2 | 6 |

☒ Further documents are listed in the continuation of Box C.     ☐ See patent family annex.

| | |
|---|---|
| *  Special categories of cited documents:<br>"A"  document defining the general state of the art which is not considered to be of particular relevance<br>"E"  earlier document but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>09 June, 2000 (09.06.00) | Date of mailing of the international search report<br>20 June, 2000 (20.06.00) |
|---|---|
| Name and mailing address of the ISA/<br>Japanese Patent Office | Authorized officer |
| Facsimile No. | Telephone No. |

Form PCT/ISA/210 (second sheet) (July 1992)

INTERNATIONAL SEARCH REPORT

International application No.

PCT/JP00/02163

| C (Continuation). | DOCUMENTS CONSIDERED TO BE RELEVANT | |
|---|---|---|
| Category* | Citation of document, with indication, where appropriate, of the relevant passages | Relevant to claim No. |
| Y | (Family: none)<br><br>JP, 2-122229, A (Komatsu Ltd.),<br>09 May, 1990 (09.05.90),<br>Full text; all drawings | 7 |
| A | US, 4122709, A (Texaco Inc),<br>31 October, 1978 (31.10.78),<br>Full text; all drawings  (Family: none) | 1-53 |
| A | DE, 1282987, B (Philips Patentverwaltung G.m.b.H.),<br>14 November, 1968 (14.11.68),<br>Full text; all drawings  (Family: none) | 1-53 |
| A | US, 3587305, A (Simmonds Precision Products Inc.),<br>28 June, 1971 (28.06.71),<br>Full text; all drawings  (Family: none) | 51-53 |

Form PCT/ISA/210 (continuation of second sheet) (July 1992)